(19) **Europäisches Patentamt**
**European Patent Office**
**Office européen des brevets**

(11) **EP 1 770 717 A1**

(12) **EUROPEAN PATENT APPLICATION**

(43) Date of publication:
**04.04.2007 Bulletin 2007/14**

(51) Int Cl.:
*G21K 1/00* *(2006.01)*    *G21B 1/00* *(2006.01)*

(21) Application number: **05447221.2**

(22) Date of filing: **03.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Tavakoli, Mehran Keshe**
**8573 Tiegem (BE)**

(72) Inventor: **Tavakoli, Mehran Keshe**
**8573 Tiegem (BE)**

Remarks:
Amended claims in accordance with Rule 86 (2) EPC.

(54) **Gravitational and energy system**

(57)    The new method and technology is described to create - under centrifugal and vacuum conditions - in presence of ionization condition - a turbulence, rotation, compressive and heating of a gaseous matter is created in a reactor by at least one central rotative magnetic field with the purpose of creating plasmatic conditions leading to the creation various magnetic fields where at least the interaction of two magnetic field would lead to the creation of at least one gravitational force phenomena. In a reactor-embodiment a chain of energetic events is created via a rotative magnetic initiation of a basic ionization of a gas (i.e. hydrogen) which then triggers a controllable chain of energy transfers (Scintillation) to the next following layer(s) of introduced gasses (i.e. He, Ne, Ar, Kr, Xe), of all other introduced elements of the periodic table (i.e. Li, Be, K, Ca, Ti, ... Pt, etc.) and/or their introduced molecule combinations (i.e. a vapor). A central colums has magnetic means to start the process. Various concepts, applications and products are disclosed, such as space travel and atomic welding

**Fig. 8**

**Description**

An important part of research on energy happened since about 1940 when the quest for nuclear power and it's control really started. We see that several concepts were developed since then. Some special more performing concepts without the nuclear waste problem are still under development, like the Tokomak reactors. The world of nuclear industry seems to be infatuated by the dream to create the power of the Sun on Earth. But a change in the physical design structure of the present reactors is needed because the fusion industry of today has not managed to produce any sustainable and substantial amount of energy after some fifty years of research and development. The reason for the failure of these reactors is rooted in the following three major miscalculations.

**Miscalculation 1:** These reactors all suffer from the central column syndrome. That is to say that, these all have a center solid body right in the middle of the reactor. This is to facilitate the physical loops of the magnetic coil rings, so that the magnetic fields can be produced and maintained to bring the plasma to the right temperature and speed, in order to achieve fusion. This is a fundamental problem if the scientists are trying to imitate and reach the temperature of the center of the Sun. As when has any one seen a central column in the center of the Sun?

**Miscalculation 2:** The fundamental reversal of laws of physics. If one looks at magnetic field forces in the universe. The magnetic force is created and maintained, from the center outwards, in any star in possession of fusion core. In these man-made designs, the laws of physics are turned inside out, where the magnetic fields are enforced from the outside, inward. This is an explanation as to why the scientists are using so much energy for such a small output.

Our view: The magnetic field force has to be created and maintained from the inner part to radiate out and thus allowing creation of the second magnetic field force inwards, to contain the plasma within the center of the core.

**Miscalculation 3:** Current concepts of fusion production and maintenance lack a source of Gravitational Field Forces like the one in the center of the Sun.

Our view: The secret of the Sun in holding together all the elements that can sustain fusion, is the existence of a massive gravitational field force at its core. What this means, is that the center of the Sun possesses and maintains a very high level gravitational field force, that can hold on to the plasma of its massive body.

This gravity around the center of the Sun is calculated to be in the order of hundreds and thousands of times more powerful then the gravitational force on the surface of the Earth.

If one reads all the past and present reported results of the tests on TOKOMAK-type fusion reactors.

Even, when one asks the men in charge of the latest fusion experiments in UK, they all report the gravity in the reactor core to be a fraction of the gravitational force on the surface of the earth. This is primarily due to the fact, that, there is no system devised to create and maintain a gravitational field force to hold the plasma in the reactor core and pull it together.

If this was or could be achieved there would not be a need for such a large input of current to create the magnetic field force from outside coils.

So how can a nuclear fusion reactor maintain its power without the existence of a Gravitational Field Force? This is like baking a sponge cake without having any flour or egg in the dough. How can one achieve fusion when they do not posses the main ingredient to hold the plasma together to sustain fusion?

When these problems are understood and rectified by the scientists they may then use these forces and materials appropriately as in the universe.

The other problem which scientists in the world of fusion do not tell and have not considered, is the truth about the one hundreds million degrees centigrade temperature they try to create in the TOKOMAK reactors.

A few thousand degrees melted the Columbia shuttle on re-entry into earth's atmosphere.

The present technology cannot handle a few thousand degree's temperature. The question is: How are they going to handle one hundred million degree temperatures for a long time in a two-meter diameter TOKAMAK core without making provision for removing heating from the core?

This question is what the fusion engineers are avoiding to answer. They are hoping to have an answer in fifty years, after spending *thirteen billion dollars* in the next twenty years from the common market and Japan.

Nor we see the correct approach in patent-applications by other inventors.

The method which is claimed in this patent application is such that - under centrifugal and vacuum conditions - a turbulence, rotation, compressive and heating of a gaseous matter is created in a reactor by at least one central rotative magnetic field with the purpose of creating plasmatic conditions leading to various physical phenomena.

We claim also a method where - under centrifugal and vacuum conditions in presence of ionization condition - a turbulence, rotation, compressive and heating of a gaseous matter is created in a reactor by at least one central rotative magnetic field with the purpose of creating plasmatic conditions leading to the creation various magnetic fields where at least the interaction of two magnetic field would lead to the creation of at least one gravitational force phenomena.

In this patent-application we disclose a concept, method and technology for more efficient and higher, electric energy levels as well as creation of gravity and anti-gravity within a center of an object or a matter that can be created at a relatively very low cost.

It is important to understand that we see an analogy with the planetary concept and positioning of planets in our solar system. The Earth and all planets and stars possess a centrally heated core. The creation and maintenance of the heat and motion is not in the level and method which scientist have chosen for motion and energy technological progress up to this moment in time. Planets possess and maintain heat, magnetic forces and gravity through one integrated system with mostly one common element as the source of the energy. In the center of planets the temperature acquired is more like in thousands of degrees centigrade rather than millions of degrees as in stars. But all the same, all effects in creating heat, magnetism and gravity can be achieved at all temperatures. It is to be proven through the design of the reactor in this patent that the strength of magnetic field and gravity of these planets is more dependent on the composition of the material and the speed of motion in the center core of the planet, rather then the size or any other factors in the planet or the star internal structure. In the universe vast amount of heat are not suddenly produced and presented in one instance for fusion to takes place for systems and stars to be created. There are laws and procedures to follow to succeed in achieving a large or a small system in the universe.

These laws have to be followed to the letter in the design of any system or reactor for creation of heat, magnetic forces fields and subsequent gravitational forces field and so on, for a system to be successful and operational. Planets and stars using the natural laws of physic and materials do all these, all at once and together without separate machinery and control rooms and fuels. They do this as one fully integrated system. Thus for the first time in the world of technology and intellect, in and by the design of this reactor, fundamental principals are set out and developed to show how all these above effects and many more could be very simply attained. All at the same time and as in a natural universal manner in one fully integrate system.

This is explained very explicitly in the annex that is joined to this patent application. That annex is integral part of this patent application, and may help the reader to better analyse and understand the concepts and ideas about our new reactors and their functioning.

The invention relates to a gravity producing system, method, concept and technology whereby in a reactor-embodiment (10) a chain of energetic events is created via a rotative magnetic (17A), initiation of a basic ionization of a gas (i.e. hydrogen 18A) or other matters, which then triggers a controllable chain of energy transfers (so called Scintillation) to the next following layer(s) of introduced gasses (i.e. He 18B, Ne 18C, Ar 18D, Kr, Xe 18E), of all other introduced elements of the periodic table (i.e. Li, Be, K, Ca, Ti, ... Pt, etc.) and/or their introduced molecule combinations (i.e. a vapor).

Without scintillation in a low density, low volume ration of atomic hydrogen environment of galaxies, the process of ionisation will not take place, that the rest of the chain of events for the creation of any system or galaxy can take is initiated. Scintillation is the ignition key for start of creation of any system in the universe.

All inert gases in conjunction with different materials and conditions in the cores can be used for or as scintillation material in the core of the reactors.

The use of liquid helium and neon and other inert gases as scintillators is the essential ingredient of the operation of any system that needs to generate heat, power and gravity. Helium and neon have no unstable naturally occurring isotopes, therefore any inherent radioactive backgrounds. That is why these are good source for creation of the extreme ultraviolet ray catalyst source needed for initial ionisation of hydrogen atoms to start the heating of gases and plasma in the caroline core.

In galaxies the ultraviolet photons from reminisce of the explosion of stars have sufficient energy to strip the electrons completely away from hydrogen atoms and ionised hydrogen atoms. When and if the atom of hydrogen absorbs a photon with wavelength of 912Å. The atom is ionised with the extra energy going in to kinetic energy of the electron. This requires a photon energy greater then 13.6 eV or wavelength of 912 Å in the ultraviolet region.

Collision between electrons 'thermalise" their energy, this energy heating the gas in the region to higher temperatures.

Theoretical models of the installer cloud are providing new insights into the role of extreme ultraviolet rays and soft X-ray photoelectric heating, as well as thermal conductive interfaces, in explaining the observed <u>high ratios of hydrogen HI at very low pressures.</u> These indicating not the need for the use of ionised Hydrogen but natural hydrogen in the process of heating up a gas to Plasma State.

At the present most considerations are given to use of ionised hydrogen and its relation with extreme ultraviolet rays emissions. Recent research and findings allows the endeavour to new territory of reverse state of condition. Where it has been observed in the galaxies that ground state hydrogen receiving energy photons in the extreme ultraviolet rays range would and is excited to be ionised. Then by returning to ground state through catalyses it can be used to release this energy to heat up the surrounding gas to heated Plasma State.

This opening a new approach into development of systems where not ionised but natural hydrogen and atomic hydrogen can be used to generate energy and currents, by using extreme ultraviolet rays rather then ultraviolet rays to create the ionisation.

This new understanding allows low temperature operation and less energy input for the higher energy out put, allowing operation in the non-nuclear environment.

These being due to the fact as natural hydrogen is used, there are no possibility of emission above extreme ultraviolet rays by the hydrogen atoms, as an atom can not emit more then it has absorbed. That is as the extreme ultraviolet rays energy absorbed by natural hydrogen atom, this atom to return to ground state can only release energies below extreme ultraviolet rays, at the same time releasing sufficient energy and free electrons that can be useful in a system. For this reason the need for new ignition system using extreme ultraviolet rays for hydrogen rather then ionisation by ultraviolet rays microwave can be considered.

By passing liquid helium over Alpha or Beta source to generate the extreme ultraviolet rays, Thorindike in late 1950th discovered liquid-helium scintillation. Stockton later showed the emission of very intense wavelength range in the extreme ultraviolet ray's spectrum is centered at about 80 nm. Adams confirmed the transparency of liquid helium to its own scintillation light reason for the intensity of the photons.

Scintillation of the liquid helium by can be achieved through use of Alpha or a beta radiation source, where the use of Alpha or Beta source excitation in liquid helium determines the density of the ionisation. Adams calculated that, energy deposited by Beta particles in super fluid helium are emitted promptly as extreme ultraviolet rays light, and is considered to be as much as 35% of total energy released by the fluid.

The initial stage in the process of heating all the elements in the core of a reactor has to be the ionisation of atoms of hydrogen in the Caroline core by using extreme ultraviolet rays, carried by compressed liquid helium into the core, which has been exposed to radioactive source prior to entry in to the caroline core.

This method of ionisation of hydrogen atoms has been observed in the galaxies, therefore it should be easy to achieve the same in reactor environment under the right condition. The extreme ultraviolet rays in vacuum condition cause prompt and direct photoionization of hydrogen. Where as lower energy photon causes a combination of fragmentation and delay thermionic ionisation. Thus use of extreme ultraviolet ray is the fast and direct way to start the reactor from cold.

The right choice of radioactive element for production of extreme ultraviolet rays in presence of liquid helium or neon is important. With the correct selection, the possibility that liquid helium will carry any gamma ray energy level radiation into the core of the reactor can totally be eliminated. Therefore the choice irradiation source for scintillation will have direct effect on different combination and the amount of gases used in the Caroline core.

Use of neutron traps facilities, in the outlet of irradiated chamber of the scintillation unit can make sure no neutrons can enter the caroline core, that can create high energy rays in the core, that can create radioactive chain of events of releasing X-rays or higher level energy rays with the interaction with other materials in the caroline core.

The reactor-embodiment has at least one (26) or more (27) spaces (i.e. cavities 11, layers, sub-chambers). This is very important to understand. 26 and 27 show two different approaches. 26 shows a reactor which has one chamber and inside will be - in the pure gaseous concept - several layers of inert gasses (or other matters or a mixture of gasses and matter). These layers are formed in the reactor chamber by the centrifugal and vacuum conditions according to their the atomic weight. Since the layers have a different rotational speed there will be kinetical, magnetic and other effects in the inter-layer regions. 27 shows instead a reactor concept where there is a real physical wall (i.e. steel wall, liquid substance, vearing energy strength matters) in the reactor which separates two zones inside the reactor, and each may have it's own internal process(es) and specific layer ordering. The magnetic fields in both will interfere with each other in a controlled way. This physical wall may be dynamical too, meaning to be opened under certain secured conditions for various reasons or the separated area's may interchange matter or plasma - by connection means - if that is appropriate in the processing.

The concept of creation of energy for this reactor is on the bases of the understanding of cooperation, interaction and application of the atomic structure of the plasma, gases, liquid and solid of all matters known in the world of science.

The principal of the behaviour of these in a vacuum and centrifuge environment has been studied and catalogued in detail over past decades.

It is paramount to understand that gases in a vacuum environment for their containment behave very much like liquid and the two can switch state. With one element changing properties at the same time in the same system by slight change of temperature or pressure within the core of the reactor. This holds the same between the liquid and solid state too.

If the behaviour of a drop of water in space and the way they float in vacuum condition are observed, gases behave the same in the vacuum too, they stay in cluster but take over the whole of the space of their containment.

From past research it is understood that gases in a vacuum and centrifuged encapsulate each other according to their atomic weight, from the lighter gases in the center of the cluster and the heaviest on the outer layers.

This means that neon will encapsulate helium and heavier gas will encapsulate the neon and so on.

The second important principal for inert gas laws is that they do not mix with each other in a vacume and centrifuges condition.

This factor will play an important part in the development of any energy system, which has to be portable and light. But at the same time flexible, energetic and functional able for it to be used for its merit in any system, this being for power production, gravity, anti gravity, shielding and medical use and so forth.

For this system to be able to take advantage of above criterion it is important to have Hydrogen in atomic, molecular, its isotopes and ionised form are the primary element in production of initial heating of the reactor core, as it is done in the cosmos.

Hydrogen gas in atomic and molecular level has some versatile properties, that if they are used for the right purpose at the right time in the right combination, this element will provide and facilitates most the needs of systems energy creation requirement for all applications.

In this patent, systems are developed, that makes it possible for the first time, does not matter in what form hydrogen is made available in a core of system, primary condition can be created in the core of the vacuum, centrifuge chamber, that brings about the desired effect in any system to create the initial heat for the onset of chain of events, that will lead on to creation of heat in vast amount, electric current in predetermined large quantities, single magnetic field condition in molecular level in and around the core of the reactor, creation of double magnetic field in the molecular level, which the interaction of two magnetic fields will lead to creation and control of gravity in the center of a system for the first time "creation of gravity" M T Keshe.

When Hydrogen is used in conjunction with other elements, hydrogen has the properties of being easy to be ionised by any source that can deliver a 13.6 eV of energy to achieve the ionisation of its atom. At the same time hydrogen has the capability to release this attained energy to a third elements in its neighbourhood and return to the ground state rapidly through this interaction with this third matter.

How ionisation and release of energy are created and used are the principals behind the design of this reactor for the creation of energy, magnetic effect and gravitational forces.

Then as other elements are introduced into the core of the reactor, then the true nature of the hydrogen will revile its potency in this system as a whole. Where, how and how much, when and the way all elements are introduced or applied in this system cores will create the desire effect that is required of the system as the whole at that time.

So that the system can be power generator, then with slight change in one of the parameters of one of the gases or introduction of other elements the system will become a gravity machine. Then maybe by combining the two effects. One will have a system that not only generates energy but it holds gravity and creates anti gravity too.

Thus for matter of simplicity in this disclosure the simplest forms of the energy and gravity system will be discussed and disclosed.

In this patent application we name the central area of the total reactor the central core (or caroline core) and the outside area the outer core.

So several layers of matter or plasma may be possible wise separated by a solid (14A) or by a gaseous (14B) or by an other state layering matter.

By the chain of inter-layer transfers several other physical phenomena are caused, such as:

1. Compression and decompression inside the reactor chamber,
2. Rotation of the matter inside the reactor chamber,
3. the interaction of two magnetic fields (20 and 21) in the center core of the reactor,
4. the creation and development of heat (40) due to ionization in a soft or hard magnetic fields and their reconnection (s) by the matters in the center core (also called caroline core (13, 28A, 28C) and the magnetic field in turn created in the outer core(s) (12, 28B, 28D) in the reactor chamber (11),
5. magnetosphere effects (22) of the two magnetic fields of the center core, and the magnetic field of the outer core,
6. the emission of rays up to Ultra Violet for heating up the materials in the core(s) or plasma's,
7. the creation and convection motion (71, 81) for creation of current (80, 82) and the single and double magnetic fields which create the fundamental cyclic transformation /retransformation of the gas and/or matter involved from ground-state to excitation-state(s),

The interaction between the two magnetic fields, of at least two cores, leads to the creation of gravity and anti-gravity due the creation of the double spherical or other shaped superimposed magnetic fields (20 and 21, 30). This will cause the rotation (50) of the containment vessel(s) (see all 18) of the caroline core, and the rotation of the inner core (84) will cause the rotation in at least one central column in at least one chamber.

That central column (16A) may have several designs in relation to the reactor chamber, the desired functioning depending of the type of reactor and it's purpose of design, and may:

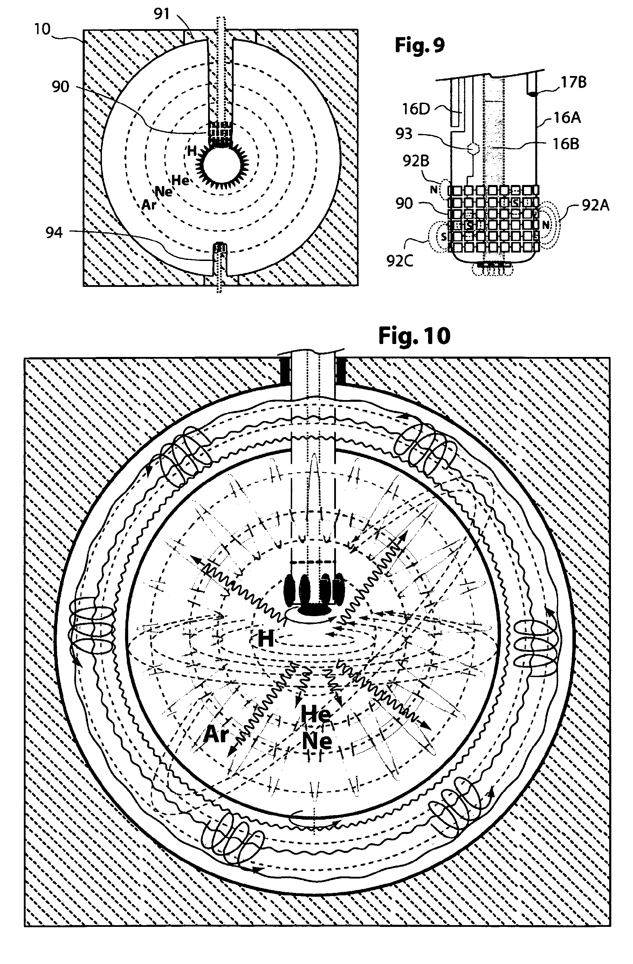

a. Either turn completely, powered by a power source (15F) that is positioned outside the chamber,
b. Either from which only at least one part with magnetic means turns, i.e. the tip-part (51) (in the center of the chamber),
c. Either from which only a part with topological means turns, i.e. at least one mixing blade (in the center of the chamber), possible wise covered with at least one scintillating material (16E) unit (15C), or i.e. a spinning ejection mouth,
d. Either is completely immobile (fixed)(Fig. 9) but which has on it's surface at least one set of electro-magnets (90) and/or coils which can be activated (92A) or deactivated (92D) - possible wise controlled by electronic means (i.e. a microchip 93) - in a preferred periodical and/or positional way, which - preferable - can change polarity and/or strength (92A, 92B, 92C), that way able to create turbulence in the center core, and/or in other superior cores,

e. Either is completely immobile (fixed) but by which the basic gas and/or matter is pumped in a core by at least one ejection mouth, (called the statistic reactor),

f. Either has at least one symmetrical or asymmetrical channel in it's tip which can pump gas(ses) from one side to the other,

g. A combination of previous,

The central column (16A) has possible wise - but very preferable - at least one internal channel (16D) (i.e. a borehole 16B) for the distribution and/or collection of relevant gas(ses), matter and/or plasma (23).

The central column possible wise can have at least one electrode (17B) - but very preferable several - to collect electric current for transportation (17C) to the outside of the reactor. This way the currents can be collected for several purposes.

The central column can have - depending from the type of reactor (i.e. 14A, 14B) and corresponding to the type of gas, matter or plasma - one or more injection-mouths on different levels, each for another type of gas, matter and/or plasma, preferable on a height that correspondents with the layering position that this gas or matter will have after it's atomic weight and/or the purpose of the injected plasma or matters.

The reactor (10) comprises a body (24) that can made of any natural or man-made material or several materials, or in atomic or molecular state - at least made of one part - in which at least one hollow space (11) is positioned, and whereby all relevant parts (i.e. the wall 25) - if needed to be protected (i.e. coated, laminated, painted, etc.) in well known manners against corrosion, aggressive acids, etc.

At the outside of the reactor (10) a number of relevant supporting systems are positioned, such as: pressure-tanks (15A), reverse tanks (15B), turbo molecular pump (15E), gas seals, scintillation unit(s)(15C), electrical brushes (15D), heat removal chamber, valves, pumps, tubes, closing means, measuring means, control sensors, engine(s)(15F), gears, power-source, electrical components (i.e. fuse), computer(s), IC's, etc.

After the initial mechanical rotation (i.e. at 3,000 rpm) and/or electromagnetic triggered rotation the internal rotation (50) will be continued due the interaction of the magnetic fields involved (self-sustained process), in correspondence with one of more core-layers and their containment.

Possible wise one of the reactor concepts may have one of more of next specifics:

a. The central column may be mechanically withdrawn (52) if the internal interaction goes after wish, and can be repositioned inside the chamber if there is a need to collect current, to add new gas(ses), matter and/or plasma, and/or to adapt or correct the balance of the lower or higher volume-ratio of the matter and density.

b. In another concept or a combined concept the central column will have on his tip (53)(central position) at least two magnetic means (54) of different pole, but preferable several sets which can be ring wise or polarity faced wise and sized positioned above or next to each other, and on the top of the column tip one magnet, either in polarity strips (95) or as a single body.

c. The central column may be treated at the inside and/or outside surface by radioactive material (16E)(i.e. liquid, solid or a spray), or materials which can radioactively decay, or by fixed methods of scintillatizion like microwave lamps.

d. A reactor may have more than one column, one (91) with it's tip positioned in the center area, and at least one (94) with it's tip on a different level, but separated from each other.

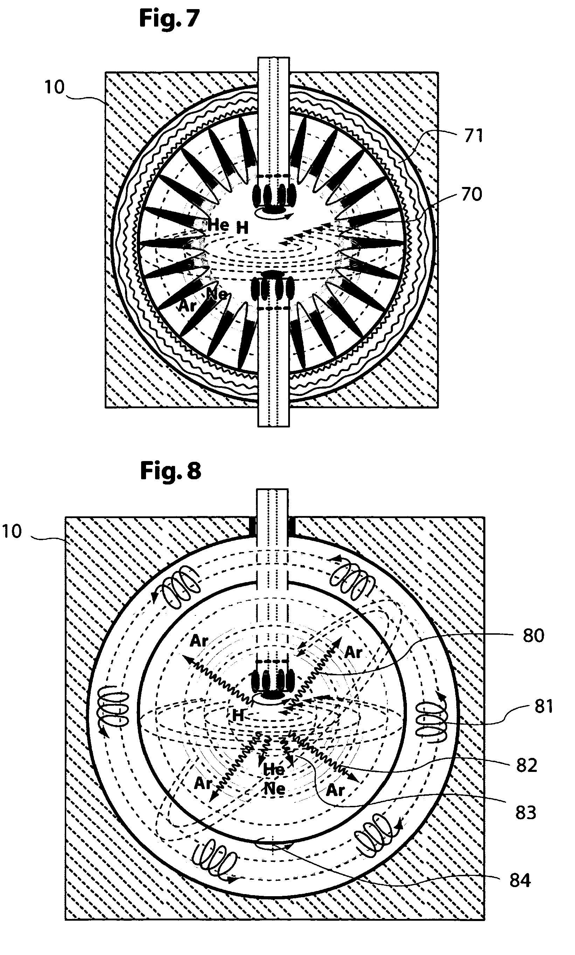

e. At least two central columns (fig.7) may be positioned opposite to each other, either creating a similar rotational effect, either creating a conflicting rotational direction.

f. The reactor body contains at least two separate hollow spaces of identical or different dimensions,

g. The reactor body may contains at least two separate material cores (i.e. by a wall-layer 14A), a larger encircling a smaller, and each may have a proper internal independent process, and magnetic interactions may occur between their magnetic fields, and matters may be exchanged between physically separated chambers (28C and 28D) by connection means (58).

h. The reactor can be connected by connection means with at least one other reactor, either of a different type, dimension, concept, either identical.

i. In an external container (15C) - outside the chamber - at least one scintillating unit (i.e. made of partially of Cs137) is available which will have a normal radioactive behavior or his natural decay inside or outside the chamber.

j. A reactor may have either a solid structure (10), either a dynamical structure and being able to adapt it's structure after, (i.e. the internal pressure and temperature), and being secured by magnetic seals (16C) and/or fields.

k. A reactor core can have also several overall shapes, such as: perfect spherical, elliptic, half-circular, etc.

l. The reactor wall (25) and/or material core wall (29B) can have also locally or overall several topological shapes, skins and/or furnishings, such as: perfect smooth, dimpled, grooved, triangled, etc. Such surface properties may add additional effects on the internal process(es).

m. A material core (29B) can also be surrounded by conductive wires (i.e. copper) or bands, or similar, which can create additional Alternating Current, which can be superimposed on the Direct Current(s) which are created within the core.

Above mentioned reactor concepts, method and technology results in a completely new type of dynamic energy-source and energy concept which also implies the control over local gravity. This brings a large number of new products and applications. These are also described in the annex document, which is part of this invention.

One of the most important results is the creation of gravity and anti-gravity. We see a number of applications next. Next the creation of internal heat source leading to creation and the interaction of two or more magnetic fields, leading to creation of gravity, shielding and current production in alternating or direct or electrovolts levels, can be used in applications for space, aircraft, and submarine, sea-bottom habitat, liquid habitat (like in a container tank or for nano technology in blood vessels), colonisation crafts and colonisation systems (i.e. cocooned atmosphere conditions on a sea bed, beneath surface or on surfaces). The same can also be created by at least one extra layer with a magnetic field rotating in opposite direction to at least one other magnetic field, within at least one core or outside the boundary of the system, creating in example a impenetrable field and useful for reentry or exit of atmospheric conditions, or for laser-like effects of co-existing magnetic fields (i.e. surgery, cutting tools and long-distance communication).

The production of energy via soft fusion (i.e. cold and warm fusion) is a major application.

The production of plasma due the creation of gravity at molecular level between two magnetic fields (41, 42) (62, 63) of two cavities or more in a system for creation high temperature plasma in fusion industries (40) is very important.

New concepts of batteries, lighting devices (i.e. transparent reactor-housing, light-bulb, floor light, wall light and flood-light, etc.), security products (i.e. traffic lights, sensors, water purifiers, etc.) and industrial and household devices and apertures, like water-production machines become possible.
Also heating and drying devices, the use of energy production capabilities for creating heating like warming the surrounding maters, like in boilers and heaters in the house for central heating systems or individual heating systems, and warm blanketing, using as boiler for warming up or boiling matters like liquids and malting solid materials, for use as drying system like hair dryers for industrial or commercial drying system, or heating oven, or stove or cookers in the house appliances, or grilling of food appliances for private or commercial or industrial use. Other application can be i.e. the heating of the roads in winter, the soils for plant growth, etc.
New cooling devices can be constructed due the reverse gravity magnetic field_generation system(s), where the system will absorb heat from its surrounding, to cool its surrounding for use in the air-conditioning for buildings and cars, and crafts or any object which can carry any other object, refrigeration systems of any kind , production of ice or frozen state of any material or matter.

The production of new materials in and outside the reactor chamber under specific magnetic and/or gravitational conditions (i.e. directional nano growth, the welding of atoms and molecules, etc.) becomes possible. A number of processes related to atom creation become possible, such as for human or animal or plant cells, where the micro gravitational field in presence of magnetic fields in one or more magnetic fields created in the center of the one or more cavities will allow magnetic fields above dark magnetic levels to manifest themselves and cluster together to create the nucleolus of the atom and in use of multi layering, then the electrons are allowed to manifest themselves, and these processes can be continued for leading to production of molecules, and base material for the DNA, where specific energies or magnetic fields are inserted leading to creation of the right characteristic of the foundation of the any cell or organs or creatures.

In space refuelling and accessing new material for food or oxygen, or parts will easily done, simply by retracting basic matters in the cosmos soup and using this method in conjunctions with atomic welding methods, all maters on continuous bases can be produced or manufactured as demand arises, so there are no need for huge inventory to carry, one produces in the core as what it is needed at that point of space and time.

Gravitational devices become possible which can move without contact with a carrying substrate (i.e. earth surface, sea, air, etc.), such as gravitational lifted transport devices, lifters for heavy products, wheel chairs for able and disable bodies, the push chair for children , or elevators in building, the use of hollow center loop fitted with rotor blade of any kind for the manufacture of current, for sky or water board , sliding board for play where the board hover, for movement large objects, this being for automotive or commercial vessels, trucks and trailers or shipping over liquid or solid bodies from one continent to other or planets or solar systems and galaxies, for use of cycles sliding over surface, craft which can fly and have magnetic shielding and gravitational force field inside, for railway like system where the object of any size or length can flout over the track, use in the fork lift and crane and platform lifting of an object of any kind and size in industry for lifting objects or liquids to any height, for the use in the gates and doors which will elevate and levitate or revolve by use of antigravity and vice versa, tables and chairs, beds, furniture's of any kind with or without legs or attachments to the physical surrounding, shoes for walking, etc.

New methods and applications become possible in the inter-terra development and exploration (i.e. transport tunnels and hollow habitat spaces by rock melting in deeper earth and planet layers),

We see also an interesting number of applications in Transforming units for the decomposition and recompositions of waste and old products in new basic matter and materials or specific combinations (i.e. plastics) with perfect internal atomic ordering.

There are also products related to the creation of double or more magnetic fields_superimposed (30), at least two, and fully in circulating each other in layers, on top of each other for multi-layer shielding of an object, where at least one magnetic fields can rotate in one direction or at least one rotating in the opposite direction to one or more fields, like for the use in submarine or space craft industry, air- and space transport systems and devices (i.e. with magnetic shielding effect with creation of imposition gravity) and non-air-friction-systems, products for welding industry, this being material or atomic welding or molecular welding.

New electronic devices and components become possible (i.e. computers, scanners, etc. with 3D-dynamische layers), nano-wire transistors, three dimensional screen, three dimensional communication holographic systems, etc., and various aspects of nano-technology, where the minuet machines needed to be energised and controlled, where the packages of energy can be made or delivered to the energy cells or the battery of the system for it to continue operation, or the use of minuet battery system which only creates electrovolts current needed for the operation of these micro machines.

A important application is in the field of communication systems, by the use of the soft body, or port of the reactor at least with one cavity, where the high energy magnetic wave are released in the spherical domain, or at least in one direction, where the magnetic energy will be code in the sequence as in the present system but this will be hard to decipher in the inter galaxy system, the best method of space rapid response communication will be the magnetic plasma of the element in the sequential chambers, what this means is that the Hydrogen plasma magnetic energy will be A, Helium plasma magnetic energy will be B and so forth, according to atomic weight if the element, where simultaneous small chamber magnetic charge will be released in the magnetic energy field level, then there is no need for decoding or losing information in the solar system or galaxy media, as each element of the periodic table carries it own magnetic energy frequencies in the plasma magnetic state, and then the time laps will be insignificant, and inter solar magnetospheric bouncing will be used, like satellite dishes of the present time to forward a massage onto the next system or craft in the other part of the same system or others.

New decontamination systems, and growth provoking magnetic conditions for human, animal and plant cells and life (i.e. plasma-multi-color light), and radiation protection, $CO_2$-decomposition system, etc., are possible.

New development are possible in weapon systems (i.e. a fragment of the reactor wall is opened under controlled conditions or at least one layer-core is opened by physical means and/or at least one magnetic field), partial or complete magnetic disintegration of matter on any atomic or molecular level (i.e. meteorites) becomes possible, protection fields for various object like air craft, ships, tanks, housing, and also radar-stealth systems (for stealth effect where the incoming energy from a radar can fully be absorbed in the tangles of one or more magnetic fields), EM-absorption systems,

New magnetic blanketing can be reached in a perfect way (internal magnetic ordering in objects, tools and devices).

Another field of applications is in field of Housing concepts and products, due the use of the magnetic field shielding, as an object to prevent passage or block or obscure the view into or out of an object, like as doors or walls for entering into or out of an object, like the door of a house or walls of the house, or as replacement of or the glass or any other materials used for this purpose where the double glazing or any kind of glazing, or prevention of entry of small or certain object can be predetermined by the field, like to be used as of mosquito nets and window fly nets, or as umbrellas for preventing the sun or the rain from reacting any matter or object, roofing, and flooring.

Products and applications can be designed related to the energy release mechanism using soft or retractable wall system of the core that can be used for release of plasma or energy or an object, or material in one or more direction from the at least one or more cores of the system, this being used as the rivet machines, nail machines or guns of all sorts, shooting guns for defence and laser or leisure or hunting, using for destruction of matter ahead like dynamite, drilling machine in any scale or with any power, dentist drilling machine, space weapons for destruction of meteorite or object ahead, where the delivered mater will not have a physical container as of the rockets and bolts of present time, but packages of energy being magnetic or plasmas or matter of any kind.

New type of suction machines for vacume system for absorption or attraction of other matters by use of magnetic field attraction or physical suction of the system, this being used for likes of household vacuum cleaners or industrial vacuum cleaners, or for absorption of any gas or liquid, or solid material from its immediate environment like in contamination clean up conditions, and this can be created through magnetic strength helicities between at least two inter-layers (57, 55) of material with different speed of rotation and varying atomic weight, creating it's own localized magnetic field black hole (56) condition where by the use of soft body core or magnetic tunneling material can be sucked into the black hole region from the core region of the reactor or by facilitating a port hole from matters outside into the black hole condition, as described in annex (section "creation of black hole") and in the description.

We see also new products related to the creation of internal heat source leading to creation and the interaction of two or more magnetic fields, leading to creation of gravity, shielding and current production in alternating or direct or electrovolts levels, used in the space, aircraft, and submarine, colonisation crafts.

Several consumer products will be created, such as textiles (i.e. with memory), and vacuum suits for human or animal or any object in possession of internal gravity for play or industrial or apace application, like toys (i.e. human lifting belts) and sporting products, all sorts of material used for floating, belts for levitation , where gravity can be reversed, magnetic shield bowls, diving suits for submerging in to any liquid or gas in possession of gravity and heating elements.

Products, machinery and applications become possible which are related to using the magnetic pressurises for the production or shaping of all kinds of material or containers and use in the pressure moulding and pressure casting, or for the pressure pumped systems of all types of materials and matters, like the water pumps, injectors for computer industry printing and etching system and lithography, printing industry (i.e. transfer print), and platting and lamination industry.

Zero gravity machines can be used for production of material, where the reactor will, by in circulating the inner cavity, where the material is produced, like in flask or a room , where the magnetic fields of one or more do not pass the inner physical boundary of the containment but creates the zero gravity condition in the inner cavity but not at the same time a vacume condition, this being used for like production of silicone or for the micro chip industries where clean but zero gravity condition is necessary.

Also new medical devices and applications are possible, due the creation of one or more soft magnetic fields for matching the magnetic field but at the same time in possession of gravitational force system, with temperature level control requirements for medical use, for like reseating of the magnetic or energy levels of human cell for eradication of cancer cell from a tissue, for blood cell for blood cancer, like dialysis's machine, or creation of condition for the growth of body part in the exact position on the body, of remote matter or organs replacement without cutting tissues or organs from outside to reach the organs or part in the matter, this is un-intrusive surgery, incubators for premature bore child, where the gravity can be reduced to allow breading in a softer conditions, where heat and liquid condition of the internal environment of mother reproduction organs can be replicated, Incubators for animal production, Organ transplant without intrusive method by transmutation of the organ in its position and in position reconnection of the organ through remote one or more gravity laser beam for the swing of the organ in its position.

Of course an very important application and method is related to the generation of electrical power, using one or more materials in the cavities, by the use of collection of the appropriate charge particles from the right electrodes specially positioned in the He (83) and Ar (82) layers or on the appropriate material layer, where the positive charges can be utilised as well as the negative charges for operation and used within or the outside the parameters of the system, that is to say the protons carry as much energy or most instance more than the its electron counter parts, where ever they are collected in one or more cavities of the reactor, and by which the total utilisation of all energies from all parts of an atom even the magnetic dark matter is possible, and not just the electrons as has been done up to now.

Atomic welding applications and technology, becomes a simpler way to produce or fuse matter together than fusion methods - where large energies are required to fuse to atoms together - where atomic welding brings to near similar atoms or molecules together and only add one electron or proton, or an neutron for the two atoms to become one, which is in reality the reverse atomic decay or half life system method, which the world of science has never understood, where for example potassium goes through beta decay to become argon, where if one add beta in the magnetic and gravitational condition one can create potassium from argon, thus applying the material creation in the universe, where the atoms do no start always from hydrogen to go to uranium, but they just simple weld into higher element to create heavier elements, like creating 113 element out of Iron 56 and 57 (which is a double magnetic element and therefore can be called magnetically a 'dark' matter).

Space travel without use of any fuel using the gravitational pull of a targeted planet, where the double magnetic material created in one or more cores could be fed into three independent, 120 degrees positions, for creation of the planetary gravitational pull, where one reactor will be filled and two other reactors on approach to or near the destination will be reversed back in gravitational force using a different magnetic dark matter for break or slow down system.

Even non-tangible magnetic locks in position of gravity are possible where the two magnetic fields are matching but opposite that they can lock into each other. These applications are claimed here, now, and may be developed in more detail in future patents.

Next are some specific claims related to this invention, and they are also described in for mentioned annex.

A reactor-embodiment (26) can have only one rotating chamber. This reactor body (26) can contain at least two inserted gasses of different atomic weight which position themselves due the centrifugal effect in layers: (1) the lighter gas(ses) at the inside (so called inner core 28A) and (2) the heavier gas(ses) at the outside (so called outer core 28B).

Another type of reactor-embodiment (27) will have at least two internal chambers (28C and 28D).

The reactor can have at least two internal chambers, from which at least one in stationary (28D).

The reactor body can have at least two internal chambers, from which at least one (28C) is connected with the central column (29) and both rotate together.

It is possible that the reactor (10) has a central column (16A) which is in rotation, but is also possible to make a reactor where the central column is static.

It is also possible to build a reactor where there is not central column in at least one chamber.

A reactor can also been build where there is a different central column in at least two chambers.

The central column can have several shapes and/or concepts, at least in one chamber, such as: fully telescopic, partly telescopic, with a pipit inside, without a pipit inside, partly dynamic (i.e. only tip part rotates). The central column will be designed after the intentional purpose, the materials to be used, the way to insert them and the conditions to meet.

The central column may have rotary-blade(s) or saddle(s), covered with various materials (i.e. radioactive), equipped with magnetic means (i.e. solid, liquid, coils, electromagnetics, ionization emitters (i.e. lamps, microwave, chemicals, etc.).

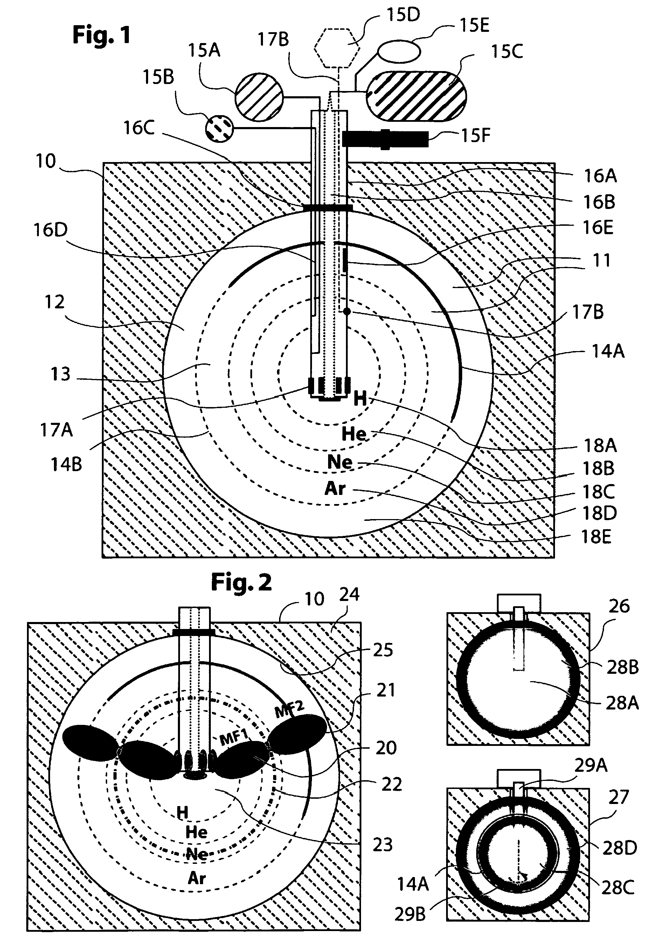

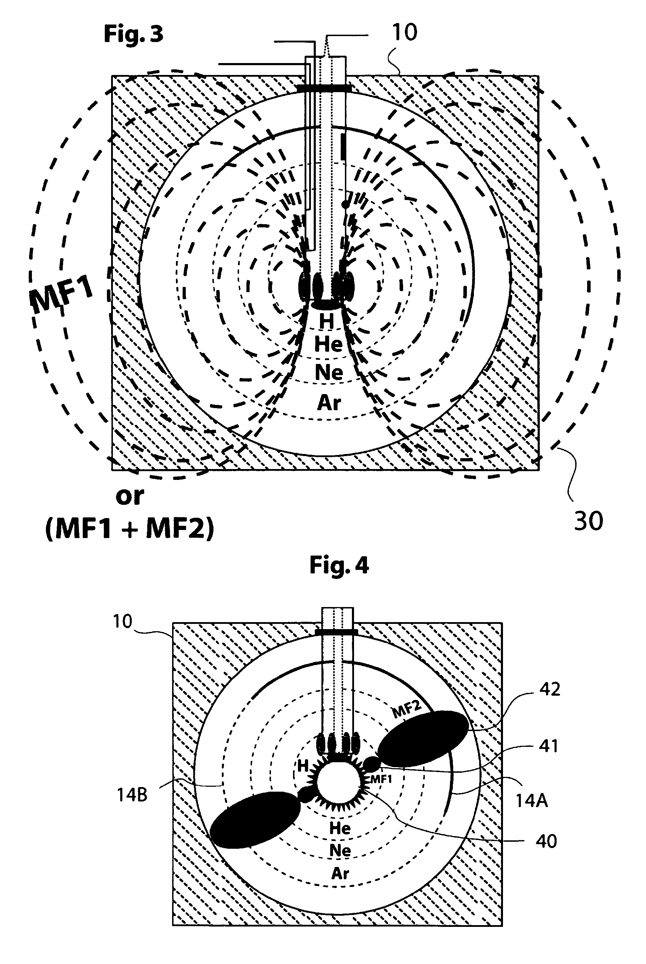

A reactor (fig. 1 to 9) will create at least one spherical or other shaped non-tangible magnetic field (20, 21, 30, 40, 41, 50, 62, 63) at least in one chamber.

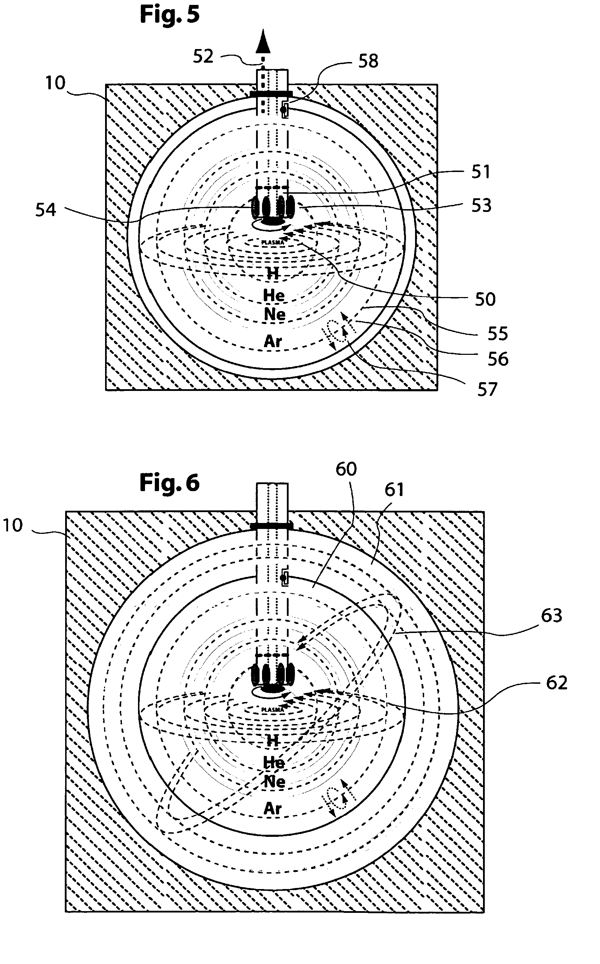

But a reactor (fig. 6, 8) is also claimed that can create at least two spherical or other shaped non-tangible magnetic fields superimposed or encircled one inside the other at least in one chamber.

A reactor (fig. 2) is also claimed that can create at least two spherical or other shaped non-tangible magnetic fields (20, 21) superimposed or encircled one inside the other at least in one chamber, for the creation of gravity and antigravity (i.e. lift, levitation), and/or at least a double magnetospheric (22) effect.

A reactor (fig. 2) is also claimed that can create at least two spherical or other shaped non-tangible magnetic fields (20, 21) superimposed or encircled one inside the other at least in one chamber, for the creation of plasma for cold or hot fusion process, including the containment of such plasma, in position of gravity for fusion processes (i.e. power generation, production of new materials).

A reactor is also claimed to generate electric current (80, 81, 82, 83) at least in one chamber through ionization, turbulence, convection, rotation and plasma, and magnetic fields and interaction between at least two magnetic fields, and at least in one layer of the material in one chamber.

A heat reactor is also claimed to generate heat in at least in one chamber through ionization, turbulence, convection, rotation and plasma, and magnetic fields and interaction between at least two magnetic field, and at least in one layer of the material in one chamber, which will deliver heat (70) to at least one material in at least one chamber or to the surrounding outer layer of the inside of the reactor, or at the outer boundary of the reactor (i.e. for heat-transfers, heat exchangers or heating or lighting (i.e. steam).

A reactor is also claimed to generate cooling in at least in one chamber through ionization, turbulence, convection, rotation and plasma, and magnetic fields and interaction between at least two magnetic field, and at least in one layer of the material in one chamber, which create cooling effect to at least one material in at least one chamber or to the surrounding outer layer of the inside of the reactor, or at the outer boundary of the reactor.

And finally a reactor (fig. 10) which possesses - in at least in one chamber - all type of heat, current, magnetic field (gravity and plasma), i.e. space-craft technology, magnetic shielding.

This invention is intended to bring substantial progress and freedom for mankind in various domains.

ANNEX TO THE PATENT APPLICATION: GRAVITATIONAL AND ENERGY SYSTEM (being integral part of it).

# The principals of new gravitational and energy system design and technology
## (I T N O T G O G)

List of contents

The principals of new gravitational and energy system design and technology
Abstract
Introduction
The object of designing this system
The new principals and concepts behind the intellects and technologies of the proposed system.
The seed of the Earth.

The creation of gravity.
Magnetism and gravity.
Magnetosphere.
The creation of Black Hole
The Dark Matter
Materials for the cores.
Gases used in the cores of the reactor.
Hydrogen
Helium
Neon
Argon
Krypton
Xenon
Radon
Extreme Ultraviolet.
Scintillation.
Other methods of EUV generation.
Turbulence.
The rotation of the core.
The magnetism and gravity of the system.
Cores of the system.
The caroline core of the reactor.
The outer core.
The Static Core
The Soft Body Core
The central column.
The planarity unit.
The scintillation unit.
The use of solid magnets in the system.
The magnetic seal.
The Pump units.
Measurement gauges.
Motoring system.
The energy balance of the reactor.
Energy delivered through liquid helium scintillation to hydrogen.
Hydrogen ionisation energy absorption and release.
Heating and ionisation due to magnetic reconnection by the matters in the caroline core and the magnetic field of the outer cores.
The energy created through magnetospheric effect of the two magnetic fields of the caroline core and outer core.
The measurement of the volume ratio of gases in the caroline core.
The mathematical calculation of the weight of the gases in the caroline core.
The production and assembly of the prototype.
Operation of the reactor.
The Start-up of reactor condition.
The principal output measurement parameters of the reactor.
Notes and safety.
Shutdown and safety of the reactor core.
Safety aspects and parameters of the system.
Waste disposal system.
Conclusion
Calculation appendix 1.
Additional Applications and Reaction operation notes
Some answers to questions which has resin during the preliminary design stages of the reactor.
The list of references.

The principals of new gravitational and energy system design and technology (ITNOTGOG)

Scientist have yearned to understand the intellect and technology behind the secret of creation and maintenance of energy and gravity and motion as has been achieved in the universe.

Utilising the intellectual and technology given in this patent document, it is possible to generate a vast amount energy and gravitational force as in the universal order within a core of reactor.

In the following documents systematic principals, phenomenons and designs of the new system to achieve energy and gravity by the universal method is discussed and explained in detail.

The technology to be explained is a totally integrated inclusive system for creating energy and gravity in the center of the system.

Using this technology, it will be understand how to construct and utilise the systems to fly in the space free of man made fuels and shekels of gravity.

The energy production of this system is of natural universal system, where the system uses geomagnetic forces and principals to create energy, magnetic fields and then gravity.

The system through understanding of the astrophysics and the cosmology methods, make it possible to come true the concept of lift without use of fuel by use of creation of antigravity and in the space with ability to be in possession of gravity through direct creation of it within the center of a system.

The system technology will incorporate the theories of geomagnetic atmosphere conditions as the protection, and defend itself from any environmental and outside physical intervention.

The system will be a unique illustration of coming of the age of man to his natural wisdom and glory.

Our hope is that the intellect in this paper and the systems that can be achieved through its knowledge can bring and will become a toll for the pleasure of man and not of his inhalations.

The full potential of this fundamental disclosure is not be all apparent at the present. It will take time, in decades and centuries to comprehend and utilise the full potential of what is to be disclosed in the design of this reactor technology.

Here we lay the correct foundation of this new science of creation of universal energy and gravity, needed for life and travel, and are for the man to choose his correct path into the future. In time and through error and trial man will find the methods to suit his time and position in space to use these methods to achieve his needs

## Abstract

The Earth and all planets and stars possess a centrally heated core. The creation and maintenance of the heat and motion is not in the level and method which scientist have chosen for motion and energy technological progress up to this moment in time.

Planets possess and maintain heat, magnetic forces and gravity through one integrated system with mostly one common element as the source of the energy.

In the center of planets the temperature acquired is more like in thousands of degrees centigrade rather than millions of degrees as in stars. But all the same, all effects in creating heat, magnetism and gravity can be achieved at all temperatures.

It is to be proven through the design of the reactor in this patent that the strength of magnetic field and gravity of these planets is more dependent on the composition of the material and the speed of motion in the center core of the planet, rather then the size or any other factors in the planet or the star internal structure.

In the universe vast amount of heat are not suddenly produced and presented in one instance for fusion to takes place for systems and stars to be created. There are laws and procedures to follow to succeed in achieving a large or a small system in the universe.

These laws have to be followed to the letter in the design of any system or reactor for creation of heat, magnetic forces fields and subsequent gravitational forces field and so on, for a system to be successful and operational.

Planets and stars using the natural laws of physic and materials do all these, all at once and together without separate machinery and control rooms and fuels. They do this as one fully integrated system.

Thus for the first time in the world of technology and intellect, in and by the design of this reactor, fundamental principals are set out and developed to show how all these above effects and many more could be very simply attained. All at the same time and as in a natural universal manner in one fully integrate system.

## Introduction

The technology behind the development of this reactor goes back to basic understanding of laws of physics.

The concept of creation of energy for this reactor is on the bases of the understanding of cooperation, interaction and application of the atomic structure of the plasma, gases, liquid and solid of all matters known in the world of science.

The principal of the behaviour of these in a vacuum and centrifuge environment has been studied and catalogued in detail over past decades.

It is paramount to understand that gases in a vacuum environment for their containment behave very much like liquid and the two can switch state. With one element changing properties at the same time in the same system by slight change of temperature or pressure within the core of the reactor. This holds the same between the liquid and solid state too.

If the behaviour of a drop of water in space and the way they float in vacuum condition are observed, gases behave the same in the vacuum too, they stay in cluster but take over the whole of the space of their containment.

From past research it is understood that gases in a vacuum and centrifuged encapsulate each other according to their atomic weight, from the lighter gases in the center of the cluster and the heaviest on the outer layers.

This means that neon will encapsulate helium and heavier gas will encapsulate the neon and so on.

The second important principal for inert gas laws is that they do not mix with each other in a vacume and centrifuges condition.

This factor will play an important part in the development of any energy system, which has to be portable and light. But at the same time flexible, energetic and functional able for it to be used for its merit in any system, this being for power production, gravity, anti gravity, shielding and medical use and so forth.

For this system to be able to take advantage of above criterion it is important to have Hydrogen in atomic, molecular, its isotopes and ionised form are the primary element in production of initial heating of the reactor core, as it is done in the cosmos.

Hydrogen gas in atomic and molecular level has some versatile properties, that if they are used for the right purpose at the right time in the right combination, this element will provide and facilitates most the needs of systems energy creation requirement for all applications.

In this patent, systems are developed, that makes it possible for the first time, does not matter in what form hydrogen is made available in a core of system, primary condition can be created in the core of the vacuum, centrifuge chamber, that brings about the desired effect in any system to create the initial heat for the onset of chain of events, that will lead on to creation of heat in vast amount, electric current in predetermined large quantities, single magnetic field condition in molecular level in and around the core of the reactor, creation of double magnetic field in the molecular level, which the interaction of two magnetic fields will lead to creation and control of gravity in the center of a system for the first time "creation of gravity" M T Keshe.

When Hydrogen is used in conjunction with other elements, hydrogen has the properties of being easy to be ionised by any source that can deliver a 13.6 eV of energy to achieve the ionisation of its atom. At the same time hydrogen has the capability to release this attained energy to a third elements in its neighbourhood and return to the ground state rapidly through this interaction with this third matter.

How ionisation and release of energy are created and used are the principals behind the design of this reactor for the creation of energy, magnetic effect and gravitational forces.

Then as other elements are introduced into the core of the reactor, then the true nature of the hydrogen will revile its potency in this system as a whole.

Where, how and how much, when and the way all elements are introduced or applied in this system cores will create the desire effect that is required of the system as the whole at that time.

So that the system can be power generator, then with slight change in one of the parameters of one of the gases or introduction of other elements the system will become a gravity machine. Then maybe by combining the two effects. One will have a system that not only generates energy but it holds gravity and creates anti gravity too.

Thus for matter of simplicity in this disclosure the simplest form of the energy and gravity system will be discussed and disclosed.

The object of designing this system

The object of this disclosure is to design and develop a system, with the following capabilities.

Development of the system for the creation of heat and energy, magnetism and gravity is one of the prim objectives of this design.

A) To create motion using matters and forces by utilising positioning factors. As it has been achieved in the universe, rather then burning elements, or using fission chain of reaction or converting energies.

B) To use magnetic and gravity forces for lift and motion, instead of trying to overcome surface and atmospheric frictions by physical movement of the air replacement method.

C) To create gravitational force within the system that overcomes the space weightlessness.

D) Development of a comprehensive and extensive method of atmospheric conditions protection for a system.

E) Development of a full system of offensive and defensive capability by using natural energy forces. Instead of physical firing of an object.

F) To develop a material and containment mixture method for space travel for motion. To attain speeds far beyond the present achievements.

G) To develop a refuelling method for the system in the space, which is position dependent and can be done in mid-space utilising the cosmoses matters.

H) Development of a soft fusion system, for the creation of heat and energy, magnetism, gravity and materials.
* Where, some of the topics are underlined or indicated by number 1 in red, this is to indicate that this is a new and original finding by the author or it is a patentable aspects of the technology, achievable by the development of the new technology and new understanding of creation of single, double spherical magnetic field and there interaction in creating gravity or antigravity. These re not necessarily all that is in this papers*

The new principals and concepts behind the intellects and technologies of the proposed system.

The following disclosures in this section of the patent application has been specifically introduced in these papers to explain and clarifies new understandings and concepts in the world of atomic, nuclear, Geophysics, Astrophysics and Cosmo physics.

These disclosures are important to be understood and comprehend before attempt are made to proceed with the whole of the concepts and principals behind the design and the developments of this new technology and patent disclosures to be followed.

These are parts of disclosures from the papers written by M T Keshe under different titles.

The seed of the Earth 1

The theory that the heat of the core of the Earth is due to inertia of the material pilled on top of each other has and is completely dismissed through this new disclosure.

World of science has managed to see the atom, further investigation reviled the existence of nuclease, the neutron, the proton, the electron and so much more different parts in that centre.

The world of science through new technological advancements has now started to do the same too, with the real construction of the Earth.

It has been reported through twenty years of seismological data's gathered from all the earthquakes around the world, that there are more parts to the inner core of the Earth then just the inner core and the outer core known to scientists assumed up to now.

Through seismological data's it has been proven that the inner core of the earth has six hundred kilometre inner core (Professor Guy Master in 2002 nuclear planet).

Further more, it has been assumed from the same data's, that the centre of this core has a further an inner core of eight kilometres. This core is considered to be made of uranium, plutonium and other heavy radioactive materials, which sank to the center of the center of the earth as it cooled over millions of years.

Scientists presume that this core is made of nuclear materials, that in the process of nuclear decays of their materials, create fission chain of events, which leads to generation of heat, which manifest's itself as heat of the inner core creating convection in the outer core leading to generation of current in this core, in turn this causing the creation of the magnetic field of the earth.

The author M T Keshe postulates that this centre core is made of hydrogen, other gases and mixture of liquid and solid matters which where in the vicinity of the center of the core of the earth at the time of its inception in the solar system.

These gases and materials were entrapped and embedded in the centre of the planet at time of the birth of the Earth.

Through this new understanding of the new inner cores of the planet, this brings to play the fact that the old inner core of the earth that is already assumed to be made of a solid piece, itself becomes a sealed container for the new inner core.

The author assumes that this new core of the earth is totally isolated from the rest of the matters of the planet by the old inner core. Which in fact the old inner core is like a pressure cooker for the newly discovered core, right in the center of the planet for confinement of the newly discovered material within it.

This new chamber in reality has a mixture of plasma, gases and molten matters, under soft irradiation conditions which was present in the region of its birth at the time of its inception due to presence of small radioactive matters which were mixed in this mixture, which this has lead to a semi-fusion chain of events, rather than fission chain of events as it has been thought up to now due to presence of radioactive materials like uranium.

In reality the small amount of radioactive material in this mixture has initiated the ionisation chain of the events of the hydrogen atoms and possibly helium atoms in this newly discover core. This ionisation is achieved through creation of extreme ultraviolet through scintillation of ideal gases like helium present in the vicinity, leading to a ionisation of hydrogen atoms chain of events, creating the heat in the center of the core of the earth which manifest itself, through motion of the outer core in the form convection of materials in outer layer of the core of the earth.

The author through design of a parallel system has set to confirm the corrects of this assumption, that the center of the earth possess a semi- fusion atomic reactor and not a fission reactor as has been assumed by other scientist.

This 8 km mixture in the center of the planet, under the encapsulation of the inner core, at the same time has been under the influence of the spherical magnetic field created by the interaction between the inner core and the outer core, which this creates the environment of a semi-fusion nuclear reactor plasma magnetic confinement for the new found inner core MT Keshe "The creation of gravity"

The fundamental fuel in this new encapsulated cavity is hydrogen, its nuclei's and molecules of other components.

The writer concludes that, the centre of the earth possess a semi-hydrogen fusion atomic/nuclear reactor, which can not lose its elements, as they are entrapped by the inner core solid material under the pressures of the matters from above it.

This theory of hydrogen in the center of the planet is inline with physical reality of the creation and present situation in the physical construction of the solar system.

Where by laws of physics all the gases in solar system should have been in the giant gas planets at the outer layers of the solar system like in Jupiter and Saturn.

The physical reality in the solar system, is that the lights of all these gases, the Hydrogen, has taken its place right in the center of the solar system in the its star the Sun.

This is against all the theoretical laws of physics, where the majority of the hydrogen gas should have been on the outer boundary of the solar system in the giant gas planets.

The existence and reality that the center of the earth possesses a hydrogen reactor mixed core with some metallic elements is correct and inline with the physical effects of the magnetic field and rotational effect of any solar system or galaxy.

The reason why hydrogen takes this position in the center of the earth and this theory is inline with physical truth, and has the same pattern as in the solar system is very simple. The most fundamental reason why the hydrogen takes its position in the center of all the planets surrounded with metallic or heavier gases or elements, come from the natural characteristic of hydrogen, where the electronegative and the magnetic potential properties of the hydrogen and the strength of the spin in hydrogen atoms due to their respecting surrounding materials position this element to be in the center of any planet or star.

Secondly, the center of the earth is surrounded with heavy metallic center, that is the inner core of the earth, in parallel as in the solar system, where the hydrogen gas of the sun is surrounded with metallic planets like the Mars.

The center of planets, does not matter what their inner layers are made of, need a metallic matter for the electromagnetic effect due to motion electrons and ionised hydrogen's in their core, for them to generate current, for it to maintain magnetic field force leading to the creation of double magnetic field and finally gravity.

This semi-fusion state of affairs in the inner sanctum of the earth is the reason for continues creation of heat from the centre of the earth radiating outward.

This hydrogen mixture is the seed of the earth. This is why the magnetic field in the centre of the Earth is and will not disappear for a long time.

Compared to mass of the planet, and contrary to logical understanding of the mass and forces needed to keep the planet in motion, it will be proven through the design of the ultimate reactor by the author, and through the theoretical papers in the scientific world, that the volume ratio of hydrogen in the core of earth is very small, and the density of the hydrogen gas in this new core is very low.

Otherwise the system with large volume of gas ratio and high density would have disintegrated or the whole system would have shout down due to saturated ionisation condition of the new core.

This could be one of the reasons why Mercury has lost its gravitational field force, where too much ionised hydrogen are trapped in its inner core, that did not and would not allow the ionisation chain to take place in the center of the core, even though the core could posses large amount of hydrogen, that the core could be heated for magnetism to take over for the core to attain its gravitational field.

The author will prove through tests that there is a direct relation between the gas volume ratio and the density of the hydrogen in any system in possession of heat, magnetism, and gravity in its center.

This is how all the planets attain their inner heat energy in comparison with small amount of hydrogen in their core and become in possession of magnetosphere and gravity. Which in reaction with their solar wind and other factors allows them to rotate and move within their system. This in the larger scale happens to solar systems in the galaxies.

It has to be recognised that the centre of all planets in possession of gravity due to centre cores heating, always, these planets are in possession of two <u>Magnetic Field Forces</u> in their inner sanctum M T Keshe " The creation of gravity".

In case of the Earth up to now and with the present knowledge there has been acceptance of only one inner core and one magnetic force.

As it is explained in the paper titled "the creation of gravity" M T Keshe, there is an inner core in the inner core. Which this inner core due to it physical content, motion and position in the center of the earth, creates its own and maintain its own magnetic field force, independent of the magnetic force which has been known created by the interaction inner core and the outer core of the planet.

These two magnetic fields interact to create planet's own double magnetic fields in its centre.

Which the interaction of these two magnetic fields forces up on each other will leads to the new concept of "DOUBLE MAGNETIC FIELD EFFECT", which the interaction between these two field forces in the center of the planet leads to creation of the gravity and the magnetic forces of the planet M T Keshe, " The creation of gravity".

Where this new second core is the seed core of the planet, the mother seed of the planet positioned in this new inner core.

This core is always made of the mixture of hydrogen, hydrogen nuclei's and in one form or other some metallic components in the Milky Way galaxy.

The presence of hydrogen can be replaced by other matters and not necessary in all galaxies, where this matter could be different, like helium or heavier gases which can go through the same process initial heat generation.

These metallic components are different for each planet. These combinations of materials determine the strength and the gravitational power of each planet in its final position in its system.

The content of this seed determines the gravitational and magnetic field force of the planet. Where this is unique for each planet, star and solar system, this is the magnetic fingerprint of the planet unique and unmistakable like for each planet.

This strength and mixture are unique for each planet. Which can be used and copied in a reactor for space mapping and space travel in the future (this is explained in more detail in papers to be released under the titled of travel and space fuel by the author). These being determined by the factors like position, material available, temperatures and pursuers for the planets at the point of its inception in its vicinity at the time of its creation.

The real seed of the Earth which heralded its creation has to have new name, that it can be distinguished from the seconded core which comes about much later in the life of the planet, as in the case of the earth, the inner core and outer cores existence has been known for sometimes.

This seed, under the right conditions in the planet, a solar system or a reactor, will leads to creation of the new system in possession of and capable to create heat, current, magnetism and gravity.

For clarity this newly core as of now will be known as caroline.

Now that the assumption for the new core is made, it is important to prove its function and method of heating which this new system uses for creating heat and magnetism leading to creation of the gravity in the planet in a simple reactor.

For the principal of heating of the caroline core, one has to look at the real condition of the cosmos at the point of creation of stars, the method which is used for the generation of the heat and material and conditions and sequence of events which leads to manifestation of a solar system.

From the technical literatures available in the world of science some close indication in how the entrapment of hydrogen leads to the first stage heating of the mother seed of a planet can be extracted. The rest, like creation of current, magnetism and consequent creation of double magnetic field leading to establishment of gravity are the natural sequence events and follow up of the original event.

Therefore the pattern for creation of the heat in the center core of the planet has to be established, according to the real time condition and positioning of all the elements and events which always ends up to the creation of an atom, planet, a system or a galaxy.

These principals are the same for all cases, the only difference is how much energy can be collected in the right condition to lead to creation of condition that energy can be collected that can manifest itself as one of above matters of atom to a galaxy.

The only difference is the amount of energy they can master to hold on to by the matter, at time of its inception is what that can lead to their size, position, strength of their magnetic fields and gravitational force in their environment.

With the difference that, an atom attracts cold condition energy magnetism of a weak scale and weak gravitational field, and a solar system attracts a hot condition energy magnetism and stronger gravitational force.

A cold magnetism condition always leads to atomic structure and a hot magnetism condition leads to a solar system structure.

Where the hot magnetism condition can always influence and gather matters of cold magnetism in its vicinity due to its heating condition and stronger gravitational field force to manifest itself as large viable and visible system.

The principal of working of the caroline core has to be based as in the universe on the existence of the following five key elements and conditions for pattern of heating to exist that can assert its influence on its surrounding to lead to creation of a planet or star in possession of magnetism and gravity.

If any of these five factors ever be missing or changes from the set, the creation of a system or operation of the heating of the planet will change, with it changing the characteristic of the system, then the planet or the system will lose its components like its moons or system, and will change it pre-determined position or strength.

The first and the prime material for the first stage of the heating in the system, is the availability of the Hydrogen atom.

There is not a need for a large amount of this matter to initiate the first stage of heating of surrounding environment through ionisation of hydrogen.

The second prime condition is the presence of a radiation energy source, which can ionise the atoms of the hydrogen.

That the energy released by the ionisation of the atom into its surrounding matters can lead to heating of its environment.

Cosmologists have always noted the presence of the ultraviolet radiation or x-rays in the vicinity of the hydrogen densities in the galaxies (100-1000 Hydrogen atoms), which has been thought emanating from the atoms of hydrogen through ionisation.

The reality is that, to ionise hydrogen atom, energy line in ultraviolet light is not strong enough to achieve direct ionisation of hydrogen atom.

At the same time due to presence of radioactive material in the cosmoses medium, the helium and/or other inert gases present in the soup mixture of the cosmos plasma, through alpha or beta irradiation, become catalyse to cause the ionisation of the hydrogen atoms, by releasing an extreme ultraviolet radiation strong enough to ionise the hydrogen atoms.

In scientific term the inert gases become scintillated, and through scintillation, they release energy in the extreme ultraviolet region or soft X-ray that can cause the ionisation of hydrogen atom.

Consequently the theory of ultraviolet radiation through ionised hydrogen is in reality the appearance of the second phase of an already irradiated atom of inert gases.

Understanding of this important phenomenon that extreme ultraviolet play in the creation of initial stage of heating of plasma is what has not been understood and utilised in the world of nuclear physics of the preset day.

Therefore, now, it has become possible to ionise atomic hydrogen with a simple presence of extreme ultraviolet radiation source using inert gases as catalyst, that can go through the process of scintillation, that can deliver the correct amount of energy in the extreme ultraviolet levels to hydrogen atoms, that can ionise hydrogen atom. Which this can lead to further heating of the matter in the vicinity of the ionised hydrogen atom, as the ionised hydrogen has to go through de- energization, for it to return to its ground energy state, by relinquishing its energy absorbed energy through scintillation process, for it to appear as heat using third matter in its neighbourhood, that can accept the energy from hydrogen ion, without absorbing the ionised hydrogen in itself and releasing this acquired energy as heat it is surrounding.

The third prime factor in any chain of ionisation is existence of a weak magnetic field in the vicinity of the hydrogen atom. The existence of the weak magnetic field has several advantages which helps with ionisation of the atom of hydrogen, and then it helps with the generation of current in the plasma which is created through ionisation in heating the plasma, and this leading to further strengthen the already existing magnetic field.

One of the advantages of the presence of the weak magnetic field in the vicinity of the hydrogen atom which is to be ionised by the extreme ultraviolet light, due to the already existence of the magnetic filed of the atom, which holds the protons and electron of the hydrogen atom together, the presence of a stronger magnetic field in the already low density environment of hydrogen atom in the vacume condition, this facilitates for the inter atomic bound between the proton and electron of the atom to be much more in a diluted energy soup state, than for if the atoms components where in the normal atmospheric condition, that they were closely pact magnetic field.

This loser energy bind of the atomic hydrogen facilitated by the presence of the weak magnetic field allows the energy from the extreme ultraviolet to be able to ionise the atom of the hydrogen much easier, at the same time allowing the electron and the proton to carry maximum energy that they absorb, to the third element in the vicinity, to release the maximum energy to it. That this makes the process of heating much more rapid and easier, then trying to use other method to ionise hydrogen to create heating condition of their surrounding.

The second advantage with presence of weak magnetic field in the vicinity of the hydrogen atoms is that, after the ionisation of the hydrogen atom, and due to charge carrying and free motion characteristic of the proton and free electron, these within magnetic environment, does not matter how weak this field might be, will lead to generation of current in this area, through the principal of motion of charge particle within a magnetic field (this is like the rotation of rotor between the poles of a magnet in the electric power generators machines of today).

This current in turn leads itself to making and strengthening the magnetic field forces, and further heating of the surrounding the hydrogen environment.

Therefore once the first ionisation through scintillation is established in the vicinity of a weak magnetic field in the vacuum environment, then the creation of current which leads to creation of more magnetism due to motion of current through magnetic field, and so one leads to creation of the other and increase in its own strength.

The forth prime factor is the existence of the turbulence within the region of the operation of the magnetic region.

In the cosmos convection leading to generation of current can only take place in the turbulent environment.

Secondly, the turbulence creates the compression variation within the cosmos plasma, for it to create different conditions for the material within the cosmos soup.

The turbulences in the galaxies are created by different methods, but majority of the turbulences are considered to be very localised areas in the active regions, created ionisation of the hydrogen atoms.

The fifth prime factor is the presence of motion in the vicinity of the ionisation region.

The motion of the ionised gas within the region of its interaction plays an important factor in the whole process of creation and maintenance of ionisation and distribution of heat, and effectiveness of uniform compression within the region of creation of a system.

If the mixture of the ionised hydrogen can not move, to be able to deliver its energy to the third elements to release it extra energy for it to be able to return to its ground state, due to lack of being able to interact with further new atoms of the third element, or even for the scintillation to take place on the continues bases in the region, then due to the lack of motion to sustain movement in the mixture, the condition of saturation or stagnation in the region will be created.

Therefore for a system to be active, it has to be in possession of all above five principles and criterion. This can be simply shown in the form of the active schematic system designed by the author known as the five parameters necessary for any system to exist in the universe. This is to be called the diagram of the universe circle for generation of system (fig A).

No atom, planets, system or galaxy can exist and operate, without it possessing posses gravitational field forces, that can hold on to its elements, without existence of all these five points.

If one of theses parameters is lacking or is not up to power at any point of the creation or existence of any system, then the system will not start, or if any one of these parameters is changed during the process due to what ever reason, then different outcome from the system is attained.

Rotation                                            Turbulence

Extreme Ultraviolet

Hydrogen                                            Magnetic field

Fig A. The diagram of the universe circle.

Therefore for the seed of the earth which is condensed and isolated in the caroline inner core, for it to be active and be able to sustain its existence and position in its system, the caroline core must be possessing and obeying the sequence of events of universal circle of a system at all time.

Through understanding this concept, it will be proven that not a vast amount of the hydrogen atoms are required to sustain a full chain of events for along period of time.

It is now comprehendible why the author believes that the center of the core of the earth in the caroline core is made up of hydrogen atoms and in a semi-fusion reaction chain of event.

The density and the volume ratio of the hydrogen in this core has to be very low, as high temperatures and compression created in the core of the planet at 7000 degree centigrade, will be so high, that by laws of physic only a low density hydrogen level in the core can sustain such long term chain of events.

This low-density method of heat and magnetic field generation is inline with observations in the cosmos by scientist in this field. Where only 100 000 atoms per centimetre square of hydrogen atoms has been observed for the process to start the creation of a solar system.

Where as scientists have been assuming that the outer core could possess liquid matters, like molten metal that created the current in the outer core through convection, infect, vapour metallic gases like sodium or potassium 1, could be the real alternative for this outer core of the planet.

Where the metallic vapour nature of these materials will allow atomic loosee structure for electrons to be free at much lower temperatures which are created in the caroline core of the reactor.

Thus the outer core is not necessarily made of metallic iron alloys which has been assumed up to know.

There is parallel for this in the Cosmo physical observations, where usually in the vicinity of atomic hydrogen in the cosmic clouds sodium and potassium in atomic and molecular structure of these clouds are observed.

Even in the case of Saturn the non metallic helium is considered to behave like metallic material under such extreme pressures, therefore this concept tallies with all the present observations and assumptions.

Therefore any martial under the right condition of pressure or heat or magnetism within any cores of the reactor can behave as metallic elements, that can allow the release or freedom of position to its outer electron to become loosee or behave as they are loosee in their environment, that they can act and assists as the material that can initiate the first stage or even on continues bases as the generator of current in the cores of the planets, and due to their physical motion within the core be the initiators and cause of continues magnetic fields in there respective cores of the planets.

Then it is logical to assume that some of these elements or most of them are the same as hydrogen and get trapped or embedded in the outer and even in the caroline core, leading to or helping with the creation of current in much simpler way as what has been assumed by the astrophysicists, leading to creation of magnetic fields in either cores of the planets.

The creation of gravity 1

The universe is built and held together and operates on the basis of two forces. One cannot work without the other and when one force dominates the effects is drastic. These two principal forces are one, the gravity field force, which manifests itself as the gravitational field force of the planet, second, the magnetic filed force, which manifest itself as the magnetic shielding or the magnetosphere of the planet with interacting with other magnetic field forces in its vicinity.

Contrary to scientific belief and for the first time to be explained in these papers, that source of creation and sustainers of the gravitational field force and the magnetic field force of the planets are one and the same materials.

That is to confirm that the sources of the magnetic field force and the gravitational field force are one and the same elements and materials in the center of planets.

The creator and sustainer principal materials for the gravitational field force are the same as magnetic field force.

For the creation of the geomagnetic and gravity several basic and fundamental assumption were made by the writer.

For a planet to create heat to lead to creation of current through convection leading to creation of magnetic field in the center of the planet, conditions have to created for the environment that allows the existence of a confined collection of slow energy releasing material in the centre of a planet.

Working on real bases for heat production at the center of the planet, the author set out to design and produce a real and practical reactor which could replicate the universal order for creating heat and magnetism and finally the gravity to prove the correctness of the principal of creation of above phenomenons.

The writer assumed that the centre of the earth in its inner part has and maintains a semi-nuclear fusion reaction chain of events.

The interaction between materials and processes that this semi-fusion chain of event in the caroline core of the planet lead to creation and maintenance of its apparent physical forces of Magnetic Field (MF) and Gravitational Field (GF).

This semi-fusion sequences of events and existence of lighter gases and other materials in the containment vessel of the inner core construction and material and the convection process due to the heat transferred from the caroline core to the outer core of the planet, in which due to motion of the materials inside the caroline inner core, which is in possession of a charged partials rotating, turbulent, in a vacume, creating current and magnetic field, and the motion of the materials in the outside of the inner core, which creates its own magnetic field through convection in the outer core material.

Where the two independent magnetic fields, which are separated by means of the physical barrier made by the existence of the inner core.

Which the interaction of these two magnetic field are close enough to interact on each other, that leads to the creation of the central gravitation field force 1 of the planet.

Therefore for the first time in the world of intellect, it is to be made clear that the source of the Gravitation of the earth and all planets in possession of internal heat source is due to the interaction of two magnetic fields 1 which are created independently in the center of the planet.

The caroline inner core of the Earth creates its own magnetic field, which this second field locks loosely onto the already known magnetic field of the inner and outer core to create the pulling power known as the Gravity of the planet.

Gravity does not and can not exist with existence of one magnetic field force.

The gravity manifest itself up on the creation of the seconded magnetic field generated by the convection of the matter in the outer core, interacting with magnetic field which was originally created in the caroline section of the planet.

Therefore the gravity is an outcome of the interaction at molecular level between two magnetic fields of two cores of the planet up on each other 1.

Ultimately for creation and maintenance of gravitational field force for all stars and planets or any system, with an internal heat, there is a need for establishment of two molecularly loosely interlocking magnetic fields, which are separate by any physical separation and are created, and maintained, separately and independent from each other. Even though one could be the cause of the creation of the second one.

Where the separation of the magnetic fields could be established by the means of solid, liquid and gases, plasma and energy layers.

Once the strength of the inner core (caroline), or the outer core, magnetic field in a system by controlling any of the five principal of creation 1 of the heat in the caroline core can be attained, consequently the strength of the gravitational field forces of the system can be dictated.

Through this system the strength of the magnetic fields can be adjusted, so that this will allow the creation and control of the gravity and anti-gravity 1 in respect to the environment in which the system is operating in.

Looking at overall view of the centre of the earth, with the new understanding of it composition, one will have two spherical magnetic fields, one being superimposed on top of the other. One being the magnetic core maintained by the core due to turbulent, compressive, rotation of hydrogen gas in presences of two magnetic fields in the center of the earth in the caroline core, and the other is the magnetic field created through convection through its materials in motion in the old outer core.

Therefore in reality the physical positioning of the hollow solid sphere of the inner core is the catalysts for the contribution to and creation of both magnetic fields independent of each other but at the same time interconnecting or magnetically reconnecting tool for both magnetic fields on either side of the inner core.

Where the interaction between these two magnetic fields in the physical body of the inner core leads to creation of the double magnetic fields phenomenon needed for creation and control of the strength of the gravitational field force and magnetic field force of the planet needed for the maintenance of the magnetic field necessary for the magnetosphere creation essential for the creation of atmospheric condition around the planet.

The magnetic field reconnection of the two fields is totally on atomic and molecular levels. This leading to a loosee magnetic field forces that operate at weak levels, but strong enough to cover a vast area in their surrounding.

That is why a small caroline core of eight kilometres in the center of the earth can create a strong magnetic effect of up to 60 000 kilometres to boundary of the magnetosphere of the earth.

As the magnetic fields could be created by use of any elements in both cores of the planets, that can create any amount of heat, this being like center of a star like the sun, several thousands of times larger mass than the earth, with the surface gravitational force of about twenty eight times more than the earth, which operates at central temperatures of several millions of degrees centigrade, or the center of the earth with surface gravitational force of one g which operates at several thousands of degrees.

Therefore the following statement can be made that "the strength of gravitational force of any system is largely independent of temperature 1, and is primarily dependent on, the composition of its inner cores materials, and the physical condition which it was created, or maintained, which creates the two magnetic field strength leading to creation of the gravitational field of the system within its inner sanctum", is correct as was assumed by author originally,

In relation to the physical data's available, the present gravitational field system which has been assumed to be created by the single magnetic system between the inner and the outer core in the center of the planet is not scientifically acceptable and can not stand the physical truth.

The concept of single magnetic field which has up to now been assumed does not stand the laws of physics, as for the planet to be able to create gravity and magnetism for magnetosphere, that can span a vast area of the solar system irrespective of its position and the material it carries in it outer shells, has to have two active magnetic field forces in the center core.

The planet has to be able to have two interacting magnetic parts, that the interaction between these two magnetic fields can create the fields that the elements around the interaction of these two fields can effect their behaviour, for them to be attracted by the effective magnetic field area.

The reality is that if earth has had only one magnetic filed as has been assumed until now, all elements on the planet would have been firmly attached to it rather then loosely being moving within its magnetic field force.

Without the shadow of a doubt the center of the planet maintains two independent magnetic fields, that the interaction between these two magnetic fields at the molecular level leads to creation of the magnetism and gravity of the planet.

The magnetic field force created on these levels in the inner cores physical body of the planet, creates the condition where all magnetic forces within this field will be influenced through magnetic reconnection, this being in molecular level, creating pulling forces inwards for the two fields of the matter and the planet to be locked into each other.

This creates the effect of the gravitation field force, as the matter magnetic force and the planet magnetic field created by the double magnetic field reconnect to keep each other at a physical interactive but loose distance.

In reality gravity is the strength of the magnetic field created by the interaction of the two magnetic force fields of the planet that can influence to pull the matters around the field to stay within its strength, or what is called gravitational filed force.

The inter locking of these forces are the same as with two bars of magnets when they are brought close to each other but their binding of forces in planetary levels are at loose molecular interlocking.

With the difference that in the planetary or astro levels these magnets are in the form of closed lope spherical shape and in possession of internal heating system, where the magnetic field force can vary, and they can change their strength due to the compression and other factors in the center cores, as in solid magnet the strength of the magnet is constant and permanent.

In the closed loop spherical magnets, the system of the magnetic field lines have to find their magnetic reconnection line for the loop to be completed.

This magnetic fields reconnection leads to the directional polarity as magnetism in the one direction and gravitational on the other direction, leading to creation of the north and South Pole phenomenon of the planet.

Magnetic fields produced under thermal conditions has a minimum threshold common (MTC). This is due to the fact that the magnetic field produced due to the heat interaction or convection has the minimum common attraction power. This means that all elements have a common lowest level magnetic field force attraction due to their inner magnetic atomic structure equal to the magnetic field force of the atom of hydrogen. That is why gravity effects all matters of hydrogen nuclei and its components, and up ward in atomic structure.

The gravitational force in stars and planets is created only under the condition, and purely due to magnetic forces created by help of heat generated in the center of the planet.

In the case of motion of an object in possession of its own gravitational power production, in the gravitational pull of a planet, the use of the creation of the gravity in the centre of an object can be treated in the same manner. Where the gravity created in the centre of an object needs to be slightly changed in the positive or negative for the object to repel or be attracted to towards the planet.

The magnetic and gravitational forces of the Star are dictated to an extent by the planets as much as the constituent materials of the Star itself. On these bases the gravitational forces of the system is created and controlled by it planets.

This is very much like the rotational magnetic fields of the electrons circulating around the nucleus of an atom. Where, the magnetic rotational spine of the electron decides the magnetic field strength of the nucleus.

Even though the magnetic field of the nucleus is much powerful then the magnetic field of the electrons around it, or in other word the gravitational forces of the nucleus is needed for the electrons to be kept in their orbit and vice versa. This holds true, where if this was not correct the planet would have been attracted into the star or the star should have been attracted into the planets due to its gravitational forces.

But in systems there are always several planets, where the collective movement of the planets of the system will keep the gravitational forces of the star of the system at bay, rather then an individual planet gravitational force.

Thus the gravitational forces of a system or a galaxy is not only dependent on the magnetic forces of its centre or its star, but it is fully controlled and determined by a bigger scale dimensions of its planets in that system.

Magnetic fields and gravitational field forces of planets are without the doubt created by interaction of two fields. Where the magnetism is like the repulsion forces between to similar poles of two magnets and the gravity is like the pulling power of the forces of the two dissimilar poles between two magnets.

From the topography of the earth gravity pattern provided by NASA, earth magnetic field does not keep a constant pattern. There are constant changes in strength of this field, dictated by the activities within the center cores of the planet.

Changes in these forces could be due to the variation of the interaction of the inner and the outer magnetic fields of the centre of the earth. For example, where they cancel each other, one gets distortion of the field and reduction in the gravitational field force in that region of the planet by small factor. Then where one force field like the field created in the caroline core is more powerful due sudden short burst of scintillation in the core, at that point and that moment, the magnetic fields interaction of the centre field is more powerful the gravitational force will be more powerful, but these changes due to close confinement of the center cores not usually so large.

Even thou Newton did note this effect of interaction of two magnetic forces and he called it gravity, they could never establish the source of its creation and method of its existence.

He measured its strength but they never came to understand method of its creation. He speaks about the effects of the gravity in relationship between two objects and not two magnetic forces.

This is where Newton could not make connection between the interaction of matter and force, when it comes to gravity.

Scientists explain the gravity as the relationship of attraction between position of two bodies in respect to each other, and not the reality that gravity is manifest itself in relation of <u>interaction and attraction of two bodies in possession of magnetic field forces created by heat in respect to each other position 1.</u>

Through design of this reactor again this principal will be proven to be correct, and the difference between inertia and gravity is to be proven. Where gravity is an attribute of a body with two magnetic field forces, and inertia is the attribute of collective molecular magnetic force of an object, even though both behave the same and due to their magnetic fields appear to be the same thing.

Where in reality the creation and maintenance of gravity is dependent on the positioning of two bodies in possession of heated center core, in possession of two magnetic field forces and totally independent of the mass of the object, but dependent on the position of their magnetic forces from the center core of the planet in respect to their magnetic field strength.

Which this is totally different then inertia, where the gravitational pull is due to atomic magnetic field maintained by any object due to their atomic magnetic binding, without heating source in its center of object.

The clear difference between inertia and gravity is the element of heating and creation of double magnetic field force in an object in possession of gravity, and the inertia which is attraction force of an object due to its atomic magnetic field force without internal heating source.

For the first time, by knowing now how the gravity in real conditions in a system can be replicated, and by being able to create gravity as done in the cosmos and being able to control and observe its effect, this natural phenomenon can be realised within a system.

In this reactor idea of gravity as Newton tried to explain exists, but these are at levels of attraction between two magnetic field forces in an object in possession of internal heat source, and two super imposed spherical magnetic fields, which is different from the attraction forces between two objects with a single magnetic field or due to inertia of solid bodies without internal heat source.

This is the difference between gravity and inertia between two objects. Where due heat the binding of the forces of the molecules are more on a loser binding conditions where they have a more prominent and overall spherical magnetic effect.

This is very important fundamental principal, which if this understanding is applied in a system, then the fundamental of creation and control of gravity will become apparent.

The interaction of the these two newly discovered magnetic fields in the center of the planet is the cause of the rotational motion of the inner core of the earth, which leads to creation of magnetic field of the inner core solid body.

Where this motion of the inner core becomes itself the containment body of the centrifuge for the gases in the caroline core for the atomic fusion chain of events in this chamber, for it to sustain the initial ionisation process in the this chamber.

R H Dicke (1964 nature 202; 432) in his report confirms that rapid interior rotation of matter inside the sun could distort the external gravitational fields which can consequently effect theories of gravitational effect which are observed by planetary motion.

At the time he did not understood the relationship between the speed of the rotation of the caroline core, which can effect the strength of the magnetic field created in the central cores of the planets, where the interaction of magnetic field of the caroline core with magnetic field of the outer core would have changed the combined magnetic field effect of the whole planet, which in reality would have changed the gravitational field strength of the planet.

Even though he noted the changes, but he never could relate the concoction between magnetism and the gravity as to be the same thing but manifesting itself in two different ways.

In a way his theory confirms that rotation in the gas layers of the caroline core in conjunction with turbulence, which leads to convection in the materials in the cores of the reactor effects the generation of current and magnetic field in the core of the reactor and consequently the gravitational forces created by the core of the system.

**Magnetism and gravity 1**

The world of science has chosen to ignore the reality of the connection and interaction between gravity and magnetism due to lack of data and technology.

Lack of full comprehension of science regarding the creation, the existence, the control, maintaining and utilisation of these two most powerful forces in the universe, has run the world of science in to problems as in handling these two forces of creation as one.

This has been purely due to the physical time gape between the discovery and understanding of these two forces of creation.

Probably if scientist would have discovered the two magnetic forces and the gravitational forces at the same time, then they would have had totally different understanding of their principals, their capabilities and their connections.

Most probably the human race would have taken a different course in its intellectual and scientific world too.

At the time when Newton discovered the gravity the correlation between these two phenomenons and forces have never been established properly.

This is why the scientists did not handle them, as to be created by one source, and they considered them as being created and maintained by two different sources and forces. Where, both forces need each other for their creation and survivals, as they are made from the same elements and they are the same forces appearing in two different side of the same matter.

The true relationship between these two forces needs to be explained that the reality about the two important physical forces of nature in the correct manner can be established.

This is to establish that " creator of the magnetic force and the gravitational force" is the same source and the same material and they are the same forces acting in different direction through a physical matter.

This means that the source of the planetary passive magnetic forces (PMF) and the gravitational forces (GF) is the same material and they are the <u>same forces</u>. But acting as, and appearing in two different ways or directions with appearance of two different characteristics. The only difference is the fact that they appear in different form and under different conditions.

When the forces pulls two matter to each other it become force of <u>gravity</u> and when the same force pushes away two matters it becomes the <u>magnetic</u> force.

At the time of creation of these forces, physical conditions in universe allow one or the other takes over first, then by interacting with its surrounding matters for the second force to manifest itself out of the same original material.

These forces could be created in plasmas from different atoms, gas, liquid or solid.

This process of manifestation of gravity is very important to be comprehended fully and distinguish from the solid state magnetism. In the past the magnetism and gravity have been explained according to the physical understanding of a solid magnet and not the planetary magnetic forces, where this new understanding of creation of magnetism and gravity, is one of the corner stones of creation of solar systems.

This is why scientists have fallen in the pitfall of always trying to overcome the forces gravity and magnetism rather then using and working with and within them to attain motion and lift. Where it has become a challenge even to overcome the gravity in just trying to send a small rocket into the Earth orbit.

Because world of science has not managed to understand the simple relationship between these two forces of gravity and magnetism, to use them to its advantage to acquire lift and motion. This is the point where one has achieved the ultimate knowledge of existence in the world of creation.

Scientist have chosen simply to burn tones of fuels to overcome gravity to send a craft in to space, then they have the dilemma of protecting it from the other force's onslaught for it to be return back to earth.

The power of magnetism and gravity of planet is independent of its size, this holds true the same for systems as solid magnet, where if a piece of magnet could be cut into halves or quarters. Each piece still will carry the same a north and a South Pole. Still each piece will have the same powers as the original piece.

That is to say, that if one uses the same volume ratio of the same matter and proportional physical conditions in the core of a system, one will attain the same magnetism and gravitational force field from the system as it bigger dimension system.

With the only difference that the bigger dimensional system will and can cover a larger physical area, as the smaller system boundary of interaction between two force will cove more confined area in the vicinity of its core.

In physical term the gravitational force is the pulling power created by two spherical magnetic field forces.

In astrophysical term magnetic field forces of the planet is what keeps the planets away and apart from each other not to collide in their systems. Where this pattern of the distribution of the magnetic forces of planet in interacting with its star is shown as the magnetosphere of the planet.

This planetarium magnetic force is a passive force filed (PMF) and has no relation with the magnetism as is known in the solid state magnet. This is called passive magnetism due to the fact that, this type of magnetism cannot magnetise a material. Otherwise all the materials in the outer layers of the Earth would have stock to each other. But, this force has, behaves, appears and has characteristics of magnetic field force.

The reason it is called the passive is due to its capability of passing through human tissue without effecting the function of its atoms and its molecules.

The fact that due to the spherical shape of material in the universe, the gravitational force or the pulling force of planets has the tendency to encircle inside the planets. This being due to the fact that these objects are always in motion in the space due to the phenomenon of others planets magnetic field powers. Which in space the motion has the power to entrap or concentrate this power in to the centre of the planet.

This is the reason why the gravitational forces increased as the one moves close to these objects and the as one moves toward the centre of these matters.

If one takes the fundamentals of the motion and heat away from the Astro-physical matters, They will posses no gravity and no magnetism but simply they posses inertia.

The difference between the solid magnetism and geomagnetism are two clear factors. In this particular orders First the motion and then the heat.

If one were able to create the right motion and then the right heat in a material one can create control magnetism and then the gravitational forces within that object.

Once this is understood, one by controlling the heat and the motion. One can like in the atom in the solid magnet move from one side through the matter and posses the other force.

It is important to realise that due to the spherical shape of the objects in possession of both forces creates and open ended magnetic loop, where they create the two poles of the magnet as the north and the South Pole of the earth plane. If a system can take advantage of this phenomenon, for it to move within these forces of a planet, rather then trying to overcome them, or to resist them for its motion, then not much energy or efforts are need to create the right gravitational forces within a system for it move inside or outside the atmosphere of a planet or a system.

These are the principals and the most important differences between powers of the passive and active magnetism, where the active magnetism in the normal condition is created in tangible elements. The planetarium magnetism does not behave this way and does not need certain particular matter to create the two forces.

The passive magnetism is created through different method that its is not dependent on the atomic structure of the material. This means that the behaviour of material under this magnetic field force is slightly different.

The planetary magnetism can not exist and be created where there are no gravitational forces. At the same time no gravitational forces or gravity on a planet exists, if the planet does not posses any magnetic force of its own.

The sequence of the changing of the polarity of the earth and the sun and all other centrally heated objects in the universe is as follows.

The two liquid materials, both in the caroline cores and outer core, are in rotation and conductive state, and creating magnetic filled of their own, due to the fact of the angular spine of the their atoms, where a matter passes through a magnetic field, two things can happen, one is that, if the atom is neutral the matter will be going through the magnetic field with out de-separation in any direction. M T Keshe "Einstein theory of relativity"

In reality the hydrogen and the other components of the inner core and outer core are not neutral, so their passage through the magnetic field of the other core by the elements of the first field, will create motion in that martial through magnetic field forces, the matter circulates creating the current in the core of the planet. This is the same in the order of the outer magnetic fields towards the Caroline core material as the magnetic field of core towards the materials in the outer core.

When the effect of these two magnetic fields, due to their rotation speed reaches equality one field effect's the motion in the matter of the other core, and manages dominate magnetic field of the other causing the flip over the strength of the other. As the materials are in state of fluid, the taking over is in molecular level, then the weaker of the two, changes polarity to bring balance in the overall magnetic field of the two cores.

This change of polarity will create an immediate motion and new cycle of magnetic field to the angular motion of the atoms in its core and the gravitational forces of the planet will come back to stable magnetic realignment.

This can clearly be shown in the operation of the gravitational cores of the reactor to be disclosed in this patent. Where, this change of polarity in the reactors of a system has to be avoided, as if this happens during the operation, this can lead to overturning of the craft that the reactor is attached to.

From surface magnetic data observation prior to each switching of magnetic polarity, there has been a reduction in the magnetic field strength of the planet. This is an indication as a safety point of control, and what to look for before switching of the polarity in the reactor cores occurs.

The speed of the rate of the polarity change is very dependent on the components of the centre of the planet or the star.

If the planet is made of near enough similar material on both side of the inner core, the flips of polarity will be much faster and on shorter terms like in the Sun. But if the planet is made of a composite core, and made of two or more different materials in its caroline core, for the two fields to realigned will take longer time for the magnetic flip of polarity like in the Earth.

In any case as the material in both cores are always constant and can not change that much, the timing of the change stays on the same time intervals. In the case of the sun this is takes eleven years and in the case of smaller planet like earth which is made of composite mixtures this change of polarity will be longer.

This switching of polarity is a neutral outcome and the nature of the atomic structure of each element charges characteristic and atomic natural angular rotation of its electrons of the matter within a magnetic environment.

**Magnetosphere**

The shape and the strength of the magnetosphere of a planet is exactly what finger print is to Man. It is unique to each planet and star. It is teller of all its attributes, and it is the reveller of its internal material structural hidden mysteries.

The most exciting part of space travel will be in recognizing the planet long before reaching it, Where the magnetosphere is like the scent of a flower long. Where one can tell the type of the planet one about to observe loge before one could see it. Like one smell a rose before one sees the flower one knows its identity.

This is the same in the world of space, where the pattern of the distribution of the magnetosphere of the plant gives away the secret of the planet long before one could reach it.

The magnetosphere has been measured and calculated for all the planets in the solar system by the experts in this field for some years.

One point, which must be paid attention to is the shape and the pattern of the distribution of the Trapping region of the magnetosphere, then its relationship to the planet internal construction. If a closer attention is paid to the pattern of distribution of the Trapping region, One could tell a lot about the structure, components constituent, relation of each component to each other, their mixture and separation inside the planet, the pattern of their motion inside the planet, the way the planet was made at the outset and so many other factors and properties.

The study of the Trapping region the most important part of magnetosphere of a planet where all about the health, condition, the materials needed to copy the gravitational and magnetic field of the planet.

The most appropriate point for any system to enter a planet atmosphere is at the point where the magnetosphere of the planet is at its weakest at cusp of the magnetosphere of the plant. Where the magnetospheric interaction between the planet and the craft will be at minimum, once passing the bow shock region.

It is important to understand the effect and operational effect of the magnetosphere of a planet like earth in coming in touch with magnetic field of the its star, where the interface between the two magnetic fields is a very volatile region.

This is the same when ever two passive magnetic fields confront each other, where there are charged materials in the vicinity of the this interface, where charge particles of solar wind interacts with two magnetic charges interface of two magnetic fields of the sun and the earth. Where in the atmospheric side of the earth the temperature of the air is at about fifty degrees below centigrade at fifty kilometre altitude, at the same time the temperature of the atmosphere in the higher magnetosphere near at the interface of the two magnetic fields in the presence of the solar plasma is about 2000 to 3000 degree centigrade.

This heating due to magnetosphere region of two spherical magnetic fields inside a core 1 of a system, in presence of charge particles due to ionisation of hydrogen, will play an important part in the whole operation characteristic of the reactor. This being in the ionisation, magnetic field effect, position of the interface of the magnetic field in the reactor, the current production of the reactor and the gravitational power of the reactor.

To be able to travel in space with ease, there is a need to learn to work with and within the universal principal and not at all time try to over come them, that is why space travel has been such long struggle in the past.

Universe works on one principal of magnetism, if one works within it, One will harvest the wonderful fruits of it, if one tries to overcome it by physical means, like use of burning fuel as in the rockets, then one has always to fight the physical limitations of its physical existence of the material one uses.

In the design and operation of the reactor in this new technology, the interface between two magnetic fields of the outer core and caroline core and even in the multi-layer cores magnetic fields, these will create the same magnetosphere effect between the interaction of two magnetic fields forces of two as between the sun and the earth.

The effect of the magnetic forces in conjunction with interaction of the charge particles within the vicinity of the interface of these two spherical magnetosphere inside the core creates heat, energy and current with a disproportionate rate compared to the normal magnetic condition outcome in relation to the input energy into the system.

This in turn reduces the amount of the excited charge input needed through other sources like hydrogen or from scintillated helium (Scint-He).

Thus the interaction at the interface of the two magnetic field and presence of the charge particles within the core, makes the system a more energy efficient, not through thermal heating but by the radiative heating.

In turn this increasing the creation of the heat in the cores of the reactor core.
At the same time increasing the generation of the current through convection in the inner core.

In the core of the reactor this effect and position of this interface of the two magnetosphere is and will be a dominant factor in the all aspects of operation of any reactor. This even determines the amount of hydrogen needed to be available at the start point of the reactor.

The creation of Black Hole

Since first disclosures of this phenomenon, Scientist and the rest of academic world have tried to find, understand and explain the reasons for the existence of this mysterious being in the universe.

**The Object**

The object of this paper is to prove that the Black Hole is created out of a natural sequence of events. To prove that existence of the Black Hole in the galaxy is a normal event as the appearance of the Dark Spots on the surface of the Sun.
In this paper for the first time, it will be explained how the Black Hole is physically created in the galaxy.
In this disclosure it will be explained

1) The conditions which this physical object is created in the universe naturally.
2) How this body of the mass appears as a dark spot in the galaxy?
3) What purpose it serves in the universe?
4) Parallel example of the Black Hole condition in our solar system.
5) The use of this phenomenon for the Man to enable him to travel in the space.

**Concept**

When, one could fully understand the concepts of the creation of galaxies, stars and planets. One could be able to understand the creation and existence of the Black Hole.
One has to understand the fundamental principal that, galaxies like solar systems and planets are given their inner mass and energy at the point of their birth in the universe. So they can not create new masses and new source of energy.
Thus, Galaxies can only recycle what they have been given at the start of their lives, to create different new objects like stars or plants within themselves.
In universal terms they have a finite mass and energy available to them and nothing more. But at the same time as a part of bigger picture Galaxy's have to obey the universal laws of physics. Consequently, all galaxies fallow the same rules and so do their physical contents within them.
The Black Hole is created only and only under one condition in the Universe.
Black holes are created as the consequences of other acts in a galaxy. They are not created as a deliberate and as predetermined plan in and by a galaxy.
But in their way they make an enormous contribution in keeping the matters in check in their surrounding during their relatively short life.
At the same time they redistribute fresh material throughout the galaxy during their cycle of existence. This is done through and as the consequent of them being the source for the creation of cosmic rays in the galaxies.
This is very much like natural fertilisers. Where the old gives its nourishment in an indirect way for the existing plant to keep healthy and receive sustenance.
Black Holes in the universe are nothing but the centre for collection and re-cycle waste bin of cosmic debris.
As they grow bigger and their gravitational forces takes over. Then the Black Hole becomes a prior of its part of the galaxy. They become vast eating machines of the debris and stars and planets. This is exactly what is to be expected of them.
The Black Hole is originally created totally by chance. There are no patterns in their creation. They are simply a creation or an outcome of <u>natural interaction between two or more passive magnetic fields</u> in motion within the galaxy.

**Conditions for creation of the Black Hole**

To explain the concept, phenomenon's which are normal and familiar on Earth and from Earth will be relied up on. Then a parallel will be drawn with them in the galaxies for the creation of the Black Hole.
Black Holes are created according to the rules of physics in galaxies to collect and then replenish the galaxies with fresh recycled materials.
This recycling is the vital factor in sustaining and making sure that as the galaxy moves. There are new materials available to start new systems within the galaxies. At the same time nourish the other Planets within the galaxy with fresh supply of materials.
The parallel similarities between the Black Hole and presentation of new material in the universe on earth are the effect of collision of earth tectonic plates. When, two sources of solid materials interact with each other. Then, in turn in the long run the planets in the galaxy and submerged tectonic plates on earth become the source of the supply of new materials and planets in the galaxy and the lava or new continents on the Earth.
Let's explain this in the following manner. The continental plates and star systems are forever on the move.

They move slow but surly they are on the move.

On the Earth when two or more plates move in random manners over centuries and millions of years. At some point they come on each other's path. So do the stars and their systems. Like solar system and others in our galaxy.

When on earth the two or more continental plates come together. Several things can happen. This happens in galaxies but in a different form too.

Where the continental plates are replaced by cosmic magnetic fields spheres of the stars or systems. This is the strength of the magnetic field of a star or a system that it covers in that galaxy.

Imagine this to be the content of an egg on a plate in a cosmic way. Then bring two of these eggs together that they have an interface or touching each other.

The next steps in the procedure are very familiar to us on earth. As, the continental plates push against each other. If, they are of similar strength, they rise together to create the mountains over millions of years. Do not forget that they are still pushing and moving while they are muscling their strength.

So, large mountain ranges on the surface of planets are created. Other things can happen too. That is if, one of the continental plates is weaker. The weaker plate will slide under the other. So the continentals plate which submerges, in the long run becomes the material in the lower levels inside the planet. This then become the base material for the magma. Then some times in the future these to become the source material for new continents or an island and so on through volcanic eruptions. So this means that the material drawn in to centre of the planet does not disappear but for the time being is hidden from the view.

Parallel to this scenario happens in the galaxies. When, two or more systems in the galaxy reach each other.

Their passive magnetic field pushes against each other like continental plates.

A point is reached in this process of two passive magnetic fields passing each other. Where, an area in the space is created that the two passive magnetic fields have to interact with each other. As they are on a collision path with each other. At the same time the surrounding systems as they are pushing for their position do not allow any other course of motion, for two systems to move away from each others path.

You have a point where there are solid materials in motion from both systems available and they have no choice but to interact with each other. Because they have been thrown at each other by their systems. That, pieces of inter planetary garbage or parts of moons or meteoroids and other bits of the two systems in this region are thrown at each other in to the same pot

In this area, where the two systems physical materials are pushed and thrown at each other. So do their passive magnetic fields are exerting their power and authority. like the hidden forces pushing the continental plates in to each other.

A point is reached where these two force fields cancel each other out and create a condition of magnetic equilibrium. Where one field force can not dominate the other passive magnetic field force. Inevitably, an area of no or a very week passive magnetic field force in this region is established.

During all this process materials from both systems are still being piled up in this no-man's-land of space. Where the two systems materials are brought together due to pure force of the Passive Magnetic Field forces.

Even stars themselves in the later stages of the development of the Black Hole could be the victim of the Black Hole which their system was partially the cause of creation.

The new mass of the Black Hole may even be a larger mass than the individual systems that created the Black Hole in the first instance. One can not forget that these masses are still in motion and rotating at very high speeds.

This new mass in the centre of no- mans- land is piled up together and creates a very large gravitational force within its region.

By laws of physics, one knows that the only reason that stars shine or cosmic rays glow is the phenomenon of charged particles passing through a magnetic field.

In this region the magnetic fields are very weak. This region lacks the main component that could make it shine or to be bright.

That is the lack of the passive magnetic field in this region due to the equilibrium and canceling of the two interacting magnetic field forces.

Or for a time in the motion of the two magnetic fields of the systems. In passing each other, in some parts there are non or there will be very little magnetic field force.

Thou, even we have charged practical in the area, but there are no magnetic fields. No glow and no shine. Reason why this is called the Black Hole. As they emit very little light due to the lack interaction between particles and non-existence of the magnetic fields.

This is the reason why if one look's at these areas of the galaxy they seem to be darker compared to their surrounding areas.

This is Why this region of space is seems to be black. But, from an outsider everything looks as is thrown in to this dark spot from one side and nothing is coming out of the same side. This appears as to be a Hole. But in reality some rays of light should be observed as some charged particles still interact with the some weak PMF or what is left them before they enter the hole.

Consequently physical term of The <u>BLACK HOLE</u> is invented. Where in this part of the galaxy there are no visible light but matter disappears too.

So in this region of the galaxy astronomers observe a large gravitational force due to the large amount of mass thrown in to this area by the two systems as they pass each other.

But they have no explanation as what is happening to all this mass. Now one understands the reason for this false assumption and appearance.

This is the region where the gravitational forces can become beyond mans present understanding.

In the future papers the writer will explain how these Black Hole's effects can be useful in helping Man to travel through galaxies and in the Universe. These are at this moment of time beyond mans understanding.

One has to remember that as these two or more systems are passing each other. Several scenarios can happen again. Which every one of these will have and has drastic and profound effect in that region of the galaxy. But generates a vast amount of new recycled material for the galaxy.

One at all times has to remember that one is dealing with a three dimensional picture. At the same time one has to take into account the time factor. This is important. As in some cases the Black Hole exists for millions of years during the crossing of the two system passing each other path. The truth is that the Black Holes are a temporally condition so to speak in the bigger picture of cycle of the life of a galaxy. But, they surly look like being there forever.

Some of the residual of these interactions will be some cosmic rays (read the paper by the writer as to the birth of cosmic rays). Or the outcome could be the birth of a new system with a new mass from the mixture of the masses of the two old systems.

In this case the masses of elements are as they were in their original systems. But now the new Black Hole could have a combined mass of two old systems.

One can not forget that the centre mass of the Black Hole is still rotating. In the same direction as the systems were rotating which created it.

But as the centre mass is void of the Passive Magnetic Field (PMF). The usual interaction between the passive magnetic force and gravitational force do not take place that usually creates the first basses of heating and sustaining that heat. So that the temperature gradient could take hold.

That in turn could create the conditions for the mass to become a star or a system. So the mass relies up the heat that are produced mainly by the natural friction of the elements pilling on top of each other. So the centre mass have enough mass but not the right condition to create the necessary heat for the time being to make the jump to become the source for a new system or a new star. This is how in reality the Black Holes become the creator of new stars and systems.

These interactions between passive magnetic fields happen on regular basses in our galaxy as systems are at all times on the move in a confined space of their galaxy's.

Do not forget that at all time that this is in progress over thousands of years. The Black Hole at points due to weak interface with passive magnetic fields of the system is <u>leaking cosmic rays into the galaxy</u>. The reader understands now that why the scientific world find's materials from the Universe that are not or have not the same age as the original component of the galaxy.

As like supernovas, the Black Holes are the source of the new material for the galaxy primarily because of the way they are created and the way their life cycle finishes.

The other scenario of the interaction of the two systems could be totally different with an interesting outcome.

This is the most horrendous way that the two systems could come in contact with each other.

In this case as the two magnetic fields come too close to each other. At the same time, other systems around them push these Passive Magnetic Fields themselves together. The two fields interact and the first stage of creation of the Black Hole is reached. But, as the two systems surrender more and more of their debris and planets to the Black Hole. The central mass of the Black Hole increases. As the Black Hole is receiving its contents from two different systems simultaneously.

This reaches to a point that weight and the gravitational force of the new centre mass of the Black Hole super passes the mass weight of one of the systems. Which created it in the first place.

Now, gradually, the magnetic field from one side disappears totally. As the Black Hole has already devoured the star from one system.

The second system which has already lost some of its mass to the Black Hole at the outset of the creation of it. Now loses control of its magnetic field control too as it losses its star.

The second system over time losses all its mass to the centre masses of Black Hole too.

To an outsider looking at this, as these events are happening. It seems as the Black Hole is consuming every thing around it.

As the centre mass of the Black Hole has consumed the entirety of two systems. It is operating in a no magnetic field zone for a period of time. This can take thousands of years. Until a temperature gradient in the centre of the mass is established. Which, this happens due to friction with in the new mass.

If material is held for long enough within the centre mass! That magnetic force could be produced and maintained.

New systems will come to be born and new materials will be distributed in the galaxy.

If not! This giant of a mass of the Black Hole will be nothing but a huge Gravity machine. The Black Hole will be a dark place but not necessarily cold.

If the centre mass during its creation does not manages to heat up. The third phase of the Black Hole syndrome takes hold. This is, that, the centre mass at this stage becomes so big. As it never had a chance to hit up due to total absence or lack of strong magnetic force. At the same time, the new large centre of the mass is rotating.

This new mass inherits a huge natural gravitational force from its collective mass with no or little magnetic field to keep it at bay. So, this massive large body will start pulling smaller objects near to it into its trap.

This will have the most horrendous outcome for that parts the galaxy.

Do not forget that the same phenomenon applies when two galaxies come to pass each other's path too. But the outcome of that is beyond imagination. This has happened before and astronomers forecast it for our galaxy in the future as it passes the nearest galaxy to us in the next few billion years.

In this scenario, the whole of the God's calamites will be brought on the two galaxies. Even the surrounding areas near the newly created Black Hole will not be safe from the onslaught.

One can not forget that this mass at all time of its existence has the same fundamental problem of all other systems. That is to hold on to all its elements.

At the same time like other system's the lighter elements in the mass move to the outer layers and to the edges of the mass.

This happens to all systems even in our solar system this happened during its inception and its final settlement. As seen today, as the lighter giant gas planets exist on the outer bounders of our system.

As gases move to outer region of the mass. They become better candidates to be pulled away from the centre mass by any opening in the adjacent magnetic systems. When the mass reaches a point that gravitational force become weak on the edges that lighter elements can mange to loosen themselves and escape from its grip. These freed elements will become part of galaxy dusts. So object leak out of the galaxy even during the time of its creation.

If these elements are pull out of the power of the centre mass. Through the strength or gap in the adjacent systems. They become the comic rays, as we know them. This is due to the fact that during extraction atoms get striped of their electrons.

Some heaver atoms lose their electrons in the same way, and so they appear as part of the cosmic rays in the galaxy too.

Do not forget as it has been said before Black Holes are the mother of most of cosmic rays in the galaxies due to this effect (read the cosmic ray document by the writer for a clear understanding).

At this stage one can not forget that the Black Hole is still surrounded by other systems. This new Black Hole power is kept at bay by the systems around with larger magnetic field forces and gravitational forces. Which it is still encapsulate amongst.

Black Holes are normally observed close to the centre of the galaxies, as there are more systems clustered together in that region. This increases the chances of different systems to come in the path of each other. In turn increasing the chance of the collision and hence increase the chance of the creation of Black Holes.

One has to remember that heavier elements of the galaxy are largely concentrated in and near the centre of galaxies. So the passive magnetic fields and gravitational forces of the systems are many times more powerful near the centre of galaxies then what is experience in the outer edges of them. Consequently, the gravitational forces and passive magnetic forces in the centre regions of the galaxy will soon bring and keep the size and the power of these giants Black Holes under control.

What is achieved by these collisions of systems and creation of Black Hole! Is the fundamental principal of regeneration of new systems out of the old. At the same time unclogging of the galaxy of all the loss debris.

If one looks at a three dimensional overview of these areas in space. Surely due to the movement of stars and planets and the interaction of their forces one should be able to predict where the next Black Hole in that part of galaxy could be produced.

In time, a point will be reached where passive magnetic fields in one of the immediate neighbours to the Black hole will move on. At this point the feeding frenzy of the Black Hole will come to an end. Which means that very much like volcanic eruptions on earth where the mantle is thin enough that pressure of the lava can takeover. The lava, then push it's way out into the atmosphere as a volcanic eruption.

This is exactly what happens when one of the passive magnetic field's in this area moves or weakens. This creates a gap for the material, which has been pushed previously into the Black Hole into one direction. Where, these materials will be released or scattered in to the galaxy.

In the process part of them mange to cluster together and generate the temperature gradient essential for creation of one or more systems or stars.

The rest of the materials of the centre mass becomes cosmic dusts, Some become comets and some become cosmic rays and so on.

Thus, It is proven here for once and for all, that the Black Holes are not a gigantic eating machine. They are a temporary condition due to movement as systems in the galaxy.

Contrary to common belief they always release and produce new recycled material in to their surrounding. They are not bottomless pits where everything disappears in to them.

They are like a funnel that if one looks at one end it seems that they are taking everything in. But exactly like a funnel they have a hole on the other end that what goes in has to come out. With a difference the funnel is connected to a kitchen waist unit. Where, the sink waist unit that crunches everything up and mix what every goes in before spewing the waist out through the waist pipe.

So the behaviour of the Black Hole is very much dependent on the position of the observer.

If one looks from one end they are massive eating machines. From the other end they are the supplier and feeder of new life in the Galaxy.

**Examples**

The phenomenon of Black Hole happens in our own solar system. This happens on a smaller scale on the surface of the Sun itself. These are called the Dark Spots of the Sun. In reality they go through the same cycle as the creation of the Black Hole. With the difference that the magnetic fields on the surface of the Sun. Even thou they are so powerful. They interact with each other. They cancel each other out as they come across each other. Or their strength reduces drastically.

So the same cycle as creation of the Black Hole repeats itself. That, there are no passive magnetic fields or a very little of it in the region of the Dark Spots on the surface on the Sun. Hence, there are no interactions between the charged particles and the passive magnetic fields. Consequently there are no or very little emission of light from the surface of the Sun in that region.

Now the same scenario as the first phase of creation of the Black Hole starts again. But this time there is a slight variation.

The variation is that the gravitational force of the Sun is so powerful and very close. The gravitational force of the Sun is in proportional many times stronger then the gravitational force of the particles captured within the dark region.

Consequently the mass of particles are pulled back inward in to the Sun. So, they collapse back in to the surface of the Sun. By this time, most of the other passive magnetic fields of the Sun have physically push and cajole the passive magnetic fields (PMF) that created the Dark Spot. That, they move and so they shift from their position .So, the dual between the PMFs around the Dark Spot comes to an end.

At the same time as there are no more active PMFs to interact with each other. The charged particles start interacting with the PMFs around them. Then everything goes back to normal. The light or the shine on the surface of the sun returns to normality.

As it was said before. Something similar to this happens in the centre of the galaxies. Where there are more PMF available. Consequently, there are more chances of interaction between two adjacent PMF of systems. Which increases the chance of more production of the Black Holes.

When too many PMFs start canceling each other out. As on the surface of the Sun become congested. Here there are less and less PMF available to posh other PMFs to cause them to move. Like congestion in traffic, they clog up the surface of the Sun. Hence the number of the Dark Spots start increasing. So one feeds the other in a way. The Whole thing comes to an end. Where the PMFs in these areas for one reason or other are pushed or forced to move and the whole system of Dark Spot start to collapse.

This is the very reason why the eleven-year cycle of increase in the Dark Spots on the surface of the Sun arises on regular manner.

During the Sun's polar change which happens every eleven years. Then there are more of these Passive Magnetic Fields to interact. This being due to the fact that as the polarities of the Sun changes so more PMF start moving from one pole to the other to accommodate the physical practicality of the polar change. Thus, a larger number of the PMF become to cross each other's path.

Consequently there are more chances of the Black Hole phenomenon to take place. Which in fact it does happens. Which, in turn an increase in the dark spots of the Sun in a regular cycle is noticed.

This is the period when the Sun PMF activities increase. At this time there are large numbers of PMFs available. As the PMF interact in a large numbers, they create more Dark Spots. Then the number of these Dark spots increases. When suddenly a vast number of PMF cancel each other out. Masses of charged Particles gets pulled back in to the surface of the Sun. The whole cycle of collapse of the Black hole re-accurse. That is, where the Dark Spot collapse and their energies are released as massive Sun flares.

As it was described before, large amount of the centre mass of the Dark Spots explodes out ward and becomes solar flare as in the Black Holes.

Sometimes, as the mass of particles collected in the Dark Spot is pulled back in to the surface of the Sun. Due to it's mass and speed. This creates a second chain of events. This is as a meteorite hits the surface of the Sun.

Therefore, a secondary splash of the Sun material is thrown in to the space. This double act causes more then usual derbies and charged particles to be leaving the Sun surface in to space. The rest is well known to us as what happens next (read the article on creation of the dark spots by the writer).

This has to be understood that the cycle of the Sun's polarity changes of every eleven years is the direct cause of increase in the creation of the Dark Spot of the on the surface of the Sun.

The reality is that the darkness on the surface of the Sun is not due to what is commonly thought due to cooler temperature in that region. But, the Dark Spots are due purely to the fact that there is no or very little PMF in this region available to interact with the charge particles to create light.

So underneath the Dark Spots on the surface of the Sun the temperature of the surface is still the same as the rest of its surface.

But from an outside observer like on the Earth the surface looks dark purely due to the fact that there are little interactions between the PMF and the charged particle in this region immediately above the surface of the Sun. So, there is very little light produce. So the surface appears as to be darker.

**The Benefit and use of**

When this phenomenon is understood and utilised correctly within the confinement of a reactor. The control of the size and speed of the creation of the Black Hole will allow the control of the creation and control of the gravity within the reactor.

This characteristic in turn can and will be utilised to control the gravity with in the boundaries of the reactor. Which in turn this property can used to create lift in the atmospheric confides.

In the open space of the universe the control of this phenomenon can be use to be attracted or repelled from one point to or from in a system or a galaxy.

So the present speed phenomenon known to Man has to be redefined sometimes in the future. Do not forget the scientist use the effect of this phenomenon of gravity to get close to a star to gain speed for the long journey and call it the catapult effect of the planets.

Armed with this knowledge of understanding the reality of the Black Hole. In reality now they can now produced and control the gravity of a system from inside to achieve more efficient methods of motion from any position in the Universe with the system. The design of this system will be explained in the future papers.

**Conclusions**

The Irony with the Black Hole has been that one of the geniuses of the race of Man with out seeing it. He thought of its existence correctly in his wisdom.

The rest of intellectuals and scientists of the human racy for decayed tried to find it.

Once this mysterious object was found in the universe. The Professor Hawking made his assertion on the condition for its existence.

In this paper, for the first time. The realty about the Black Hole physical creation and its purpose in the universe is explained.

This clear explanation of the principals and theories behind the creation of the Black Hole put forward in this paper are undisputable on any scientific ground.

In this paper it is proven that the Black Holes are real objects, they are physical by product of the forces and matters like every other object in the universe.

The only difference for this body to appear and exist. There is a Fundamental shortage or total lack of one of the three main ingredients of the creation. This is the lack or weakness of the Passive Magnetic Force Field.

This is another creation of universe like the uniqueness of the Blue planet.

Once one has understood the methods of universe powers of creation within its three physical parameters. Every aspect of the appearance of objects can only be explained with understanding of the interactions of these with each other.

The most beautiful part of this phenomenon will be. How Man will use this knowledge now for the advancement of its race?

Understanding of the life and behaviour of the Black Hole in the space opens new doors for the Man to plan his future excursions in the space.

The appropriate name for this object should not be a Black Hole. This is as giant as a solar system. With all the physical attribute of a star. With the deference that is not shining due to the lack of PMF.

This system, now that we know its real physical shape should not be called a Black Hole. The appropriate name for this object as has one body and two distinctive characterises behaviours of first a gigantic eating machine of cosmic derbies. The second character of allowing new life to start from what it has destroyed.

There is an old Aryan name for an arrow with two heads as the Black Hole with two characters. This object is called ZHUBEEN. That is one body with two heads serving two proposes. So I called this unpredictable object In the galaxy with this name as now it is a known object and not a mystery any more.

Explanation

The helioseismology is the study of the internal structure and dynamic of the Sun using sunquakes data gathered mainly by NASA. The Sun oscillates continuously by varying degrees and directions. These oscillations are caused mainly by turbulent convection just below the surface.

The data from spherical-symmetrical solar model of the same condition shows close coloration to physical collected data through inversion. This showing that the data simulation is close to the physical reality of what is happening in the inner sanctum of the Sun.

This confirming that the rotation and the turbulence have direct effect on the heating of the matter within the confined of the reactor and consequently in the creation of the current through convection and magnetic fields production within it.

The turbulence of the matter in the core of the chamber A creates the dynamo which has the direct effect in the production of the magnetic field in the reactors central chamber.


Explain also?

Turbulent convection and differential rotation in the Sun are thought to be the cause of the creation of the solar magnetic fields. The directions in which these magnetic fields appear to flow out of the surface of the Sun according to their direction of rotation are known as helicity of the magnetic field in the region. Helicity simply describes the handedness of this field. This field literally opens up like a cone as it moves away from the centre towards outer region.

Magnetic helicity is in fact a measure of the knottedness and the twisted ness of the magnetic field within a region. This closely related to the turbulent dynamo effect. From all observation in the past large-scale poloidal magnetic fields have a direct linkage with strong toroidal field leading to finite helicity.

As, in this reactor core all parameters are finite and the rotation and turbulence are predetermined. Therefore the helicity of the magnetic fields has to be the same at different point but equal for all distance from the centre. Due to the small size of the core a mean or average strength or tightness of the magnetic field could be assumed.

The speed and the strength of creation and interaction of the helicity within the core have a direct and fundamental effect on the operation of the reactor. This is explained in the following manner. If the rate of the turbulence is that the number of the magnetic fields helicity covers a large area of the outer surface boundary of the spherical plasma. At the same time two equal helicity in strength in an area of magnetism is achieved. That they have to interact with each other's.

At the same time they get stagnated in a point in the core but rotating within the plasma. If they do not pass each other quickly enough. These can create the condition of the equilibrium or nonmagnetic field in the interfacing points. This is a very dangerous position for the core. Where if this condition lasts too long and these two forces have to interact with each other.

Thus a point of interaction of two magnetic forces will create condition as what is called the dark spot on the surface of the plasma. Which if this collapses can through plasma towards the boundary of the B. Which this sudden hot plasma can damage, by melting effect, the physical structure of the B.

This is very much like the Sun flairs. Which one sees on the surface of the Sun. The creation of this is very much explained in the paper titled the Black hole theory. Which is already been provided before. Now one might understand why this paper was released first and there are no doublets in its accuracy.


The Dark matter

The existence of dark matter is not questionable. But proving its existence and its effect on the energy balance of the universe and all matters as small as in the hart of an electron needs to be proved and detected and it effect measured.

The theory of dark matter does not and has not to be considered to be complicated, if one understands the real term energy of matter in the visible and invisible dimensions of the universal work at any size or proportion that might be.

The principal of the existence of The Dark Matter in the center of an atom is exactly as the one in the whole of galaxies and universe.

The dark matter has two distinctive characteristics, which make it totally apart from the visible matter.

These two characteristics of the dark matter as they can change to visible, they can make the visible matter to invisible when the matter reaches the same state of energy and magnetic field balance.

The first principle of the dark matter for it to exist but not be detectable through any system, is the existence of the double magnetic field of the matter.

Where the matter is of the same dark atoms particle of the same matter, interlocked, that the magnetic filed force of the two cancel each other out. Due to the principal of the interaction of motion of charge particle which can create magnetic field and magnetic reconnection within the matter itself that are visible and vice versa for the same magnetic field, causes the current for the matters within the dark matter.

In the dark matter the main ingredient, which is of the magnetic filed of two dark matters cancel each other out, but at the same time, they are strong enough for the particles of their dark atoms to be kept together.

This in principal is the same as the theory of the black hole which it has been explained in full in the paper titled the creation of "BLACK HOLE" by the author.

That is to say as the two dark atoms interlock to be come dark molecules, they balance each other magnetic field out, but the energy constituent of their physical body stays intact and functioning.

The reason dark matters or molecules can penetrate and exist on each level of universal existences, is purely due to the fact that molecules of matters with no magnetic field or balance magnetic field are and can pass through any matter or atom or hold their position in any levels of universe due to the fact that, as they do not have effective magnetic force filed they are, and become, and have no and meet no resistance in penetrating through elements with magnetic field force which are physical and consequently visible.

As dark matters possess a double magnetic field force , or are in the possession of the north pole and the south pole at the same time, which are internal reconnected, so they accept no gravitation force.

This being from atomic, molecular or galaxy gravitation forces. They have and do not create the typical double magnetic shielding created due to magnetic effect of their molecules. So they meet no resistance to pass through any matter.

That is to say due to their inherent internal bounding characteristics, they do not create any magnetospheric shielding that can cause resistance for them to pass through any matter which creates it own magnetic shielding type effect.

If this concept could be understood, as it is explained and replicated in a system, then the object within a dark matter can be transported across galaxies without any resistance.

Then again the matter of speed of light become to totally obsolete and irrelevant. In any case light itself is created of lower energy magnetic force of the universe, which makes the matter visible to human eye, but not necessary this speed is the highest level of motion that a matter can travel in space. As the visible light itself is a creation by the real mother of the light.

This means just because the human eye can detect this light, there are no other faster speeds or so called lights of motion of energies dose not exist in the universe.

Due to this effect of no magnetic boundary, the fifth state of matter that is the dark matter has no size boundary.

That is to say, they are tightly connected to their molecular counter part but at the same time loosely connected as in gases that they can cover the center of atom due to its magnetic pressures or they can cover a whole of one solar system.

That is why they do not need to be many of them to fill a solar system. But they could be a few that can create a new system out of no where in a galaxy or appear as atomic creation, as it happens in a very small scale where the proton can split itself into an electron and a neutron in the proton to proton of hydrogen fusion chain in the stars.

In this case the proton losses its hidden dark matter interlock between the energies which have the characteristics of neutron and electron. But it only needs the presence of the second proton for it to disturb the balance of the hidden or dark energy in the matter for the two new elements to manifest themselves.

In reality protons are constituent of neutron themselves as neutron carries a proton and an electron mass and energy level.

But how two protons can create something bigger than and more magnetic file force then themselves like additional neutron and proton, to lead to chain of even of fusion, this is exactly the dark energy which the proton carries but can only manifest itself when it is in presence of equal magnetic field force of another proton.

Where in the presence of the stronger magnetic fields of the surrounding plasma which the two magnetic fields of the protons where existing, up on receiving the additional necessary energy from the magnetic field of plasma they can appear themselves as the heavier matter of neutron and an extra electron and some energy release.

In fact the magnetic field of the plasma become the ground for the two hidden magnetic field of neutron and electron to absorb enough energy that they can balance each other out and manifest themselves as two new parts of the same element.

The reality of this interaction is the same for larger molecular dark matters that exist in the universe.

When they lose their magnetic field forces due to certain conditions in their universe, they regain part of their energy that they can disassociate from the other dark atom in their bound, so they become visible.

This is how matters in the universe manifest themselves out of no where within a system where there has been nothing in the past.

The ground which they appear as visible matter is very much like the seed of poppy flower, where seed in the ground and hidden for centuries. Then when an unknown effect changes in the ground they seed suddenly flower where there has been non before.

Therefore the dark matter up on receiving the right condition to be able to receive enough energy or give enough energy or get demagnetised that two magnetic field forces of atoms of dark matter can disassociated from each other, then the invisible matter gain their individual magnetic field and appear always in atomic level and then molecular level.

It is paramount to understand that these magnetic field forces are at the present beyond detection with present equipments.

But through the development of the cold double magnetic field rector core these conditions can be replicated and detected, that this levels of creation of dark matter in atoms can be detected and replicated and atoms for the first time being able to be created through a system.

These can de done for any atomic weight element known to man. That is to say if one could create a balance double magnetic molecule of the Iron, then the matter will be invisible until the time the external or internal magnetic field of the two atoms are changed, that they become able to attain their magnetic fields and due to their existing charged energy in their embedded sanctum create current due to rotation of charge particles that they become visible matter again.

The half life decay is one way of dark matter creation, but this releases invisible magnetic energy which can be absorbed by the other matters in their vicinity or be embedded in the new matters which appear as part of the leveling down of the element.

If this leveling down is followed through and element goes through lose of magnetic field due to interaction of the two matters with equal matching magnetic file then the matter will behave as the same as dark matter and becomes invisible.

If this understood and utilised, then the theory of the Wormhole is not a dream or possibility , but it is absolute certainty.

This technique of pushing the magnetic field out of the boundary of the system, and its interaction with the magnetic field of the planet, used in a way, that, the magnetosphere field of two cores, or magnetosphere field interaction of the system and the planet, can be confined to a pin point or a long line, then the system can be used in a similar way as the welding torch 1, where the heat at the magnetosphere will be hot enough that can cause melting of the elements.

Therefore this can weld any two matter together, even in the molecular or atomic level 1, leading to manufacture of elements 1, not in a fusion method but the atomic welding level to create new molecules, where there will not be a need for huge fusion energies to cross the coulomb barriers as has been tried in the fusion reactors.

By this method of using magnetospheric condition all atomic boundaries at the highest electron levels away from the nuclease, in strong magnetic field in presence of heat , this will allow by injection of electrons or protons directly from the center of the Caroline core, to lead to interlocking of two atoms and the necessary demanded charge, this being positive (proton) or negative (electron) particle energy , to be incorporated and sheared between the two atoms to lead to welding of two atoms, without creation of heat as is expected in the fusion reactors of today.

Therefore any two atoms and molecules can be welded together, where there is no need to start from hydrogen atom, where even two atoms of heaviest elements known to man can be welded, for it to create the dark matter of that element.

This phenomenon if understood fully, will lead to creation of fuel for inter solar system travel, and especially the use of this technique will be useful for travel in inter galaxy space travel.

Where each galaxy has its own gravitational field according to its main constituent ingredient element.

Therefore to travel to a galaxy where the main constituent element is uranium, where in the Milky Way is hydrogen, then the welding method will allow the production of the double magnetic filed molecule of the uranium, which the gravity of the target galaxy will use this to pull the matter to itself, thus the system which has created the double magnetic uranium will be attracted in to the targeted galaxy through the principal of the dark matter, at speeds beyond the speed of light, and fraction of the earth minutes. This technology even simple to understand , it will take some years tom be mastered.

The reason being is that the power and the knowledge of galaxial material constituent, is a mater that world of science has not come to understand, as of yet.

The simple explanation for this is, the reason each galaxy shines with different light, is because of its main constituent material, therefore to reach the galaxy the system has to generate the dark mater or the double magnetic molecule of that mater that can be attracted to it.

This is space travel without fuel and this is how dark matters are for ever in motion in the universe and they cove all dimensions.

Materials used for the cores

The material used for the physical body of the cores are all the materials in the periodic table, including their isotopes and mixtures with all other elements in the combination or resin, plastic, silicones, in the form of metallic, gases, gas mixture, vapour, vapour mixture, liquid, molten condition, frozen condition, radioactive materials in the form of past, spray, or liquid, or solid.

The material used for the filling of all the cores (these being single, double or multiple core layers) are all the materials in the periodic table, including their isotopes and mixtures with all other elements in the combination or resin, plastic, silicones, in the form of metallic, gases, gas mixture, vapour, vapour mixture, liquid, molten condition, frozen condition, radioactive materials in the form of coated, spray, or liquid.

Radioactive materials used for the helium excitation can be all the radioactive materials in their natural state, or their isotopes, or material which are not radioactive but due to their relatively short half life will go through alpha or beta radioactive process to become stable, these being like potassium going through beta decay to become stable argon atom, is considered as source of radiation, which can be utilised to create scintillation. The combination of chemical reaction between two or material which can lead to release of extreme ultraviolet light which can be used to start the ionisation chain of process in the core.

Or the irradiation of the matter to cause laser beam that can cause scintillation or direct ionisation of the hydrogen or other gases that can lead to creation of single or double magnetic field.

Or use of microbe's technology that can create ionisation of hydrogen or other gases that can lead to creation of the heated core of any amount of heat that can lead to single magnetic field. These are considered as the material used in the reactor for its operation and its construction.

The initial gases used for testing of the reactor are hydrogen and all the inert or ideal gases of the periodic table other materials which can lead to creation of the gases which can lead to creation of the heating and magnetic field in a system which is in rotation and in possession of turbulence in the any levels of vacuum condition

Gases used in the cores of the reactor

Choice of fuel for the proto type reactor is not very difficult.

To chose gases one has to consider most of properties of the gases under varying pressures and temperatures and magnetic filed forces. As these gases will have different and varying characteristics due to conditions and parameters within both cores of the reactor.

For the operational condition all gases are considered to be under a vacuum, and centrifuge, rotation, compressive condition, in environment in possession of one or more magnetic fields and variable temperatures.

Hydrogen

This gas will take the central position of the gases in the hart of the Caroline core, this being due to its lowest atomic weight within a vacuum chamber.

This is the favourable gas for ionisation and heating of the plasma. This element can not create radiation above the extreme ultraviolet (EUV), therefore by low that the hydrogen can release more energy then it has absorbed and by going through energy lose, that hydrogen can not release energy higher then EUV which has received from the scintillated helium.

Therefore there are no possibilities of radiation releasing higher then lower level energy EUV; therefore there is no possibility of radioactive contamination of the Caroline core.

Hydrogen gas is used for production of the plasma in the center of the core, through ionisation and in conjunction with use of argon gas as catalyst for rapids heating.

Where these ionised particle will give their energy up to the argon gas for the plasma to be heated, before return to their ground state level and trough vacuum and centrifuge back to the center of the chamber. The helium through the central column delivers where they can repeat the same with the next wave of the EUV rays.

Helium

This gas is used for verities of reasons in this reactor.

Helium liquid enters the Caroline core of the reactor through central column through separate borehole, after scintillation process, as deliver of the extreme ultraviolet source in to hydrogen gas level of this core.

Helium gas is used as part of the Caroline core as catalyst for heating up of the core, as it can absorb the right energy from some of the ionised hydrogen.

The helium can be continually be pumped with right delay factor through the borehole at its gas layer in the caroline core, that it leaves the core and returns back as the scintillators and blackout of the chamber to repeat the cycle.

Helium has cooling capability. Which this happens at pressures around 300 pisg. So when creating compression this factor becomes important. This could be used to the advantage for some systems operation mode.

As this gas is chemically and biologically inert. It is non-combustible and non-radioactive as energies at about 27 eV will never enter the core to cause the ionisation of this matter.

He in some operations could be used as coolant too.

Neon

This is the cooling gas for the reactor chambers.

Liquid Neon can be used as the scintillation material instead of liquid helium.

This is the best gas to chose, as there is little or no chance of neutron leakage from both cores. This gas is used as insulator where the heat in the plasma needs to be maintained at high temperatures.

Where the body of the inner core has to be cooler then the outer chamber temperature, this gas is good for the outer or the last gas before the outer wall of the outer core of the reactor, where the temperature of this wall has to be at body temperature, like in cases where the reactor is used in the medical environment.

Using neon as cooling gas this encourages convection within the material immediately below it.

This gas has cooling capability of forty times better than He does. This is the cooling gas to be used in these types of systems.

Argon

The choices of using argon gas for this type of reactor are several folds.

Under pressure or vacuum argon could be a good insulator.

Argon gas is the perfect catalyst for extracting the energy from the ionised H and He in different mode of operation. Which this released energy is used to heat the plasma within the core.

Argon acts as a good electron collector, where by placing of copper electrodes on the wall of the central column at this gas layer in the caroline core, these charges could be picked up from the Argon gas layer of the core, for the reactor to be used as the electric current source of supply.

Argon can act as source of EUV/UV emitter catalyst during the operation of the core as it is polarised during the rotation and turbulence of the plasma at right temperatures and pressures in the Caroline core

The recombination of hydrogen and helium in the chamber during the compression and expansion of ionisation of gases, when the Argon gas is under pressure and it is closely packed in its layer, by pressures created by the outer core magnetic field, this increases the conductivity properties of this gas, this further enhanced by the magnetic pressures of the inner core due to turbulences.

Thus the circulation and the high conductivity of this gas in a magnetic filed and electrons field, which this gas operates in, this, creates further current flow within this layer of the cores material.

This is similar to rotation of cooper wire of a rotor cutting through the magnetic lines in a generator that creates the flow of electric current. Where the rotating copper wires is replaced by the rotation of highly conductive Argon gas saturated by charged particles of ionised hydrogen and electrons arriving constantly from the center of the core internally outwards.

Where the quantity of the electric power produces becomes a function of the speed of the rotation of argon gas. Then this can hold vice versa for the creation of the magnetic filed force too.

Then the potency and importance of the choice of this gas layer will become apparent.

An important factor that this gas will have in this reactor will be due to its ability to receive energy from electrons and ionised hydrogen gas, as they return to their ground state, or before they are absorbed by the copper pickup for the current out put of the reactor.

What is significant with positioning of this gas, is that due to positioning of neon gas in the core, which behaves as insulation in this layer of the caroline core, the neon gas being under pressure due to operation of the reactor and due to its volume ration in the core will become a heat barrier for the separating the heat generated in the hydrogen side away from the argon side of this gas layer causing the plasma to heat up.

Neon plays the same roll in reveres and keeps the heat created in the argon layer away from the plasma in the center of the core too, up to a large extent.

Therefore majority of the heat delivered to the argon layer will go up towards the inner core boundary, for it to be transferred to the outer core for its materials to be heated up, helping with input of heat in that core necessary for the convection of the matter needed for creation of current and magnetic field in the outer core.

Therefore the thickness of the neon layer as its volume ratio of the core will have direct effect on the performance of the core operation and the outcome of the power and gravity produced by the system as a whole.

Krypton

This gas is primarily used in the Caroline core.

Krypton has a good insulating properties. Especially when it is used in vacuum in conjunction with magnetic and molecular forces.

Krypton in the reactors are used where there is a weak possibility of low energy neutrons and gamma rays. This is a better choice of gas than xenon.

Krypton has to be at lest the last gas in any reactor, as argon can never under any circumstances come in touch directly with body of the inner core. This being due to the fact that argon is the current carrier in the core.

Xenon

This is good as the last layer gas in the inner chamber.

Xenon by having a large absorption cross section is the best inert gas for the absorption of any neutron loose in the reactor core.

This gas layer has to be monitored at all time for it's poisoning neutron effect, that hot spot of the material of the inner core due to this effect does not become a possibility.

Xenon exhibits a highly non-liner behaviour of density against pressure. That is why it is better to have a layer of Krypton a head of this gas in the Caroline core.

Radon

This is one of the most important inert gases for this type of reactor operation.

This gas will carry the element of scintillation of the helium gas, at this stage of patent this gas will not be used as part of the Caroline core.

Extreme Ultraviolet

Availability and presence of extreme ultraviolet rays is one of the corner stones of the creation and maintenance of ionisation of hydrogen atoms, consequent leading to fusion, and creation of systems, stars and planets in the universe.

In investigating the creation of stars and planets in cosmos, In the universe, the ionisation of hydrogen, passing through a point in the galaxy, has usually has taken place, where the hydrogen atom comes in contact with extreme ultraviolet rays.

Which the energy absorbed by hydrogen atoms or molecules from extreme ultraviolet ray initiates the first stage ionisation of the hydrogen.

That this ionisation becomes the first stage for the creation of the heat in the plasma needed for start of fusion later on, in the core of a star, K. P Chang (the hydrogen ionisation in the interstellar medium), Mike Gaylard (Recombination line spectrum of hydrogen, Gene Smith astronomy, R. J Reynold and L. M. Haffer (Temperature variation and non-photoionization heating in the warm ionised medium of galaxies.

Utilisation of the extreme ultraviolet, in any reactor, as a catalyse for the ionisation of the hydrogen, is one of the most important criterions in any system in possession of the gravitational field force.

In the operation mode of a system, this will become assuring and controlling factor for the heat emission and stability of the chain of ionisation in the caroline core, as new irradiated helium molecule, or different method of delivering extreme ultraviolet rays in to the core, are feed into the core during continues operation.

The principal to be able to generate heat in the core of the reactor, is to bring about all elements in a reactor, to play their part in time and collectively. Generation and presence of the extreme ultraviolet on its own in a reactor to ionise the hydrogen atoms is start of the process for creation of magnetic field leading to finally creation of gravitational forces in the center of a system.

The presence of extreme ultraviolet ray within the hydrogen gas in the reactor core, collectively with presence of soft magnetic field, compression, turbulence and rotation in the vicinity of caroline core will grantee and determines the success of the ionisation and subsequent heat production and the other effects of a system.

Scintillation

Scintillation is the most important, and its presence is the fundamental step in the creation of any process in the universe cycle of life.

Without scintillation in a low density, low volume ration of atomic hydrogen environment of galaxies, the process of ionisation will not take place, that the rest of the chain of events for the creation of any system or galaxy can take is initiated.

Scintillation is the ignition key for start of creation of any system in the universe.

All inert gases in conjunction with different materials and conditions in the cores can be used for or as scintillation material in the core of the reactors.

The use of liquid helium and neon and other inert gases as scintillators is the essential ingredient of the operation of any system that needs to generate heat, power and gravity.

Helium and neon have no unstable naturally occurring isotopes, therefore any inherent radioactive backgrounds. That is why these are good source for creation of the extreme ultraviolet ray catalyst source needed for initial ionisation of hydrogen atoms to start the heating of gases and plasma in the caroline core.

In galaxies the ultraviolet photons from reminisce of the explosion of stars have sufficient energy to strip the electrons completely away from hydrogen atoms and ionised hydrogen atoms. When and if the atom of hydrogen absorbs a photon with wavelength of 912Å .The atom is ionised with the extra energy going in to kinetic energy of the electron. This requires a photon energy greater then 13.6 eV or wavelength of 912 Å in the ultraviolet region.

Collision between electrons 'thermalise" their energy, this energy heating the gas in the region to higher temperatures.

Theoretical models of the installer cloud are providing new insights into the role of extreme ultraviolet rays and soft X-ray photoelectric heating, as well as thermal conductive interfaces, in explaining the observed high ratios of hydrogen HI at very low pressures. These indicating not the need for the use of ionised Hydrogen but natural hydrogen in the process of heating up a gas to Plasma State.

At the present most considerations are given to use of ionised hydrogen and its relation with extreme ultraviolet rays emissions. Recent research and findings allows the endeavour to new territory of reverse state of condition. Where it has been observed in the galaxies that ground state hydrogen receiving energy photons in the extreme ultraviolet rays range would and is excited to be ionised. Then by returning to ground state through catalyses it can be used to release this energy to heat up the surrounding gas to heated Plasma State.

This opening a new approach into development of systems where not ionised but natural hydrogen and atomic hydrogen can be used to generate energy and currents, by using extreme ultraviolet rays rather then ultraviolet rays s to create the ionisation.

This new understanding allows low temperature operation and less energy input for the higher energy out put, allowing operation in the non-nuclear environment.

These being due to the fact as natural hydrogen is used, there are no possibility of emission above extreme ultraviolet rays by the hydrogen atoms, as an atom can not emit more then it has absorbed.

That is as the extreme ultraviolet rays energy absorbed by natural hydrogen atom, this atom to return to ground state can only release energies below extreme ultraviolet rays, at the same time releasing sufficient energy and free electrons that can be useful in a system.

For this reason the need for new ignition system using extreme ultraviolet rays for hydrogen rather then ionisation by ultraviolet rays microwave can be considered.

By passing liquid helium over Alpha or Beta source to generate the extreme ultraviolet rays, Thorindike in late 1950th discovered liquid-helium scintillation.

Stockton later showed the emission of very intense wavelength range in the extreme ultraviolet ray's spectrum is centered at about 80 nm.

Adams confirmed the transparency of liquid helium to its own scintillation light reason for the intensity of the photons.

Scintillation of the liquid helium by can be achieved through use of Alpha or a beta radiation source, where the use of Alpha or Beta source excitation in liquid helium determines the density of the ionisation.

Adams calculated that, energy deposited by Beta particles in super fluid helium are emitted promptly as extreme ultraviolet rays light, and is considered to be as much as 35% of total energy released by the fluid.

The initial stage in the process of heating all the elements in the core of a reactor has to be the ionisation of atoms of hydrogen in the Caroline core by using extreme ultraviolet rays, carried by compressed liquid helium into the core, which has been exposed to radioactive source prior to entry in to the caroline core.

This method of ionisation of hydrogen atoms has been observed in the galaxies, therefore it should be easy to achieve the same in reactor environment under the right condition.

The extreme ultraviolet rays in vacuum condition cause prompt and direct photoionization of hydrogen.

Where as lower energy photon causes a combination of fragmentation and delay thermionic ionisation. Thus use of extreme ultraviolet ray is the fast and direct way to start the reactor from cold.

The right choice of radioactive element for production of extreme ultraviolet rays in presence of liquid helium or neon is important. With the correct selection, the possibility that liquid helium will carry any gamma ray energy level radiation into the core of the reactor can totally be eliminated.

Therefore the choice irradiation source for scintillation will have direct effect on different combination and the amount of gases used in the Caroline core.

Use of neutron traps facilities, in the outlet of irradiated chamber of the scintillation unit can make sure no neutrons can enter the caroline core, that can create high energy rays in the core, that can create radioactive chain of events of releasing X-rays or higher level energy rays with the interaction with other materials in the caroline core.

Other methods of EUV generation

Once 1000 k region temperatures of plasma in the reactor are achieved. If, strontium vapour is injected into the plasma! This has proven to lead to creation of extreme ultraviolet rays in conjunction with presence of the hydrogen and argon gas. This effect can be used to circulate the strontium in the chamber once the initial heating for energy production of about 700 C° in the center core plasma is achieved. Where there would be no need for the further continues injection of irradiated Helium through center column.

Strontium in the presence of Argon gas and availability of hydrogen atoms or molecules behaves as catalyses. Which, will leads to the creation of extreme ultraviolet rays needed for the ionisation of Hydrogen.

Once the other hydrogen ions, which have given up their energy to argon, gas, on the way back to the hydrogen layer region of the core, due to vacuum principal and centrifuge at, hydrogen ions are energised by the extreme ultraviolet rays by going through the same process again, to create further heat.

The use of microwave or light bulbs and other systems for the creation of extreme ultraviolet ray needed for ionisation of hydrogen

There are several different methods to create and initiate the creation of extreme ultraviolet rays necessary for the ionisation of the hydrogen atom.

These systems are like use of microwave cells, all types of glow discharge cell, pressurised gas cell using different radioactive materials, plasma torch cells and so on.

There are new and novel methods to create extreme ultraviolet rays being researched for the semi conductor industry, which these can be utilised as they become available in the near future.

Turbulence

In the universe, existence of turbulence in a region under the right condition is an essential factor to eventual creation of stars and fusion conditions.

Stars are born in turbulent interstellar clouds of hydrogen. Stars form by gravitational collapse of shock-compressed density fluctuation generated from turbulence in these clouds.

Turbulent convection and dynamic action of the gas play a fundamental role in processes of transportation of energy, mixing, angular momentum, generation of magnetic fields and creation of condition for start of heating process.

In computerised three-dimensional models of turbulent compressible convection, including effects of rotation and magnetic field in the reactor, turbulent motion mostly achieves the energy transport across the plasma needed for the creation of convection leading to thermoelectric current generation.

Helioseismic inversion has shown that turbulence in conjunction with rotation can create high-speed rotation at equator and slower rotation at high latitude of the sphere of plasma within a spherical shape body.

Where this rotation influences the thermodynamic mixing properties when turbulence is present within the plasma. The effect of turbulence compressible convection with rotation has shown a mean spiral flow with depth of the plasma. At the same time the mean helicity has a profile which is positive in the upper portion and negative in the lower of the plasma, a property bearing on magnetic dynamo process that may be realized within such rotating layers of turbulent convection of gases.

This brings about the condition for the heat convection, essential for creation of thermoelectric condition necessary for the temperature gradient effect in producing the current to heat the plasma.

In these bodies result shows remarkable increase in convection transport of energy in presences of turbulence within the plasma.

This emphasizing that highly turbulent flows can possess transport properties. Encouraging and sustaining the production of cosmic type magnetic field forces within the plasma due to this type of convection in the core of the reactor.

Due to spherical reactor core design, in this reactor the spherical confined space of the core does not allow creation of turbulence as in the TOKAMAK reactors, where the plasma is free to rotate and magnetic fields are enforced from outside of the core.

Therefore a new method of generating turbulence for the plasma in spherical reactor is needed.

The turbulence can only be introduced by means of a variation in the amount of the ionisation created in the center chamber. Where this itself is mainly controlled by the injection of irradiated liquid helium or delivery of the extreme ultraviolet rays by some other methods to the core of the reactor.

Turbulence created through pulse ionisation of the hydrogen, through scintillation method, creates wave expansion of the gas, leading to creation of wave turbulence in the whole of the Caroline core of the reactor.

With the capability to be able to heat the gases in the core, and due to closed confmement of the core, through heating of the gases, enforce compression on and within the gas molecules of the Caroline core chamber.

The inevitable collaboration between the turbulence and compression in the gases becomes an important part of the operation of the reactor.

Where this is necessary to create continues turbulence and compression variation to help with permanent convection within the reactor gases.

Thus creating sequences of variation in compression allow the hydrogen molecules of the gas to come under such a regime is needed. Then through selected method of ionisation of the hydrogen, pulses of the turbulence could be released within the plasma needed for the successful system operation.

The rotation of the core

Recent scientific works has shown plasma in rotation, has sheared toroidal rotation, which peaks at the center of plasma. This in turn at high speed, at the center of the plasma causes reduction in the momentum of the plasma speed. Which, leads to dissipation of heat due to lose of momentum energy of the plasma. Which the heat created helps to heat the plasma inward out.

At the same time the gases in the Caroline core need speed of rotation for the hydrogen to reach its required condition of operation.

Where this is initially provided by a simple motor, and later the rotational will be dictated and controlled by the interaction of the magnetic field forces between the Caroline core and the outer core.

The initial rotation of the inner core of the reactor is achieved through adjustable speed control standard motors. Where, high speeds of rotation initially are required for the center core. Then when desired condition is attained by the elements within the core. The speed of the core is reducing to more normal and much lower rotational speeds.

These speeds are all determined by the purpose, which the system is developed for to perform.

The Caroline core, as in centrifuge systems, has to operate in the vacuum condition.

This system has the need for all the facilities of operation of gas and vacuum centrifuge.

With the difference that cores for some specific purposes the cores have to be able to handle high temperatures.

So these points has to be taken into consideration when choosing the right motor for the development of a system rotation parameters

The automatic rotation of the center core due to the interaction of the two magnetic fields will eliminates partially the use of the motor. Once this stage is reached. Where, according to the laws of physics, as it is observed in the center of the earth, where the inner core is continuously in rotation without use of a motor.

Now through this system it could be understood for the first time why the inner core of the earth is always in rotational motion. The speed of the rotation of the inner core of all the planets is dictated by the strength of the magnetic fields and the materials, which creates both magnetic fields (the Caroline core and the outer core).

Thus once a system is up and running to vary the gravitational force of the system, created by the interaction between the two magnetic field on the cores, in any direction negative or positive, only the speed of the rotation of the inner core needs to be increased or decreased.

Where this can be achieved by simple controlling the rate of the ionisation of the hydrogen in the Caroline core.

At the same time, if a constant minimum gravitational speed is required, and only sudden increase and decrease in the gravitational force is needed, the only parameter that needs altering then would be the speed of the rotation of the physical body of the inner core, through intervention of the original motoring system.

The magnetism and gravity of the system

To create sufficient heat by the hydrogen ionisation in the inner chamber. Where, part of this heat will be transferred to the outer chamber to start the convection process, which will lead to creation of the molecular magnetic field in the outer core, other factors in the operation of the cores needs to be taken into consideration. Where the principal behind creation of the rotation and gravitation and their control is the prime object behind the design of these types of reactor.

The double magnetic field phenomenon created between the two cores of the reactor, where interaction of these two magnetic fields up on each other as double molecular spherical magnetic phenomenon leads to creation of the gravity can be created by the reactor as it is done by all the planets in the universe.

These two spherical magnetic fields will help to partially create inter acting molecularly magnetised environment, where they have been created through magnetised plasma, thermoelectric current, created by combination of convection and compression, rotation and extreme ultraviolet rays, driven across the caroline core, and through convection and electron temperature gradient, leading to creation of current and magnetic field across the outer core.

Where up on the interaction of these two magnetic forces on either side of the inner core, the gravitational strength of the whole system can be established and controlled

In these rectors due to incorporation of appropriate systems, and careful choice of materials, generation of heat and its maintenance is first for the purpose of the creation of the magnetic field for the containment of the plasma and creation of convection in the outer core.

The rate of heat lose at the boundary of the core is only important when reactor is used for energy production. As the containment of the inner core is rotating and convection has been taken care of. This makes it possible to arrange for the core to operate at low temperatures, where temperatures in the region of below 1000K are sufficient for high power production systems

The strength of the creation of the magnetic field in the outer core can be controlled by the amount of heat that is allowed to reach this core.

The reduction in the heat transfers to the outer core, if necessary, will be done by using variation in the thickness of layers of inert gases in the Caroline core, before heat reaches the wall of the inner core.

Heat and neutron flux initiated by injection of scintillation material in to the core of the reactor, in these types of reactors, has to be controlled and reduced drastically and absorbed before reaching boundary walls of the inner core.

Otherwise for high temperature operation disciplines, temperatures and neutron fluxes will be so high that there are no known material at the present time that can stand such high temperatures and neutron absorption.

With these method of operation and for control of magnetic fields strength in these reactors, inert gases used in the caroline core and the outer core, are the tools of control of all parameters of the system, internally and without the use of separate or additional blanketing, moderating, and cooling materials outside the physical boundaries of outer core.

Handling such system for production of current, magnetism and gravity at high or low temperature operation mode needs a totally different concept and cooling technology.

For example, for cooling system for the power production system condition has to be accommodated by use of right amount and ratio volume of all the gases in each core of the reactor, which has to be accommodated in the physical design of the reactor.

The appropriate method to cool core of fusion reactor needs new method of approach. As, there are no materials, which can stand high temperatures of this magnitude. The cooling has to be in the same form and utilise properties of all gases available including use of magnetic field containment.

This new system of cooling needs process of multi-layer gas reactor. The bases for the development of this type of reactor cooling system is explained by the author in the paper titled " Saturn".

This is multi-layer gas and magnetic containment with capability to allow high pressure cooling ionised gas to travel in between two magnetic fields technology, which is developed and will be discussed, in the latter papers.

This is a highly advance level of fusion cooling system. Which present fusion technology has not concurred. A brief referral to this technology is explained in the creation of the rings of the Saturn paper.

In fusion reactor high temperature operation mode will require technologies which are simple but needs for them has not come to light. If the development of these cooling systems are not addressed sooner or later. The China syndrome concept will occur in the present fusion reactor proto types. When they reach continues production. Here the only damage will be a molten reactor core and possibility no contamination.

Cores of the system

This system will have and make use of every physical part not only for one purpose but may be for several different purposes at the same time.

For energy production the ideal shape for the core is considered to be in the shape of hollow sphere.

Cylindrical shape cores will near have the same outcome. The core can be made in any shape, physical practicality of ability to stand compression and rotation and the best strength to density ratio of the core will play an important factor in the shape of the core for any effects to be produced. Thus sphere shape is considered to be the best option.

For gravitational system in a craft several cylindrical systems in conjunction with spherical or elliptical core needs to be used for the motion of an object.

The use of multiple cylindrical or multiple spherical system in on craft eliminates the rapid use of one core and at the same time allows the system to maintain a constant gravitational force within its boundaries, while the other cores will allow the craft to be moved up or down, or to the side.

Fancy shapes cores like elliptical for space technology will be explained in their appropriate disclosures.

The Caroline core of the reactor

The physical dimension of the inner spherical core can be from few millimeters in diameters for medical use to several meters for power generation.

The principal problem is how to fill large bodies with appropriate amount of gases that system operation is safe and could be in motion. Stars and planets carry cores like this, which have radiuses of several thousands of kilometres.

The dimension of the core is determined by the purpose the core is to be used for.

For practicality and simplicity a 50-cm radius spherical chamber is to be consider in this patent.

What can be achieved in this size then can be replicated for any other size reactor.

The physical material for the reactor can be made of any combinations of elements and their alloys.

The best material for uniformity of effect and rapid progress is ferrite, nickel, cadmium alloys or resins.

This is the ideal material, if the core could be made with partially magnetic effect at the start of the operation.

Even thou most of materials lose their atomic magnetic properties at above 400 C° temperatures.

The material chosen for the body of the cores should not be able to interact chemically with the other layers of the gases and material inside the cores of the reactor.

Aluminium and its appropriate alloys for the construction of the core for medical and pure gravitational purposes are preferable due to their lightness and strength. Where the system for these types of use do not operate at high temperatures. Thus heat creation and dissipation will not be of much concern.

It is important to realise that for the first time in this type of reactor gravity at cold temperatures could be achieved. This technology opens up a totally new horizon in technological. Where through the use of cold reactor system, gravities needed to travel in coldest part of galaxies can be made possible.

Where, new elements can be fabricated inside the core.

Through this new technology, system will allow manufacture of chemical gravitational computer like operation of human brain, without use of conductors and understanding of use of micron electric powers possible.

For high power energy systems the silicon and silicon composites for high temperature operation and its different constituents (silicon carbides for 1000 C° operation) can be used. Where, high temperature resistant and long duration of operation is the main object of the use of the system.

Other material like Ferrite steels, Vanadium alloys 0.1-0.3 carbon steel, fibber resins for cold reactors, Teflon mixture for metallic mixture of gas and metal vapour cores (similar to centrifuge system for U-235 enrichment) are the best options. According for what and under what condition the reactor is to operate under.

The containment vessel of these reactors can be made of any of the elements known to man, plasma, gases, liquid, solid, even dark matter.
One material becomes the container of the other depending up on its physical and its condition at that a specific points in a specific position.

Containment vessel could be made of liquid for the mixture of the gases, where through the binding energy of the liquid the gas could be confined into that space.

Containment vessel could be made of heavier atomic gas for the mixture of lighter atomic weight gases.

Containment vessel of on metallic vapour could be the another heavier atomic vapour and so on.

The principal of the containment for the material for caroline core is that the material within the containment has to have the ability to be able to be heated that flow of current can be established, that magnetic field within this containment could be created.

Therefore any material can be the containment vessel for the Caroline core.

In very advanced systems any physical material containment will be to thick and will interfere with operation of the its system, so that the contaminate will be on energy levels rather than physical.

The author has already completed technology for this type of use of the system, and these systems are possible to manufacture and sustain.

This is the technology for the creation of matter in atomic level, where there is no tangible containment, and only energy containment possible and required.

For physical reactor the core, the thickness of the wall of the core can be from several millimeters to several tens of centimeters. This depending on material to be used and the purpose the system is to be use for, and to the extent of vacuum, and pressure in the cores.

These vacuum conditions being from a fraction of a few to Torr to $10^{-9}$ Torr or less.

The pressure condition in the cores could be from fraction, to several hundreds of atmospheric.

For the purpose of the proto type vacume condition of up to $10^{-7}$ Torr is considered to adequate.

At the same time it has to be realised that at high temperatures of operation, Shock pressure due to expansion of gases and Hydrogen shockwaves due to the feed of helium in to the core, will play an important part in the choice of the material for the material of the cores.

In some cases the inside of the core could be coated with method of chemical vapour deposition technique for abortion of these shocks.

The best material for this purpose is the diamond coating; the diamond is grown as a thin film on the surface of the core, during finishing stage of production. This coating can give higher strength, extreme hardness and high resistance to thermal shocks.

At the same time if diamond powder is mixed in the components of the elements of the core physical construction, that can be mixed with nickel or cobalt and iron as steel. This can produce a highly thermal conductive, strong and magnetic material good for gravitational producing system. Where continues change of gravitational field and a strong current source is expected of the system. This is a good material for space application of the reactor.

Both cores could be made of the same material. The choice of the material for cores is dependent up on the purpose that the reactor is to be used for.

Xenon poisoning as seen in chernovel reactor disaster is an important factor in the operation and the material choice for both chambers.

The increase in the neutron level in this layer and its less than ten hours release decay can create molecular shifting and effect the cores choice of material.

Copper coating for all parts of the inner side of the chamber is and could be beneficial. As copper is one of a few materials, which does not interact with any of the inert gases.

This material can have disadvantages if oxygen through gas inlets leaks into the chamber and for example interact with the Hydrogen.

This can have different effects at different temperatures and compressions in the core. Then creating matters like water and so on in the chamber. Which can have undesired effect in the system and the operation mode of the whole system.

When Nickel or/and Boron is used in the steel composition without any coating. This can be done for example for partial mixture of the center column material. Where some of the neutrons and /alpha particles can react with this material. Under some controlled condition, where 3 nm deliberate pores are created on the steel surface of the material in this section, much like volcanic sponge material, the interaction of the neutrons and alpha particle with the steel can lead to production of helium.

The production of Helium through this method can make the system a self-sufficient system for some applications where argon is irradiated by means of stratum at high temperatures of operation, where the helium will act as the scintillation material to ionise the hydrogen fuel. The choice of this steel as the material for the reactor core is very much dependent on the pressure and temperature of the operation of the core

If this material is used for the core of the reactor and behaviour of the hydrogen and helium are closely monitored, and confined to a specific pre-determined part of the central column, the interaction of neutrons and alpha particles in this type of material lead to hydrogen and helium embritllment. This is serious and can be dangerous and fatal for the containment and central core of the reactor.

The embritllment condition in these reactors (due to large quantity of the gases in the cores) due to porosity capability of Hydrogen and Helium is always appoint to be consider. This usually happens through dislocation of molecules and collection of these gases within the molecular structure or any un- noticed pores within the lattices of molecules of the material of the containment.

Specifically, these crevasses are dangerous at the point of the interface connection by welding or cold screwing of the two parts like between the center column and the core, if such connection of two parts is considered in the manufacture of the core.

This is why, it is more favourable that the core and the center column are caste or poured in one process of cast at one time, rather than these to be made of different parts and then welded together. Any crevasse in the material increases the chances of the embritllment.

The thickness of the inner core for the prototype reactor for safety reason is considered to be about 7.5 centimeters, as this core due to its size will have large volume, but the pressures at full testing operation mode could reach up to sixty atmospherics.

The mass to volume ratio of the core consideration plays and important part at the start up condition.

At the same time the reactor is in vacume condition of about $10^{-7}$ Torr.

It has to be noted that in having several different materials in this core of the reactor, these being plasma, gases, liquid or even solid, for different mode of operation, that there will be a differential rotation in the convective regions of the core, where, there will be uniform rotation in the radiative region of the elements of the cores.

The choice of all gases core makes the creation of magnetic field and uniform rotation in each layer of gases much easier to achieve, where the reactor is in principal, in the caroline core will operate under radiative more than convective principals.

Where rotative convective in a full spherical shell can achieve better and a more turbulent parameter regimes in the outer core.

The transition zone between differentially rotating convection zone and nearly uniform radiative zone known as the Tachocline, prevails in the all gas reactor cores, where one gas of lighter atomic weight with its own uniform rotation speed come in contact with the gas of heavier atomic weight which has its own uniform rotational speed, but the two speeds due to their atomic weight posses different rotational speeds.

The zonal shear flow between the two layers of gases, where one layer with higher atomic weight rotates slightly slower then the gas layer with lower atomic weight, will have effect on the current and the creation of the magnetic field forces within the caroline core and the outer cores of a system.

Where in between zonal region s of two different gases, small regions of tightly packed vortexes could establish themselves.

Which these can lead to creation of separate but minute miniature magnetic fields in these vortexes, where very small magnetic tight fields with high helicity strength could establish them selves in these vortexes.

Where, if these collectively take over the rector core, then double magnetic field will become triple magnetic field.

In some cases if the third vortex magnetic field are allowed to interact inside the caroline core, then the black hole condition will appear 1, and the materials in the core will be displaced and rector can run out of control, or even shutdown.

Using this method of vortex magnetic creation will allow the study of creation and behaviour of the black hole in the galaxies 1, and the way they can be used for certain transportation of elements in space.

The technique of creation of alternating current using the physical body of the inner core is an additional fringed benefit from the system at the full operation mode 1.

This is a technique well used in the creation of current in the power generators, where the copper wire in rotation within magnetic field creates electric current.

This can be achieved in the same way, where the electric current is picked up in the southern hemisphere of the core, and then the wires are passed internally to the northern hemisphere of the reactor for collection by pickup brushes, or even the current picked up in the northern hemisphere could be wounded through wires before delivered to the electric brushes out side the core.

By this method the copper wires within the parameters of the inner core body will create further alternative current separate on top of the direct current of the cores, through the principal of rotation of the wire in the magnetic fields created by one core or the two cores of the reactor.

Therefore the system can create alternative and direct current superimposed on top of each other 1.

By this method, the output from this wiring could be used for the running of the whole system like the motor and the gas liquid production system, pumps and so forth.

The outer core

This is the second and an important section of the whole design of this reactor.

The section immediately superimposed over and encapsulates fully the Caroline core of the reactor.

All steps taken in the caroline core to ionise the hydrogen to generate heat in the that core is all carried out so the elements in this outer core could receive heat internally from the caroline core, so by dissipating heat through convection, to the outer side of this core boundary, the material in this core could create due to the circulation of the charged particle in this core, so that current could be created in this core, then by the help of the rotational motion of the inner core, magnetic field could for this core could be established.

Through this new method creating a soft magnetic field in the outer core, and by being able to extending the strength of this field to the plasma core region of the caroline core, this plasma could be confined and condensed, so for example fusion in this core could be initiated.

Where the magnetic confinement of the plasma, created by the outer core, will be fully spherical that can squeeze the plasma in the center of Caroline core to any size diameter that needed. It can be seen that, for example, fusion can be achieved within the Caroline core of any reactor just for few pennies and in several minutes. Which can last for eternity.

Where, if need be the size of the plasma in the caroline core can gradually be increased to any size that needed to be, and for the purpose that the fusion plasma was initiated and developed in the first place in the core of the reactor, this being for energy production, or for material production, or being for long rang energy magnetic weapon technology delivery of high magnetic force ejection in the invisible rang, for the defence of a craft at speed several times faster then speed of sound, where conventional weapons, even laser technology are in practical and too slow, for high speed motion in deep space travel.

But at the same time due to over whelming strength of the outer core over the inner core, if chosen by the operator of the system, the heating of the plasma in the caroline core can be speeded up, as the magnetospheric interface of the caroline core and the outer core could be moved to be in the plasma region of the core. Where the interaction of two fields in conjunction with motion of the heated charged plasma will create an additional further heating and current in the body of the plasma in the center of the Caroline core.

This is the power of this outer core; this is the versatility and flexibility of the power of this outer core.

This is the technology which fusion nuclear scientist are and have been looking for in the TOKAMAK system, but they have never had, and through this technology has become possible for the first time and for few euros. This is where the scientist in the fusion industry are injecting vast amount of current in the magnetic coils around the TOKAMAK cores to confine the plasma, where through this outer core of this reactor and this technology the same powers could be achieved very simply, the same as it has happened in the stars for billions of years

So the method of the magnetic confinement of plasma 1 and creation of fusion plasma 1, production of new material due to high temperature operation through fusion 1, high energy plasma space weapon technology 1, creation and maintenance of fusion reactor 1, magnetic blanketing 1, these are all some of the part of this patent application of this new technology, and just because of the development of this outer core, there are more to be pointed out.

The reverse of the production of the magnetic field holds true for the outer core too. This is where the strength of the magnetic filed forces of the Caroline core is more powerful then the magnetic field of the outer core. That is when the magnetic field force of the system will be super passing the boundary of the reactor core, and as there are two magnetic fields in operation within the core, these two have to have an interface, where this inter face will be outside the boundary of the reactor as a whole 1.

There are several uses for this mode of operation, one is that if the magnetic field of the outer core can not match the magnetic field of the caroline core, then the magnetic field of the caroline core will pass the boundary of the system. Then this magnetic field has to interact with the magnetic field outside the physical parameters of the reactor.

If the system is within an atmospheric conditions, like earth, then this magnetic filed creates, magnetospheric boundary interaction zone of itself, between itself and the magnetic field forces of the planet. This is very much like the atmosphere around the earth, but in this case the magnetosphere field is created around the system following the interaction between the planet and the system magnetic fields up on each other.

Then if the magnetic field of the caroline core is strengthen further, through the operation of the ionisation of hydrogen, that can react with charge particles of the atmosphere which is within, then this will create a glow, due to the principal motion of charge particle within the magnetic field, very much like florescent tube.

That is why crafts using this magnetic technology always look like a bright light and shine like a silver ball or a silver dish. This is light is an outcome of a natural phenomenon which is just been explained. Therefore the system is a small scale can become a source for natural lighting to be used as a light bulb 1, flood light 1, Or natural sun light for green houses 1, where this lighting will be as natural as the light and the heat of the sun in possession of all its natural nourishment for needed growth 1.

If then, the power of the Caroline core is further increased the interface between the system and the atmosphere around it can be pushed further away from the immediate boundary of the system, this giving the system a shielding effect 1, where the physical body of the system can be keep away from the heat of the two magnetic field interfaces.

At the same time because the magnetic field from the caroline core is always in rotational mode, this will gives the system a impenetrable revolving magnetic field effect, or a rotating magnetic field shielding 1, This very much like one trying to jump into a fast revolving door, penetration is impossible.

The system in this mode due to creation of revolving magnetic field of the internal core of the system, will reconnect with any wavelength and strength magnetic field which comes in its path, therefore the system will absorbed, any radio or other magnetic energies waves, through the magnetic reconnection principal, which comes in touch with this magnetic field of the system, consequently the system in possession of these types of rector will become invisible to present radar tracing facilities 1.

Thus if this principal is used in craft, first of all the craft will be shining, the craft will have no air resistance due to the distend magnetosphere it has created with atmospheric environment around it 1, so the craft can travel at much higher speed in an atmospheric condition, with literally zero air resistance, as magnetic shielding created by magnetosphere of the craft will not have the same resistance and friction force which can be exerted on a similar size solid body, like an aircraft with jet engine, the system is invisible to radar, so the magnetic field shielding will have satellite effect 1,

The system will create its own magnetic shielding, and through creation of this shielding, the system can create its own atmospheric condition 1, within its magnetic shielding boundary.

That so for example by travelling to let say moon, the craft can extend its magnetic filed shielding and create the appropriate gravitational field force, then its inhabitants do not need space clothing, and can walk and leave under condition of earth magnetic field force level, fully protected by magnetic field shielding and be protected from outer space debris and from all radiation hazards.

Therefore the system can be used for radiation protection in any environment 1.

If then a double outer core system that can posses magnetic field, that can create an outer second magnetosphere on top of the first magnetosphere, created between the caroline core and the first outer core, with the difference that this seconded superimposed magnetosphere will be rotating in the opposite direction to the first magnetosphere.

Then due to the principal of two non equal magnetic filed forces and which are two in rotation on top of each other in opposite direction to each other, under no circumstances the system inside these two magnetospheres could be bridged by any object which is outside the double superimposed spherical magnetospheres 1

This is a total magnetic protection system, and is useful in case of entry in to atmospheric conditions, or when in space going through region where there is a environment in the galaxy, where there is cloud of small or large meteoroids or space dust, that the system becomes impenetrable and fully protected. This is the double shield system 1.

This system is useful for submerging in oceans, where the depth becomes irrelevant, or entering planet atmosphere that has a liquid environment on its outer surface. This is the submarine technology of this system 1.

This type of layering has been explain in the paper by the author titled SATURN.

Now the beauties of this patent is a little by little becomes apparent, and all of this because of the understanding and creation of the second magnetic field in the outer core of a simple system.

The interaction of two magnetic fields inside the reactor core, in presence of the charge particles, not only creates heat in the core of the reactor, but at the same time the inside of the core is always highly bright and in possession of all the sub extreme ultraviolet rays, which are beneficial to the inhabitant of the users of the system around the reactor 1.

Therefore this system when used and manufactured in an appropriate way, like where the body of the cores is made to be transparent 1, the safe rays created inside the core of the reactor could be allowed to pass the boundary of the core, not only to light the environment around the core, but at the same time deliver all types of radiations necessary for natural and atmospheric condition for human bodies survival in open space, where there are no natural sun lights.

In reality one will have the full colours of the rainbow at all time inside the system. The multi colouring lighting system 1.

Therefore the system can be used for lighting vast areas as a lamp, the system can be used for a clean or decontamination environment 1, and system can be used for cell growth or plant growth when is used for artificial but real sun system with all its benefits.

The flow or circulation of material, being liquid, gas, plasma or a mixture of two or more of these elements, in the outer core needs to carry not only heat away from the inner core.

For this the boundaries or the wall of the outer core, away from the inner core, has to be kept at lower or cooler temperatures enough on continues bases, that the circulation necessary for the convection could be maintain within the outer core. This could be achieved very simple by several methods, and for this purpose several different materials in the out core could be utilised.

One method is the use of metallic material that reaches the condition of molten liquid state at low temperatures. Like Mercury, which is hazardous and poisonous, where not only it can remove heat but also due to its atomic metallic structure, this facilitates the creation of current in this core.

For this part semi- metallic materials are considered as practical solution.

The new liquid metals are best candidates for this part if they could hold their properties within a magnetic field and high temperatures.

The best materials for this core are, gases impregnated with metallic vapour, like the ones used for uranium and plutonium gas centrifuge.

These need a third chambers cooling system filled with neon gas that acts as a coolant. The neon gas is continually pumped around the whole containment, and xenon forth-outer containment for the absorption of the neutrons lost in the process by the heavy gases.

The neon gas has two functions in this part. One is that neon has an excellent coolant property. Neon is forty times better than argon as coolant.

Neon gas has no isotope, therefore no possibility of radiation contamination.

The outer core normally needs only two inlet portholes, which could be accommodated next to the central column, or could be built as part of the central column channels 1.

Or this core can have its own independent access with out going through the central column 1.

The other possibility is the independent access and reveres feed line through the central column for deep space technology, where the hydrogen needs to be feed back to the caroline core 1

Or where the CO2 gas needs to be treated, then the hydrogen ions from the caroline core are feed into the outer core, where the hydrogen will pick the oxygen from the gas, making pure water 1, and will leave pure carbon on the outer side of the inner core's surface.

If this core is made to be in centrifuge condition, then the carbon can be heated through the heat from the caroline core, that this carbon can be made into one hundred percent pure atoms of diamond 1.

This technique is simple, But the vacume condition and pressurisation of the outer core has to be monitored and created through gas disposition, so atoms of carbon bind in inline and perfect symmetrical manner.

If this process is controlled, fully, the creation of C 60 1, is very simply achieved.

This is the CO2 cleanup system 1, is used for plants, where this gas needed to be naturalised before matters by products like water 1, can be released in to atmosphere, which this gas has been the cause of green house effect.

Portholes in the outer core are there to facilitate the feed and withdrawal of gases and elements or any other process that elements in this part have to perform to create the outer magnetic force filed of the reactor for specific discipline.

The material for the filling for the prototype's outer core is best thought to be a metallic matter like sodium (or potassium or calcium or magnesium).

Sodium is used extensively in advanced gas cooled reactor for its cooling properties, and large amount of data's for its properties are available.

Although highly interactive with water and dangerous, in this reactor core where it is sealed containment design, at low pressures, there are no chances of interaction. Which make sodium an ideal material in this core 1.

In warm interstellar medium containing ionised hydrogen, sodium mixture is very common. Sodium and potassium are always detected in the vicinity of the hydrogen atoms in the warm interstellar medium

Sodium in these parts is the catalyst for initial magnetic creation condition for the creation and the maintenance of the plasma and then the creation of the second magnetic field in the inner core of planets.

Where sodium will not interact with the ionised hydrogen but it will allow it to behave as a charged proton, and due to its charge and its motion within the sodium environment, where sodium has a metallic characteristics and properties, due to physics principal of the motion of charged particle within a metallic environment, leads to creation of the current the subsequent production of magnetic field in this environment.

Even though these fields are weak enough not to disturb the balance of the system. But they are strong enough to release the energy to the sodium for it to be in motion due to a larger convection system that the magnetic field and the current in the interstellar medium can be initiated and to be maintained.

This phenomenon in this reactor is utilised in the outer core for the proposes of creation of charged medium in possession of convection capability, but without ability to interact or absorb the ionised matter as sodium is a stable energy metallic matter 1.

In the interstellar mediums the concentration of ionised atomic hydrogen is in the region of 1-10 atoms per centimetre cube. At the ratio of 100-1000 ionised hydrogen atoms per centimetre cube then if any hydrogen molecules introduced, then new parameters will come into play.

In this reactor using the central column (see the next topic) of the caroline core, that facilitated the withdrawal of the positively charged plasma from the caroline core, this allowing feed of protons from the plasma through special borehole directly from the caroline core into the outer core into sodium 1.

This allows the sodium to warm up in the first instance if need be.

As positive charges of the ionised plasma are introduced in to sodium section by this replacement enrichment method, where the protons will act as charge particles in the liquid or vapour of sodium in the outer core, helping with motion of the charge particle for the creation and maintaining of the current in this core.

But at the same time this allows the interaction and the absorption of an electron from sodium by ionised hydrogen, after ion of hydrogen releasing its energy to the sodium atoms, for the ionised hydrogen to attract one electron from sodium outer orbit, this leading to creation of hydrogen gas in the outer core 1.

Where, this atomic hydrogen gas can be feed back to the inner core as the fuel for further ionisation.

Thus causing the fundamental replication of the convection method, as it is assumed to be creating the current in the outer core of the earth through convection.

Then this current in conjunction with the motion of the inner core will lead to the creation of the second magnetic field on the outside of the inner core.

Therefore understanding the method of the replication of the second magnetic field force on the outer side of the inner core, as it happens in the outer core in the center of the earth.

Where it was shown in the previous chapter, how to create the magnetic field in the Caroline core, and now it is shown how to create magnetic field in the outer core of this reactor, totally independent of each other.

This showing how two magnetic field forces can be created, which are both spherical and can be made and controlled independently, separated by a physical boundary of the inner core in a reactor.

Now it has proven that such a phenomenon in the center of the planet can exist, where the center of planet possesses two independent, reconnected magnetic fields forces.

Which the interaction of these two magnetic fields up on each other in molecular state leads to creation of double magnetic field force effect, which spans the combined strength of these two magnetic field forces.

Where the combined attraction fields forces of these two magnetic field at atomic and molecular level, causes the creation of the gravitational field forces of the planet or a system 1.

The molecular magnetic field strength of the cores is dependent of the materials within these two core of the inner cores of each planet, which the volume ratio, density, positioning, and speed of the motion of these material within their respective position within each core determine the molecular magnetic strength of that planet, and by low of atomic mass centrifuge principal, due to rotational motion of the planet, in determining what elements in its solar system, the planet is going to hold on to for it position with the given combined internal magnetic field force of its core.

That is why now it should be clear why the shape and the positioning of magnetosphere of planets are important, as now it should be recognised that the magnetic field created by the two cores of the planet decides the shape and the strength of the magnetosphere of the planet, and respectively, the magnetic field strength of the two cores of the planet are totally dependent on the composition of the materials inside the two core of the planet.

When two magnetic field interact with each other, as much as magnetic field force goes out of the system, for the purposes of magnetic reconnection, the same has to come into the system to close the loop.

As for planets like earth, what goes out as magnetic field force, it shows itself as the magnetosphere of the planet with interacting with the suns magnetic fields.

As to close the loop, for magnetic field force which comes back to the earth in interacting with the magnetic field of the all elements including magnetic field of atoms and the rest in possession of their own magnetic field, this shows itself as the gravitational force of the planet.

Where this closing loop for the pulling strength of the planet, as its magnetosphere equivalent, becomes its attraction power, or what is called the gravity of the planet.

As the same as magnetic field with solid magnet, the strength of the pulling of the poles of a magnet are dependent up on the possession of the matter from the magnet. Where the distance of the attraction and pulling of magnet is inversely proportion to the distance of the object from the magnet.

This principal holds the same for the molecular magnetic field strength of the planets too.

Therefore as the planet has already filled its magnetic field strength of its pulling matters, with materials, which have already cover up to its tangible physical surface.

Therefore any elements, these being gas, liquid, human being or what ever, beyond the point of it tangible boundary, the planet has enough strength to attract them to by its magnetic field, but it can not entrap them. So object on the surface of planet is on the last frontier of the maximum strength of this attraction power of the planet. Where it is fare enough not to be attached to it but near enough that the magnetic field strength of the planet can have a hold on to.

This is what is called the gravitational force field of the planet. As the surface of the planet is its last physical magnetic frontier of its pulling strength, then from there on every little positioning away from its center of the magnetic field counts very much.

If this phenomenon understood, then to move away from a position away from the center of the magnetic field of the planet, one does not need to push itself away buy burring jet fuel, where when the fuel runs out to overcome this magnetic field, one is pulled back by the magnetic field force of the planet.

Understanding this phenomenon, and being able now to create a system that can create its own molecular magnetic field 1, therefore it must be understood to be easy to move within these kinds of environments without using jet engines and rocket fuel to pull away and then be pulled back when the fuel runs out.

Now that this principal is understood, and the technology through the design of this reactor is proven and can easily be achieved.

Therefore all the reactor of the system needs to do, is to imitate the magnetic field strength of the planet at it position where it is to float in that level, and then add to its magnetic fields strength that can be attracted to get closer to the inner core 1, or in the other words to the surface of the planet, or reduce its magnetic field strength that it can be pushed away by the magnetic field of the planet 1, to where the magnetic field is as weak as matching the magnetic field of the planet at that level.

Then to go a distance away on the surface of the planet, the reactor magnetic strength needs to be altered gradually but fast enough that the object will move in time in slight slop up or down to cover the small curvature of the planet.

For flight on a straight line of motion in these type of gravitational reactor within a spherical atmosphere like earth needs a little more advance knowledge, which will be explained in due course.

This is one off the most hazardous moves for the whole system is, if the system is to fly vertically up, in a straight line. This is recopy for destruction of the system, and a foul will ever try to attempt to do such stunt, if one could understand the principal of magnetic connection of the poles of spherical magnet, and secondly the stress which will be put on the system due to interaction of the two magnetosphere of two fields of the planet which is dimensioning (the planet) and a one which is increasing or is very high (the system).

This is possible, but the system will have near zero percent chance of survival. Specially if the system is not controlled and the system pushes itself due to rapid motion of the system, to come in the region where the system magnetic field, due to sudden vertical motion, becomes directly out off the planet magnetic field force, and it has to be faced with the full mighty power of the magnetic field of the star of the system, like in the regions beyond the magnetic interface of the earth with the sun on the magnetopause or bow shock region in the open space. This action is exactly like jumping off from top of Eiffel tower with no parachute.

The gravitational field force of a planet can be replicated within the reactor, which will possess gravitational field force which can be controlled, due to the ability to be able to control the interaction in between the two independent magnetic fields in caroline core and in the outer core independently.

This is the system in possession of gravitational force field, that its strength is unlike planets which is set for their lives, due to adjustment and control of its parameters and thought operation of the reactor, they can varied, and controllable magnetic fields matching the environment which the system operates in could be produced in the center of the reactor of the system 1.

So there you have it, your flight without a wing and without jet propulsion, and on the sound physical principals.

Atoms of sodium (Na) are larger, and so more reactive, Similarly; atoms of potassium (K) are larger, and so more reactive, than atoms of sodium. It follows that elements below potassium in the periodic table should be more reactive than potassium. Rubidium is more reactive than potassium and caesium is even more reactive than rubidium.

Sodium reacts by losing a single electron. Magnesium reacts by losing two electrons. Aluminium reacts by losing three electrons. Losing each electron requires some energy to be put in, so it is easier for sodium to react than magnesium, and easier for magnesium to react than aluminium.

This method of replacement charges from the inner core plasma is one of the corner stones of the second magnetic fields creation and control 1.

Where the outer core could be feed through the inner core from pressurised gases like krypton layer to increase the pressure in the outer core.

At the same time allowing the material to be kept under control in the outer core. This could be carried up to point and pressures, which needed.

The plasma is feed through a different direction from the center core into the outer core.

The outer core could be used for the current production, this is made possible due to the fact, that if electric contacts are positioned in this section of the core 1, these will pick up any loose electrons which come available in this section, due to convection and interaction of the plasma which is fed through the inner core and the materials in the this core.

The other method of impregnation, is by gases impregnated 1, with charged particles could be used, where the gases through charges pickup from the rotation of the wires embedded in the body of the inner core could supply circulation in the gases of this core, that again through motion of charged particle within a metallic gas, current could be created in this core, that with interaction with the rotation of the inner core, magnetic field of the outer core could be created, that the gravitational field could be established in the center of the reactor

In being able to compress the plasma in the core of the reactor, by using the magnetic field of the outer core and Caroline core, under the right temperatures and pressures, the state of the matter in the plasma could be changed 1.

Where in reality due to compression created, the electron of the gas or the invisible energy made available from two magnetic fields in presence of gravity in the core within the plasma, allows the neutron, electron conversion of proton, without the physical appetence of the separation of two components, but due to their magnetic field presence and the arability of their charges in the vicinity of the plasma, compressed plasma or gas will behave as a metallic matter and becomes electrically conductive, due to imitation of the electron as to be free, but still in the bondage of the proton in the plasma.

This how materials change or appear to become metallic and conductive, where in their real terms is just normal insulator. This is the behaviour of the helium in the center of the Saturn. The generation of metallic plasma 1.

The central column

This is the umbilical cord between the reactor core and the rest of the ancillary parts of these systems.

This part of the reactor can be manufactured from any single material like iron, steel, composites, plastic, ceramic or alloys of any kind silicon resins, any material which can serve the purpose of the application of the reactor.

The material for the central column could be heat treated for tensile stress, corrosion treated, cast or be extruded depending on the mixture used in the core as the fuel, temperatures of the operation and pressures in which is to be attained in the core, and the application the system is to be used for.

The central column is preferable to me made of single piece or at least single material composition.

For uniform output from these reactors being magnetic, energy and gravity, the center column has to be not more then maximum 2-5 percent of the size of diameter of the center core. This is sufficient for the filling and evacuating of the gases in emergency condition.

The center core diameter as per use of the system can be from under 1 mm to several meters.

Dimensions of boreholes for any purpose can be from 0.001 mm to several centimeters.

Length of the center column measured from the inner face of the Caroline core can be from few mm to full diameter right from one side of the core to the other side Caroline core.

In some reactors the central column can be in arc shape, and only going from one segment of the Caroline core to the other side. This is like monkey bar across the top end or bottom end or side of the Caroline core and not the full diameter of the core.

The central column as a whole could made telescopic 1, where after delivery of the material to the appropriate layers the central column could retract to a predetermine level in the core to pickup or deliver some other materials in the core.

Boreholes could be in-line or off-line, positioned at any distance from each other, bored on the surface of the central column 1.

Boreholes could be exposed all the time to all elements of the cores. For some applications the core boreholes can be closed using gates to isolate the other parts of the system from backpressures or sudden surge of pressure in the chambers.

The central column could be in solid form, with boreholes in line or off line, but with the inner pipit, where the inner pipit can be as in one long grove, or two long groves, or even the pipit can be telescopic inside the central column (Fig 1/1119.8.051 The telescopic and solid on-off line borehole) 1.

The central column could be fixed with permanent magnets 1, covering the full outer circumference of the central column up to any height on the tip region of the central column, or at any point on the circumference of the central column 1. (Fig 1/116.8.051 electric and magnetic configuration of the central column)

The position of the magnets has to be north pole next to south pole in strip of magnets, or bored, or caste into the central column.

The circumference surface of the side of the central column can not be covered by only one polarity magnet. That is all North Pole or all South Pole facing magnet looking out into the core of the Caroline core of the reactor. The polarity of the magnet has to be alternated from on strip to the next. That is South Pole, North Pole, and South Pole and so on next to each other 1.

The bottom magnet in the case of half or two half-column system can be in the form of a circle, like a coin at the interface of the central column. The other method using magnet in this region is inform of strips of magnet on the bottom outer face of the central column, again alternating magnetic polarity face strips next to each other is needed 1.

These strips for better soft magnetic field could have varying magnetic strength 1.

The special novel method of placing strong pieces of magnet on the tip of the central column will create the soft and weak environment in the hydrogen gas layer needed for the initial ionisation and current production initially in the hydrogen gas layer of the core of the reactor 1.

This column can to extend to the center of the core. Where the ionisation of the hydrogen would be symmetrical and homogenous within the center of the core outward.

The center column can have two distinguish separate co-axial channels for feed and extraction in to the center of the reactor 1.

The center channel should have appropriate sizes for the purpose the reactor is design for but not exceeding a fifth of the total diameter of the center column for uniform magnetic field output.

One of these channels can only be used to feed the irradiated Helium, which has been coming from the pressurised chamber from outside of the system, if the liquid techniques are used for ionisation 1.

The liquid helium in this case will be sucked into the center of the core due to natural phenomenon of the pressure variation.

This channel would have no other use. The reason being that no material would be able to enter this channel. That could come in touch with irradiated material, which might interact and cause any side chains of reactions or cause other undesired contamination of the core.

The second hole at the bottom is only used in the systems where the plasma is needed to be feed to outer core or other layers of caroline core to create or initiate a new process in these cores

All other boreholes would be closed at the bottom of the column and have no access to the center of the reactor.

The core would be accessed through boreholes on its side along the whole length of the center column. These boreholes are made to facilitate the removal or adding of any gases or vapour metal, or any other material directly at the point and the position in the core where they need to be, without any need to contaminate the hydrogen or other gases while the proposed gas is to reach its position within the core.

These boreholes could be individually connected to the main feeder pip. That if the volume of a certain gas needs to be altered within the core.

The side of the center column from out side has to be lined by strips of copper wire connected to pointes outside the reactor, that the electric current from the core at the level of helium or Argon gas could be siphoned off. This supply is the output power of the rector 1.

It is paramount that the system as a whole to be connected to the earth position according to the international standard set for the use of the centrifuge systems. For airborne systems appropriate systems as used in aircraft industry is advisable for the ground connection of the reactor.

The half-length central columns are prone to oscillation at high speed of the rotation of the inner core. This is important to be noted for safety and uniform magnetic field generation of the core.

This oscillation could be checked through resonance pressure changes at helium gas level porthole, right at the tip of the column. That is where the oscillation of the center column would be at its maximum.

In the full center column the warping can happen too. In this case the speed of the inner core has to be brought down through automatic kick in computer program.

If the center column shears off, this should not cause any danger. The system becomes telescopic. The current output will or can go to zero instantly and the whole operation comes to halt. By this time safety operation mode will assure shutdown.

In some design for specific conditions of operation, the center column will be saddled (1) with solid or blade in a specific gas layer. For these operations, safety of the saddle blade will be controlled from outside.

In specific application saddles will be designed to have its own porthole, that can deliver specific matter in the specific layer to enhance or create a new effect. Safety for this type of column will be insured through remote deferential system 1.

The most practical central column for high temperature operation mode like fusion is a fully retractable telescopic central column system.

These types of central column for these mode of operations, operated on the bases that, as the interaction between the two magnetic field in the central core increases the temperature of the material in the region of the interface, which temperatures at this magnetospheres of two cores could be high enough, that can damage the material composition of the central column, or even in extreme cases could lead to softening of the material in the central column, or even melting and separation of parts of central column.

Then a fully retractable central column, which can be extended at the beginning of the start-up to the center of the core, to create the initial conditions and loading of the original materials for the start-up and creation of the soft magnetic environment by the introduction of the solid magnets at its tip.

Then the withdrawal of the central column, even as far back as to the inner core boundary, during the operation of the reactor, as system reaches its stable pre-determined function.

Then in turn to extend the central column to any point in the core that volume of any gas or material layers could by changed, or new material to be introduced into the reactor core, to achieve certain effects and then for the central column to be withdrawn to the boundary condition position, that the central column can not be damaged, or it can interfere with magnetic field of the cores. This is then the most acceptable type of central column for any safe, uniform output and lasting operation system.

The advantages with fully telescopic column system are very clear. One is that this creates homogenous magnetic fields in the central column, without any indentation in the fields from the absorption of heat and current, or distortion in the magnetic field of the system and consequently a uniform gravitational field force for the system.

Secondly, once the rotation of the inner core of the reactor is set by the interaction of he two magnetic fields, these types of central columns need only boreholes at their tip at one level. This saving all sorts of problems with need for several boreholes at several levels on the surface of the column.

The advantage with this type of retractable central column is that by being able to insert the column in the core of the reactor as the output needed for the performance of the core, therefore the central column can be extended to any level to withdraw any amount of current, plasma or heat from the core as is needed from the operation of the core.

For example if the current needed from the core has to be increased or decreased, all that needs to be done is to insert more of the electrodes section which fixed on the outer column surface of the central column for current pick-up, in the layer of the material in the core where the currents can be taped into, then when the current demand from the reactor is reduced, the central column can be retract to different levels in the same martial, where less current could be pick up from the core 1.

Some times during the operation certain materials needed, could be, totally withdrawn from the core without disturbing other material layer in the core. This is again possible to be done with positioning of the telescopic column in that position and withdrawal after ward.

There is a possibility of having a flat central column 1, where the porthole is only at the surface on the inner code of the Caroline core. In this system currents are picked up directly by electric pickup points which are directly fixed on the inner side of this core.

In these systems the material will be injected at high speeds and under greater pressures in to the core, where the material will be propelled into the center of the core.

These types of operational column are more foreseen for fusion conditions, where the reactor has to operate at very high temperatures, where the containment will be through the spherical magnetic field created by the outer core of the reactor, rather then the physical boundary of the inner core of the reactor.

The outer surface of the central column at argon layer level of the caroline core, can be coated with stratum radioactive material, where at high temperatures around 1000 K, the interaction between these two material will lead to creation of extreme ultraviolet ray as scintillation needed for the ionisation of the hydrogen in the caroline core 1.

Where there are needs for extra heating in the outer core without the need for the heating of the plasma in the caroline core, them stratum can be coated on the central column exterior only in the argon gas layer level 1.

Then in this level hydrogen could be injected, that gets immediately ionised and will release its heat into the argon layer 1, the extra increase in the current production will be picked up as a serge by the copper electron pickups, in this level, and the ionised hydrogen due to the centrifuge and the vacume condition of the core will return to the plasma region.

Where the volume of neon gases increased to insure no follow of heat into the center core.

The extra ionised hydrogen nuclease which is charged and worm can them be pumped in to the outer core of the reactor, as charged particle to interact with the metallic material vapour or gases in that core, like sodium, or potassium, the when returning to ground state to absorb, a free electron from the outer layers of these material to become atomic hydrogen 1. That this can be extracted and be feed to the inner core at argon or hydrogen layer levels of the Caroline core.

The system can be controlled through the outer core with feed of the safe metallic vapour, rather then injection of hydrogen or scintillation and interference with the Caroline core gases 1.

Using this method of feeding the possibility of oxygen penetration into the inner core will be eliminated.

This method could be used if sudden surge like escaping from a region needed for emergence, or the shielding through the caroline 1 core become weaker, so directional magnetic field production becomes a possibility.

The planarity unit

In the star systems or planetary systems where there are no central column and the materials in the caroline core and the outer core are deposited in their final position and internal powers for rest of the life of the system, where the composition and the volume ratio of all matters within the core will determine all the other properties of the system.

The same can be done for systems which need to perform one or several functions indefinitely, until the composition of matter with the core of the reactor are depleted or can create a second function as one is finished.

That is to say there are no need for intervention in the output or the performance of system.

Therefore there is no need for the existence of the central column, once the cores are filled with the predetermined volume ratio of materials, and then the core are totally sealed, very much like the cores of all planets in the universe.

The example of this is for battery production system 1, which its life lets say ten years will be predetermined by the fuel injected in the cores and then only current at the surface of the outer core is picked for the given voltage out put usage.

On the other hand a system like a satellite which has to keep to certain orbit or a traffic light which need to be kept in certain position and create electricity let say for twenty years. Where the system has to keep a fixed position in the gravitational force of the atmosphere and at the same time generate enough energy to run a feed constant current for the lighting of the bulbs or other functions.

This system is known as planetary system, where there is no intervention in to the cores, once the reactor is sealed for rest of it natural life.

The static inner core reactor

This system of the reactor design is one of the most advanced types of reactor for any application of the system.

This being for the generation of the current, heat, and single magnetic field, double magnetic field , cold and warm plasma, and finally the gravitational field force creator system.

This is a much simpler design, where the inner core of the reactor, unlike the rest of other systems, which has been disclosed, will be static or stationary.

Where pumping facilities of the system, of the matters into the rector's cores, controls the effect of the motion of matters in all cores facilities of the system, of the reactor instead of rotation of the inner core, as was done for the centrifuge effect , as was created in the other systems.

In this system the rotation of the heaviest material in the vacume chamber, in the outer layer of the material in the core, will control the speed of the rotation and motion of the other maters in side the core.

This is to say to replace the hard physical body of the inner core by the speed of the rotation of the maters inside the core, by the speed of the pumping or passing this last layer through a static pump outside the core and feed the material back into the core, to create the centrifuge effect in the caroline core materials.

That is to say that all the speeds of the rotation of the gases will be controlled by directional pumping of the gases in the layers which are needed.

By controlling the feed or the rate of the creation of the ionisation through scintillation, this being by liquid pumping or lamping, the rotation of the reactor of the materials in the core will be controlled by the injection of the mater through boreholes on the central column of the reactor.

There fore the inner core does not need to be made to rotate and can be kept stationary.

For the creation of the current in the outer core then facilities have to be made in the system that the metallic materials are made available so that the current production through rotation in this core will lead to generation of the magnetic filed forces in this core.

This is a perfect system for space technology and multi-layer reactors 1, especially designed for computers which will have no tangible physical boundary.

Where the spherical magnetic fields and current layering, will allow for the first time the creation of computers 1 where it will work like the human brain in three dimensions 1, where the material in layers could be cells, biochemical's matters 1, and fields of current created in the center core with position of magnetic field and presence of gravity, in between layers of cells 1, with power supplies in micron electrovolts level 1.

This the ultimate computer system of the future.

The soft body reactor or partial gap or gate in the inner core and /or outer core physical structure, or port hole layering in the materials of the core.

This is the reactor system where the physical body of the reactor cores, or the materials in the reactor core, are port holed by physical means or magnetic port holing, for the materials like plasma, liquid material or magnetic plasma, are allowed to be ejected out of one cores to the other or for them to be ejected out of the core of the reactor all together.

This is used in the weapon technology for delivery of high power energy magnetic plasma for destruction of matter in the core or outside of the core in the space for destruction of meteoroids and that type of use.

This could be used for rivet welding and system like injection nail machines of today.

This is the most powerful weapon technology known in the universe.

This is more lethal, if the matter is transferred to dark matter and then delivered to the matter, this is a total inhalation system by de-magnetising a matter molecular structure, then there will be nothing left of matter.

If used in the side arm technology, this will be a ultimate weapon, where there will be nothing to prove that the matter ever existed, the only reminiscence of the matter will be its effect on its surrounding matter. This is full magnetic disintegration of any material or matter in atomic or molecular or their combination.

The scintillation unit

The principal of the scintillation in the universal systems has been explained in the previous chapters.

Now to follow the universal order and to be able to run a system the same principals have to be followed in the construction and ignition system of the reactor, for it to be able to operate on the same principals.

Scintillation units 1, being in the form of liquid, or fluid, microwave lighting, radiation base, or any shape or form, that is a system that can initiate the first stage of ionisation of any elements that the chain of event in the core of reactor for any purpose can start, this unit will be known as the scintillation unit of the system.

This scintillation could be by injection of one material in the core 1, where its interaction with another material in the core can release energy that can ionise one or more elements in the core, so the process of energy release from the elements can start, or even process of energy absorption to start (for example in the creation of dark mater this process is sometimes is needed) 1.

For the simplicity and for purpose of the prototype reactor the liquid scintillation system using the liquid helium interaction with radioactive material is initially chosen.

The choice of radioactive sources for scintillation depends on the intensity of scintillation and the rate of ionisation, which is need to be achieved in any cores of the reactor.

For this system the following radioactive materials out of a list of others can be used, these are strontium, Cs 137, Bi 207 (alpha emitter), PO 210 (alpha emitter), Rb+, Sn 113 3 (beta source), Cl 36(beta source), Am 241(alpha source).

Potassium K40 could be another candidate for purpose of scintillation, where the natural K40 is a beta emitter. At the same time, this is the material, which through natural beta decay, where this is the main creator of the argon gas in the nature.

Therefore in case of default in operation the irradiative material becomes the source for the argon gas in the inner core.

The Cs is an intense gamma producer as well as beta emitter, when using this source as a radioactive material, a large number of gamma rays escape the helium without releasing their energy.

This source is considered to be more suitable for Neon cold gas or liquid even if using Xenon as catalyst in the core as scintillation material, or where there is possibility of use of mixture of neon and helium cold gas or liquid as the scintillation material.

Beta source has inherent characteristic of being scintillation medium accompanied by Gamma rays.

Alpha sources create an excitation in the MeV (eg, PO 210 5.3 MeV a, Am 241 5.5 MeV, rather then in KeV (Sn 113 364 KeV b, Cs 137 514 KeV b, Cl 36 252 KeV b) excitation in beta sources, where these materials have an average high-energy sources.

The alpha sources can be used for the scintillation purpose in this prototype

The Sn 113 beta (40 gram per cm2 coating) and a good for mono energetic source.

The intensity of the scintillation carried by the material into the core or already injected in the core to create scintillation is position dependent of the source within the chamber of the scintillation unit or material.

The pulse of the exposure of 10 ms to 150 ms for the helium considered being sufficient. This is at the start up of the core, for observation of the behaviour pattern of the gases within the core. Then the operation pre discipline method for irradiation and feed to be followed as system is to achieve its desired effect.

It is, possible to use very cold Helium instead of liquid, this having a problem that if enough atoms of the helium can be excited that could be useful in the rector core the ionisation of Hydrogen atoms.

Super fluid helium is to be effective for some disciplines and effect for the reactor.

The constant value of compression of the liquid helium feed into the chamber to interact with the irradiating source is needed. This insuring the nuisance of the reaction and amount number of excited scintillated atoms to be feed into the core.

The scintillation unit needs to have indium seal or copper for the valves at each end of the scintillation unit.

In case of neutron leakage due to interaction of the radioactive matter and the liquid helium, there are several materials, which could be for neutron dumping. Where the feed pipes at the opening is to be lined with neutron absorbing matter. Or use high purity boron oxide $B_2 O_3$ as a neutron beam dump.

Experiment has shown that to ionise helium molecules energies are in the order of 24.6 eV are required. Where the molecule decay to two ground state helium atoms releasing 16 eV (80-nm) photon. Where the lifetime of decay of He II in liquid helium is measured to be about 10s (P. Hill).

Recent developments in creation of EUV for computer industries are reporting creation of this energy through argon gas itself. These are said to be using argon ions to send coherent EUV with energy of 250 eV.

The use of solid magnets in the system

The principal of using solid magnet or liquid magnet in the core of the reactor, being placed at the end of the central column, this is a totally new concept in production the atomic ionisation 1.

The concept behind the use of the magnet on the tip and at the edge of the central column is, that, in the universe initial atomic ionisation of hydrogen always takes place in a soft magnetic environment, these can be seen in ref 1/116.8.051 the electric and magnetic configuration of central core.

In this system the same is replicated by use of alternative pole magnet positioning, by place next to each other on the tip of 1, and on the surface of the top of the central column 1 in the core in the center of the reactor, in the hydrogen gas layer, to create the same environment, where the central column is in a continues rotation, as it is firmly attached to the inner core physical body, this will grantee a magnetic environment 1 in the hydrogen layer, where it is needed.

The placing of solid magnet on different section of the central column 1 or injection of liquid magnet direct in different layers of materials of all cores of reactor 1 is one of the flexibility principal of the operation of these types of reactors

This simple solution of solid magnetic field environment, where the magnetic field is needed for ionisation of hydrogen in few centimetre diameter and is effective, this will replace the elaborate systems used in TOKAMAK to magnetise a two meter hydrogen gas core ready for ionisation, and without any cost and use of current to create magnetic environment in core of the TOKAMAK core and waist of energy.

The magnetic seal 1

The polarity positioning magnetic system for this reactor is designed very much to take in to account the expected three dimensional expansion of the inner core due to heat, and internal pressures of the reactor cores up on each other, and the compressions which are created by the injection of matters in to each core, and operation of the cores, and its movement due to compression of the reactor core, or sudden movement by the system.

These magnetic seals developed for this system will allow movement and expansion in all direction for the inner core, for it to be able to move freely when the core is in operation for magnetic, energy, or gravitational purposes.

The introduction of solid magnet in these parts of the core will not be effected by the passive magnetic field created by the reactor itself.

That is to say, because of the existence of the magnetic fields of the earth the strength of man made solid magnets are not effected.

Therefore the same is expected of the solid magnet used in this reactor core physical parameters.

Several versions of magnetic positioning and arrangements are shown in the diagrams included in this patent, the choice is of the users option.

The Pump units

Uses of pumps are much advised for this system.

There are two types of pumps, which could be needed in this type of reactor. Gas pumps of different power capacity for circulation of gases in the both chambers are one of the important parts of the whole system.

Pumps are the backbone of the running and the operation of the, multi purpose, multi function reactor systems.

Gas pumps are used extensively in the connection with the helium, argon and neon gases in these reactors.

This is important part of the system as it is the controlling apparatus of the whole system power and magnetism creation control.

The flow of the gases determining the outcome effect of the whole system for example the variation in the volume of argon gas layer controls the power output of the system, being for heat generation, electric or power supply.

The speed of the rotation of the argon gas determines the magnetic power of the whole system. Therefore the strength of the gravitational forces of the system too, where the speed of pumping and even the speed of the rotation of each gas layer can be controlled by the use of pumps at each layer.

The pump or pumping systems for the operation of certain systems of the reactor can have facility to increase or reduce the speed of the circulation of the feed of the gas if it is needed it to be interfered with.

At the same time in some cases of application, the pumping cycle can be equipped with an ionisation-supplying machine needed to be able to add or withdrew ions from the gas while is going through the process of pumping.

The powers and sizes of these pumps are all dependent on the use of the reactor and the system as a whole.

For certain applications pump are used for the metal vapour injection into the core, these are useful pumping needed for the for outer core, when a larger than normal magnetic field generation is required from the system, this type of access to flow allows generation of current through convection by using gases or molten metal or metal vapour, where this is an alternative to an ionisation supply from the caroline core, that could achieve the same effect for when a sudden serge in the system current output is required.

Note that in these pumps the pumping always has to be on lower vacuum and pressure level for withdrawal from the cores, and vice versa when feeding in to the chambers.

Measurement gauges

All measurement gauges being for pressure, temperature, radiations are situated outside and away from the core of the system.

This being due to the fact that all gases can have their own individual porthole and cycling pump, where during the pumping cycle an exact conditions of the core could be measured for its pressure and contamination at all stages of operation of the reactor. That in turn the right pressures of the gas can be generated that gases can be feed back into the core.

Some temperature gauges could be placed on the outer side of both chambers purely for material of the core measurement.

As many safety parameters for this simple reactor for initial testing can be provided, the reality is that these are not necessary.

The current measurement gauges through argon level can be attained after the brushes pick up points.

All equipments for these measurements are not special and can be purchased off the shelf from any supplier to serve the function of the core.

For safety reasons all measurement equipment and gauges are placed around the reverse tank parameters.

For safety reasons all tanks have to be equipped with radiation detector and temperature sensors.

Two consecutive abnormal reading by two instruments in two tanks has to trigger shutdown without interference, the emergency shutdown safety parameters to come into operation, this is being stoppage of the feed of scintillators material, the motor or centrifuge safe disengagement and brining the core to rest rapidly but safely, shutdown of all the secondary valves, disengagement of all electric contacts.

But not evacuation of any gases under no circumstances, unless this has been preprogrammed in the discipline of the operation.

Motoring system

This is a normal magnetic centrifuges motor system, where the inner core needs to reach a predetermined rotation.

After the creation of magnetic fields in the cores of the reactor, if it is programmed in the discipline of the operation of the system, then the motor will be disengaged, and the speed of the rotation of the inner core will be determined by the interaction of the two magnetic fields of the two cores, and in some cases by the feed of the gases in certain layers using the intervention of the gas pumps.

Gas pump intervention is a more favourable method, where there would not be any special system like clutch system for the reengagement of the motor and the inner core.

These motoring systems can be purchased off the shelf, from any manufactures, according to the operational output demand from the system.

The energy balance of the reactor

The energy balances of these types of reactors are not as simple as might look in the first instance.

The energy creation is simple, but the energy leakage and dissipation through the deliberate inherent material chosen for each specific discipline are and can vary, from deliberate leakage totally of energy created by the system, on the other end of its spectrum, where the system can absorb heat from its surrounding and become a cooling system 1.

The system not only can hold on to the heat it creates, at the same time due to the close circuit feed operation will become self sufficient but long lasting.

In planets the lose of heat through their surface creates the variation in the central core condition over several billions of years facilitating the convection the inner core of the planet.

In this reactor as losses can be literally negligible. The system can operate at low energy lose temperatures.

Even the boundary of the body could be made through the right combination of material in the cores, that the body of the reactor will be colder then its surrounding boundary, then the system not only will not lose energy to its surrounding, it can be made to absorb heat in the negative temperature gradient from its surrounding, that there are no energy losses.

The energy balance equation of this reactor is not simple. It has several strong variable characteristic, which, while they are created, they change the characteristics of other matters of the reactor components, that these will effect the characteristic of the original input before it can reach its ultimate purpose in the reactor operation.

Energy balance equation for this reactor has / but does not obey the Hamiltonian concept.

This creates a new dilemma in the control and operational and energy creation of the whole system, where for example, the energy from scintillation of He and catalysis of the argon gas will manifest new levels of energy release.

Then the same electrons and hydrogen ions on their way back to their ground state will come in interaction with the magnetic magnetosphere fields of two cores, which this creates a new levels of energies, which in turn due to the rotation and cooperation of the gases within the core, and due to the vacume environment of the core in presence of magnetic field of the outer core and the inner core within a centrifuge condition of the gases in the caroline core, will lead to production of the new currents within the core, then in addition due to rotation and compression and turbulence within a magnetic environment in presence of magnetic field an additional power and current due convection are created in the inner core, which all these leads itself to a complete magnetic, electric and gravitational production system.

This is truly a universal system, if one tries to relate the large output from the system, compared to the meager energy input.

This being due to the fact that the system will go through power production from the initial injection of the Scint-He in to the reactor core through some four simultaneous interacting power processes, interaction and magnetic field productions at the same time in most of cases, once the system reaches its operation mode, therefore the only this new concept can be tested for its energy balance will be by empirical methods.

The formula for energy balance of the operation of this reactor has several elements in its operational calculation.

The total energy output balance of the system will have the following collective equation of all these factors which happens in the cores of the reactor in stages or at the same time,

A    Energy released through ionisation +
B    Energy released through catalyses in Helium layer +
C    Energy released through catalyses in Argon layer+
D    Energy released through interaction of magnetic fields interfaces + H* =
E    Energy released through convection of the matters in the inner core +
F    Energy released through convection of the matters in the outer core +
G    Energy releases through the turbulence and self gravitation of the gases in the inner core +
H    Energy release due to proton to proton interaction in the inner plasma of the core due to magnetic helicities across the core of the reactor.

Where the H* is for Hosneh (Hydrogen operating in scintillated enhanced habitat) 1.

Then some of these power productions have parallel in the current production in the cores too.

Where this is noted as Hosneh current H*C 1, where, this is the current output of the system as a whole.

Where this has an additional output, where through rotation of the cores, additional currents are created in the physical parameters of the cores. Which these could be significant in the certain reactors or operational modes through deliberate incorporation of current carrying wires being passed in the embodiment of the inner core for the production of the alternating current output of the system.

The electrical energy released in the helium catalyst layer could be more significant where the mixture of the helium in the core has a more substantial volume ratio or is part of the main gas mixture of the core mixture.

In this system, energy can be taped into at levels, which the system can generate this being alternating, as well as/or, direct current out put.

These currents can be used with equipment, which are designed to operate in micro electron volts 1, and electron volt for soft tissue computers 1, electrovolts levels 1, like in the world of computers.

Using these types of power supply the system will not need conversion through transformers or cell batteries, as the systems energy supply can be taped into directly from the rector 1.

This opens a totally new concept in the fields of energy production and usage.

This current level production and its methods has been a well know concept in the operation of human brain electrical work in the chemical, and biological field of science, and space and cosmology, but up to now has never been achievable as a power supply source.

When this type of direct electrovolts energies are use in their appropriate way, new lighting system and heating at molecular level will be open for development 1.

This is the true application future for these systems energy production capability, and not the present currents created through electron transfers of batteries or rotational core and magnetic field generators.

This should become apparent that we have endeavoured in the production of the ultimate energy supply on the true base of universal energy systems, and not the manmade one.

Compared to systems of present time, where the earth resources are used to create energy by burning and combustion, potential and other methods, the energy generated in these types of reactors will be a new era in the technological natural evolution development energy.

Now truth about the ability of and the strength of this system will become apparent in some new ways, this is the beginning of new and exciting cycle of human creativity.

This system is the bases for the energy and gravity system that through further developments of these reactors, through its technology magnetic energy transmutation of elements in the near future are possible 1.

Where the natural energy of fields and elements do not have to fight against the natural elements of the existence, but they only have to operate within their natural environment to operate and create new conditions.

That is the way where the speed of light will have no relevance in the overall picture of energy creation and transportation and elements production 1, where the light itself is the visible effect of the energy but not the creator of it.

That means the light itself is created through dimensions of magnetism and is only accepted up to now because of that is what can be seen as visible effects of magnetism 1.

Where in reality the creator of light itself is much more powerful then light and has dimensions much faster and powerful effect then light.

The power of magnetism is known in the visible and sound levels. Through this system new realisation and control of magnetism and speeds of transportation beyond light will show their effects and existence in the level of dark matter 1, which these will be needed to getting used to.

In the process of scintillation, protons will be freed in the hydrogen ion form as positively charged particles in the plasma of the core. These will effect the gases in the Caroline core due to their rotation (the proton itself, plus the rotation induced by plasma on it) and the energy they release in to the plasma. Which, rotation of charge matter (proton) will lead to creation and maintaining of the magnetic field in the plasma of the Caroline core.

By retraction of plasma from the Caroline core, these positively charge particles can be feed into the outer core. Where, as they will not be absorbed by for example sodium vapour, these will bring in to play the charge particle environment necessary to create current and magnetic field in conjunction with the material in this section.

In the core of the earth, it is assumed that due to convection of the material in the outer core current is created in the core leading to creation of magnetic field of the earth.

In these type of reactor to imitate the convection condition of the earth outer core, which is in reality, is the need for charge particle to be in motion in a metallic environment, the circulation of charged particle in the metallic material can be easily achieved, by feed of charge particles from the plasma from the caroline core through special borehole, that high energy protons is feed as the ingredient for the rotation of and heating of the material into the outer core material.

Charge practical within this environment, where the energy of the protons is large enough to allow them to float in the matter in this level. But they do not enough energy to cause ionisation or photon release. Thus for the choice of the material for the outer core. This point has to be taken in to consideration. Therefore even inert gases which can satisfy this criterion can be used in the outer core. Where the charged partials induced in to this core will maintain the magnetic field and the current due to the convection of the gases on their own, where the gas in this level will become a physical catalyst for the creation of magnetic field and not a chemical catalyst.

The proton balance in each core plus the speed of the rotation of the plasma will dictate the strength of the magnetic field of the inner core.

Energy delivered through liquid helium scintillation to hydrogen

The first ionisation energy for helium is slightly less than twice the ionisation energy for hydrogen because each electron in helium feels the attractive force of two protons, instead of one. The first ionisation energy for helium is 2372.3 KJ/mol.

Helium as well as all inert gases have a large energy gap between the ground state and the first excited state, which this is corresponding to transition in the far ultraviolet rays of spectrum.

The visible lines in the spectrum are due to transitions between higher states. This explains why the inert gases are transparent, since ordinary visible frequencies are too low to excite them when they are in the ground state.

The helium spectrum in a discharge tube shows strong lines at 447.1 nm (blue), 501.6 nm (green), 587.56 nm (yellow) and 667.8 nm (red). This spread of lines creates a whitish light.

Neon has a cluster of lines in the red and orange, while argon has groups of lines in the blue and in the red.

These are important factors in the case ionised gases are used and certain pre determined volume of gases are to be used in the mixture tank before gas mixture are feed into the Caroline core. This is to give the precise volume of the gas in the mixture. Secondly if precise pure volume of helium is needed to be liquefied for the injection in to the scintillation chamber.

Helium obeys the ideal gas law

$$ PV=RT \hspace{4cm} 1 $$

Where V is the molar volume, R is the molar gas constant.

In finite volume of the atoms and slight attraction between them affect the equation of the state between relation of V, T and p. The van der Waals equation of state

$$ ( p + a/V^2)(V- b) = RT \hspace{3cm} 2 $$

Accounts for these effects through the constants a and b, differ for each gas.

If P is in atmospheres, V in litre/mole and T in Kelvin, then R= 0.08217. For helium, a=0.03412 and b=0.02370. The value of b shows that the atoms of helium are small (eg for helium atomic radii A* is 0.53). The critical temperature of helium is 5.2K, the critical pressure is 2.2 psi, and critical density is 0.0693 g/cc. The critical temperature is so low that helium is very well a permanent gas.

The liquid helium from the scintillation chamber has to have high pressure enough due to its state in the chamber. That it can reach the inner core fast enough that does not return to state of gaseous before it losses its scintillation property.

In this process enthalpy is not the object. But purely trying to transport enough scintillation material into the inner chamber. That hydrogen atoms and molecules could be energised by scintillated liquid helium, that they can ionise hydrogen or release enough photons that can create heat and current through catalysis in the argon level in the caroline core.

Where in fact EUV emission accounts for over 99% of the total scintillation intensity from the liquid helium, this translating to a high ionisation flux in the hydrogen in the caroline core.

Helium is used in several different ways and purposes in the cores of the reactor, in liquid form, helium starts as scintillators, then it becomes partially catalyst for the energy release from ions and electrons from hydrogen ionisation of the core, then through its circulation, it can be liquefied to be feed back into the core as scintillators again.

Then it can be used as the carrier of the proton. For it to be feed into the outer core chamber for creation of magnetic field in that core.

At the same time due to its catalyses electrons could be picked at this level as the current output of the reactor.

The withdrawal of the helium and use of neon as scintillation material, the reduction in speed of rotation to increase the maximum chance of ionisation of the hydrogen atoms and molecules, when using neon as a scintillators is another a possibility.

Where helium is not used or gradually withdrawn from the core in the layer between hydrogen and argon layer, and neon is used as scintillation material.

Neon will go directly to the layer next to argon through vacume and centrifuge condition of the core. Then the neon has to have the maximum chance to create as much ionisation in the hydrogen as possible before leaving this layer of the Caroline core.

In these scintillation methods the are high possibilities of existence of neutron or strong gamma rays, which are introduced into the core through the flow of the scintillation material into the reactor, that is why krypton and xenon layer due to their capability of being able to capture such occasional releases before the walls of the inner core can be contaminated are specifically introduced in the core in the initial state of start up.

Hydrogen ionisation energy absorption and release

The energy needed to remove one or more electrons from a neutral atom to form a positively charged ion is a physical property that influences the chemical behaviour of the atom.

By definition, the first ionisation energy of an element is the energy needed to remove the outermost or highest energy, electron from a neutral atom in the gas phase.

In the Milky Way natural hydrogen gas has typical densities of about 1 atom/cm$^3$

In the molecular clouds the comparative density of $H_2$ is in access of 1000-molecules/cm$^3$ at 10K-region temperature.

Where at densities of about 10^7-10^9 molecules/cm3 at 100K star formation process begins. Where the molecular gas is estimated to be about 25% then of the mass of the HI gas.

These data's confirming, that the cycle of heat and current starts in an atomic rich region of hydrogen.

The data again confirms that the initial state of energy production for a system is in very low density atomic hydrogen region of the galaxies, where one gram of hydrogen only possess 6* 10^ 23 atoms.

In choice of low density, low volume ratio, of hydrogen gas for the reactor's caroline core, this allows the creation of energy system rather than saturation point of star system, as the temperatures in the core of the reactor builds up.

Therefore it is considered and concluded that the hydrogen and all gases, for the reactor not to reach, what is to be called the state of solid or stagnation, through hydrogen atomic <u>saturation</u>, the <u>core has to have low gas volume ratio</u> 1.

A high volume ratio after a limit of gas density point will never function, the system become dead or will become to create constituent of solid matter, like carbon in the gas state, within the core, which these will absorbed all the latent heat generated within the core and core becomes inefficient.

Therefore all energy releases from the hydrogen layer into the plasma is to be considered to be by atomic hydrogen, which it can only release energies below extreme ultraviolet range.

The assumption that it takes about an average of 13 eV to ionise an atom of hydrogen, and the ability of the scintillation to create number of ionisation, will give the starting point for the initial heating and electron saturation of in the caroline core of the reactor.

From cosmological data's available, it can be observed that a very limited number of atomic hydrogen start the process of heat generation, leading to creation of stars and their respective systems. Where this process from start to finish takes billions of years, within the open spaces in the universe with all the probabilities of the maters and functions do not take place, and by law of average millions of stars are created every day in the galaxies.

Where in this reactor the same conditions are created, under full pre determined control conditions, that nothing can be left to chance or probability, therefore the generation of the energy system like a sun become more natural, and heat can be produced in the universal way, rather then methods high molecular saturation systems used in the space technology of today, where tons of rocket full is used to lift a few tons of matter.

Heating and ionisation due to magnetic reconnection by the matters in the Caroline core and the magnetic field of the outer cores

Heating of the gases in the center of the core due to ionisation of hydrogen atoms is one of the reasons that the core temperature is maintained or increased.

Due to design characteristics of this reactor, the other fundamental heating of the core gases will appear due to the magnetic reconnection of two cores.

Heating due to this effect will play a significant roll in any operational disciplines of these types of reactor.

It is paramount to notice that it's not only the magnetic reconnection of the two cores that effect the heating and the current production.

At the same time the magnetic reconnection between the atoms and the molecules of the gases with the magnetic fields of each core or both cores will have a substantial effect on the operation of the reactor too.

As the magnetic reconnection is at the atomic and molecular levels, at the same time this will allow direct energy transfers in both direction for the gases to carry each others energy and magnetic fields at the same time and concurrently.

What this means is that the magnetic field of the molecules will carry the magnetic field of the atoms and the atoms being at weaker strength will collectively carry and allow the magnetic field of the molecules to carry them within their confinement of the magnetic energy field.

This effect of magnetic reconnection creates higher equilibrium temperatures at lower density. Where heating due to magnetic field reconnection can increase significantly at low-density gas environment of the core.

In the galactic studies the combine effect of photoionization heating and the magnetic reconnection in a diffused ionised gas as in the center of the inner core has two heating rates, which the combination of the two will lead to heating through gas convection and ionisation convection and pressurisation of the core.

The amount of energy needed to sustain magnetic field depends to a large extent on the magnitude of the toroidal field in the core, where this is initially created by the rotation of the solid magnet due to rotation of the inner core and the rotation of the hydrogen layer and then the plasma.

In the spherical core which can maintain spherical magnetic field the toroidal field is considered to be about ten time the strength of the poloidal magnetic field.

Cosmologist have proven that the dissipation of turbulence, in similar condition in the universe as in this reactor due to choice of matter, reactions created by the injection of scintillation material, which causes the turbulence in the gas layers, defiantly plays as major role in heating the gases within the core.

Another source of significant deposit of energy in the gas is the coulomb collision by near electrons that are in highly magnetised environment of the core.

As the interaction of two magnetic fields take over the rotation, then less hydrogen and scintillation material is needed.

The gas mixture in the inner core has to be changed from higher hydrogen content to low percentage mix of hydrogen where the volume ratio and the density of hydrogen mixture will be determine the strength of the turbulence in the inner core.

When using high percentage hydrogen then Krypton and neon levels have to be raised in their volume ratio too.

It has to be noticed, that, if plasma feed from the caroline core to the outer core, method is used, where using sodium this chamber, then the hydrogen which is feed back to the caroline core will be warm and atomic.

Where, this reduces the need for irradiation period for the liquid helium in the scintillation chamber.

But there is a feature at 21-cm radio wavelength. Where by spins (magnetic field) hydrogen atoms nuclear proton and orbiting electron are the creators of radio wavelength energy source. Where the electron and proton electric charges interact with each to create minute magnetic fields. Up On their interaction creating a small energy difference between the state in which after excitation.

This energy can become a significant player, as in the cosmic pattern, when the system is on a steady state operation, where the heat in the hydrogen levels can build up due to this effect in the presence of the existing magnetic field, which are all ready operating in the core, without the initiating ionisation in the hydrogen level.

In scintillation system like this, the current for the energy will come from the helium and argon gas layer in the Caroline core and from the outer core metallic material layer.

The energy created through magnetospheric effect of the two magnetic fields of the Caroline core and outer core.

The magnetic field of each core influences the motion of electrons and ions with differing effect, which these in turn are responsible for electric current that in turn perturbs the interface between the two magnetic fields, leading to the creation of heat at the interface of the two fields

The electron flux created in the caroline core, and any other charge particles, in the region of the interface of the two magnetic field forces of the two cores, due to the motion of the two fields, and its interaction in the with magnetic fields will be influenced, and will have direct effect on the heating and current production in the interface, or the magnetosphere of the two fields.

The energy release and charge releases in this layer is an unknown factor, as never before data's for such interaction in real condition has ever been carried out as never a double spherical magnetic field interaction in the lab ever been created.

The closes data's available for these types of interactions are through studies done by NASA and Russian space industries through the magnetosphere of the earth between the interaction of the magnetic field of the earth and the sun in the presence of cosmic particles.

Due to the interaction of these forces and the charge particle on a continuous bases, in the core of the reactor, the core of reactor will create an effect similar to the northern aurora at all time, when and where ever in the core this magnetospheric condition between two forces happens to take place, in the caroline core or in the outer core.

Where in these areas a large amount of heat in produced due to the charges of particle in the vicinity of the two fields.

In the case that the magnetic field of the cores be pushed beyond the physical boundary of the system, in an atmospheric condition, then there will be a magnetospheric condition in between the system magnetic fields and the magnetic field of the planet.

Where, this will create heating at the interface of the two planets and the system magnetosphere.

Where at this point not only heating will take place, but at the same time, due to the interaction of magnetic fields and the charge particles in the atmosphere of the planet, will create energy at the visible light frequency, as in the case of the stars interaction with magnetic field of their planets, the colour of the light at the magnetosphere of the planet and the system will depend on the composition of the elements in the atmosphere of the planet.

Where this heating effect of two magnetic fields has to be kept away from the physical body of the system, these magnetosphere field which is created by strengthening of the magnetic field of the system, will push the boundary of the interaction of the two magnetic field s away from the system, then the expansion in the area between the system and the actual magnetosphere of the system will become the magnetic shield of the system 1, in the atmosphere of the planet.

This technique of pushing the magnetic field out of the boundary of the system, and its interaction with the magnetic field of the planet, used in a way, that, the magnetosphere field of two cores, or magnetosphere field interaction of the system and the planet, can be confined to a pin point or a long line, then the system can be used in a similar way as the welding torch 1, where the heat at the magnetosphere will be hot enough that can cause melting of the elements.

Therefore this can weld any two matter together, even in the molecular or atomic level 1, for creation of 113-115 matter in periodic table 1 leading to manufacture of elements 1, and manufacture of dark matter 1, not in a fusion method but the atomic welding level to create new molecules, where there will not be a need for huge fusion energies to cross the coulomb barriers as has been tried in the fusion reactors.

The measurement of the volume ratio of gases in the Caroline core.

The principal in the measurement of the volume of each gas in the core are determine by certain factors, the size of the core, the composition of materials in the core and the physical material that the core is made out off.

The cores size can be the same, but due variation, be it very small, in the volume ratio of elements in the cores, or the pressure or temperature, the whole out put of the reactor can change profoundly.

For example for a reactor that has originally designed for heating or power generation, where, the core starts with a small core of hydrogen, then the volume of the hydrogen layer can be increased to a new ratio level, where there is need for lesser of helium, for the core to become a total gravitational core.

The most important principal behind the design of this reactor and function of each of its auxiliary systems in determining the size of the core and the volume ratio of element in each core is, to treat each layer of the elements at its own outer bounder, as the outer boundary of the reactor.

This means, for example, in calculating the power of the reactor for energy production, the last layer that will have an effect in the power of the reactor is Argon.

Therefore the outer boundary of the argon is the total size of the reactor for power generation.

Then the outer layers of gases after argon these being like krypton and xenon or any other matter in between and after up to the physical boundary of the inner core walls, are considered as only blanketing for absorbing materials for the heat or radiation or neutrons, within the same core.

Therefore, when the reactor operation is said to have 20 percent hydrogen for energy production, this means 20% of total volume ratio of the spherical boundary of the argon 100% volume, is taken by hydrogen, and not 20% of the volume of the whole of the core.

The other factor is the radius of the hydrogen layer in the inner core in case of full or half central column, for the purpose of uniform fields and energy production, the radius of the inner layer, this being hydrogen or helium has to be at least double the radius of its central column.

For example, if the radius of the central column is chosen as 2 cm. Then the radius of the inner layer of the H has to be at least 4 cm.

Therefore the measurement of gas layers and energy production of the reactor is determined by the size of the central column.

This is a good guideline but there are exceptions to this rule for certain applications of these types of reactor.

For the purpose of ease in the calculation for the proto type, the radius of the Caroline core is considered to be 50 cm.

The liquid helium is chosen as the scintillators.

The strength of the scintillation is considered at alpha radiation source.

All gases are considered to have 99.999% purity.

The shape of the core under consideration is spherical.

For calculation of the volume of gases,

The volume of the sphere is said to be

$$V = \frac{3.14\,D^3}{6} \qquad\qquad 1$$

The total volume of the Caroline core with diameter of 1m

$$V = \frac{3.14 * 1^3}{6}$$

$$V_{Total} = 0.52 \text{ m}^3$$

Taking the radius of the central column to be 2.5 cm (5% of the radius of the core).

Then doubling this to give the minimum size for the hydrogen layer.

This gives a total diameter of 10 cm for the hydrogen layer.

The volume of the hydrogen layer

$$V_{H\,min} = \frac{3.14 * 0.1^3}{6}$$

$$V_{H\,min} = 5.233 * 10^{-4} \text{m}^3$$

This determines the minimum possible volume, for near enough spherical energy production in the plasma and uniform magnetic field in the inner core.

The balance of the argon reactor core volume is field with, Kr, Xe.

The thickness of theses layers will determine the outcome of the core behaviour, and the operation of the outer core, that is, for example the application of more Kr will bring to play better insulation, and less heat transfer to the outer core and so on.

Where the increasing the volume of the Xe will increase the neutron absorption, but allowing more heat to be transferred to the outer core.

The reason for small amount of Xe is the fact that the neutron trap at the scintillation chambers out let and in the lining of this chamber. This should eliminate presence of any neutron in the chamber. Then the level of Kr can be reduced and the balance is transfer to H and Ar levels.

These variation in the volume of the gases in these layers in the beauty of the flexibility and control of these types of reactor.

An ideal gas (perfect gas) is one, which obeys Boyle's law.

$$PV = n\,RT \hspace{6cm} 2$$

Where n is moles of gas, R is the gas constant which is dependent on the units of pressure and volume. R = 0.0821 L atm K$^{-1}$ mol$^{-1}$, pressure is in atmospheres (atm), Volume is in liters (L), Temperature in Kelvin (K).

Where

$$n = \frac{mass}{MM} \hspace{6cm} 3$$

It is important to notice that the masses of gasses used in these types of reactor are very small.

But it has to be remembered that during the operation of the reactor the pressures and the temperatures will be increased by significant levels in presence of turbulence, ionisation and magnetic field operating in the core of the reactor. That is when the power of this type of reactor operation will manifest itself.

That is why in the astro physics levels, planets can create energy and maintain gravity for billions of years, just with small amount of hydrogen in their caroline core.

But during all the time the volume of the gases will remain more or less unchanged as the inner core parameters are fixed due to the design of the core, unless they are changed because of the operational demands.

The mathematical calculation of the weight of the gases in the Caroline core

A full mathematical calculation of simultaneous interactions, physical condition and changes of properties of all elements within the confined of the reactor core will be an impossible task.

But it will be easier if the main parameters which can effect the output characteristic of the reactor could be considered individually, and then build in all changes step by step as new factors are introduced or new effects due to new factors start influencing the operation of the elements within the core into the mathematical calculation of the system as a whole.

The important points that have to be kept under consideration at all time are the boundary and characteristics changes of the gases or elements within the cores, as these are not the same and uniform within across the cores.

This means, that the a gas layer might have one centimetre thickness in north west quarters of the reactor, but at the same time the same gas layer might have two centimeters thickness in the south east sector of the same core due to influences of the scintillation concentration input into the hydrogen gas layer in one moment and with next injection of the scintillation into the core the thickness reverses completely, which might have slightly different characteristic at that point in the reactor core.

These changes will effect the temperature distribution, electron production, thickness of plasma and current production, and the strength of the magnetic fields in these regions.

For these reasons in the present calculations three basic criterion are considered and adhered to during the calculations volume of gases in the caroline core.

First, is that the gases will have and keep uniformity of their thickness and positioning in each layers across the core.

Second, is that the current output of the core will be constant and without serge in different poles of the reactor.

Thirdly, the magnetic fields generated by the cores are uniform at all times all over the reactor internal and external surroundings.

The most important factor in any calculations of this type and with this complexity, is to brings into play the need for certain restriction and enforced boundaries conditions in any integral calculations, but efforts will be made not to have to enforce any of these restricting parameters, as these are new type of reactors, and very new feature will be unique and interesting to be observed and noted for its overall behaviour and the out put of the reactor.

Important issues which will play important factors in the operation of these reactors calculation, which will be in most cases far from the reality of the actualities of what is going on in the real situation operation of the reactor, is that each gas layer in the core will have different temperatures due to the blanketing by the immediate layers above or below it, which these will put great strain on the theoretical mathematical calculations which is to be preformed for the reactor.

At the same time as the reactor reaches its full operation mode the interaction of the magnetic fields forces of two cores will play extremely important factor in the whole interaction of all the elements in the core and the ultimate output of the core.

This factor is unknown to any mathematical data, which could be considered or has or is available in the world of technology or scientific research reports as of today.

Therefore for this purpose, to take this factor into account in the parameter calculation of the reactor, these factors are given new integral called the magnetic force integral and gravitational integral, which their values in each layer and each section and across three dimensional boundaries of cores are unknown and needed to be considered and implemented in any future calculations.

This magnetic force or presence of magnetic filed strength factor, will play an extremely important part (specially in the region of hydrogen up to outer boundary of the argon layer) in the output of the current and gravitational forces generated by the reactor as a whole.

In these calculations and for the preliminary conditions of the operation of the reactor the influence of the earth magnetic field force and gravitational forces are initially not considered to have effect on the performance of the system.

In the real operational condition of this reactor for gravitational performances this factor can not be ignored. As the reactor is primarily designed to work within this force field, then the operation of the reactor is totally calculated in respect to the magnetic and gravitational force field of the earth, not to fight to overcome it, but to work along and within it, to create lift and descend, for the system which the reactor is operating within it.

Therefore an integral factor for gravity and magnetic field with the boundary effective in positive or negative for the combination of the two cores magnetic forces fields, which have to be considered at all time during the operation of the reactor. Which each these will change for each layer of the gas and electron flow density during the operation of the core.

In these types of reactors due to the use of inert gases unless non gaseous material or vapour metallic material of heaver elements are introduced into the core for specific operation, delays in the appearance of the electron or magnetic fields of any sorts are considered to be negligible and all processes are considered to be instantaneous and not with delay factor.

For fuel loading purposes, the calculation of the volume of gases are considered to be in total volume ratio in relation to the whole of the volume of each core.

If overheating of the gases in the outer gas layers are noticed the volume ratio of neon layer can be increased to 25 percent. The increase in neon layer will be compensated by the reduction in the argon layer.

The increase in the neon layer will increase the temperature in the plasma layer and this has to be under consideration for smooth operation of the core. At the same time the choice of strong scintillation material will effect the temperature in the argon layer which means the krypton layer has to be increased if the heat follow to the outer core to be reduced.

The neon layer will under high pressures due to turbulence and increase in the temperature and magnetic pressures in the core will have duel effect.

Where it will keep the heat in the inner layers but at the same time will not allow the follow of heat from the energy releases by the ions in the argon layer to be returned to the plasma to heat this layer up.

The choice of the ratio of the volume of the neon layer will effect the operational procedure of the reactor.

Neon is one of the best insulators in a vacume and pressure conditions, as with argon and krypton, therefore the volume ratio of the variation in this layer thickness will play important part in the whole outcome of the capabilities of the core.

For the preliminary start up condition for the reactor operation the initial gas volume ratios are important.

These values are calculated on the bases of the possible ionisation and heat absorption of the gases induced into the cores.

The initial test volume of gas ratios are set to one of the minimum volume ratio of hydrogen and one of the maximum volume ration of hydrogen in the center of the core.

The two preliminary volume ratio percentage of the gases in the inner core are considered to be in the following orders

Table 1; Gas volume ratio in the inner core

| | Hydrogen | Helium | Neon | Argon | krypton | Xenon | scintillation Medium | source |
|---|---|---|---|---|---|---|---|---|
| 1 | 2.4 | 4 | 13.6 | 59 | 12 | 8 | LHe | Alpha & Beta |
| 2 | 13.6 | 4 | 16 | 46.4 | 12 | 8 | LHe | Alpha & Beta |

For calculation of above values refer to calculation appendix 1.

The condition 1 is for testing the ionisation capability and temperature control at the start up. Where, the condition 2 is for rapid heat, current and magnetic field production.

The volume of the plasma at the start up is considered to be zero. In the operational mode the plasma will be considered as the overall volume ratio of the hydrogen layer in the center of the core.

Where the Alpha source usually energy release to the helium scintillation medium in the Mev range and the beta energy release is in the several hundreds Kev.

Only a fraction of the pure hydrogen atom are permitted to ionise by the injection of the scintillation material, as one hundred percent ionisation of the atoms of the hydrogen will lead to unstable reactor.

Due to rotation speed of the plasma and high velocities of the gas and plasma the maximum allowed value of the ionisation of hydrogen atoms are considered to be at 25% of the total atoms of this gas layer.

Due to other factors like the purity of gases and no metallic elements in the core, the maximum allowed volume ratio of the hydrogen atoms to be in this region for safe operation is considered to be between 3% to 17% of the total hydrogen atoms available in the active core.

The active core is considered to be up to boundary of the Argon and the Krypton layer, where there on, it is considered as blanketing section of the reactor core.

For the purpose of calculation in this experimental procedure, two sources are to be used, one for alpha source, this will be considered to be Po 210 with an energy release of 5.3 Mev and one of beta source of Sn 113 with a line of energy of 364 Kev.

These are considered to be relatively weak sources of radiation, where the EUV yield of liquid helium for Sn 113 source is considered to be normal.

Considering starting operation temperature at 20-degree centigrade (293 K) at room temperature.

The enforced physical pressure operation within the inner core at the start of the operation is considered to be at one atmospheric pressure.

The vacume condition in the core is at $10^{-6}$-$10^{-8}$ Torr.

The pressures in the reactor core will change due to impulse ionisation of hydrogen and induced magnetic field pressures from the two cores and their interactions upon each other.

An ideal gas (perfect gas) is one, which obeys Boyle's law.

$$PV = n\,RT \qquad\qquad 2$$

Where n is moles of gas, R is the gas constant which is dependent on the units of pressure and volume. R = 0.0821 L atm $K^{-1}$ $mol^{-1}$, pressure is in atmospheres (atm), Volume is in liters (L), Temperature in Kelvin (K)

For the set 1

Using equation 2 For the Argon layer

$$1 * 0.31203 \; = \; n * 0.0821 * 293$$

$$n_{Ar} = 0.01297 \text{ mol}$$

Where

$$n = \frac{mass}{MM} \qquad\qquad 3$$

$$MM(Ar) = 2*40*1.008 = 80.64 \;\; g\,mol^{-1}$$

$$0.01297 = \frac{mass}{80.64}$$

$$mass_{Ar} = 1.0459 \; g$$

The mass of hydrogen at 0.01245 $m^3$ volume.

$$n_H = 0.0005175 \text{ mol}$$

$$MM(H_2) = 2*1.008 \text{ g/mol}$$

$$mass_H = 0.001043 \text{ g}$$

For the set 1 operation, following data's can be extracted

For Hydrogen n = 0.0005175 mol, and 0.001043 g
For Helium n = 0.0008646 mol, and 0.003486g

For Neon n = 0.002939 mol, and 0.1185 g
For Argon n = 0.01297 mol, and 1.0459 g
For Krypton n = 0.002594 mol, and 0.4393g
For Xenon n = 0.001729 mol, and 0.460 g.

For the set 2 operation, following data's can be extracted
For Hydrogen n = 0.0002939 mol, and 0.005925 g
For Helium n = 0.0008646 mol, and 0.003486g
For Neon n = 0.0034596 mol, and 0.13945 g
For Argon n = 0.01003 mol, and 0.80888 g
For Krypton n = 0.002594 mol, and 0.4393g
For Xenon n = 0.001729 mol, and 0.460 g.

It is important to notice that the masses of gasses used are very small.

But it has to be remembered that during the operation of the reactor, pressures and temperatures will be increased by significant levels.

That is when the power of this type of reactor operation will manifest itself.

That is why in the astro physics levels, planets can create energy and maintain gravity for billions of years, with small amount of hydrogen in their Caroline core.

All time during the operation of the reactor, the volume of the gases will remain more or less unchanged, as the Caroline core parameters are the fixed.

This forcing new operational characteristic from each gas, which these will be out off normal characteristic for each gas for generating energy as the molecular magnetic field forces will exert their powers in the core in a unexpected and new way.

It is very feasible that during the test operation the inner core is allowed to go through some levels of decompression, as the pressures of the gases in the inner core, due to ionisation heating, magnetic and turbulence increases.

For safety purposes the cores could or might dictate depressurisation procedure, which was not inline with plan discipline of the operation.

Considering in the case of operation of the core, where temperatures in the region at 500 degree centigrade are attained due to all factors influencing the temperature of gases in the inner core, then using the equation 2 for argon layer in the set 1 gas ratio

$$P * 0.31203 \ = \ 0.01297 \ * \ 0.0821 \ * \ 773$$

$$P \ = \ 2.63 \ atm$$

This pressure is totally due to heat due to ionisation, and included the ionisation pressures, included considering the pressure due to magnetic field of the two cores, including the pressures due to rotation and compression of the gases due to convection and turbulence.

For high temperature and pressure discipline reactors, different scintillation materials, like neon is used for the core which have helium in the center core material instead of the hydrogen.

Energise of 13.6 eV can ionise hydrogen, for liquid helium to ionise hydrogen atoms it has to transfer this amount of energy to hydrogen through EUV.

Assuming that energy from one ionisation photon from the EUV can only lead to one ionisation of hydrogen atom.

Given the high EUV yield of liquid helium of 22000 photons per Mev for beta particle from Sn 113 source with line energy of 364 Kev.

This gives a starting point for the valuation of energy released by ionisation of the hydrogen initiated by the scintillation material.

Taking 80% ionisation yield of hydrogen atoms of the inner layer by scintillation material EUV.

To ionise an atom of helium energies of about 24.6 eV (2372.3 KJ/mole) and to ionise a molecule of helium energies of about 57.2 eV is required.

To ionise an atom of Hydrogen energies of about 13.6 eV (1312 KJ/mole) is required.

Taking into account that 1 gram of hydrogen contains $6*10^{23}$ atoms.
Taking into account that $1.6* 10^{-13}$ Jules is equal to 1 Mev.
Taking into account that some of the electrons released by hydrogen will be absorbed in the helium layer electron pick up points. Thus the ratio of electron reaching the argon layer is not the full 100% total electrons released by scintillation material.

The alternative method of measuring the weight of the gases or material, is to consider the vacume, zero atmospheric condition, which is more realistic, as in the conditions in the galaxy's, as the atmospheric condition is a manmade toll of measurement.

Then the volume ratios matters in each core of any reactor will be totally different, and the system will be highly stable but extremely electromagnetic and the magnetic energy creation will be very powerful system.

The production and assembly of the prototype

1. The reactor design and production.

A) The central core;

i) The casting or machining of central core, including the attached central column.
ii) The lining and coating of the core against corrosion and chemical interaction with hydrogen.
iii) The production of the mounting, feeding and the sealing mechanism of the centre core on the outer core walls.

B) The outer core;

i) The casting, machining or producing the cores as one piece.
ii) The lining and coating of the core against corrosion and chemical interaction with gases or materials used for cooling.

2. The gases input supply.
The gas supplies and appropriates pumps and connection as in the diagrams.

3. The motoring system.
This is the normal magnetic or normal motor needed for the rotation of the cores.
This could be bought off the shelf.

4. The turbo molecular system for control of the vacume conditions of the cores.
This system can be bought off the shelf.

6. The cooling system.
This is the high pressure cooling gas pump to facilitate the removal of the heat from whole system's outer core. This is an auxiliary system for prototype safety test condition.

7. The control system.
This is combination of the electrical and mechanical system control needed to be designed and produced according to the step by step discipline operation of the all parts of the reactor.

This is an important part of the design. Every step from start up of the centre core to the maintaining the magnetic forces are to be planed a head through this system.

Operation of the reactor

The volume of each gas is pre-determined according to what for the system is to be used and for how long.
The volume ratio of any element used in these types of reactor is only dependent on the density of the materials in the cores of the rector.
The operation of these types of reactor is based on the principal of very low material density, where the properties of atomic structure will be enhanced to manifest itself under controlled gravitational field and in presence of magnetic field structure parameters.
This method of energy and gravity generation is not known to the world of science as of now, in time the strength of the this method of energy and gravitation creation will become apparent, as scientist will come to realise that the whole structure of the all elements start's from atomic structure of the element, and what is in that level is inherent in the mother of the element, which is atom of the element.

Therefore, what is not in the structure of the atom can not exist in the structure of its larger version of elements, which are made of it, in tangible level of the physical material.

Then why to try to handle a high density molecular or solid matter of an element, where all the attribute of the mater can be collectively attained in the atomic structure of the material, where the density is low and the real power of the atom of the material can manifest itself.

This is the principal that all systems start their lives in, at atomic level, then they attain their other physical matters and properties structure around them later in their cycle of existence, through their original basic original atomic structure.

Where in the world of continuity, for a mater to exist and for it to hold on to its material, the system has to keep its essence of its original creation to build on it, which in the case of solar systems is the simple atomic structure which allowed it to start life, then they hold to this basic material in the original atomic level in their inner sanctum, and they build on it to become the giant stars and solar system.

One can not lose its origin of its existence, in any levels of the universal order, therefore the origin of the solar systems in atomic structure, which is not dense, and that is the principal which will be followed in the operation of this reactor, low density of the mater in atomic and molecular level, that within a soft magnetic field and proportional volume ratio, the system will show its potency

A simple analytical energy requirement of the system will dictates the volume of each gas to be feed in to each core.

To start the system, the valve for the excited liquid helium at high pressure is opened, this is to allow the liquid helium, or in other method for introducing scintillation to interact with hydrogen, which is the caries the EUV necessary for ionisation of the Hydrogen to be sucked into the caroline core.

The time liquid helium, or any other scintillation material, under pressure spends within the pressure chamber in presence of any radioactive material, for it to be excited is very important.

This is due to two atomic important factors, one is that how much of the molecules of the helium is needed to be excited or on other word how much EUV energy is needed in the core of the reactor for certain purpose.

Secondly the life cycle of the EUV is very short; time is the essence of the whole injection and amount of energy absorbed by helium during the interaction with radioactive sore.

In other methods of EUV generation, the time of the exposure of the hydrogen to release the required ionisation takes priority and determines the duration of exposure.

The physical shape of the radioactive source can be made in a porous manner. Where the minimum time for the maximum level of EUV is needed for the liquid helium to spend in this pressurised chamber.

It has to be noticed that pressure in this reactor is created by the combinations of hydrogen and helium heating due to ionisation and their return to ground state level. By them losing their energy to the argon gas as the catalyst, which in turn this lose of energy heats the plasma up, the design of the scintillation unit is shown in this diagram for the liquid version 1/1114.7.051 .

Secondly the pressurisation is enforced by the outer magnetic field to squeeze the plasma in the caroline core too, where the magnetic files created in the caroline core will have the same pressures on the molecules of the gases in the same core at same time too.

Pressures created in this type of reactor's, will be as in more natural and both in molecular and atomic level, which are more efficient and have a more profound effect for running of system using natural methods of energy and motion.

Through this system one learns to approach the energy production totally in a natural way as it is done in the universe.

Rather then the methods which one has become accustomed too, due to earth energy resources, this being to create heat then convert it to steam then to cover it to electricity to be able to make use of the energy.

One of the problems in the past with all the fusion reactors have been, that the radiation and neutron leakage and heating are handled outside the core.

To solve these problems outside the reactor core becomes many times harder as seen in fission and fusion reactors of the present time. Some times these become impossible to solve.

In this reactor all problems are sorted according to natural cosmic methods, as in stars and planets have overcome these problems over billions of years (by using other elements in the universe to attain their positioning and elements and characteristic).

Noble gases are used in these reactors readily, inert gases and other elements are added to the core through center column to create and maintain certain effects as required from system.

Therefore all problems should and has to overcome with use of different elements inside the core, before neutrons and radiation can leak from the boundary of the core.

Then solution like blanketing and concrete containment in the outside of the core is not necessary, and this is the beauty of this system.

Where all the problems including nuclear, heating, motion and gravity are resolved within the core naturally as it is done in the universe, before these reaches to the outer boundary of the reactor are naturally handled, let's call this an alternative nuclear therapy. Which has worked from the beginning of time in the universe.

The choice of vacuum eliminates the use of high-speed operation and rotation of the chamber during the normal operation of the reactor.

This eliminates a continues use of high speed rotation, as gases are in vacuum separate according to their atomic weight, therefore separation of layers of gases through centrifuge does not come in to play.

High speed of the core only will come to play for rapid changes in the gravity (positive or negative direction).

The rotation of the core at low speeds is necessary for creation of the magnetic and current and heat purposes. This concept is well documented in the turbulent flow with rotation in the vacuum research papers.

The turbulence in this system is created through the hydrogen expansion through heating and ionisation phase, this expansion will be as shockwave in the gas.

These gases in the center chamber are already rotating due to the rotation of the inner core.

At point where normal and continues operation is attained, the main compression of the plasma in the inner core will be maintained by the action of the sequential feed of irradiated helium.

This will behave as pulse injected turbulence in creating energy and heat and brings the last part for the production of heat and gravity into play.

The effect of the layering of the gases will bring into play the differential gradient rotational speed, where the differential speed of the gases will create the natural effects of creating the current and the magnetic field.

By this stage of operation, the turbulence, compression, temperature, speed of the rotation of the gas due to inner core and the magnetic field in the core will come to play their part in the operation of the this reactor.

Where the speed of the inner core for example at the start could be considered to be vary high up to 1000-4500 rpm, this is to help with rotation and centrifugal and separating all gas molecules into the center of the core, until the interaction between magnetic fields from the outer and the caroline core takes over the rotation.

But at the sometime as the vacuum chamber is used in this rector core and sequential pumping is in operation for circulation of each gas element separately if necessary.

The rotational speed of the core is necessary for the creation and maintenance of the electron follow, that the magnetic fields in the core of the inner core could be maintained, does not require high speed rotation of the core and speed of the core ill be reduced to about less than 300 revolution per minute.

In the future developments, the effect created by this rotation of the gases for stability of the core, could be utilised to push back to the boundary of interaction of the magnetic fields beyond the boundary of the system.

This is another method of the combination of energy, and gravity system, which the boundary of the outer core will be used for the shielding effect. So the inner core maintenance of the magnetic field will cover the content of the craft for constant gravitation forces 1 (This will be like the present compression system used in jetliner at high altitude. Where the gravity will be controlled and created by the caroline core and the outer magnetic field through the speed of the rotation of gas flow circulation in the reactor of the system 1).

Later in the high temperature mode, and creation of the magnetic field due to convection principals in the outer core, will be used for the magnetic field confinement of the plasma in the caroline core, and the shielding effect of the whole system, will be done by the outer core magnetic field 1.

This will be operated at very low speed of rotation at about 10 > 250 rpm (Note that the speed of the inner core at the interface with the outer core of the earth for convection is only about 340 Km/h). Magnetic fields created by the convection do not need high speed of rotation of their solid containment body 1. As the magnetic field created is only for containment of the plasma in the Caroline core.

Convection magnetism is not and does not behave as solid magnet or rotary solid magnet. But they have more influential power than their solid counter parts on molecular structural levels in creating magnetism, pressures and gravity.

The Start-up of reactor condition

Before any start-up, the whole system has to be secured to the ground by means of steel belt and riveted mechanise.

The reason for this is two fold, one the system is gravitational system so the first step power of magnetic field are unknown, secondly the reactor belt can be looseen later to note the effect of gravitational variation during test, where the system has to be flexible. All connection to the system has to be flexible and extendable, so that the gas feed and electric out put cables can allow for movement of the system

Stage one;
Connection of all the gases containers to the core feeder pipe line.

Connection of the return reverse tank to the cores.

Connection of the scint - pipe to the inner core center column direct.

All valves at close position.

Stage Two;

Normal cleaning up of the inner and outer core through the turbo molecular pump.

The desired level of vacuum at about 10>-6 Torr.

The turbo molecular pump has to have separate connections to the Caroline core, the outer core and the reverse tanks.

Stage three;

The Caroline core is feed through the feeder pipe in the following order;

Ionisations of gases are not necessary in the first run. But if desired condition are not achieved different method of ionisation of gases are open for testing.

Feed of the Xe gas by the predetermined volume.

Feed of the Kr gas by the predetermined volume.

Feed of the Ar gas by the predetermined volume.

Feed of the Ne gas by the predetermined volume.

Feed of the He gas by the predetermined volume.

Feed of the hydrogen gas by the predetermined volume.

These gases will take their appropriate positions in the core according to their atomic weight in the vacuumed centrifuge condition of the core.

Stage four;

The motor to start at high speed at about 3000-4000 rpm.

(This allows the cleansing of any impurities through centrifuge in the gases due to their atomic weight to be drown out, to in between layers of gases, through the use of pump and negative vacuumed chamber condition gases impurities if need be can be withdrawn from the interlayer of the gases), using the boreholes at appropriate levels unwanted gases and other impurities at each level is pumped out in to the reveres tank.

This is achieved by opening the reveres tank valve and reducing the pressure in the reveres tank.

By allowing any impurities at this stage which reaches the revere tank through roughing pump to be disposed of.

This method can be use in regular interval to clean the cores from any impurities, later on replacing any volume of gases that might have been siphoned back to the cores.

Stage five;

Open the pressurised liquid helium valve to allow the scintillation to take place.

In sequence the outlet valve from the scintillation is opened, that predetermined measure of the irradiated liquid helium can be sucked into the vacuum Caroline core.

Stage six;

To start with, this has to be done in small increments, for not to over produce ionise hydrogen, that the temperature increases in the core can be controlled and monitored.

Secondly the ionisation will create shockwaves which are not good for the other gases and the containment vessel.

Stage seven;

When the magnetic fields take over in the Caroline core. The hydrogen ionisation compression will not have such an impact, than at the cold start condition.

Stage eight;

To use the electric connection at Argon level to tap energy from the reactor direct for energy test out put.

Possible power output at start up could be in the region of 10 kw to 100 kw, at full operation powers in 1000 kw plus will be normal operation.

Appropriate meters for the wide range of out put has to be accommodated from the outset of the design.

It is recommended that the prototype reactor to be fixed with high temperature and pressure gauges along the length of the center column. This is for safety reasons until the full operation of the core is completely determined.

Temperature changes will not only effect the volume of the gases, as it is pre- determined confinement.

The pressure and radiation gauges are recommended on the inner core boundary near the xenon porthole.

Pressure in operation mode more than any other in this reactor is magnetic than kinetic.

There is a need for flow speed gauges specialty in the argon level. Pumps can be used in this level to vary the speed of the gas. So the magnetic field of the core could be controlled.

All gauges can be accessed through the central column portholes.

The principal output measurement parameters of the reactor

The most important principal in the control of values of the outputs of the system is controlled by different parameters of the feed and the internal cause and effects of the different cores or the elements in the cores of the reactor.
These could be categorised in the following manner.

A) The pressures

1. Pressure due to scintillation feed and the ionisation of the hydrogen.
2. Magnetic pressures, due to inner core and outer core magnetic fields.
3. Pressures due to the heating generated by the magnetosphere interface of the two magnetic fields. Leading to expansion of the gases in the inner core central region.
4. Pressures created due to heating of the gases due to compression wave from the feed and the rotation of the gas layers.

B) Temperatures

1. Increase in temperature of the plasma due to the catalyses effect of the helium, Argon and Xenon gas layers.
2 Temperature increases in the core due to the interface interaction of magnetosphere of two fields and the charge particle within the core.
3. Temperature increases of the plasma, due to secondary effects of the ionisation and the catalyst. This could cause substantial heat for the plasma of the system.
4. Temperature increase in the plasma due to compressive, rotating, in a magnetic and vacume environment.

Which overall effect of the above will determine the power outputs of the system, creating or assisting in the generation of current and magnetic field of the system powers and output, and gravitational field forces of the system.
The current output will be a collective outcome of the following charges created within and through the systems design.
Due to electron flow through ionisation of the hydrogen atoms.
Due to secondary electron flow after interaction of excited electrons with catalytic matters like helium and argon gas layers.
There are some other miner electric charges created due to rotation and vacume condition of the core as well. Which, these will make some contribution to the output of the core.
There are electric current produced due to the rotation convection of the heated plasma within a vacuum environment of the core.
In special designs the alternative current due to cable winding of the core has to be considered.
The measurement of the magnetic and gravitational forces of the reactor.
These measurements and calibrations of these fields and forces create have to be done by empirical method for this system.
These are unknown forces that never have been created within a system.

Notes and safety

Handling fusion temperatures of operation is not an easy task. But the design for them has already been done. As these reactors at prototype conditions are not expect to reach such production of heat for the power reactors, the design for fusion reactor will be disclosed in detail in the future.
The only effect, which can bring this type of reactor to some malfunction, is the interaction of the double magnetic field effect up on each other.
Or creation of other magnetic fields due to motion and eddy currents, like magnetic files called bobbling between the layers of gases due to different speed or compression between different layers of the gasses.
Which this will /and can lead to mine magnetic fields within the two principal magnetic fields of the two cores.
Where and if these mine magnetic fields are not controlled by continuously varying one of their parameters within the core like the speed of rotation or turbulence of the gases, these mine magnetic fields can combine together and create new effects and out come from the reactor.
One of these effects from the interaction of combination of these mine magnetic fields can lead to the shutdown of the reactor. Where the magnetic field will grow and gather enough strength to pull all the matters in the core into one unsent magnetic field, that the outer magnetic field would not have enough power to over come this runaway condition.
Where the inner core will absorb all the matter within itself and nothing can leak out of the center core not even heat. This is exactly how black holes in the universe are created (read the paper on creation of black hole released by M T Keshe). This is what will be called as black whole condition or Zhubeen State of operation 1.

This is how; it is proven that the black hole theory condition is a temporary one in the universe. That the black holes leak once one of the magnetic forces or parameters around them changes its position. If one of the parameters like the speed of the rotation is slightly changed this condition could be avoided 1.

For the first time man can observe the phenomena of creation of a black hole in a close circuit within this reactor core.

If this phenomenon is used and understood through the operation of this reactor core! Then the derma of the wormhole through the operation of this reactor is become reality 1.

If the interaction of two of these mine magnetic forces occurs on the edge of the inner chamber leading to creation of bobble, at the physical boundary of the gases and the core walls. Then this will, as what is seen on the surface of the sun, as interaction of two magnetic fields and the creation of the dark spots 1, as on the surface of the sun, which is the same as the creation what is called the magnetic surface bobbles in these reactors.

This condition in the cores where neutrons are deliberately are allowed to be generated for the desired operational out put, could create neutron flux in these regions, where they will be gathered in these magnetic voids. Then these magnetic conditions must and have to be removed by change in one of the parameters of the core 1.

The sudden release of the large amount of neutron by these bobbles in the immediate vicinity of the walls of the chamber and especially near xenon gas will be recipe for disaster.

Where xenon poisoning and sudden increase in the temperature of the core vessel wall is a highly possible. Then, what is known, as Chernovel syndrome will and can repeat itself.

Due to magnetic fields and compression of the hydrogen atom in the core of the reactor, if there are any x-rays produced for whatever condition and reason, these will soon interact with helium molecules, which in turn will ionise more atoms of hydrogen in the gas. As hydrogen will not create x-rays due to its inherent characteristics.

Any radiation created under compression and high-density gas will be soon consumed and absorbed in the krypton and xenon layer, as they are the blanketing parameters of the core.

High intensity radiations are not expected in this type of the reactor at all.

But if this happens, this will not be expected to cause such drastic effects. As presence of the containment plasma due to its direction of enforcement of magnetic field force (inward and compressive) will effect the behaviour of the loose rays. These will be feed back into the plasma and or soften in their strength that can not cause harm and be absorbed in the cycle of heat production.

Shutdown and safety of the reactor core

The operation and safety of this reactor is simple during any operational discipline.

This can be broken down in the following categories.

1. The Extreme Ultraviolet source.

A. Total loses of the irradiated material into the inner core.

In this case the system is totally lost. Reactor has to safely be disposed off as a contaminated object.

All valves have to be shutdown automatically at every level of operation.

There should be an overriding system to make sure secondary valves seals activate.

That all the core boundaries access through all portholes and reveres tanks are sealed in one step. This is done through computer program critical condition operation.

At the first detection of radiation in the core gases in the reverse tanks. There should be over riding program that system goes to shutdown. Starting with feed valve from the scintillators in the first step immediately.

If the reactor has been in power mode, the temperature of the core will/ could cause vapour-irradiated material. In this case nuclear reactions between other gases become a high possibility, causing chain of radioactive reactions. This is not expected in the prototype reactor

It is important that the heavier gases of the core are immediately withdrawn from the inner core first safely. That no neutrons are released, by the interaction of the radioactive material and molecules of the gases.

The next step is the immediate feed of liquid $CO_2$ into the outer core to cool the reactor boundary to manageable condition. This gas has to be able to circulate that the temperature of the core is kept at lowest as possible.

It can not be forgotten that, one is dealing with a very small amount of radioactive material in experimental and gravitational automotive reactors. So leakage are not so drastic.

If the leakage is not excessive! Evacuation is not necessary. But protection clothing for handling is absolutely essential.

This failure is assumed to be the most common occurrence in the automotive use of the system. Where, these types of accidents will be common occurrence. Where the core is protected, but if liquid scintillation method is used, the EUV source as separate source can break lose or the valve malfunctions in the course of operation or because of sudden crush or damage to the system due to fall from heights is foreseen.

B. Over exposed irradiated scintillated agent, which enters the inner core.

This being, helium or Neon liquid gas. This can create serge in the pressure, temperature and current flow in the core.

In the future Xenon will be an option for the scintillation. But the technology is at its infancy.

In this case the core has to be flooded by high pressure Neon gases. Neon will and is the best cooling gas. But it absorbs heat much easier through, what it receives from argon and itself has the capability to slowdown the electrons.

The usual and the more convenient method of controlling such a serge, this will be to build in the system, that one or several subsequent injection of scintillation material feed into the core is deliberately missed. By this allowing the system to calm down.

2 The lose of the inner core

A. The core could be dislodges and shatters or open up in to the outer core confinement, because of so many reasons.

A general approach will take care of extreme conditions and the rest of possibilities.

The core, up on fracture and shattering or dislodge from its magnetic bearing or any other methods of rotation creating system, the first line of defence in the first instance has to be the capability to stop injection feed of the scintillation material.

Its important that the scintillation unit has a safety characteristic built in its design, that any sudden changes in the vacume temperature or pressure will aborts this feed. That no new material is feed into the new environment created due damages of the core.

This system control will be advantageous and usable for all failure possibilities of the core.

Considering extreme case of roll-off of the inner core from its position, then immediate shattering to pieces penetrating the physical boundary of the outer core.

These are the most serious sonorous which can happen

Possibility of the radioactive contamination;

Possibility of explosion

Possibility of gas leakage

Gas poisoning.

The construction of a third line of defence in the shape of third containment vessel is the only solution for and if all these accidents happen together or because of each other.

B. Inner core dislodges itself and lands on the bottom of the outer core.

The gases of the inner core leaks into the outer core and no damage. The system is damaged or has to be repositioned, connected and refuelled.

Leakage from the reverse tank.

There is a possibility of this due to all sorts of damages and tear and wear. This is not important as this component is always in vacuum and controlled by reverse valves from the inner core.

The maximum damage will be that some atmospheric gases leaks into the core. Safety systems put in position in the path of this tank can put an immediate stop to this.

Safety aspects and parameters of the system.

The safety parameters in this reactor operation are simply broken down to the following sections for the operational mode of the reactor.

Once the reactor is loaded with appropriate volume of the gases and the system is sealed to any outside interference. Then the system is considered as operational.

The parameters, which determine the function and operation of the reactor then, can be broken down to the following safety apparatus.

The scintillation unit:

One way feed valve to the scintillation unit from the liquid He. VS1

Secondary safety valve controlled only by computer VS2. Positioned immediately after the VS1.

One way feed valve for the feed to the core. To be installed after the scintillation unit VS3.
Secondary safety valve immediately after VS3 Controlled by computer VS4.
The reverse tank valves;

Each reverse tank has its own two duel way valves.
One valve at the point of interface with borehole of the gas RV1He.
Secondary valve at the entrance to the reverse tank RV2He. Controlled by computer.
This follows the same for
Hydrogen RV1H, RV2 H
Helium RV1HE, RV2HE
Neon RV1Ne, RV2Ne
Argon RV1Ar, RV2 Ar
Krypton RVIKe, RV2Ke.
Xenon RV1Xe, RV2Xe
Where hydrogen can be given its own porthole.
In some scintillation units hydrogen can be ionised prior to entry in to the core. Where liquid helium does not need to enter the core.
But He is always considered better to be the feed. This is due to the fact that the passage of He Through H will create the first step turbulence by gas displacement.
Some reverse tanks in some particular application of the reactor have to feed back to the inner core through separate access portholes. These are called the pump portholes. Where usually these could be used to speed or divert pressurised gases. Which arrived at the reverse tank at higher temperatures, pressure or speed back into the core. In some technology use of the core the gases can be mixed with some other matters before they are feed back into the core.
Therefore the same valve system is needed for these porthole access too.
These to be noted by for example.
RVP1He, RVP2He for Helium and so on for other gases.
The rotation of inner core:
The inner core can only rotate by two means

1. The mechanically delivered rotation by means of;

   A. The motor of the centrifuges through magnetic bearing.

   B. Through direct connection to an electric motor, where the core is fixed at the end of the center pole of the motor.

2. The two magnetic fields interaction on eachn other causes the rotation of the inner core, once system is operational and reaches it desired effects.

The speed of the core due to this effect will be constant. This is one of the predetermined characteristics of a reactor, which is determined through choice of fuel and its volumes, and the speed of ionisation.
The speed of the inner core can be interfered if need be, to be increased or decreased, by means of the varying the speed of the motor.
The magnetic rotation operation of the core is very much like when car is put in neutral gear. Where the engine does not engage but the shaft runs for itself at a constant speed.
Note that the access to this facility of the deferential speed interference control of the inner core has a big advantage for operation and the output power of the core when sudden serge in the magnetic field is needed.
The principal of increase in the scintillation to increase the magnetic field can instead be replaced by increase in speed, where this will give pulse increase in the magnetic field of the system without use of the pump facility.
Speed control of the motor and the rotor by means of predetermined level. With tolerances for variation in the current production and heat production of 2-5% is acceptable.

Waste disposal system

As there are no parts in these reactors to break lose or fall off into the cores. There are no needs for a trap to remove matters from the chamber.
There could be times where the walls of the core needed to be cleaned or repaired due to may be inlet particle damage, which has been generated during the working process of the cores.

These parts can only be accessed through the Xenon porthole. At the same time due to centrifuge principals any matter enters the chamber will automatically be pushed to walls of the core out ward.

Thus all needs to be done to reach a point is to vacuum clean or repair, is to insert a flexible tube, which can stand the temperatures and the condition of the operation of the system. That necessary component can be remotely passed through to reach the destine point in the reactor to carry out the work.

In these systems one can not pass through the center of the core for all the obvious reasons.

The conclusion

Through the design of this rector, the principal method of generation of current, and creation of double magnetic field forces leading to manifestation of gravity confirmed.

For the first time with the new understanding of the inner construction of planets, by design of this reactor, is replicated and proven.

Calculation appendix 1

The volume of the sphere is calculated to be

$$V = \pi D^3 / 6$$

The volume of the plasma at the start up is considered to be zero. In the operational mode the plasma will be considered as the overall volume ratio of the hydrogen layer in the center of the core.

In these calculations the diameter (D) is used rather than radius (r) for the measurement of each gas layer. This being due to the fact that the radius of the gas can change in one direction in the core, but it is more realistic to estimate that due to confined physical parameter of the core, the overall diameter of the gases will be the same during the normal operation of the reactor.

Through ionisation principal of the hydrogen layer for effective reaction chain of events in the core the minimum volume of the hydrogen in the active core has to be at least of 3% of the active section. That is up to Krypton gas layer, where the krypton and Xenon are considered as the blanketing material and not reactive section of the reactor.

Where the active section is itself about 80% of the total ratio of the inner core volume.

The volume of the inner core was calculated to be 0.52 m$^3$. Therefore the volume of the active core will be

$$0.52 \text{X} \ 80/100 = 0.416 \ \text{m}^3$$

The minimum volume ratio diameter of the hydrogen layer is 0.1 meter according to the center column 5-centimetre thickness ratio. This gives a minimum volume ratio of 5.2 X 10$^{-4}$ m$^3$ for hydrogen layer.

For the start up condition the 3% volume of the active core is then is calculated to be

$$0.416 \text{X} \ 3 \ /100 = 0.01245 \ \text{m}^3$$

Therefore 0.01245 m$^3$ of hydrogen is required in the Caroline core for the start up testing condition. Through the same method it is calculated that 0.0208 m of helium and 0.0707 m$^3$ of neon gas needed for the same condition. This gives a total volume of 0.31203 m$^3$ for the argon gas layer.

By method of the reverse calculation the set no 1 in the table 1 is extracted. Where the overall gas ration in the inner core will be 2.4% for H, 4% for He, 13.6% for neon, 59% for the Argon, 12 % for Krypton and 8% for the Xenon.

For the 17% hydrogen mixture the ratio of the volume of the gases changes to set 2 of the same table. In this condition 0.0707 m$^3$ of hydrogen, 0.0208 m$^3$ of helium, 0.0832 m$^3$ of neon and 0.2413 m$^3$ of argon is considered to be safe.

By reverse calculation this give the volume ratio of 13.4% for hydrogen% for helium, 16% for neon and 46.6% for argon, 12% for krypton and 8% for xenon in the caroline core of the reactor.

The volume ratios of all gases are / can be changed if a desired effect is not attained through certain mixture.

This allowing, the creation and maintenance different outputs of energy and magnetic field force from the reactor.

It is important to realise that no gas combination will be perfect for all operational modes.

By trial and error these new combination of interactions and conditions will determine the outputs of these types of reactor.

For this reason it is considered that for the test rector the boreholes in given intervals be better for the operation of the reactor. This being due to the fact that as the volume of gases are changed the position of the gases on the central column will move. Therefore by taking this option of borehole all possibilities of testing can be covered.

Some of the applications of the system

Some of the applications for the creation of central gravitation field force and energy within a single or more cavities or objects.

The creation of internal heat source leading to creation and the interaction of two or more magnetic fields, leading to creation of gravity, shielding and current production in alternating or direct or electrovolts levels, used in the space, aircraft, and submarine, colonisation crafts.

The creation of gravity at molecular level between two magnetic fields of two cavities or more in a system for creation high temperature plasma in fusion industries.

The creation of double or more magnetic fields superimposed, at least two, and fully in circulating each other in layers, on top of each other for multi layer shielding of an object, where at least one magnetic fields can rotate in one direction or at least one rotating in the opposite direction to one or more fields. like for the use in submarine or space craft industry, for welding industry, this being material or atomic welding or molecular welding. For stealth effect where the incoming energy from a radar can fully be absorbed in the tangles of one or more magnetic fields.

The use of gravity and anti gravity for the use for , wheel chairs for able and disable bodies, the push chair for children , or elevators in building, the use of hollow center loop fitted with rotor blade of any kind for the manufacture of current, for sky or water board , sliding board for play where the board hover, for movement large objects, this being for automotive or commercial vessels, trucks and trailers or shipping over liquid or solid bodies from one continent to other or planets or solar systems and galaxies, for use of cycles sliding over surface, craft which can fly and have magnetic shielding and gravitational force field inside, for railway like system where the object of any size or length can flout over the track, use in the fork lift and crane and platform lifting of an object of any kind and size in industry for lifting objects or liquids to any height, for the use in the gates and doors which will elevate and levitate or revolve by use of antigravity and vice versa, tables and chairs, beds , furniture's of any kind with or without legs or attachments to the physical surrounding, shoes for walking.

The reverse gravity magnetic field generation system, where the system will absorb heat from its surrounding, to cool its surrounding for use in the air-conditioning for buildings and cars, and crafts or any object which can carry any other object, refrigeration systems of any kind , production of ice or frozen state of any material or matter,

Heating and drying, the use of energy production capabilities for creating heating like warming the surrounding maters, like in boilers and heaters in the house for central heating systems or individual heating systems, and warm blanketing, using as boiler for warming up or boiling matters like liquids and malting solid materials, for use as drying system like hair dryers for industrial or commercial drying system, or heating oven, or stove or cookers in the house appliances, or grilling of food appliances for privet or commercial or industrial use.

Vacuum suits for human or animal or any object in possession of internal gravity for play or industrial or apace application.

Suction machines for vacume system for absorption or attraction of other matters by use of magnetic field attraction or physical suction of the system, this being used for likes of household vacuum cleaners or industrial vacuum cleaners, or for absorption of any gas or liquid, or solid material from its immediate environment like in contamination clean up conditions.

The use of the magnetic field shielding as the an object to prevent passage or block or obscure the view into or out of an object, like as doors or walls for entering into or out of an object, like the door of a house or walls of the house, or as replacement of or the glass or any other materials used for this purpose where the double glazing or any kind of glazing, or prevention of entry of small or certain object can be predetermined by the field, like to be used as of mosquito nets and window fly nets, or as umbrellas for preventing the sun or the rain from reacting any matter or object, roofing, and flooring.

The energy release mechanism using soft or retractable wall system of the core that can be used for release of plasma or energy or an object, or material in one or more direction from the at least one or more cores of the system, this being used as the rivet machines, nail machines or guns of all sorts, shooting guns for defence and laser or leisure or hunting, using for destruction of matter ahead like dynamite, drilling machine in any scale or with any power, dentist drilling machine, space weapons for destruction of meteorite or object ahead, where the delivered mater will not have a physical container as of the rockets and bolts of present time, but packages of energy being magnetic or plasmas or matter of any kind.

Using the magnetic pressurises for the production or shaping of all kinds of material or containers and use in the pressure moulding and pressure casting, or for the pressure pumped systems of all types of materials and matters, like the water pumps, injectors for computer industry printing and etching system.

Creation of zero gravity machines for production of material, where the reactor will, by in circulating the inner cavity, where the material is produced, like in flask or a room , where the magnetic fields of one or more do not pass the inner physical boundary of the containment but creates the zero gravity condition in the inner cavity but not at the same time a vacume condition, this being used for like production of silicone or for the micro chip industries where clean but zero gravity condition is necessary.

Medical use Creation of soft one or more magnetic fields for matching the magnetic field but at the same time in possession of gravitational force system, with temperature level control requirements for medical use , for like reseating of the magnetic or energy levels of human cell for eradication of cancer cell from a tissue, for blood cell for blood cancer, like dialysis's machine, or creation of condition for the growth of body part in the exact position on the body, of remote matter or organs replacement without cutting tissues or organs from outside to reach the organs or part in the matter, this is un-intrusive surgery,

Incubator for premature bore child , where the gravity can be reduced to allow breading in a softer conditions , where heat and liquid condition of the internal environment of mother reproduction organs can be replicated, Incubators for animal production.

Organ transplant without intrusive method by transmutation of the organ in its position and in position reconnection of the organ through remote one or more gravity laser beam for the swing of the organ in its position.

Atom creation for human or animal or plant cells, where the micro gravitational field in presence of magnetic fields in one or more magnetic fields created in the center of the one or more cavities will allow magnetic fields above dark magnetic levels to manifest themselves and cluster together to create the nucleolus of the atom and in use of multi layering, then the electrons are allowed to manifest themselves.

This process can be continued for leading to production of molecules, and base material for the D & A, where specific energies or magnetic fields are inserted leading to creation of the right characteristic of the foundation of the any cell or organs or creatures.

In space refuelling and accessing new material for food or oxygen, or parts will easily done, simply by retracting basic matters in the cosmos soup and using this method in conjunctions with atomic welding methods, all maters on continuous bases can be produced or manufactured as demand arises, so there are no need for huge inventory to carry, one produces in the core as what it is needed at that point of space and time.

Atomic welding is a simpler way to produce or fuse matter together than fusion methods, where large energies are required to fuse to atoms together. Where the atomic welding is used to bring to near similar atoms or molecules together and only add one electron or proton, or an neutron for the two atoms to become one.

This is in reality the reverse atomic decay or half life system method, which world of science has never understood, where for example potassium goes through beta decay to become argon, where if one add beta in the magnetic and gravitational condition one can create potassium from argon.

This is the secrete of material creation in the universe, where the atoms do no start always from hydrogen to go to uranium, but they just simple weld into higher element to create heavier elements.

Toys all sorts of material used for floating, belts for levitation , where gravity van be reversed, magnetic shield bowls, diving suits for submerging in to any liquid or gas in possession of gravity and heating elements, three dimensional screen, three dimensional communication holographic systems,

Electrical, this system used for electric power generation ,using one or more materials in the cavities, by the use of collection of the appropriate charge particles from the right electrodes specially positioned in the or on the appropriate material layer, The important with this technology of creating power is that the positive charges can be utilised as well as the negative charges for operation and used within or the outside the parameters of the system.

That is to say the protons carry as much energy or most instance more than the its electron counter parts, where ever they are collected in one or more cavities of the reactor, where this is total new break-through power production technology. This where little amount of material is needed to create waste amount of energy in the center of planet. This is a total utilisation of all energies from all parts of an atom even the magnetic dark matter and not just the electrons as has been done up to now.

This if understood will allow energy taping in the universal energy levels , where to absorbed energy one does not need to consume so much material to created or reach a charge or magnetic levels of charge, this the point where the food for human digestion will become on magnetic charge level which is pure and so like taking serum into a blood to attain nourishment for energy, then the natural magnetic charges will be absorbed into and by the part of the cells to create the current and absorbed energy necessary for the survival of the body.

Therefore the need for food to be converted to energy through organs of the body becomes meaningless, and man can soon live and an attain energy for its existence without the need for vast amount of consumption of matters or material for organs to convert these into energy for human brain. This is will come clear in not a short decades.

Use in the Nano-technology, where the minuet machines needed to be energised and controlled, where the packages of energy can be made or delivered to the energy cells or the battery of the system for it to continue operation, or the use of minuet battery system which only creates electrovolts current needed for the operation of these micro machines

Communication system, this the use of the soft body, or port of the reactor at least with one cavity, where the high energy magnetic wave are released in the spherical domain, or at least in one direction, where the magnetic energy will be code in the sequence as in the present system but this will be hard to decipher in the inter galaxy system, the best method of space rapid response communication will be the magnetic plasma of the element in the sequential chambers, what this means is that the Hydrogen plasma magnetic energy will be A, Helium plasma magnetic energy will be B and so forth, according to atomic weight if the element, where simultaneous small chamber magnetic charge will be released in the magnetic energy field level, then there is no need for decoding or losing information in the solar system or galaxy media, as each element of the periodic table carries it own magnetic energy frequencies in the plasma magnetic state.

Then the time laps will be insignificant, and the inter solar magnetospheric bouncing will be used, like satellite dishes of the present time to forward a massage onto the next system or craft in the other part of the same system or others.

**Other applications and notes using different parameters of the systems and materials which some are imbedded in the appendix of the reactor patent submission and further applications are noted below;**

The seed of the Earth 1

The second prime condition is the presence of a radiation energy source

Fig A; The diagram of the universe circle.

like molten metal that created the current in the outer core through convection, infect, vapour metallic gases like sodium or potassium 1,

The creation of gravity 1

to the interaction of two magnetic fields 1 which are created independently in the center of the planet.

five principal of creation 1 of

reality that gravity is manifest itself in relation of interaction and attraction of two bodies in possession of magnetic field forces created by heat in respect to each other position 1.

This heating due to magnetosphere region of two spherical magnetic fields inside a core 1

Scintillation is the ignition key 1

In some cases if the third vortex magnetic field are allowed to interact inside the caroline core, then the black hole condition will appear 1, and

Using this method of vortex magnetic creation will allow the study of creation and behaviour of the black hole in the galaxies 1, and the way they can be used for certain transportation of elements in space.

The technique of creation of alternating current using the physical body of the inner core is an additional fringed benefit from the system at the full operation mode 1.

Therefore the system can create alternative and direct current superimposed on top of each other 1.

Therefore the system can create alternative and direct current superimposed on top of each other 1.

The shielding

The double shielding

There are several uses for this mode of operation, one is that if the magnetic field of the outer core can not match the magnetic field of the caroline core, then the magnetic field of the caroline core will pass the boundary of the system. Then this magnetic field has to interact with the magnetic field outside the physical parameters of the reactor.

If the system is within an atmospheric conditions, like earth, then this magnetic filed creates, magnetospheric boundary interaction zone of itself, between itself and the magnetic field forces of the planet. This is very much like the atmosphere around the earth, but in this case the magnetosphere field is created around the system following the interaction between the planet and the system magnetic fields up on each other.

Then if the magnetic field of the caroline core is strengthen further, through the operation of the ionisation of hydrogen, that can react with charge particles of the atmosphere which is within, then this will create a glow, due to the principal motion of charge particle within the magnetic field, very much like florescent tube.

The laser production of nonmagnetic energy rays

creation of condition for growth of acids needed for human cell growth in the outer layers at low temperatures microbe's technology that can create ionisation of hydrogen or

Prof that gravity is not Temperature or core size dependent but material constituent dependent.

creation of matter in atomic level

creation of diamond and c 60 using CO2 atmospheric pollutions and clean water by products

So the method of the magnetic confinement of plasma 1 and creation of fusion plasma 1, production of new material due to high temperature operation through fusion 1, high energy plasma space weapon technology 1, creation and maintenance of fusion reactor 1, magnetic blanketing 1, these are all some of the part of this patent application of this new technology, and just because of the development of this outer core, there are more to be pointed out.

The reverse of the production of the magnetic field holds true for the outer core too. This is where the strength of the magnetic filed forces of the Caroline core is more powerful then the magnetic field of the outer core. That is when the magnetic field force of the system will be super passing the boundary of the reactor core, and as there are two magnetic fields in operation within the core, these two have to have an interface, where this inter face will be outside the boundary of the reactor as a whole 1.

That is why crafts using this magnetic technology always look like a bright light and shine like a silver ball or a silver dish. This is light is an outcome of a natural phenomenon which is just been explained. Therefore the system is a small scale can become a source for natural lighting to be used as a light bulb 1, flood light 1. Or natural sun light for green houses 1, where this lighting will be as natural as the light and the heat of the sun in possession of all its natural nourishment for needed growth 1.

If then, the power of the Caroline core is further increased the interface between the system and the atmosphere around it can be pushed further away from the immediate boundary of the system, this giving the system a shielding effect 1, where the physical body of the system can be keep away from the heat of the two magnetic field interfaces.

At the same time because the magnetic field from the caroline core is always in rotational mode, this will gives the system a impenetrable revolving magnetic field effect, or a rotating magnetic field shielding 1. This very much like one trying to jump into a fast revolving door, penetration is impossible.

The system in this mode due to creation of revolving magnetic field of the internal core of the system, will reconnect with any wavelength and strength magnetic field which comes in its path, therefore the system will absorbed, any radio or other magnetic energies waves, through the magnetic reconnection principal, which comes in touch with this magnetic field of the system, consequently the system in possession of these types of rector will become invisible to present radar tracing facilities 1.

Thus if this principal is used in craft, first of all the craft will be shining, the craft will have no air resistance due to the distend magnetosphere it has created with atmospheric environment around it 1, so the craft can travel at much higher speed in an atmospheric condition, with literally zero air resistance, as magnetic shielding created by magnetosphere of the craft will not have the same resistance and friction force which can be exerted on a similar size solid body, like an aircraft with jet engine, the system is invisible to radar, so the magnetic field shielding will have satellite effect 1 ,

The system will create its own magnetic shielding, and through creation of this shielding, the system can create its own atmospheric condition 1, within its magnetic shielding boundary.

Therefore the system can be used for radiation protection in any environment 1.

If then a double outer core system that can posses magnetic field, that can create an outer second magnetosphere on top of the first magnetosphere, created between the caroline core and the first outer core, with the difference that this seconded superimposed magnetosphere will be rotating in the opposite direction to the first magnetosphere.

Then due to the principal of two non equal magnetic filed forces and which are two in rotation on top of each other in opposite direction to each other, under no circumstances the system inside these two magnetospheres could be bridged by any object which is outside the double superimposed spherical magnetospheres 1

This is a total magnetic protection system, and is useful in case of entry in to atmospheric conditions, or when in space going through region where there is a environment in the galaxy, where there is cloud of small or large meteoroids or space dust, that the system becomes impenetrable and fully protected. This is the double shield system 1.

This system is useful for submerging in oceans, where the depth becomes irrelevant, or entering planet atmosphere that has a liquid environment on its outer surface. This is the submarine technology of this system 1.

The interaction of two magnetic fields inside the reactor core, in presence of the charge particles, not only creates heat in the core of the reactor, but at the same time the inside of the core is always highly bright and in possession of all the sub extreme ultraviolet rays, which are beneficial to the inhabitant of the users of the system around the reactor 1.

Therefore this system when used and manufactured in an appropriate way, like where the body of the cores is made to be transparent 1, the safe rays created inside the core of the reactor could be allowed to pass the boundary of the core, not only to light the environment around the core, but at the same time deliver all types of radiations necessary for natural and atmospheric condition for human bodies survival in open space, where there are no natural sun lights.

In reality one will have the full colours of the rainbow at all time inside the system. The multi colouring lighting system 1.

Therefore the system can be used for lighting vast areas as a lamp, the system can be used for a clean or decontamination environment 1, and system can be used for cell growth or plant growth when is used for artificial but real sun system with all its benefits.

The other possibility is the independent access and reveres feed line through the central column for deep space technology, where the hydrogen needs to be feed back to the caroline core 1

Or where the CO2 gas needs to be treated, then the hydrogen ions from the caroline core are feed into the outer core, where the hydrogen will pick the oxygen from the gas, making pure water 1, and will leave pure carbon on the outer side of the inner core's surface.

If this core is made to be in centrifuge condition, then the carbon can be heated through the heat from the caroline core, that this carbon can be made into one hundred percent pure atoms of diamond 1.

This technique is simple, But the vacume condition and pressurisation of the outer core has to be monitored and created through gas disposition, so atoms of carbon bind in inline and perfect symmetrical manner.

If this process is controlled, fully, the creation of C 60 1, is very simply achieved.

This is the CO2 cleanup system 1, is used for plants, where this gas needed to be naturalised before matters by-products like water 1, can be released in to atmosphere, which this gas has been the cause of green house effect.

Although highly interactive with water and dangerous, in this reactor core where it is sealed containment design, at low pressures, there are no chances of interaction. Which make sodium an ideal material in this core 1.

This phenomenon in this reactor is utilised in the outer core for the proposes of creation of charged medium in possession of convection capability, but without ability to interact or absorb the ionised matter as sodium is a stable energy metallic matter 1.

In this reactor using the central column (see the next topic) of the caroline core, that facilitated the withdrawal of the positively charged plasma from the caroline core, this allowing feed of protons from the plasma through special borehole directly from the caroline core into the outer core into sodium 1.

This allows the sodium to warm up in the first instance if need be.

As positive charges of the ionised plasma are introduced in to sodium section by this replacement enrichment method, where the protons will act as charge particles in the liquid or vapour of sodium in the outer core, helping with motion of the charge particle for the creation and maintaining of the current in this core.

But at the same time this allows the interaction and the absorption of an electron from sodium by ionised hydrogen, after ion of hydrogen releasing its energy to the sodium atoms, for the ionised hydrogen to attract one electron from sodium outer orbit, this leading to creation of hydrogen gas in the outer core 1.

Where, this atomic hydrogen gas can be feed back to the inner core as the fuel for further ionisation.

Thus causing the fundamental replication of the convection method, as it is assumed to be creating the current in the outer core of the earth through convection.

Then this current in conjunction with the motion of the inner core will lead to the creation of the second magnetic field on the outside of the inner core.

This showing how two magnetic field forces can be created, which are both spherical and can be made and controlled independently, separated by a physical boundary of the inner core in a reactor.

Now it has proven that such a phenomenon in the center of the planet can exist, where the center of planet possesses two independent, reconnected magnetic fields forces.

Which the interaction of these two magnetic fields up on each other in molecular state leads to creation of double magnetic field force effect, which spans the combined strength of these two magnetic field forces.

Where the combined attraction fields forces of these two magnetic field at atomic and molecular level, causes the creation of the gravitational field forces of the planet or a system 1.

That is why now it should be clear why the shape and the positioning of magnetosphere of planets are important, as now it should be recognised that the magnetic field created by the two cores of the planet decides the shape and the strength of the magnetosphere of the planet, and respectively, the magnetic field strength of the two cores of the planet are totally dependent on the composition of the materials inside the two core of the planet 1.

When two magnetic field interact with each other, as much as magnetic field force goes out of the system, for the purposes of magnetic reconnection, the same has to come into the system to close the loop.

Understanding this phenomenon, and being able now to create a system that can create its own molecular magnetic field 1, therefore it must be understood to be easy to move within these kinds of environments without using jet engines and rocket fuel to pull away and then be pulled back when the fuel runs out.

Therefore all the reactor of the system needs to do, is to imitate the magnetic field strength of the planet at it position where it is to float in that level, and then add to its magnetic fields strength that can be attracted to get closer to the inner core 1, or in the other words to the surface of the planet, or reduce its magnetic field strength that it can be pushed away by the magnetic field of the planet 1, to where the magnetic field is as weak as matching the magnetic field of the planet at that level.

Then to go a distance away on the surface of the planet, the reactor magnetic strength needs to be altered gradually but fast enough that the object will move in time in slight slop up or down to cover the small curvature of the planet.

The gravitational field force of a planet can be replicated within the reactor, which will possess gravitational field force which can be controlled, due to the ability to be able to control the interaction in between the two independent magnetic fields in caroline core and in the outer core independently.

This is the system in possession of gravitational force field, that its strength is unlike planets which is set for their lives, due to adjustment and control of its parameters and thought operation of the reactor, they can varied, and controllable magnetic fields matching the environment which the system operates in could be produced in the center of the reactor of the system 1.

This method of replacement charges from the inner core plasma is one of the corner stones of the second magnetic fields creation and control 1.

At the same time allowing the material to be kept under control in the outer core. This could be carried up to point and pressures, which needed.

The plasma is feed through a different direction from the center core into the outer core.

The outer core could be used for the current production, this is made possible due to the fact, that if electric contacts are positioned in this section of the core 1, these will pick up any loose electrons which come available in this section, due to convection and interaction of the plasma which is fed through the inner core and the materials in the this core.

The other method of impregnation 1, is by gases impregnated with charged particles could be used, where the gases through charges pickup from the rotation of the wires embedded in the body of the inner core could supply circulation in the gases of this core, that again through motion of charged particle within a metallic gas, current could be created in this core, that with interaction with the rotation of the inner core, magnetic field of the outer core could be created, that the gravitational field could be established in the center of the reactor.

In being able to compress the plasma in the core of the reactor, by using the magnetic field of the outer core and Caroline core, under the right temperatures and pressures, the state of the matter in the plasma could be changed 1.

Where in reality due to compression created, the electron of the gas or the invisible energy made available from two magnetic fields in presence of gravity in the core within the plasma, allows the neutron, electron conversion of proton, without the physical appetence of the separation of two components, but due to their magnetic field presence and the arability of their charges in the vicinity of the plasma, compressed plasma or gas will behave as a metallic matter and becomes electrically conductive, due to imitation of the electron as to be free, but still in the bondage of the proton in the plasma.

This how materials change or appear to become metallic and conductive, where in their real terms is just normal insulator. This is the behaviour of the helium in the center of the Saturn. The generation of metallic plasma 1.

There is a possibility of having a flat central column 1, where the porthole is only at the surface on the inner code of the Caroline core. In this system currents are picked up directly by electric pickup points which are directly fixed on the inner side of this core.

Where there are needs for extra heating in the outer core without the need for the heating of the plasma in the caroline core, them stratum can be coated on the central column exterior only in the argon gas layer level 1.

The extra ionised hydrogen nuclease which is charged and worm can them be pumped in to the outer core of the reactor, as charged particle to interact with the metallic material vapour or gases in that core, like sodium, or potassium, the when returning to ground state to absorb, a free electron from the outer layers of these material to become atomic hydrogen 1. That this can be extracted and be feed to the inner core at argon or hydrogen layer levels of the Caroline core.

The system can be controlled through the outer core with feed of the safe metallic vapour, rather then injection of hydrogen or scintillation and interference with the Caroline core gases 1.

Using this method of feeding the possibility of oxygen penetration into the inner core will be eliminated.

This method could be used if sudden surge like escaping from a region needed for emergence, or the shielding through the caroline 1 core become weaker, so directional magnetic field production becomes a possibility.

The example of this is for battery production system 1, which its life lets say ten years will be predetermined by the fuel injected in the cores and then only current at the surface of the outer core is picked for the given voltage out put usage.

This is a perfect system for space technology and multi-layer reactors 1, especially designed for computers which will have no tangible physical boundary.

Where the spherical magnetic fields and current layering, will allow for the first time the creation of computers 1 where it will work like the human brain in three dimensions 1, where the material in layers could be cells, biochemical's matters 1, and fields of current created in the center core with position of magnetic field and presence of gravity, in between layers of cells 1, with power supplies in micron electrovolts level 1.

This scintillation could be by injection of one material in the core 1, where its interaction with another material in the core can release energy that can ionise one or more elements in the core, so the process of energy release from the elements can start, or even process of energy absorption to start (for example in the creation of dark mater this process is sometimes is needed) 1.

The principal of using solid magnet or liquid magnet in the core of the reactor, being placed at the end of the central column, this is a totally new concept in production the atomic ionisation 1.

In this system the same is replicated by use of alternative pole magnet positioning, by place next to each other on the tip of 1 and on the surface of the top of the central column 1 in the core in the center of the reactor, in the hydrogen gas layer, to create the same environment, where the central column is in a continues rotation as it is firmly attached to the inner core physical body, this will grantee a magnetic environment 1 in the hydrogen layer, where it is needed.

The placing of solid magnet on different section of the central column 1 or injection of liquid magnet direct in different layers of materials of all cores of reactor 1 is one of the flexibility principal of the operation of these types of reactors.

The total energy output balance of the system will have the following collective equation of all these factors which happens in the cores of the reactor in stages or at the same time

A    Energy released through ionisation +

B    Energy released throu catalyses in Helium layer +

C    Energy released through catalyses in Argon layer+ D Energy released through interaction of magnetic fields interfaces + H* =

E    Energy released through convection of the matters in the inner core +

F    Energy released through convection of the matters in the outer core +

G    Energy releases through the turbulence and self gravitation of the gases in the inner core +

H    Energy release due to proton to proton interaction in the inner plasma of the core due to magnetic helicities across the core of the reactor

Where the H* is for Hosneh (Hydrogen operating in scintillated enhanced habitat) 1.

Then some of these power productions have parallel in the current production in the cores too.

Where this is noted as Hosneh current H*C 1 where, this is the current output of the system as a whole.

These currents can be used with equipment, which are designed to operate in micro electron volts 1, and electron volt for soft tissue computers 1 electrovolts levels 1 like in the world of computers.

Using these types of power supply the system will not need conversion through transformers or cell batteries, as the systems energy supply can be taped into directly from the rector 1.

This opens a totally new concept in the fields of energy production and usage.

This current level production and its methods has been a well know concept in the operation of human brain electrical work in the chemical, and biological field of science, and space and cosmology, but up to now has never been achievable as a power supply source.

When this type of direct electrovolts energies are use in their appropriate way, new lighting system and heating at molecular level will be open for development 1.

This is the true application future for these systems energy Production capability, and not the present currents created through electron transfers of batteries or rotational core and magnetic field generators.

This system is the bases for the energy and gravity system that through further developments of these reactors, through its technology magnetic energy transmutation of elements in the near future are possible 1.

Where the natural energy of fields and elements do not have to fight against the natural elements of the existence, but they only have to operate within their natural environment to operate and create new conditions.

That is the way where the speed of light will have no relevance in the overall picture of energy creation and transportation and elements production 1, where the light itself is the visible effect of the energy but not the creator of it.

The power of magnetism is known in the visible and sound levels. Through this system new realisation and control of magnetism and speeds of transportation beyond light will show their effects and existence in the level of dark matter 1, which these will be needed to getting used to.

Therefore it is considered and concluded that the hydrogen and all gases, for the reactor not to reach, what is to be called the state of solid or stagnation, through hydrogen atomic saturation, the core has to have low gas volume ratio 1.

Where this heating effect of two magnetic fields has to be kept away from the physical body of the system, these magnetosphere field which is created by strengthening of the magnetic field of the system, will push the boundary of the interaction of the two magnetic field s away from the system, then the expansion in the area between the system and the actual magnetosphere of the system will become the magnetic shield of the system l, in the atmosphere of the planet.

This technique of pushing the magnetic field out of the boundary of the system, and its interaction with the magnetic field of the planet, used in a way, that, the magnetosphere field of two cores, or magnetosphere field interaction of the system and the planet, can be confined to a pin point or a long line, then the system can be used in a similar way as the welding torch 1, where the heat at the magnetosphere will be hot enough that can cause melting of the elements.

Therefore this can weld any two matter together, even in the molecular or atomic level 1, for creation of **113-115** matter in periodic table 1 by **welding method** leading to manufacture of elements 1, and manufacture of dark matter 1, not in a fusion method but the atomic welding level to create new molecules, where there will not be a need for huge fusion energies to cross the coulomb barriers as has been tried in the fusion reactors.

The alternative method of measuring the weight of the gases or material, is to consider the vacume, zero atmospheric condition, which is more realistic, as in the conditions in the galaxy's, as the atmospheric condition is a manmade toll of measurement.

Then the volume ratios matters in each core of any reactor will be totally different, and the system will be highly stable but extremely electromagnetic and the magnetic energy creation will be very powerful system.

This is another method of the combination of energy, and gravity system, which the boundary of the outer core will be used for the shielding effect. So the inner core maintenance of the magnetic field will cover the content of the craft for constant gravitation forces 1 (This will be like the present compression system used in jetliner at high altitude. Where the gravity will be controlled and created by the caroline core and the outer magnetic field through the speed of the rotation of gas flow circulation in the reactor of the system 1).

Later in the high temperature mode, and creation of the magnetic field due to convection principals in the outer core, will be used for the magnetic field confinement of the plasma in the caroline core, and the shielding effect of the whole system, will be done by the outer core magnetic field 1.

Later in the high temperature mode, and creation of the magnetic field due to convection principals in the outer core, will be used for the magnetic field confinement of the plasma in the caroline core, and the shielding effect of the whole system, will be done by the outer core magnetic field 1.

This will be operated at very low speed of rotation at about 10 > 250 rpm (Note that the speed of the inner core at the interface with the outer core of the earth for convection is only about 340 Km/h). Magnetic fields created by the convection do not need high speed of rotation of their solid containment body 1. As the magnetic field created is only for containment of the plasma in the Caroline core.

Where the inner core will absorb all the matter within itself and nothing can leak out of the center core not even heat. This is exactly how black holes in the universe are created (read the paper on creation of black hole released by M T Keshe). This is what will be called as black whole condition or Zhubeen State of operation 1.

This is how; it is proven that the black hole theory condition is a temporary one in the universe. That the black holes leak once one of the magnetic forces or parameters around them changes its position. If one of the parameters like the speed of the rotation is slightly changed this condition could be avoided 1.

For the first time man can observe the phenomena of creation of a black hole in a close circuit within this reactor core.

If this phenomenon is used and understood through the operation of this reactor core! Then the derma of the wormhole through the operation of this reactor is become reality 1.

If the interaction of two of these mine magnetic forces occurs on the edge of the inner chamber leading to creation of bobble, at the physical boundary of the gases and the core walls. Then this will, as what is seen on the surface of the sun, as interaction of two magnetic fields and the creation of the dark spots 1, as on the surface of the sun, which is the same as the creation what is called the magnetic surface bobbles in these reactors.

Speed of light is mass depended where magnetic force speed is essence of life and creation.

When, magnetic forces slow down enough then they become speed of light.

So the magnetic speed is above the speed of light by several hundreds of factors. Where this is the speed on energy and not matter.

Thus Einstein equation of relativity is irrelevant in this dimension of the existence.

It is important to understand that each core creates its own magnetosphere in relation to the cores above or below it in a multi layer core system. As each core is running its own discipline. So interaction of inner EMF of two or three cores on top of each other has to be considered. This is like, when a system is run for gravity and shielding and multi shielding one in clock and one in anti clock direction in case of colonisation.

This is for the total repellent effect of any meteorites or other object for not being able to enter the colony space.

That is where the inner layer of shielding rejects the mater, if the object or the energy package penetrates the first layer, the second layer moving in opposite direction of the motion, it will automatically ejects the object from the boundary of the craft.

This is a perfect shielding system for entry or exist from atmosphere of planets, systems or galaxy's.

further notes and applications about the system;

The core power generator consists of a metallic inner core on which electromagnetic fields are produced by the outer core convection motion. Both the field and the inner core are rotated together, there being no relative motion between the magnetic field and the inner core. A vortex of gases is formed in the rotating inner core, due to which electrical charge is produced by the free electrons products of ionisation of the hydrogen, which interacts with argon of the and creating the necessary free electrons in the gas.

The free electrons are interacted with the magnetic field created by the turbulence convective of the inner core and the magnetic field of the outer core in the inner core Thus creating positive and negative polarities between which output power at high current and few volts in the reactor are produced. This allowing electrical generators of capacity in tens of kilowatts and of sizes comparable with conventional electrical generators.

The speed of rotation of the inner core at the start runs at 2860 rpm.

The core thickness could be out of 120-mm thick steel plate.

The motor needs to be no-load current of 2.6 amperes (1300 watts) to rotate 2870 rpm. The choice of the motor is much weight dependent of the full inner reactor and the center column.

Electrons the same as matter contain energy in their construction (E=mc>2). Electrons themselves are energy packages, where "energy" in physical terms is a state of vacuum in rotation. Even at ordinary speed of rotation of electromagnetic forces of two cores, the inter atomic space of the inner chamber develops velocity fields in the vacuumed chamber that qualitatively act like additional charge within the rotating system which uses the electron from ionisation and the creates free electrons.

The interaction of the magnetic fields and free electrons form polarities creating a substantial current. The law of conservation of charge and the law of conservation of energy are applicable within the systems confined to gas interactions and the inner containment core, which is a dynamic entity that can rotate and create charge.

In an integrated system rotating with the external magnetic field from the outer core electromagnetic field are created in the center core.

Energy is produced from gases in vacuum by creating continues supply of electron from the hydrogen as catalysts/source.

For certain operational application a telescopic central column could be used.

These being like constant long duration operation like to replace batteries of present days. Where, the fixed volume of H in the center of the core predetermines the life of the core. Which is pre-irradiated and energised and self-sufficient sustain condition is achieved.

Up on approaching the right temperature in the Argon level. The rate of the flow of the of the He scint has to be reduced that the enough heat created, as it is needed.

Due to inert gases blanketing. Temperature rise in the core is rapid. The right choice of the amount of the different gases above Argon level will allow the follow of the heat to the second chamber.

The rise in the temperature of the gas in the second chamber, with the right choice of the neon gas in the vacuumed above argon level, with feed of aluminium vapour or other metallic molecules, the convection and the circulation of the inner core, the magnetic field strength in the outer core will increase.

The increase in this field will and is the most important factor in the operation of this reactor as the whole.

The magnetic flux measurement equipment for this proposes has to have the capability to operate at high temperatures.

The rate of the feed of S-He is like the action of the accelerator in feeding fuel in the petrol engines. So the rate of flow and the amount of exposure to the irradiating material will determine the ionisation of the H and He in the center core. So the rate of the feed of S-He is the control element of the reactor.

The speed of the rotation of Argon gas will then be the controller of the strength of the magnetic field of the inner core, where this is used for the gravity and anti- gravity operation of the core.

In the operation mode the speed of the inner core physical body will controlled by the interaction of the combination of the two magnetic field forces of the two cores.

The motor of the reactor and its speed control will be determined by these forces. Unless entirely different or serge in one other properties from the reactor is needed, for speed control for the motor for differential speed condition of operation is essential.

Pumping of gas is the main control of the operation of the reactor at any discipline of the operation of the reactor.

Curvature blades on the inner and outer side of the inner core can give more effective output for the rotation of the gases, even though that this can create turbulence in the outer layer gases of the inner core. This could be positive in the circulation of the matter in the outer core giving a better convection rate of the flow of the gases or material in the outer core chamber.

For some applications of the core, where rapid energy is needed the gases in the core has to be sufficiently ionised. So that free electrons can easily carry current in the gas layers.

Gases in this reactor are like super conducting electromagnet, that the system becomes a self-sufficient system.

It is important to notice that the current in the gases will not be turned in to heat unless they become in touch with the environment of argon gas, where the current changes into heat through the catalysis effect of argon.

In gaseous condition there are no need for magnetic field and magnetic induction or flux density to be considered separately. In gaseous condition this is refereed as magnetic field.

Forces exerted on the gases in the core are $\underline{I}$ x $\underline{B}$ per volume. Where $\underline{I}$ is the current flux from ionisation of the H and He. In vacume where there are no gases $\underline{I}$ = o.

Gases entrapped in the bobbles are in much denser conditions then their outside surrounding. They reason that they hold their position is due to the fact that pressure within gas is equal to $\underline{I}$x $\underline{B}$ forces. This being due to electrons captured by the bubble. Plus the gas inter pressure from the surrounding fields inside the bobble. Thus electric current must be running within the bobble.

When these bobbles lose their strength, by for reason or the other, they release gases plus plasma at high speeds, these ejected plasma involve masses of plasma, where this plasma was held in the bobble by forces of $\underline{I}$ x $\underline{B}$. Then this force of the gas up on release becomes the acceleration of the gas (This mass release has parallel on the surface of the sun and is called Coronal mass injection).

The sudden release of the content of the bobble in conjunction with the surrounding plasma, this cerates a sudden surge in the electron flow and sudden increase in the output power of the core. If the bobble is in the Inner gas layers. If the bobble is on the outer layer, this can cause damage to the inner wall of the inner core.

This method of force creation sudden surge of energy if created in conjunction with the inner core super passing the boundary of the outer core in the boundary of the craft. The sudden surge in magnetic force created this way is the technique for pulse magnetic field force creation. This is the one of the methods of defence for the craft in motion or in space, where the bobble is created in the outer layer, this is like the rings on the surface of the sun.

Where here on has the control of the quantity and direction of the release of the plasma or the magnetic field created. This is a lethal but effective way to destroy large objects in space, without change of the course of direction of the motion of the craft.

The magnetic forces released in this way travel in magnetic field speed and not light speed. Which is totally a different concept of speed of motion, as in magnetic field there are no masses so speed of light dose not come into play.

This is magnetic speed, which superposes the speed of light.

This is the speed of the dark matter, has no limit and is not comprehended by science and technology of today, but this is the speed, where and how in this type of reactor creation of atoms become possible.

There is fundamental deference between the speed light and magnetic field speed.

Speed of light is mass depended where magnetic force speed is essence of life and creation.

When, magnetic forces slow down enough then they become speed of light.

So the magnetic speed is above the speed of light by several hundreds of factors. Where this is the speed on energy and not matter.

Thus Einstein equation of relativity is irrelevant in this dimension of the existence.

Object receiving such energy. It will never realise its receipt until, when the energy entered the body of the object is so imminence. That the body of the object becomes the catalyses for the slowing down of this magnetic energy that it can not contain the surge in the energy received, that its molecules disintegrates, long before the craft reaches the object.

The magnetic energy and speed will become the second nature to man of space.

The appropriate use and control of this energy and its creation will allow the man to transmute elements in their entirety. Where, the package will be like the car and its content man to travel in space without the use of the craft. At the same time the use of this energy will allow the creation of any atom that man wishes to create without the use of fusion. But rather by collection of magnetic energy in an appropriate way to create the atoms which it requires.

The magnetosphere of the outer core and inner core will be spherical.
That is a dentations at the center column position, the thinner the central column. The more uniform and perfect the spherical magnetosphere and no teardrop effect inward or outward around the center column into other gases regions.

The teardrop used in the outer surface. Where the magnetic field force on the inner core is increased to pass the EMF of the outer core in a certain direction. Then release of and creation of the tear- drop and use of surface bobble. The direction of release of EMF for defence can control the direction of release of the magnetic energy.

Then, if, the EMF of the inner core is increased to extend to the full outer boundary plus an extra distance away from the craft. Then this will create the magnetic shielding effect for craft. This condition is needed at all time during airborne condition in space or any atmospheric for the protection of the craft. Even during the re-entry and exit from a planet. This is the shielding effect of the system.

This has to be noted in jet engine system the vapour appears at the rear of the engine as exhaust.

In this system the white light, due to ionisation of the charge particles in the atmospheric condition with interaction with magnetic field created by cores of the craft. The white light like florescent light or silver light will be in the direction of the motion in front of the craft.

Where in reality this shows the direction of the motion of the craft to be rather then in jet engine as where the craft has been.

What is important, is that the magnetic field strength of all the cores can be controlled through pumps or lower level or higher level cooling or temperature circulation. That is without the pump allows the gas at one level core to enter different level to attain its temperature. So, that the change volume of the gas will control the sped of the rotation and the magnetic field strength. This is advisable for long term operation. In case of pump failure this is an emergency contingence to maintain operation.

For above two methods a multi layer system is needed to be operating within the craft. Where the EMF are controlled by the circulation of gases in different layers in different cores. Where the containment core are totally stationery or in motion. Multi layering system is totally possible by use of negative vacume system in conjunction with pumping. To run systems mechanically inside each other by motors are impossibilities of practicality.

It is important to understand that each core creates its own magnetosphere in relation to the cores above or below it in a multi layer core system. As each core is running its own discipline. So interaction of inner EMF of two or three cores on top of each other has to be considered. This is like, when a system is run for gravity and shielding and multi shielding one in clock and one in anti clock direction in case of colonisation.

This is for the total repellent effect of any meteorites or other object for not being able to enter the colony space.

That is where the inner layer of shielding rejects the mater, if the object or the energy package penetrates the first layer, the second layer moving in opposite direction of the motion, it will automatically ejects the object from the boundary of the craft.

These are a perfect shielding system for entry or exist from atmosphere of planets, systems or galaxy's.

In defence technology discipline this multi- layer system will make the system totally impregnable even from EMF from directed to craft from another craft.

This system of opposite rotation layer is perfect in oceanic or liquid surface planets landing or dives.

Each core in the multi-layer systems can be treated as individual system, like the inner core on their own. That they can be ionised by scent-He to generate heat and their own magnetic field without the need to receive heat from other layers for the EMF to be established. They even could be fully insulated from other cores immediately above or below it or on its right or left. This is useful for magnetic computer multi layer and multi-parallel levels systems. Where the cores are in strips then in layers and in layers on top of each other too.

In these systems the scent-He is feed in one layer and even in a specific point in that layer.

This is the concept of mine floating scent-He sources within a layer. The floating sources of scent-He are for localised ionisation creation and specific application. This is a good method for welding and stick. In weapon technology, this is useful for dirctionalising control of the strength of the energy to a pointed away from the craft.

Use of the soft metallic material like liquid metals as containment rather then hard solid body. This allows a much easier control of the speed of the core levels EMF. This method of containment is good as layer of the gaseous metallic boundary is placed beyond the argon level. This will create an amazing effect like the rings of the Saturn or the ring usually associated with giant gas planets.

Different and independent speeds of rotation of each core like core, 1 ST, 2 nd, 3 rd and so on cores. These effects can be used individually or in conjunction with each other to increase an effect. Like increases in the output power of system or increase in the power of shields where all cores will be synchronized to defend the craft with maximum shield power. The power of such systems can run into several million watts.

The problem with this type of discipline is the heating of the core due to the saturation interaction of scent-He with H and He. This is called the scent-He heating effect.

This effect can influence the wave of thermal heating due to gravity will have direct effect on the temperature produced within gas layers of all reactors (this is the MHD effect). This wave heating theory has to be taken into account into consideration for large size cores. Especially for multiplayer core specifically in the outer cores outer layers.

Where, the two magnetic forces meet inside the inner core of the reactor. The condition of the magnetosphere inside the core is created.

By dumping large amount of ionised particles by injecting deliberate serge or as of normal condition of the operation of the reactor. In this region of magnetosphere these particles collide with gas molecules of the inner core in the region and create light or heat in the chamber. This is very much the principal of the aurora of the North Pole.

If, the interaction of these two fields are/ or could be stretched cross any object like a house and spacecraft. One needs only to produce a bubble, which has or contains charged particles. Therefore the area of the bubble is then would be under the influence of the magnetosphere or one of the two magnets. Thus light energy could be created to light the room or an area. This will be light without wire. Or how planets or galaxy's attain their bright lights. That is the interaction of magnetic fields, which interact with each other in presence of charged particles.

This effect, of the light due to interaction of the magnetic force and charge particles. This is the only reason whey craft or objects equipped with this system will be always shining in the sky. Where the magnetic field created by the interaction of center core or outer core magnetic field. These will create magnetic atmosphere around the craft.

Where in atmospheric conditions! Where there are ionised particles are within the atmospheric gases. These will interact and create visible light around the craft. In these conditions the generated magnetic field of the craft will interact at the same time with magnetic field of the planet too.

Therefore at the head of the boundary of the effectiveness of this light, there will be heat due to magnetospheric condition created. This magnetic field at the same time will determine by the strength of the two fields of the planet and the craft. This is exactly like the edge of the interaction planets and their stronger field of their stars. The beauty of this system of motion is that. The system does not have a vapour trail as in jet engines.

The brightness around the craft is only light , and secondly opposite to the jet system, the light is always created ahead of in the direction of motion.

Therefore the real position of the craft in this light is some where near the opposite end of the direction of the notion of the craft. The advantage of this method of creating magnetic magnetosphere ahead and around the craft. Is, that, due to effect of magnetosphere and usage of the charge particles ahead and around the craft to create light. The craft will never come around to be in touch with atmosphere of the planet.

Therefore the atmospheric condition will have no impact on the craft itself. Therefore craft will for example never heats up.

Secondly the interface of the interaction of the forces of the craft and the planet will take place some distance away from the craft, at boundary of the magnetosphere of the planet and the craft. If now one increases the magnetic forces of the craft and as it is the characteristics of the body in position of the internal magnetic field that they always rotate in their access. There for the craft outer shell will always rotate.

This has several advantages. One of them is that the magnetic filed of the craft due to its condition of its creation. This magnetic field will rotate around the body of the craft, the same as the magnetic field of the earth, but at the same time this rotation of the fields in creates the atmosphere around the earth, which will not allow penetration of space debris into earth atmosphere.

Therefore this rotating magnetic will become like a shield around the craft, the shielding effect of this new system.

When the effect of magnetosphere of the internal core is enhanced. Where the two inter faces of the magnetic fields are brought to the near center of the inner core. The drastic heat increase at the interface of the two magnetic fields is brought to be in hydrogen layer. Then the fusion temperature for any element will be come possible.

That is when the core becomes a fusion reactor. Where, the hydrogen will feed the supply of energy in combination with feed of two nearest materials to fuse in the hydrogen gas mix.

In conjunction with the feed of the scintillation material, the temperatures needed for the fusion is created.

What is needed for the jump or the fusing of the element is the extra neutron. There for now if the neutron which are created in the fusion section in conjunction with the ionisation of He. These have moved to the Xe layer and captured in that layer. By this time the porthole at Xe layer is opened through the bridge channel specifically built in the center telescopic column. Then feeding these neutron through to the outside boundary of the fusion zone. Where these neutrons will be jets purples into the argon gas in a projected line that they are pulled into the center.

These neutrons will become the bridge factor for the fusing of two atoms to a new atom, which was desired.

It is crucial that the atoms to fuse do not necessary need to be of the same. That is to say to create the element 113, 114 or 115. Which, these are all double magnetic or 114 which is the perfect double magnet. That is to say, that these are both gravitational and magnetism at the same time. That is when these elements are created through this process of two Iron atoms by fusing.

This element will be feed to the gravitational systems for space travel. Where there are no fuels are used. Where foe the motion the soup mixture of the 113-115. In a three 120-degree equidistance centrally apart will be used to create the matching magnetic or gravitational pull of the destined planet or system or galaxy. Then the object will be attracted or repelled towards that desired destination.

In this case increase in 113 or 115 will be the determining factor. Where, the 114 will be the controlling factor.

Therefore by retracting the boundary of the interface of the two magnetic forces. In creating the magnetospheric condition the fusion is achievable in a small space in the reactor core. Where in multi layer core system. This fusion production could be allocated through design to a specific location of the reactor core. Where, for example this location continuously has the capability to produce fresh material from space hydrogen or other mates. Fresh elements like air for birthing and oxygen for the water supply and so forth.

Where there will be no need for carrying large amount of air and water supply. That can limit the time and duration of space travel.

The heat from these spots through porthole controls of speed, thickness and feed of the argon and neon layers could be controlled to manageable temperatures.

It is important to notice that the Fusion core does not necessarily needs to be in the center core. But it can be accommodated in one of the outer core layers of the multi layer-stacking reactor. The core, which is specifically designed for the interaction of the other entire core to achieve fusion in a constant and fusion layer. Rather then in a spherical bowl in the center of the inner core.

In this system it has to be noted that the hydrogen is a catalyst to transfer the energy of the scintillation from the irradiated He through to the Ar gas layer.

Where the argon itself become the catalyse to slow the electron of the ionised He to ground state by transferring their energy into heat. Therefore this is the principle of double catalysis. This effect occurs frequently in the cosmos creation of planets and systems. In a larger scale in the creation of galaxies too.

The principal working of this reactor in based on the following patterns.

If any of these factor ever were missing from the set the creation of a system or operation of the reactor will change characteristic. Even if one off them being varied slightly the same will happen to the output of the system.

Rotation                          Turbulence

EUV

Hydrogen                          Magnetic field

In some reactors the catalyst will be solid or vapour of like potassium or sodium vapour in argon layer is use as a mixture. This piped in to the core through the pump hole. Then it is for example collected in the xenon porthole, or the argon will be the last layer. These are use where high energy through enthalpy for raped heating from hydrogen is needed.

During the operation of the core the atoms of He gas can and will become catalyst in the process of and because of their position within the reactor. He catalysts effect can release about 54 eV in the plasma for each reaction with H.

By feeding of protons from the plasma through special borehole directly from the inner core into the outer core sodium for example. The positive charges are introduced in to this section by replacement enrichment method. Where the protons will act as charge particles in the liquid or vapour of any matter in the outer core. In turn helping with motion of the charge particle for the creation and maintaining the magnetic field and current in the outer core.

This method of replacement charges from the inner core plasma is one of the corner stones of the second magnetic fields creation and control.

The proton enrichment of the outer core from the inner core is the favourable system for the space flight, where the helium, neon, xenon or Rn are used as scintillators, where the reaction will create neutron and gamma rays, where the protons are created in the neon layer rather then in the hydrogen layer.

In these reactors the energy of the scintillation is very high. So the scintillation process will be in reveres order. That is where the scintillation material will ionise a few atoms of hydrogen and Helium. But it releases most of its energy in the argon layer interaction in the presence of the magnetosphere interaction of the two cores, or where the argon itself is the scintillation bath of the inner core.

This is one on of the most powerful methods of creating high temperature plasma with large number of the available neutrons needed for the creation of the 113-115 elements for the space travel. Where the neutrons are feed through to the three vertical gravitational cores in the craft in to the iron vapour atomic mixture to create the double magnetic molecule of the iron. This is the fuel of the space technology for the long space flight system.

It is important to remember in the start up condition that the outer core starts in a vacume condition equal to the vacume level as the inner core. After the creation of magnetic field in the inner core the vacume condition of the outer core can be reduced to normal atmospheric condition. Where the material in this section will operate in different dimensions and convection and inter action and introduction of proton and other matters and gases will have the normal rotation characteristics and separation level.

Of course this reduction in the vacume level is optional and dependent up on the pre determined discipline operation of the reactor. The feed of plasma from the inner core to the outer core is very simple as the pressure of the plasma in the inner core is much higher then outer core pressure and natural laws of physics will pushes the plasma into the outer core.

In the construction of the outer core there are some fundamental physical changes can be made. Where the copper cables from the Southern Hemisphere of the core is passed within the material of the inner core. Or they are embedded in the outer side of the inner core. With this method of concealing these cables in the process of the rotation of the inner core due to motoring of it, or during a interaction of the two magnetic forces on each other.

These cables or wires, while are carrying charges from the operation of the gases inside the inner core, they themselves become involved in generating electric power due to rotation of the inner core within a magnetic field.

At the same time as they are carrying current they produce magnetic field within the body of the inner core.

The current produced through this method are enough to run the feed and cooling system necessary for the liquid helium process, plus the running of the full operation during the stand by position of the whole system. Therefore the core dose not need to be feed with large amount of scintillation to create current for keeping the system on stand by.

In the operation of space reactor, once the concept of energy and gravitational force creation of the reactor is fully understood and deployed. It will be very easy for the operators of the reactor to create a multi layer system without a need for pilling on top of each other hard physical bodies of the inner cores one layer to top of the other.

In these systems what can be done to create a multi layer system, which are not tangible. But behave as tangible physical boundary. That is due to high temperatures and pressures which this reactors are operating under. The vapour of let say iron and nickel or other materials which they composition will create the desired effect for that part of the reactor. These materials are feed in the right position and right atomic weight mixture. That due to pressures and the temperatures of the heat generated in the center of the inner core. These layers will behave like hard boundary.

Thus the next layer of gas mixture to achieve a new dimension from the reactor could by introduced in the boundary of the outer core.

This technology will be use full in the operations where the interaction of each layer with its neighbouring layer and in its overall effect in the core is fully understood.

The multi layering of this sort is the foundation of the design and the operation of the non- tangible computers of the future. While the computer physical body will be embedded within plasma containment rather then a physical tangible system.

These they of reactor are prefect system for transmutation of element, which they do with no need for a physical containment. These are being like crafts and so on.

In these permutations of reactor the physical body of a man can be transported to another dimension through magnetic plasma, which can not inter act with its surrounding.

The speed of transmutation is so rapid that the final destination for the matter has to preprogrammed in the design of the carrier plasma creation control system.

Through this method of development of multi layer reactor speed of light and the weight of the matter are e-relevant. In these systems of plasma containment the transfer of matter is so fast, that the matter will behave as dark matter or invisible to any system. Until the internal operation o the system reduces its plasma configuration that the plasma will come detectable or visible to a naked eye.

This system is and can be achievable only when the whole and the real concept of the creation and control of dark matter in the magnetic field dimension of existence of force are full understood. The dark matter is a full working atomic element in the universe. The only for its absence of appearance to a naked eye or present system is the lack of understanding of the its energy level in absence of strong enough magnetic field for the matter to manifest itself to a system.

When through development of the cold reactor technology of this system, one can create the matching atomic structure in a reactor. Then the rest of matters in the universe and their operation and existence will be come like the visible matter in the naked eye.

To put it correctly, that is to say that dark matter can be detected in their own energy levels of existence if and when understand this level of atomic structure and their operation within the universal order of matters achieved.

The material for the outer core is best thought to be a metallic matter like sodium (or potassium or calcium or magnesium). This material is used extensively in advanced gas cooled reactor for it cooling properties.

Although highly interactive with water and dangerous, where in this reactor core where it is sealed containment at low pressures, which make it ideal as the material in this core. This material can be directly used for cooling if need be.

Where, the material is sucked out of the core. Going through heat exchangers as in advanced metal cooled nuclear reactors feed through heat exchangers and then feed back to the outer core.

It is important that these withdrawals are done homogenously, that they can not effect the electric convection cycle of the outer core.

Sodium reacts by losing a single electron. Magnesium reacts by losing two electrons. Aluminium reacts by losing three electrons. Losing each electron requires some energy to be put in, so it is easier for sodium to react than magnesium, and easier for magnesium to react than aluminium.

Atoms of sodium (Na) are larger, and so more reactive, than atoms of lithium (Li). Similarly, atoms of potassium (K) are larger, and so more reactive, than atoms of sodium. It follows that elements below potassium in the periodic table should be more reactive than potassium. Rubidium is more reactive than potassium and caesium is even more reactive than rubidium.

In warm interstellar medium containing ionised hydrogen and sodium mixture are very common. The Sodium is the catalyst for initial magnetic creation condition for the creation and the maintenance of the plasma and then the creation of the second magnetic field in the inner core. Where sodium will not interact with the ionised hydrogen but it will allow it to behave as a charged proton due to its charge to create the magnetic field and the subsequent current production weak enough not to disturb the balance of the system. But strong enough to release the energy to the sodium for it to be in motion due to a larger convection system that the magnetic field and the current in the interstellar medium to be maintained.

This phenomenon in this reactor is utilised for the proposes of creation of charged medium in possession of convection capability but without ability to inter act or absorb the ionised matter as sodium is a stable energy metallic matter.

In the interstellar mediums the concentration of ionised atomic hydrogen is in the region of 1-10 atoms per centimetre cube. At the ration of 100-1000 ionised hydrogen atoms per centimetre cube then if any hydrogen molecules introduced or created in this region the creation of new material are likely and can be produced. These materials being Carbon monoxide, formaldehyde, ammonia and various alcohols.

Which these are the essence of the creation of all organic maters and essential to existence of life in any form or shape, and can be recreated in the outer cooler parts of the outer core of these types of double magnetic core in possession of the gravitational field forces essential for creation of the cycle of the organic matters.

By feeding of protons from the plasma through special borehole directly from the inner core into the outer core into sodium for example. The positive charges are introduced in to this section by replacement enrichment method. Where the protons will act as charge particles in the liquid or vapour of any matter in the outer core. In turn helping with motion of the charge particle for the creation and maintaining the magnetic field and current in the outer core.

This method of replacement charges from the inner core plasma is one of the corner stones of the second magnetic fields creation and control.

One important factor in the design of these types of reactors is that it has to be recognised that the effect of the Extreme Ultraviolet is only come to play when there is a vacuum condition within the reactor core. This is the phenomenon, which can not be over looked.

The main factor of the creation of ionisation and unusual outcomes from the catalyses effect of for example argon with ionised hydrogen can and is only made possible in the total vacume condition. Therefore as better vacume conditions are created and maintained during the operation of the reactor in the cores, the better results from the EUV (which is introduced into the core by scintillation material) interaction with hydrogen can be achieved. The vacume condition in conjunction with magnetic field become catalysis for the long duration power production of these types of reactors.

Heating of the gases in the center of the core, due to ionisation of hydrogen atoms is one of the reasons that the core temperature is maintained or increased.

Due to design characteristics of this reactor, the other fundamental heating of the core gases will appear due to the magnetic reconnection of two cores.

Heating due to this effect will play a significant roll in any operational disciplines of these types of reactor.

It is paramount to notice that it's not only the magnetic reconnection of the two cores, which effect the heating and the current production.

At the same time the magnetic reconnection between the atoms and the molecules of the gases with the magnetic fields of each core or both cores will have a substantial effect on the operation of the reactor too.

As the magnetic reconnection is at the atomic and molecular level at the same time, this will allow direct energy transfers in both direction for the gases to carry each others energy and magnetic fields at the same time and concurrently.

What this means is that the magnetic field of the molecules will carry the magnetic field of the atoms and the atoms being at weaker strength will collectively carry and allow the magnetic field of the molecules to carry them within their confinement of the magnetic energy field.

What this means is that in reality the physical tangible body of a mater is not needed to carry an atoms or molecules of an object. But if the magnetic reconnection between the carrier and the carried is established there are no need for the hard physical contaminant vessel to carry one atom or atoms and even collections of molecules and even an object.

If, the two magnetic fields of the carrier and the carried could be reconnected that they behave as one. Which is the strongest filed and then disconnect at given point and place where they need to separate. This allows the creation of magnetic plasma transportation without the need for the physical contaminate.

The creation of such plasma in possession of magnetic field, which can reconnect with any element, is very simple. For it is the plasma that needs to carry changes which due to turbulence and matching magnetic field of its proton and electron can create the powerful enough magnetic fields that can behave as the magnetic vessel.

Or within the reactor plasma conditions are created that the physical body of the rector is independent of the plasma but it uses the magnetic powers of the plasma to become and act as the solid boundary for the plasma. Where the plasma can be sent from on point to another through universal magnetic reconnection field strength and upon arrival at the destined point the outer plasma reconnection with universal magnetic reconnections are disconnected and the physical core of the reactor become the container of the plasma and its content once again.

This type of transmutation of element will have that advantage that the element in the plasma reconnection environment will be independent of any gravitational file forces which might be on the path of it motion.

What this means is that the body in the plasma will not be effected by the universal gravitational forces while the plasma is motion as the plasma only reconnects at molecules an atomic level which are independent and can not be effected by the weaker universal orders of magnetic fields or gravitational forces.

By feeding of protons from the plasma through special borehole directly from the inner core into the outer core into sodium for example. The positive charges are introduced in to this section by replacement enrichment method.

Where the protons will act as charge particles in the liquid or vapour of any matter in the outer core. In turn helping with motion of the charge particle for the creation and maintaining the magnetic field and current in the outer core.

This method of replacement charges from the inner core plasma is one of the corner stones of the second magnetic fields creation and control.

Where the proton from the plasma in entering the outer core will take after motion and reduction and by losing its energy to the sodium, it will reconnect with the loose and available electron of the sodium. Itself becoming the atomic hydrogen, which is then gathers on the outer boundary of the outer core which then can be feed back into the inner core as the fuel, leaving a heavy metallic isotope of sodium, which through its motion in the outer core this will lead further to the magnetic field strength of the outer core.

There is a possibility of proton replacement and lining with the proton into electron and neutron. Where electron will take the place of the lost electron of the sodium and leaves a neutron, which can lead to further complication.

Where the neutron and will link up with the atomic hydrogen creating Deuterium. This can be feed back into inner core of the reactor at high temperatures in presence of strong magnetic fields created by two cores.

This leading to creation of the illusive fusion chain of reaction if need be. Which makes the system totally self sufficient

This type of sodium heating in conjunction with atomic hydrogen has been extensively observed and its effect been noted in the spiral warm ionised medium or diffused ionised gas in the interstellar medium. But never has been possible to replicate it with in a system.

Computer simulations have predicted the role that sodium or magnesium can play in first stage of heating and fusion creation of stars. But to this moment the principal role of the sodium has never been explained. Through the design of this reactor and specific choice of maters fusion through this method is possible.

Where the temperature dependence of the fusion to cross the coulomb barrier up to now considered being essential, for creation and maintenance of fusion has overcome.

Therefore fusion of atoms of any matter with its own species or its own isotope becomes totally a routine matter, then the present difficulties of creating fusion.

Using second chamber for ionisation and then creation of fusion through metallic atomic gaseous and feed of plasma will be the normal operation for the production of Fusion State at low temperatures.

This the ultimate method of creation of the double magnet iron molecules of 113-115. Which is necessary as the catalyst for gravity and antigravity needed for space travel without use of fuel and just operating with in the gravitational and magnetic field forces of galaxies, stars systems and interplanetary systems.

Where higher and fast heating of the core, like in fusion condition. Then the choice of the material for irradiation of the liquid helium or neon changes altogether. Where, this irradiating source should be of the type, which can create maximum and strongest extreme ultraviolet to maximise the amount, Hydrogen that could be rapidly ionised. That rapidly high temperatures of the plasma could be attained in the core through H. In this case the choice of the cores gasses changes again. Where maximum amount of H and He will be in the core initially, with equal layer of argon as catalyst for release of energy for rapid heating of the plasma.

In this reactor then neon as thermal, krypton as radiation absorber and large amount of xenon as neutron absorber in the chamber is a good option. But when fusion temperatures are attained then the mixture could gradually be changed so the core could become a total fusing chamber. So the fusion starts in the center and then its volume of plasma is allowed to grow under controlled condition, to the maximum limit of safety of the operation of the system.

It has to be noted that fusion is a dream for energy production. But it will be used in the future only for material production and not energy production.

One does not need to create vast amount of heat to create energy for turbines to work. Or tap into the direct current from the core.

The same effects could be achieved with manageable and practical temperatures of the plasmas of below 1000 C°.

But hear the system how to reach fusion is shown for the ones who are intoxicated with this dream.

Once 1000 k region temperatures of plasma in the reactor are achieved. If, strontium vapour is injected into the plasma! This has proven to lead to creation of EUV in conjunction with presence of the hydrogen and argon gas.

This effect can be used to circulate the strontium in the chamber once the entail heating for energy production of about 700 C° in the center core plasma is achieved. Where there would be no need for the further continues injection of irradiated He through center column.

Strontium in the presence of Argon gas and availability of hydrogen atoms or molecules behaves as catalyses, which will lead to the creation of EUV needed for the ionisation of Hydrogen. Once the other hydrogen atoms, which have given up their energy to argon, gas. On the way back to the hydrogen region of the core due to vacuum principal and centrifuge at this point of the operation. Once hydrogen atoms reach the ground level. Hydrogen is re ionised to create further heat.

This method of ionisation by EUV and energy sustention is favourable for long distance space travel or power generation with a long term operational capability and large current output out put. Where large amount of energy for large craft for heating, shielding and other usage are needed on long term. Where He does not to be needed as EUV source. Unless, He is used as the extinguishing or cooling material in the reactor core under high magnetic pressures condition

Some answers to questions, which has resin during the preliminary design stages of the reactor.

Please note that in the following pages not only answers to the questions raised are replied to, but also at the same time new features and especially new techniques for the future developments of other usage of the reactor applications are explained. These intellectual rights are under the protection of the agreement signed between two parties.

These questions are and have to be answered in appropriate order and for the purpose of the applications.

It has to pointed that the reactor technology paper reference NO 1/2716719.5.05167 is an overall design for deferent applications of the reactor system as is submitted for patent.

Thus covers more information then the scope of the energy and gravitational experimental reactor.

In relation to preliminary development of energy and gravitational experimental reactor some of the questions raised in the above reference are not applicable.

1. This is in centrifuge condition.

2. In the above paragraphs of this page are stated that in this reactor one is considering vacuum condition. This statement is made in context of this knowledge and in centrifuge and vacume condition.

3. 99.5% - 99.9% for all gases used in the core.

4 Yes.

For the purpose of the experimental reactor each gas layer will have its own reveres tank. Where, the level of the pump can be adjusted for each tank in relation to the inner core vacume level. In the experimental reactor for the energy, the reverse tank is connected through a reversible valve between the inner core and the reverse tank.

Where, the valve will operate as the separator for the core and the reveres thank at the same time. Depending up on the vacume condition of the cores.

The reveres tank has a separate valve for venting if necessary to release or add gases to the inner core.

In the experimental reactor, one single connection to work for evacuating and feeding the gas into and from its own reveres tank. For example to measure temperature or remove some gases to change the operation mode of the core. Then, if necessary, to increase the volume of the same gas in the inner core. The connection for venting can be used for adding predetermined amount of gas in to reveres tank if need be. Then sealing the venting valve. Then opening the duel valve to allow the additional gas to be sucked into the inner chamber. The same as it was done when loading the core originally.

5 In case of cylindrical core, without turbulence this assumption is correct.

In the spherical core this does not hold. As gases are staked on top of each other than one gas along the full length of the center column as in the cylindrical core gas centrifuge systems. So each gas has and maintains its own pressure in its own level and space in the core encapsulated by the heavier element above it.

The closest borehole to the center of the core, is at He level and a distance from the center. Therefore it maintains its own individual pressure level.

One can not find a cylindrical planet's in the universe. So the core has to be spherical.

6. In the documents about notes of the reactor. The implication of the existence and operation of circulation pump for change of the speed of gases in each layer to achieve enhancing or dimensioning certain properties of the reactor is well explained. This pumping is done through a separate channel. The same as the boreholes on the other side of the central column.

It is important to notice in the condition where the pumping of the gas is carried out. The borehole will take the position of the inlet for the gas at any level and the parallel hole in the same level will be the out let for the gas. The speed of the pumping is one of the main attractions of this reactor for other purpose of the creating different effect from the core.

The speed of electron as charge particles in a magnetic core created due to turbulence in heated plasma which is in rotation creates magnetic field. This phenomenon is well documented in regard to the inner operation of the Sun magnetic field research papers.

7 In the experimental reactor, any cooling are advised to be done by use of gas cooling system.
In any case in the gravitational production system mode, is not envisaged that there should be any electron heating in the outer core.

The heat will and should be due to convection heating of the outer core gases or material of the choice. In this case gas cooling like $CO_2$ should be a more efficient method of removal of the heat.

The heating of the gas has to be handled inside the outer core outer boundaries by use of appropriate gases as insulation and/or for cooling. Gases like neon and krypton will provide this adequately for normal operation of the reactor. Bearing in mind that creation of the magnetic field in the outer core in gaseous condition is not high temperature operation dependent.

1 Shape Of the core has to be spherical.

2 The experimental core size of 50 or 25 cm radius has to be functional.
This is a practical size to start with. Where any variation in the gases volumes can be accommodated.

3 In the reactor technology paper different materials for the cores are suggested to cover all aspects of the uses of the core for patent purposes.
For the experimental core the advisable core material could be ferrite with, nickel cadmium mixture at about 2.5 inches thick. This is a good magnetic material. Which can enhance the magnetic field effect of the outer core. Thinner core configurations are more desirable if safety for the experimental reactor allows.

4 The core dose not need to be magnetic for the start up condition.
The magnetic field necessary for the start up for the experimental reactor and in most cases is and has to be at the hydrogen region.
That is why the position of the magnet is clearly indicated in the ref 1/111.6.051 on the tip of the central column and only in the Hydrogen region.
This section can be extended into the He region too.

5 Material inertness of the core can only be of a major concern in the certain extreme operational modes.
For the experimental reactor due to shortness of the duration of testing this should not be of grate problem.
Copper coating for the inner core if seen necessary should be adequate. The thickness of the coating less then 1-mm is considered to be over the safe side.

6 The diamond coating is for special use of the core.
This is advisable for example in the fusion, space-shielding mode of operation of reactors.
In the experimental mode this is not deemed to be necessary.

8 The shock wave of the scintillation due to rotation and the magnetic field operation from the inner core will never reach the boundaries of the core during the operation.
For safety reasons the 2.5-inch thickness for the inner core was adopted. This core in reality has to be very light. In the experimental reactor core, for safety reasons due to unknown factors! Which might effect the pressure and temperature and the vacume conditions. Which might occur within the inner core during test run such a thick material is considered.

This might and should be revised prior to the final production. Up on all safety aspects of the core and its operation are determined and satisfied.

1 This has to be put in context of the choice of material for the outer core. Where the circulation of the matter impregnated with free electrons or metallic molecules will create the magnetic effect.
This phenomenon has been defined by scientific world up to now to be the creator of the magnetic field force of the Earth.
2 There are certain constrains in the development of this magnetic force. One is the principle of the speed of the cooling on the outer boundary of the outer core.

The second constrain which plays a crucial and important part in the control of the magnetic field strength of the outer core. This is considered to be the speed of the rotation of the convection gas region, due to the speed of the rotation of the inner core.

3 Using a variable control system for the speed of the rotation of the core.

The system starts as a centrifuge system.

In operation mode when the system is heated and the magnetic fields of the inner core and outer core interact.

Then, the speed of the core will be determined by the parameters in control of these fields and not the operation of the centrifuge system. The gas separation and infusion will go through a resettlement phase after a short while. Then the system will settle down to its normal operational mode of speed.

This speed could be and should able to be interfered with if the output characteristic operational mode needs to be changed.

This, for example, when the system is on standby or fixed operation and it needs to be taken into full operation.

So, with the appropriate injection of scintillation material and appropriated increase in the speed of the motor. The required condition is to be reached and the function of the rotation of the core is then left to the induced parameters. Which is to maintain the mode of operation.

4 This does not apply to the experimental reactor.

This is for rector needed for fast operation and high temperature modes. Where irradiated material of the choice can create or release gamma rays in the core. Or, other radiation effects. Which dislodge neutrons from the nucleus of the He. These neutrons need to be captured by Xenon.

In experimental reactor this condition is literally unforeseen. Due to the choice of the material as the irradiator source. Which can only create scintillation in the maximum extreme ultraviolet region of the spectrum.

Copper is considered to be one of the best materials, which does not interact with most of gases specially the inert gases. So the choice of copper as the coating gives the advantage that the Xenon or any other gases in the core during operation will not be able to come in touch with ferrite composition or any other martial of the inner core. Which this might create other reactions in the core. Or even might effect the performance of the magnetic field of the outer core.

In certain operational mode and not in the experimental reactor. Where, the oxygen can enter the chamber through impurities of the gases. Oxygen will react with the hydrogen at certain temperatures. Which can lead to creation of condensation on the inner side of the inner core.

This is a remote possibility but it has to be considered as a risk factor in those operations. Where the speed of the core is not at centrifuge speeds. But, at gravitational speed, where droplets can form at low temperature of operation! Where the temperature of the core is not high enough to evaporate the water droplets in to the steam. Then water droplets become a problem. This will be considered in the medical use aspects of the reactor.

Where low temperature operation is dominate characteristic of the reactor.

For experimental reactor range of temperatures operation, this is not considered to be important.

1 The function of the this core is to create the condition to absorb heat from the inner core then using its constituent material through convection to create the magnetic field force for the containment and magnetic pressurisation of the plasma in the inner core. This method of creation of magnetic field is well known in relation to the behaviour of the inner and outer core of the earth.

2 The shape of the outer core has to be Spherical. This is due to the fact to create a homogeneous magnetic field in the inner core.

3 Due to the volume to size ration. The outer core could be from 15-25 centimetre. It has to be remembered that the ratio between the size of this core and the scintillation needed in the inner core.

That is to say if to create a larger diameter the convection cycle will never be completed. So to create and maintain magnetic field with bigger diameters will create problems for the operation of the reactor. Even though using metallic gases as the material. Where increased amount of ionisation in the chamber has to be deployed to achieve the same result.

4 Material for the experimental reactor for this part it preferred to be gases like argon gas. Impregnated with electrons or gaseous metallic material. Where convection at low temperatures with loose electrons and due to rotation of the inner core can create the current and the magnetic field necessary.

Or consequently low temperature melting liquid metals like lead could be used directly in this part. Where lead at low temperature will melt and by losing its heat through convection to the outer bounder of this core will create the same effect of creation of the magnetic field.

The first type of option is more practical for control and efficiency.

5 This dose not need to be magnetic but has to have the characteristic to create molecular magnetic condition.

6 Inert gases with ability not to absorbed electrons are the best for this part. These are like neon gases and upwards. Argon dose not absorb electrons but as catalyst reduces their energy and presenting it as heat in the core. If presented with ground state electrons will carry them as floating object. Where there are no other molecules to absorb them.

7 Coating for this part of the reactor could be copper for the experimental reactor.

8 Thickness of this core is totally determined by two factors.
One is the amount of heat necessary to be allowed to be collected on the outer side of the core if need be.
Secondly the thickness of the core walls can stand the sudden dislocation and sudden interaction of the loss of balance of the core. Than, the consequence of the heat by the full inner cores operation or shrapnel from the shattering of the inner core. These parameters are well calculated by the manufactures of centrifuge systems.
As this is the outer containment of the core. The thickness will or can be as thick as five inches if safety to be the major issue.

9 Pressure in this chamber is and can be atmospheric. There is no scintillation in the outer core for the experimental reactor.

10 Outer boundary temperatures of the core are to be at room temperature. This can be achieved by use of appropriate cooling internally in the core. Secondly by the control of amount of heat that reaches the outer core from the inner core of the reactor.

11 There are no constrains on the function and the operation of the core of this experimental reactor.

1 The central column is to function as a feed and control and collector of current.
In the experimental reactor the central column head will be placed on its tip a strong magnet. This is only on the Hydrogen level. The shape of the magnet is the same as the rest of the central column but with sides cut into it. This is a deliberate ploy to create the North and South Pole effect.
For safety aspects the magnet is preferably to be long. That could be screwed at above He level in the experimental reactor to the main central column. This is to avoid any embritllment in the two lower levels of the gases, due to unseen gaps in the interfaces of the two parts.

2 The shape of the central column is long and cylindrical. Positioned in the center of the core.
It has one central column hole. Which can carry the ionised gas into the center of the core. This is good enough for the experimental reactor.
In the more advanced system. The ionised hydrogen will be feed directly into the reactor core, rather than the feed of the scintillation material. In these system only the volume of hydrogen needs to be kept constant in the core.

3- 4 It has to be remembered that passing the initial loading condition of the core. The central column has only the function of control and feed.
The amount of gases for this usage is so small that a few millimeter boreholes for all purposes of experimental reactor will be more then sufficient.
The thinner the central column the more uniform the magnetic field distribution of the reactor core.
But at the same time it has to be noted that the central column in the experimental reactor if it is made too thin. This will swing loosely in the center of the core. So that the central column has to be thick enough, that it does not swing in the center at centrifuge condition and high-speed rotation.
In the design of advance reactors for the creation of rapid surge in energy or magnetic field and in multi layer system the central column are designed and have to be made to go from one pole to the other pole of the core. Right through the center of the core.
This type of full center column has more advantages then half-hanging column. One of these being that magnet shape and positioning in the core can be moved to different levels of the core in some instances.
The other advantage with full-length central column is the possibility of the being able to pump and withdraw gases in a more homogenous manner in both hemispheres of the core of the reactor. This is done through boreholes in both hemispheres at the same time from the same gas layer.
The full-length central column allows the possibility of more access holes in to the core. For manipulation of the speeds of different gas layers for different outcome effects to be attained from the reactor.

Full-length central columns are not suitable for fusion condition reactor. Where in these reactors a telescopic central column will be the only solutions at high temperature operation condition. Where, solid materials can not stand high temperature operation.

Where the scintillation material will be injected or propelled in to the center of the core at the near boundary conditions. These are explained in some of the note- papers regarding different mode of operation of different types of the reactors.

5 The coaxial is in relation to overall center column center hole and boreholes. In total overall view of the central column all the holes have to be in central position compared to the central axes of the column.

6 The condition for scintillation is pressurised liquid He. When the valve of this chamber is opened. The vacuum condition of the core will suck the material into itself according to natural laws of physics.

7 Outer channels are all boreholes and connected to their own individual reveres tank for the experimental reactor.

8 There are standard laid out for the use of centrifuge systems, that, they have to be earthed properly before operation and connection to any other components. This is a safety aspect. This is a separate issue then electric connection of the reactor as a power supply.

For electrical connection of the reactor;

For safety and practicality purposes! The most practical method of taping into the argon level is through electric boreholes. These are boreholes, which are made through central column.

That is why the width of the central column was considered to be up to 5% of the radius of the core. This is specifically designed for power production condition in mind.

Where, the appropriately insulated wires are passed through the borehole. At one end connected to the pick up brushes to the outside. At the same time connected to pick up point in the argon level in the inner core ref 1/2115.6.051 and 1/2215.6.052.

In the power production systems! By using full central column. This will allow more points to be made in the argon level in both hemisphere of the core.

It is important to note that the half-central column systems are useful for the experimental and medical use primarily.

In space technology reactors half column system is good for the elliptical configuration shielding. Where spherical shielding due to direction of motion in the atmospheric condition is not desirable.

9 It is to be noted that due to rotation of the central column. At the same time due to presence of the magnetic fields in the core environment, there are some currents to be induced in the copper wire by them crossing magnetic fields. But this is not considered to be so important. But could not be neglected either.

10 Ceramic materials are considered to be good enough for the purpose of insulation.

1 Central column coating is the same as the rest of the core.

2 The same as the core.

3 No pressure difference than the core. The boreholes are open at the point of gasses in the core.

4 Temperature of the central column is considered to be the same as the core at every level of its length.

5 These are discussed in above points.

6 The central column is one piece and part of the inner core. So it rotates at the same speed as the inner core. The magnet on the tip of the column can be made through design to be one piece material as the central column that has been magnetised.

1 Pressure measurement during operational mode is quite important. These were being created due to the injection of the scintillation material to the center of the core. At the same time magnetic field forces exerted by the outer and inner magnetic field force will play an important part in the pressure created and has to be measurement in the core. The most appropriate method of pressure measurement is considered to be. The comparison of the pressure variation with each other of the different borehole gases. This means to compare the variation of the changes in for example Argon level with the pressures of preceding readings in the neon or Krypton level. Or in such a sequence or similar to this method. Then compare the level of the changes with the preceding data. Or do the same with the same gas level.

The pressure measurement is done in the reverse tank environment area. Where the balancing pressure in the tank minus the pre-opening of the valve will give the pressure reading in the given gas level. It has to be reminded that the individual reverse tanks in the experimental reactor are fairly small in size.

2 Location of all measurement instruments are away from the core and in the reveres tank region.

3 Type and the range of these to be considered at the point of production of the core and the operation constrains and safety limitation of the core.

4 Accuracy and tolerances for the gauges are to be define up on final decision of the discipline of testing and operation mode.

1 Embritllment is not considered in the experimental reactor to be of concern. As there are no crakes or welds in contact with hydrogen or helium gases layers.

2 There are no possibility of radiation leakage in the experimental reactor.

The only possible irradiation is if material from the scintillators radioactive compartment reaches the inner core.

Even in this case, as long as and until the vents in the reveres tanks are not open to vent the tank. There are no possibilities of contamination.

Even if the radioactive material reaches the inner core. Due to its weight, this material will sink to the bottom of the core and will seat there. At this point the reactor is a totally lost and has to be disregarded.

Radiation detectors have to be in place at the valve before the entry of the scintillation material released into the core.

In the experimental reactor radiation measurement can be done through the flow of the gases as they enter the reveres tank for any radiation contamination which might be occurring in the core.

3 - 4 There is absolutely no possible chance of radiation leakage during normal operation.

The most remote possibility is that the scintillation system leaks. Then the inner core dislodges itself. Then the inner core is cut off at the central column. Then /or the inner core shatters. Then these shrapnel's penetrate through the outer core causing leakage.

Then at this point a critical failure accident sequence has taken place. Which even then in the experimental case the reactor is lost. The amount of the radiation contamination will be equal to the amount of the radioactive material in the scintillation system. Which is insignificant in mass. But at the same time can not cause a large-scale unmanageable radiation accident. Therefore any radiation leakage precaution to be taken. Has to be how one can handle the total irradiation material source if things go totally drastically wrong.

5 There are no possibility of excessive temperature at the outer core boundaries. The temperature at the outer core can only be generated through the operation of the inner core.

If! There is a sudden surge in temperature of the outer core. Which is measured constantly at the outer boundary of the outer core. Through normal temperature measuring gauges.

The simple solution for this condition, and/ or any other runaway case of the operation is to, built-in the system safety parameters and first step for any emergency aborting operation of the reactor. This has to the total shutdown of the feed of scintillation He into the inner core.

6 Explosion in the experimental condition can be a possibility. But due to vacuum in the chambers implosion is a more possibility. But safety monitors for shutdown is always in operation.

Lose of the core due to explosion due to pressure and temperatures serge in the experimental reactor with built-in shutdown parameters is absolutely zero.

The safety barrier is the body of the outer core and the outer core in copulating compartment of the whole reactor. BUT NEVER SAY NEVER!

7 lose of reactor will most probably will be as usual by the malfunction of the valve in the scintillation department.

Or due to computer program control malfunction or error in the feed and pumping of the gases of the core of the reactor.

8 Outer core breakage is possible due to loss or shrapnel from shattering or off balancing of the inner core at the start up.

It will be interesting to connect the inner core through a shaft to an electric motor attached to the bottom of the inner core. Then do the testing of the start up condition for inner core operation only. Where there are full control of the operation and rotation in open environment. Then after collecting all the data planting the inner core in the outer core (as originally devised) position of a centrifuge condition. By this method all irradiation tests and heating could be clearly define and tested.

Then the second phase would be to place the same core in the vacume and centrifuges of the outer core to evaluate the two magnetic fields of the outer and the inner core effect. Then the consequent double magnetic phenomena and additional current production could be observed.

1 In the experimental reactor there is no possibilities of neutron release. Therefore there could not be Xenon poisoning.

This happens only if highly radioactive is chosen as the material for the scintillation source.

Such material is not to be use in this reactor and so it is impossible to have such effect.

Xenon poisoning is the <u>possibility only in the fusion condition and especially for the production of 113-115 material.</u> Where, the extra neutron is used for the catalyses for the jump to double magnet molecular state. This case is absolutely irrelevant in experimental reactor for energy and gravity production.

2 Hazardous vapour will only be if mercury is used in the outer core as the material for the condition of convection. If mercury is not used there are no vapour hazards.

3 This is part of defence technology operation mode of specific condition that if this happens in experimental reactor will only be capturing electrons within the bobble.

4 With the choice of a thick wall for the inner core. High enough margins are allowed to operate within the reactor operation safety mode before having to be alerted.

The pressure and temperature margin of higher magnitude can be expected with full control of the feed of the scintillated He into the core.

1 pre-determined volume of gas according to the operation discipline adapted prior to the test for specific condition. Gas pressure at atmospheric level should be adequate.

2 This applies for line too. In the experimental rector the valves of the reveres tanks of all gases could be left open, that the whole system could be cleaned.

4 Due to vacuum and centrifuge, particles will separate according to their atomic weight.

This method of clearing is procedure for very pure condition of operation for small or highly homogenises magnetic core conditions. Where absolute purity of gases are paramount for correct magnetic energy fields (like in system for cancer cells). Where three boreholes for each layer of gas is made in the center column. This to cover the top, the middle and the bottom of the gas layer. Where, impurities can be taken out from in between layers of different gas. In the experimental reactor as we use 99.5-99.9% purity gases. There is no need for such a cleaning procedure. Where, the single borehole in the experimental reactor for one layer of gas is replaced instead of three boreholes.

5 Scintillation of the He takes place in high-pressure chamber. Up on opening of the valve to the main core. Under natural laws of physic the material will flow from high to low pressure region. So the scintillated He will be sucked into the inner core which is in vacuum condition and lower pressure.

The amount and duration of scintillated He in the chamber in contact with radioactive material is all predetermined. One of the factors determine the amount of He is very much dependent on the performance required from the reactor.

In the smooth operation of the reactor condition the feed should be in regular measures and intervals. So, that the ionisation level is kept constant within the reactor core. At the same time the regular pulse feed creates the turbulence necessary for the production of inner magnetic core.

A porthole in the central column, that has been specifically positioned to be at the argon gas level of the core. In the normal condition of operation of the core, the speed of the rotation of the argon gas due to its ability to capture and maintain a level of electron determines the magnitude of the current from and in this gas. As the gases are in state of rotation and turbulence in the core. Which is under its own pressure due to ionisation of hydrogen.

This turbulent flow of electrons within the gas will create its own magnetic field, very much like the rotation of argon to be the rotor in the current, creating its own independent field.

One of the most important characteristics in the design of this reactor are its porthole access to each gas layer according to the specific demeaned from the core to attain certain effect and function for the reactor.

It will be come apparent during the course of the development that the pump porthole system is the fundamental control toll in operation of these reactors. Where each gas at its own level could be independently be reduced in its volume, speed and/or feed of certain materials.

For the system to achieve a particular effect. These portholes are connected to the reverse tank. Where in this tank all is needed can be done to the gases and for it to be feed back into the core through the pump porthole (see refs 1/2110.6.051, 1/1114.6.051, 1/2210.6.052). In some instances for specific designs, gases are withdrawn from one layer and deliberately the same gas is feed back through reverse tank bridge connection at and into different gas layer.

This is done so that the motion of the gas through other regions which attain certain properties to cause new effect in the other gas layer. This principal of technology of this system is and can be used for shutting down reactors which loose their control. Very much like fire extinguisher in the large operation mode of the core. Or when extra neutrons are needed in fusion of heavy elements. Where, gases at Xenon are feed back into the hydrogen level of the chamber. That loosee neutron in this level could be absorbed for the creation of new material. This is done in TOKAMAK rector in the blanketing section outside the core where neutrons are captured to achieve a new material for the further use in the core operation. In this system all these external systems of the past are handled inside the core.

So it is important to learn to operate within a safe and controlled and sealed environment of the core to achieve all properties and effect. Than rather as up to now create waste and problems and then try to rectify them outside the core. As has been done in the nuclear industry up to now.

If need be this is the function of the inner core motor. To regulate as well as increase to decrease the speed of the rotation of the inner core. The speed of the core and its control has direct effect on the creation of magnetic fields.

Thank you for you enlightening questions and hope they are adequately answered and some more detailed design parameters are disclosed for better understanding.

It is important to notice that in the design of the core page 6 of the above reference.

Three important pieces are missing. Which have not been discussed in the design of the reactor up to date. But are essential in the operation and especially in the experimental reactor.

1. The need for extra reverse tank for the inner core. This is for possibility of the using extra matters in the inner core. This could be atomic or molecular metallic matter.

2. The need of the connection of two reveres tanks for the outer core, one for the gas of the outer core. Second tank for the possibility of the molecular or atomic matter for the outer core.

3. Boreholes in the outer core access column as in the inner core.

The tanks access to the outer core and the 2 extra tanks for metallic or other matter injection to the outer core.

The basic energy production is of plasma type.

The fusion is not in consideration even in the foreseeable future for the/ and in the design of this experimental reactor.

This configuration is possible (a stationary central column).

Special magnetic seals for this configuration has been design. Which has been pointed out before in the meetings of the past. If using stationary central column, then the use of the full central column with portholes for each layer gas in both north and south hemisphere of the reactor becomes absolutely a must. This is to attain a uniform magnetic field and ionisation of the gases. The rotation of the central column is the necessary for the full and uniform distribution of the all the parameters of the core working needs and outputs of the system.

The rotation of the central column has/and should have directed effect on the distribution of the LHe and pumping of the gases.

The inner core and the central column are the moving parts in the experimental reactor. The outer core is totally fixed and not movable.

In the design of the inner core and the outer core Ref 1/119.6.051. This is clearly indicated, for superimposed center column to access both reveres tanks for a mix gas outer core outer core system. Or separate access porthole for single feed system..

11. These fines are foreseen for the multi layer cores. Where the inner side of the core of the outer core becomes the inner core of the outer third core. This is where the metallic molten matters are used in the middle core.

In cases of the gases the groves are not used. As these will create disturbance in the gas flow streams.

12. This method of creation of magnetic fields through heated matter which losses its heat through convection. This principal in well documented in the magnetic field production of the outer core of the earth.

In this case due to lower temperatures of the operation the introduction of metallic molecules are an alternative method to achieve the same.

Magnetic field in these cases is controlled by creating the rotation of the inner core in the currents created by the outer core. Then the current production of the outer core in the Caroline core through convection and vice versa. These magnetic forces do not to be so strong. They have to be strong enough to be able to reach the magnetic field of the inner core. That the gravitational forces due to the interaction of these two fields could be established.

Magnetic fields in the molecular levels do not have the same meaning as the solid state magnet. These are needed to be in existence that their overall effect will be so fundamental in the control and operation of the reactor. But their effect has been clearly been observed by astro and cosmologist over decayed.

13. The choice of the matter is dependent on the final decision pending on the operation control and material choice of the other parts of the reactor.

If decided to operate at high temperatures and turbine conditions the metallic is beneficial.

For small experimental reactors impregnated Argon gas is more favourable.

The use for different gases in the outer core can be done in the two or three layer of the gases. Where the multi layer core systems are in use. Where the outer core, itself, it is the inner core to the outer or the third core. That is when the outer core will be rotating like or as in the centrifuge to its outer or the third core. In these reactors each core can and is capable of receiving scint-He directly to that core too.

Neon gas pumping is for medical reactors where low body temperatures but high magnetic fields are to be achieved. This does not apply to the experimental reactor.

The pumping in-line or opposite to rotation direction. This is for specific conditions and not experimental reactor.

This is used in the first stage of fast heating system. Where maximum turbulence is required with creation of localised temperature gradient as prim object and creation of bubbles.

14. This is apparelled research paper only for the energy production in a fixed vacume object. In this paper as the object has been to create plasma using methods, which has already been tried and been known to lead to plasma creation and current production.

The principal difference in the technology of the system which is under consideration, the systems which is under consideration through are simply some fifty years ahead of their time.

The reason for this is that in this reactor, not only is the technology used for energy production but due to its deliberate design. It becomes a gravity system like planets.

This will be proven to be more natural and practical rotary system. The fundamental difference as the title of the reactor paper reads Energy and gravitational reactor. One can not achieve gravity without creating energy. Secondly NO SYSTEM at this moment of time has even come close to understand the principal of the creation of gravity. Let alone trying to replicate it. As it is done in the system under consideration.

The beauty of you referring to this is that, it shows that all assumptions in the design and energy production by M T Keshe are on correct bases. These papers show an independent confirmation to the correctness of the method of heating and power production of the system design in the past thirty years by MT Keshe. This gives strength to the point for rapid development of the reactor as a gravity system. Even different approach to and for creation of the EUV is used through deliberate choice in this reactor.

But please note, uses of microwaves for creation of EUV, this has been considered some while ago for the system. For the purpose of creating soft turbulence within the hydrogen region, helium is needed for the creation of strong magnetic field due to rotation and compression. This was not considered to be appropriate for overall patent application in the technology paper.

It has been said OSRAM part of SIEMENS of Germany is already working on a more advance system of microwave EUV system production lamps.

These are considered to be good for medical version of reactor application.

It is important to notice that within 2005 and 2006. There are some several hundreds of research and patent papers are expected to be released in to the commercial world about EUV and Argon, Xenon as catalysts.

These are the outcome of a massive 10+ billion dollars investment by American government and Japanese companies in computer chip production. Which started during the late presidency of Clinton. For creation of EUV system for the microchips industry.

The report is one of the first of these research papers spines off. Where the powers and EUV of the system is considered to be used for this technology. Which is to be used in lithography technique for new computers technology.

Thanks

The author would like to thank Professor Marc Van Overmeire of VUB for his original recognition of the principal of this design.

The list of references

TURBULENT COMPRESSIBLE CONVECTION WITH ROTATION I .FLOW STRUCTURE AND EVOLUTION N.H. BRUMMELL,N.E.HURLBURT&J. TOOMRE,AP.J.473,494,1996 REF;45

MHD TURBULENCE SCALING LAWS AND ASTROPHYSICAL IMPLICATIONS J.CHO ,A.LAZARIAN,E.T VISHNIAC UNIV.OF WISCONSIN,MADISON WI53706,USA JOHNS HOPKINS UNIV.,BALTIMORE MD21218,USA

MODELLING ASTROPHYSICAL TURBULENT CONVECTION N.BRUMMELL AND J. TOOMRE REF;R1

TURBULENT COMPRESSIBLE CONVECTION WITH ROTATION.II.MEAN FLOWS AND DIFFERENTIAL ROTATION NICHOLAS H. BRUMMELL

HI PREFOMENCE COMPUTATIONAL METHODS IN GAFD TURBULENCE OVERVIEW NSF REPORT 1996 REF 44

DIPLOMA THESES IN THEORETICAL ASTROPHYSICS DR.RALF KLESSEN

NUMERICAL SIMULATION OF COMPRESSIBLE TURBULENCE ASI STRATEGIC IVESTIGATION TEAM DR.DAVID H.PORTER,PAUL R. WOODWARD,S.E.ANDERSON KAREL-HEINZ WINKLER&STEPHEN W.HODSON REF;46

GRAND CHALLENGE APPLICATIONS AND ENABLING SCALABLE COMPUTING TESTBED,S IN SUPPORT OF HIGH PERFORMANCE COMPUTING THE UNIVERSITY OF CHICAGO GRAND CHALLENGE TEAM REF;40 GAFD TURBULENCE COMPRESSIBLE CONVECTION NSF REF 47

TURBULENT,PENETRATIVE,COMPRESSIBLE CONVECTION BY NIC BRUMMELL,TOM CLUNE,JURI TOOMRE REF43

TURBULENT CONVECTION UNDER THE INFLUENCE OF ROTATION SUSTAINIG A STRONG DIFFERENTIAL ROTATION ALLAN SACHA BRUN AND JURI TOOMRE

A LARGE SCALE ENERGY SOURCE FOR FEEDING ISM TURBULENCE IN SPIRAL GALAXIES XIAOLEI ZHANG

SPIRAL GALAXIES AND ANTIGRAVITY BEAMS JOHN G.CRAMER REF 48

INTERSTELLAR TURBULENCE KLESSEN AND MAC LOW REF 41

HELICITY NSO EDUCATION

ON MAGNETIC ENERGY INSTABILITY IN SPHERICAL ATATIONARY FLOWS PHILIP.W.LIVERMORE AND ANDREW JACKSON REF 4

A LARGE MAGNETOPHERE MAGNETIC FIELD DATABASE TSYGANENKO REF 14

SHAPE OF THE EARTHS MAGNETOSPHERE DR. JAMES L GREEN REF 31

A BEGINNER S GUIDE TO THE EARTH S MAGNETOSPHERE STANLEY W.H.COWLEY REF 32

GANYMEDE S MAGNETOPHERE MAGNETOMETER OVERVIEW M.G.KIVELSON

SPIRAL GALAXIES AND OTHER DISKS SEDS ORG

MAGNETISM OF SPIRAL GALAXIES ALEXANDER RUZMAIKIN REF 11

THE INTERNAL RORATION OF THE MICHAEL J. THOMPSON

GIANT MOLECULAR CLOUD INFORMATION THROUGH THE PARKER INSTABILITY IN A SKEWED MAGNETIC FIELD HANAWA.T.MATSUMOTO.R.SHIBATA.K REF 16

ARMD, GALAXIES,SUPRECLUSTERS,AND ENDING WITH THE COMOLOGICAL INVERSE S BACKGROUND SURFACE JACQUES P.VALLEE

THE GALACTIC DYNAMO EFFECT DUE TO PARKER-SHEARING INSTABILITY OF THE MAGETIC FLUX TUBES M.HANASZ AND H. LESCH REF 10 0

GIANT MPLECULAR CLOUD FORMATION THROUGH THE PARKER INSTABILITY IN A SKEWED MAGNETIC FIELD TOMYUKI HANAWA REF 27

M 51 WIRLPOOL GALAXY REF 17 GALAXY.HTML

MAGNETIC FIELD IN 51 BECK ET AL 1996 ANNUAL REVIEW ASTRON. ASTROPHYS 34,155 REF 18

COMIC MAGNETIC FIELD JACQUES P. VALLEE REF 19

ENERGETIC PROTON GERERATION AND PLASMA JET FORMATION FROM ULTRA INTENCE LASER PLASMA INTERACTIONS WITH SOLIDS EL CLARK

MEASUREMENTS OF ENERGETIC PROTON TRANSPORT THROUGH MAGNETIZED PLASMA FROM INTENSE LASER INTERACTIONS WITH SOLIDS E.L.CLARK,K.KRUHELNICK

SUPER INTENSE QUASI-NEUTRAL PROTON BEAMS INTERACTING WITH PLASMA;A NUMERICAL INVESTGATION H.RUHL

FORWARD ION ACCELERATION IN THIN FILMS DRIVEN BY A HIGH-INTENSITY LASER A.MAKSIMCHUK

DEVELOPMENT OF NEUTRON OPTICAL DEVICES HIROHIKO M.

PROTON TRANSPORT THROUUGH SELF-GENERATED WAVES IN IMPULSIVE FLARES R.VAINIO AND L. KOCHAROV

RESEARCH ACTIVITIES THE INSTITUT FUR THEORETISCHE PHYSIK

AN INTRODUCTION TO THE ELECTRONIC STRUCTURE OF ATOMS AND MOLECULES DR.RICHARD F.W.BADER REF 28

ATOMS AND LIGHT ENERGY IMAGINE.GSFC.NASA.GOV REF 29

AN INTRODUCTION TO THE STRUCTURE OF ATOMS AND MOLECULES DR.RICHARD F.W.BADER ERF 30

ELECTROMAGNETISM ELECTROSTATIC ENERGY WWW.MARINIER.CONNECTFREE.CO.UK

FIRST USE OF DIRECT-DRIVE NUCLE FUSION NASA

ADVANCED FAST IGNITION STUDIES ON THE VULCAN LASER-CONE/SHELL IMPLOSIONS P.A.NORREYS K.L.LANCASTER

TOROIDAL MAGNETIC FIELD IN NORMAL OPERATION

SPHERICAL TORUS PLASMA IMPE HTM

SUPER-INTENSE QUASI-NEUTRAL PROTON BEAMS INTERACTING WITH PLASMA;A NUMERAL INVESTIGATION H.RUHL ET AL 2004 NUCL.FUSION

A PROTON ACCELERATOR COMPLEX FOR SPALLATION NUETRON SOURCE AND OTHER APPLICATION YU QINGCHANG

THIN DIAMOND FILMS FOR SNS H. INJECTIONS STRIPPING R.W.SHAW

THE PROTON-PROTON CHAIN CSEP10.PHYS.UK.EDU

NATURE OF THE NEUTRON NEW PHYSICS 2000

MAIN SEQUENCE STARS ZEBU.UOREGON.EDU

POWER FRONTIERS COLD FUSION POWERFRONTIERS

DARK MATTER ASTRON.BERKELY.EDU

DARK MATTER,COSMOLOGY,AND LARGE-SCALE STRUCTURE OF THE UNIVERSE ASTRO.QUEENSU.CA

DARK ENERGY;ASRONOMERS STILL CLUELESS ABOUT MYSTERY FORCE PUCHING GALAXIES APART ANDREW CHAIKIN

NUCLAIR PLANNET

PROFFESSOR GUY MASTERS OF THE SIO.UCSD.EDU REF 24

GETTING TO THE CORE OF THE MATTER BY HOYT COFFEE REF 1

CRYSTAL AT THE CENTER OF THE EARTH WWE.PSC.EDU REF2

CORE CONCERNS RICHERD MOASTERSKY REF 23

PUTTING A NEW SPIN ON EARTH S CORE REF 12 2

SMALL-SCALE MOTION IN THE CORE OF THE EARTH P.A.DAVIDSON REF 12 A

GRAVETY AND MAGNETISM A.K.LAL.THE SPEED OF THE OUTHER CORE OF THE EARTH REF8

ESCAPE VELOCITY BY DONNA CLINE REF 32

MAGNETIC materials DON WILKINS REF 35

THE FUTURE OF AIRBORN ASTRONOMY E.F.ERICSON

INTERSTELLAR PROCESSES RAS.UCALGARY

MOLECULER GAS THE DETERMINATION OF PHYSICAL PROPERTIES AND LARGE SCALE ENVIRNMENTAL EFFECTS SUSANNE HUTTEMEISTER BOHUM UNIVERITY

LIQUIT METALS STP-GATEWAY

LIQUIDMETAL TECNOLOGIES

SDI-NUCLEAR AND PTHER POWER SOURCES FAS.ORG

COSMIC RYS BY RICHEARD MEWALDT

COSMIC RYS PUZZLE SOLVED PHYS.REV.LETT.84.3527

BITTER MAGNET HFML.KUN.NL

MAGNET FACTS BY EXECPS.COM EVERYONE S MAGNETISM FROM PHYSICS TODAYS.SEP 1998

THE FROG THAT LEARNED TO FLY HMTL

SPIN STABILIZED MAGNETIC LEVITATION DR.MARTIN.D.SIMON UCLA DEPARTEMENT

MAFNETIC LEVITATION-SCIENCE IS FUN GEOCITIES.COM

GRAVITATIONAL MAP OF THE EARTH REF 9

PARKER AND INSTABILITY IN A SELF GRAVETATING GAS LAYER CREATER B.G.ELMGREEN PUBLICATION 1982

GRAVITY WAVES UOREGON EDUCATION

GRAVITIONAL INSTABILITIES IN GALACTIC DISKS ASTRO.UMD EDUCATIONS REF 15

## Claims

1. A gravity producing system, method, concept and technology is claimed whereby in a reactor-embodiment (10) with at least one (26) or more (27) spaces (i.e. cavities 11) - possible wise separated by at least one solid (14A), gaseous (14B) or other state layering matter - under vacuum and/or centrifugal conditions - a chain of energetic events is created via a rotative soft or hard magnetic (17A), initiation of a basic ionization of a gas (i.e. hydrogen 18A) or other elements, which then triggers a controllable chain of energy transfers (so called Scintillation) to the next following layer(s) of introduced gasses (i.e. He 18B, Ne 18C, Ar 18D, Kr, Xe 18E), of other introduced elements - which can be all - of the periodic table (i.e. Li, Be, K, Ca, Ti, ... Pt, etc.) and/or their introduced molecule combinations (i.e. a vapor), by that chain of inter-layer transfers several other physical phenomena are caused and created, such as:

   • Compression and decompression inside the reactor chamber,
   • Rotation,
   • the creation and interaction of one or more magnetic fields (i.e. 20 and 21) in the center core of the reactor,
   • the development of heat (40) due to ionization and the magnetic fields and their reconnection(s) by the matters in the center core (also called caroline core (13, 28A, 28C) and the magnetic field in turn created in the outer core(s) (12, 28B, 28D) in the reactor chamber (11),
   • magnetosphere effects (22) of the two magnetic fields of the center core, and the magnetic field of the outer core,
   • the emission of rays up to Ultra Violet for heating up the materials in the core(s) or plasma's,
   • the creation and convection motion (71, 81) for creation of current in at least one core (80, 82) and the single and double magnetic fields which create the fundamental cyclic transformation /retransformation of the gas and/or matter involved from ground-state to excitation-state(s),

   which the interaction between the two magnetic fields, of at least two cores, leads to the creation of gravity and anti-gravity due the creation of the double spherical or other shaped superimposed magnetic fields (20 and 21, 30), and whereby this will cause the rotation (50) of the containment vessel(s) (all 18) of the caroline core , and

      a. the rotation of the inner core (84) causing the rotation in at least one central column in at least one chamber, and the central column (16A) may:

         i. Either turn completely, powered by a power source (15F) that is positioned outside the chamber,
         ii. Either from which only at least one part with magnetic means turns, i.e. the tip-part (51)(in the center of the chamber),
         iii. Either from which only a part with topological means turns, i.e. at least one mixing blade (in the center of the chamber), possible wise covered with at least one scintillating material (16E) unit (15C), or i.e. a spinning ejection mouth,
         iv. Either is completely immobile (fixed)(Fig. 9) but which has on it's surface at least one set of electro-magnets (90) and/or coils which can be activated (92A) or deactivated (92D) - possible wise controlled by electronic means (i.e. a microchip 93) - in a preferred periodical and/or positional way, which - preferable - can change polarity and/or strength (92A, 92B, 92C), that way able to create turbulence in the center core, and/or in other superior cores,

v. Either is completely immobile (fixed) but by which the basic gas and/or matter is pumped in a core by at least one ejection mouth, (called the statistic reactor),

vi. Either has at least one symmetrical or asymmetrical channel in it's tip which can pump gas(ses) from one side to the other,

vii. A combination of previous,

b. The central column (16A) possible wise - but very preferable - has at least one internal channel (16D) (i.e. a borehole 16B) for the distribution and/or collection of relevant gas(ses), matter and/or plasma (23),

c. The central column possible wise can have at least one electrode (17B) - but very preferable several - to collect electric current for transportation (17C) to the outside of the reactor,

d. The central column can have - depending from the type of reactor (i.e. 14A, 14B) and corresponding type of gas, matter or plasma - one or more injection-mouths on different levels, each for another type of gas, matter and/or plasma, preferable on a height that correspondents with the layering position that this gas or matter will have after it's atomic weight and/or the purpose of the injected plasma or matters,

e. The reactor (10) comprises a body (24) that can made of any natural or man-made material or several materials, or in atomic or molecular state - at least made of one part - in which at least one hollow space (11) is positioned, and whereby all relevant parts (i.e. the wall 25) - if needed to be protected (i.e. coated, laminated, painted, etc.) in well known manners against corrosion, aggressive acids, etc.,

f. At the outside of the reactor (10) a number of relevant supporting systems are positioned, such as: pressure-tanks (15A), reverse tanks (15B), turbo molecular pump (15E), gas seals, scintillation unit(s)(15C), electrical brushes (15D), heat removal chamber, valves, pumps, tubes, closing means, measuring means, control sensors, engine(s)(15F), gears, power-source, electrical components (i.e. fuse), computer(s), IC's, etc. ,

and whereby after the initial mechanical rotation (i.e. at 3,000 rpm) and/or electromagnetic triggered rotation the internal rotation (50) will be continued due the interaction of the magnetic fields involved (self-sustained process), in correspondence with one of more core-layers and their containment, and possible wise one of the reactor concepts may have one of more of next specifics:

g. The central column may be mechanically withdrawn (52) if the internal interaction goes after wish, and can be repositioned inside the chamber if there is a need to collect current, to add new gas(ses), matter and/or plasma, and/or to adapt or correct the balance of the lower or higher volume-ratio of the matter and density,

h. The central column will have on his tip (53)(central position) at least two magnetic means (54) of different pole, but preferable several sets which can be ring wise or polarity faced wise and sized positioned above or next to each other, and on the top of the column tip one magnet, either in polarity strips (95) or as a single body,

i. The central column may be treated at the inside and outside surface by radioactive material (16E)(i.e. liquid, solid or a spray), or materials which can radioactively decay, or by fixed methods of scintillatizion like microwave lamps,

j. The reactor has more than one column, one (91) with it's tip positioned in the center area, and at least one (94) with it's tip on a different level, but separated from each other,

k. At least two central columns (fig.7) are positioned opposite to each other, either creating a similar rotational effect, either creating a conflicting rotational direction,

l. The reactor body contains at least two separate hollow spaces of identical or different dimensions,

m. The reactor body contains at least two separate material cores (i.e. by a wall-layer 14A), a larger encircling a smaller, and each may have a proper internal independent process, and magnetic interactions may occur between their magnetic fields, and matters may be exchanged between physically separated chambers (28C and 28D) by connection means (58),

n. The reactor can be connected by connection means with at least one other reactor, either of a different type, dimension, concept, either identical,

o. In an external container (15C) - outside the chamber - at least one scintillating unit (i.e. made of partially of Cs137) is available which will have a normal radioactive behavior or his natural decay inside or outside the chamber,

p. The reactor having either a solid structure (10), either a dynamical structure and being able to adapt it's structure after, (i.e. the internal pressure and temperature), and being secured by magnetic seals (16C) and/or fields,

q. The reactor core can have several overall shapes, such as: perfect spherical, elliptic, half-circular, etc.,

r. The reactor wall (25) and/or material core wall (29B) can have locally or overall several topological shapes, skins and/or furnishings, such as: perfect smooth, dimpled, grooved, triangled, etc.,

s. A material core (29B) can be surrounded by conductive wires (i.e. copper) or bands which can create additional Alternating Current, which can be superimposed on the Direct Current(s) which are created within the core,

this results in a completely new type of dynamic energy-source and energy concept which also implies the control over local gravity, which brings a large number of new products and applications, such as:

t. The creation of gravity and anti-gravity,

u. The creation of internal heat source_leading to creation and the interaction of two or more magnetic fields, leading to creation of gravity, shielding and current production in alternating or direct or electrovolts levels, used in the space, aircraft, and submarine, sea-bottom habitat, liquid habitat like in a container tank or for nano technology in blood vessels, colonisation crafts and colonisation systems (i.e. cocooned atmosphere conditions on a sea bed, beneath surface or on surfaces),

v. The same as u. but now creating at least one extra layer with a magnetic field rotating in opposite direction to at least one other magnetic field, within at least one core or outside the boundary of the system, creating in example a impenetrable field and useful for reentry or exit of atmospheric conditions, or for laser-like effects of co-existing magnetic fields (i.e. surgery, cutting tools and long-distance communication),

w. The production of energy via soft fusion (i.e. cold and warm fusion),

x. The production of plasma due the creation of gravity at molecular level between two magnetic fields (41, 42) (62, 63) of two cavities or more in a system for creation high temperature plasma in fusion industries (40),

y. New concepts of batteries, lighting devices (i.e. transparent reactor-housing, light-bulb, floor light, wall light and flood-light, etc.), security products (i.e. traffic lights, sensors, water purifiers, etc.) and industrial and household devices and apertures, like water-production machines,

z. Heating and drying devices,_the use of energy production capabilities for creating heating like warming the surrounding maters, like in boilers and heaters in the house for central heating systems or individual heating systems, and warm blanketing, using as boiler for warming up or boiling matters like liquids and malting solid materials, for use as drying system like hair dryers for industrial or commercial drying system, or heating oven, or stove or cookers in the house appliances, or grilling of food appliances for private or commercial or industrial use,

aa. Cooling devices due the reverse gravity magnetic field generation system(s), where the system will absorb heat from its surrounding, to cool its surrounding for use in the air-conditioning for buildings and cars, and crafts or any object which can carry any other object, refrigeration systems of any kind , production of ice or frozen state of any material or matter,

bb. The production of new materials in and outside the reactor chamber under specific magnetic and/or gravitational conditions (i.e. directional nano growth, the welding of atoms and molecules, etc.),

cc. Atom creation for human or animal or plant cells, where the micro gravitational field in presence of magnetic fields in one or more magnetic fields created in the center of the one or more cavities will allow magnetic fields above dark magnetic levels to manifest themselves and cluster together to create the nucleolus of the atom and in use of multi layering, then the electrons are allowed to manifest themselves, and these processes can be continued for leading to production of molecules, and base material for the DNA, where specific energies or magnetic fields are inserted leading to creation of the right characteristic of the foundation of the any cell or organs or creatures,

dd. In space refuelling and accessing new material for food or oxygen, or parts will easily done, simply by retracting basic matters in the cosmos soup and using this method in conjunctions with atomic welding methods, all maters on continuous bases can be produced or manufactured as demand arises, so there are no need for huge inventory to carry, one produces in the core as what it is needed at that point of space and time,

ee. Gravitational devices which can move without contact with a carrying substrate (i.e. earth surface, sea, air, etc.), such as gravitational lifted transport devices, lifters for heavy products, wheel chairs for able and disable bodies, the push chair for children , or elevators in building, the use of hollow center loop fitted with rotor blade of any kind for the manufacture of current, for sky or water board , sliding board for play where the board hover, for movement large objects, this being for automotive or commercial vessels, trucks and trailers or shipping over liquid or solid bodies from one continent to other or planets or solar systems and galaxies, for use of cycles sliding over surface, craft which can fly and have magnetic shielding and gravitational force field inside, for railway like system where the object of any size or length can flout over the track, use in the fork lift and crane and platform lifting of an object of any kind and size in industry for lifting objects or liquids to any height, for the use in the gates and doors which will elevate and levitate or revolve by use of antigravity and vice versa, tables and chairs, beds, furniture's of any kind with or without legs or attachments to the physical surrounding, shoes for walking,

ff. Inter-terra development and exploration (i.e. transport tunnels and hollow habitat spaces by rock melting in deeper earth and planet layers),

gg. Transforming units for the decomposition and recompositions of waste and old products in new basic matter and materials or specific combinations (i.e. plastics),

hh. Products related to the creation of double or more magnetic fields superimposed (30), at least two, and fully in circulating each other in layers, on top of each other for multi-layer shielding of an object, where at least one magnetic fields can rotate in one direction or at least one rotating in the opposite direction to one or more fields, like for the use in submarine or space craft industry, Air- and space transport systems and devices (i.e. with magnetic shielding effect with creation of imposition gravity) and non-air-friction-systems, products for welding industry, this being material or atomic welding or molecular welding,

ii. Electronic devices and components (i.e. computers, scanners, etc. with 3D-dynamische layers), nano-wire transistors, three dimensional screen, three dimensional communication holographic systems, etc., and various aspects of nano-technology, where the minuet machines needed to be energised and controlled, where the packages of energy can be made or delivered to the energy cells or the battery of the system for it to continue operation, or the use of minuet battery system which only creates electrovolts current needed for the operation of these micro machines,

jj. Communication systems, by the use of the soft body, or port of the reactor at least with one cavity, where the high energy magnetic wave are released in the spherical domain, or at least in one direction, where the magnetic energy will be code in the sequence as in the present system but this will be hard to decipher in the inter galaxy system, the best method of space rapid response communication will be the magnetic plasma of the element in the sequential chambers, what this means is that the Hydrogen plasma magnetic energy will be A, Helium plasma magnetic energy will be B and so forth, according to atomic weight if the element, where simultaneous small chamber magnetic charge will be released in the magnetic energy field level, then there is no need for decoding or losing information in the solar system or galaxy media, as each element of the periodic table carries it own magnetic energy frequencies in the plasma magnetic state, and then the time laps will be insignificant, and inter solar magnetospheric bouncing will be used, like satellite dishes of the present time to forward a massage onto the next system or craft in the other part of the same system or others,

kk. New decontamination systems, and growth provoking magnetic conditions for human, animal and plant cells and life (i.e. plasma-multi-color light), and radiation protection, $CO_2$-decomposition system, etc.,

ll. Weapon systems (i.e. a fragment of the reactor wall is opened under controlled conditions or at least one layer-core is opened by physical means and/or at least one magnetic field), partial or complete magnetic disintegration of matter on any atomic or molecular level (i.e. meteorites), protection fields for various object like air craft, ships, tanks, housing, radar-stealth system (For stealth effect where the incoming energy from a radar can fully be absorbed in the tangles of one or more magnetic fields), EM-absorption systems,

mm. magnetic blanketing (internal magnetic ordering in objects, tools and devices),

nn. Housing concepts and products, due the use of the magnetic field shielding, as an object to prevent passage or block or obscure the view into or out of an object, like as doors or walls for entering into or out of an object, like the door of a house or walls of the house, or as replacement of or the glass or any other materials used for this purpose where the double glazing or any kind of glazing, or prevention of entry of small or certain object can be predetermined by the field, like to be used as of mosquito nets and window fly nets, or as umbrellas for preventing the sun or the rain from reacting any matter or object, roofing, and flooring,

oo. Products and applications related to the energy release mechanism using soft or retractable wall system of the core that can be used for release of plasma or energy or an object, or material in one or more direction from the at least one or more cores of the system, this being used as the rivet machines, nail machines or guns of all sorts, shooting guns for defence and laser or leisure or hunting, using for destruction of matter ahead like dynamite, drilling machine in any scale or with any power, dentist drilling machine, space weapons for destruction of meteorite or object ahead, where the delivered mater will not have a physical container as of the rockets and bolts of present time, but packages of energy being magnetic or plasmas or matter of any kind,

pp. Suction machines for vacume system for absorption or attraction of other matters by use of magnetic field attraction or physical suction of the system, this being used for likes of household vacuum cleaners or industrial vacuum cleaners, or for absorption of any gas or liquid, or solid material from its immediate environment like in contamination clean up conditions, and this can be created through magnetic strength helicities between at least two inter-layers (57, 55) of material with different speed of rotation and varying atomic weight, creating it's own localized magnetic field black hole (56) condition where by the use of soft body core or magnetic tunneling material can be sucked into the black hole region from the core region of the reactor or by facilitating a port hole from matters outside into the black hole condition, as described in annex (section " creation of black hole") and in the description,

qq. Products related to the creation of internal heat source leading to creation and the interaction of two or more magnetic fields, leading to creation of gravity, shielding and current production in alternating or direct or electrovolts levels, used in the space, aircraft, and submarine, colonisation crafts,

rr. Textiles (i.e. with memory), and vacuum suits for human or animal or any object in possession of internal gravity for play or industrial or apace application, like toys (i.e. human lifting belts) and sporting products, all sorts of material used for floating, belts for levitation , where gravity can be reversed, magnetic shield bowls, diving suits for submerging in to any liquid or gas in possession of gravity and heating elements,

ss. Products, machinery and applications related to using the magnetic pressurises for the production or shaping of all kinds of material or containers and use in the pressure moulding and pressure casting, or for the pressure pumped systems of all types of materials and matters, like the water pumps, injectors for computer industry printing and etching system,

tt. Zero gravity machines for production of material, where the reactor will, by in circulating the inner cavity, where the material is produced, like in flask or a room , where the magnetic fields of one or more do not pass the inner physical boundary of the containment but creates the zero gravity condition in the inner cavity but not at the same time a vacume condition, this being used for like production of silicone or for the micro chip industries where clean but zero gravity condition is necessary,

uu. Medical devices and applications, due the creation of one or more soft magnetic fields for matching the magnetic field but at the same time in possession of gravitational force system, with temperature level control requirements for medical use , for like reseating of the magnetic or energy levels of human cell for eradication of cancer cell from a tissue, for blood cell for blood cancer, like dialysis's machine, or creation of condition for the growth of body part in the exact position on the body, of remote matter or organs replacement without cutting tissues or organs from outside to reach the organs or part in the matter, this is un-intrusive surgery, incubators for premature bore child, where the gravity can be reduced to allow breading in a softer conditions, where heat and liquid condition of the internal environment of mother reproduction organs can be replicated, Incubators for animal production, Organ transplant without intrusive method by transmutation of the organ in its position and in position reconnection of the organ through remote one or more gravity laser beam for the swing of the organ in its position,

vv. Electrical power generation, using one or more materials in the cavities, by the use of collection of the appropriate charge particles from the right electrodes specially positioned in the He (83) and Ar (82) layers or on the appropriate material layer, where the positive charges can be utilised as well as the negative charges for operation and used within or the outside the parameters of the system, that is to say the protons carry as much energy or most instance more than the its electron counter parts, where ever they are collected in one or more cavities of the reactor, and by which the total utilisation of all energies from all parts of an atom even the magnetic dark matter is possible, and not just the electrons as has been done up to now,

ww. Atomic welding applications and technology, as a simpler way to produce or fuse matter together than fusion methods - where large energies are required to fuse to atoms together - where atomic welding brings to near similar atoms or molecules together and only add one electron or proton, or an neutron for the two atoms to become one, which is in reality the reverse atomic decay or half life system method, which the world of science has never understood, where for example potassium goes through beta decay to become argon, where if one add beta in the magnetic and gravitational condition one can create potassium from argon, thus applying the material creation in the universe, where the atoms do no start always from hydrogen to go to uranium, but they just simple weld into higher element to create heavier elements, like creating 113 element out of Iron 56 and 57 (which is a double magnetic element and therefore can be called magnetically a 'dark' matter),

xx. Platting and etching methods, applications and devices, lithography,

yy. Space travel without use of any fuel using the gravitational pull of a targeted planet, where the double magnetic material created in one or more cores could be fed into three independent, 120 degrees positions, for creation of the planetary gravitational pull, where one reactor will be filled and two other reactors on approach to or near the destination will be reversed back in gravitational force using a different magnetic dark matter for break or slow down system,

zz. Non-tangible magnetic locks in position of gravity where the two magnetic fields are matching but opposite that they can lock into each other, which are described in claims hereafter in more detail or in following patents;

2.  Reactor-embodiment (26), as described in claim 1, which has one rotating chamber;

3.  Reactor-embodiment (26), as described in claim 2, where at least two gasses of different atomic weight are inserted which position themselves due the centrifugal effect in layers: (1) the lighter gas(ses) at the inside (so called inner core 28A) and (2) the heavier gas(ses) at the outside (so called outer core 28B);

4.  Reactor-embodiment (27), as described in claim 1, which has at least two internal chambers (28C and 28D);

5. Reactor-embodiment, as described in claim 1, which has at least two internal chambers, from which at least one in stationary (28D);

6. Reactor-embodiment, as described in claim 1, which has at least two internal chambers, from which at least one (28C) is connected with the central column (29) and both rotate together;

7. Reactor (10), as described in claim 1, where the central column (16A) is in rotation;

8. Reactor, as described in claim 1, where the central column is static;

9. Reactor, as described in claim 1, where there is not central column in at least one chamber;

10. Reactor, as described in claim 1, where there is a different central column in at least two chambers;

11. Central column, as described in claim 1, which can have several shapes and/or concepts, at least in one chamber, such as: fully telescopic, partly telescopic, with a pipit inside, without a pipit inside, partly dynamic (i.e. only tip part rotates);

12. Central column, as described in claim 1, rotary-blade(s) or saddle(s), covered with various materials (i.e. radioactive), equipped with magnetic means (i.e. solid, liquid, coils, electromagnetics, ionization emitters (i.e. lamps, microwave, chemicals, etc.);

13. Method where - under centrifugal and vacuum conditions - a turbulence, rotation, compressive and heating of a gaseous matter is created in a reactor by at least one central rotative magnetic field with the purpose of creating plasmatic conditions leading to various physical phenomena;

14. Method where - under centrifugal and vacuum conditions in presence of ionization condition - a turbulence, rotation, compressive and heating of a gaseous matter is created in a reactor by at least one central rotative magnetic field with the purpose of creating plasmatic conditions leading to the creation various magnetic fields where at least the interaction of two magnetic field would lead to the creation of at least one gravitational force phenomena;

15. Reactor (fig. 1 to 9), as described in claim 1, that can create at least one spherical or other shaped non-tangible magnetic field (20, 21, 30, 40, 41, 50, 62, 63) at least in one chamber;

16. Reactor (fig. 6, 8), as described in claim 1, that can create at least two spherical or other shaped non-tangible magnetic fields superimposed or encircled one inside the other at least in one chamber;

17. Reactor (fig. 2), as described in claim 1, that can create at least two spherical or other shaped non-tangible magnetic fields (20, 21) superimposed or encircled one inside the other at least in one chamber, for the creation of gravity and antigravity (i.e. lift, levitation), and/or at least a double magnetospheric (22) effect;

18. Reactor (fig. 2), as described in claim 1, that can create at least two spherical or other shaped non-tangible magnetic fields (20, 21) superimposed or encircled one inside the other at least in one chamber, for the creation of plasma for cold or hot fusion process, including the containment of such plasma, in position of gravity for fusion processes (i.e. power generation, production of new materials);

19. Reactor, as described in claim 1, to generate electric current (80, 81, 82, 83) at least in one chamber through ionization, turbulence, convection, rotation and plasma, and magnetic fields and interaction between at least two magnetic field, and at least in one layer of the material in one chamber;

20. Reactor, as described in claim 1, to generate heat in at least in one chamber through ionization, turbulence, convection, rotation and plasma, and magnetic fields and interaction between at least two magnetic field, and at least in one layer of the material in one chamber, which will deliver heat (70) to at least one material in at least one chamber or to the surrounding outer layer of the inside of the reactor, or at the outer boundary of the reactor (i.e. for heat-transfers, heat exchangers or heating or lighting (i.e. steam);

21. Reactor, as described in claim 1, to generate cooling in at least in one chamber through ionization, turbulence, convection, rotation and plasma, and magnetic fields and interaction between at least two magnetic field, and at least in one layer of the material in one chamber, which create cooling effect to at least one material in at least one chamber or to the surrounding outer layer of the inside of the reactor, or at the outer boundary of the reactor;

**22.** Reactor (fig. 10), as described in claim 1, which possesses - in at least in one chamber - all type of heat, current, magnetic field (gravity and plasma), i.e. space-craft technology, magnetic shielding.

**Amended claims in accordance with Rule 86(2) EPC.**

**1.** Method to produce energy and gravity fields with a reactor, which comprises of:

a. sustainable wall means;
b. at least one chamber that can be sealed;
c. port means for introducing materials in said chamber and for retrieving materials from said chamber; (after the introduction of said materials or able to add and/or retrieve materials during or after the processing);
d. sealing means for the closing of said chamber, and which contains
e. said materials from which at least one sub-quantity being radioactive and/or being able to be transformed in a radioactive isotope during the internal process;
f. said materials from which at least one sub-quantity being an inert gas and/or being able to be transformed in an inert gas or in inert gas vapour during the internal process;
g. said materials from which at least one sub-quantity being a atomic or molecular metallic material and/or being able to be transformed in a atomic or molecular metallic material, in metallic gas or in metallic vapour during the internal process;
h. said materials from which at least one sub-quantity is hydrogen and/or being able to be transformed in a atomic or molecular hydrogen, in during the internal process, and

where upon the sealing of said chamber said materials, preferable in conjunction with the matters of said wall, start a controllable interaction process of repositioning the plasmatic magnetic energy fields of the introduced elements, where a number of the dynamic actions between them lead to the creation of new plasmatic magnetic energy fields, like in atomic, plasmatic and molecular level, where the interaction between at least two of them simultaneously lead to the fragmentation of existing plasmatic energy fields, leading to creation of current and energy from the reactor, and where from these fragmentations can be collected useful energy output, and where the interaction these fields with the core plasmatic magnetic energy fields can lead to the creation of at least two superimposed plasmatic magnetic energy fields which will cause the gravitational effects within and/or around said reactor, which this leads to the creation and control of gravitational (positive or negative in respect to a given or a reference gravitational field) and magnetospheric field forces;

**2.** Method to produce, in and around the embodiment of a reactor, a gravitational and/or anti-gravitational effect, where applying such effect will lead to be able to process matters in a new way, namely at atomic level, and at room temperature and normal pressure, or able to change positions of matters in respect to each other, which can be used where by the use of a semi-fusion (fusion/fission combination) chain of events, certain matters within said reactor are brought into a location to interact with each other, where the outcome of these interactions will create dynamic plasmatic magnetic energy fields (PMEF), where upon the interaction of at least two such PMEF in respect to each other, a fluid dynamic plasmatic repulsion and attraction field will be created (according to the principle of simultaneous attraction and repulsion of two similar and two dissimilar polarities), which the outcome of the interaction of the two dynamic fields, will lead to creation of double (superimposed) plasmatic magnetic energy fields, which are loosely interlocked spherically one on top of the other, creating a combined PMEF which one effect will be the gravitational and second effect will be the magnetic field effect around and within said embodiment, which this combined PMEF, is itself due to the principle of loose dynamic magnetic realignment at atomic and molecular level, will create the gravitational and spherical magnetic fields, within and the surrounding environment of the embodiment of the reactor, where these two created magnetic fields are created independently and separated from each other within said embodiment by means of a physical partition, where this partition can be made of any physical tangible barrier (like a wall) or could of plasmatic or liquid origin, or could be by the creation of two simply indifferential magnetic field strength as a separation barrier, where said reactor embodiment comprising:

a. sustainable wall means;
b. at least one chamber that can be sealed;
c. port means for introducing materials in said chamber and for retrieving materials from said chamber; (after the introduction of said materials or able to add and/or retrieve materials during or after the processing);
d. sealing means for the closing of said chamber, and which contains
e. said materials from which at least one sub-quantity being radioactive and/or being able to be transformed in a radioactive isotope during the internal process;
f. said materials from which at least one sub-quantity being an inert gas and/or being able to be transformed in an inert gas or in inert gas vapour during the internal process;
g. said materials from which at least one sub-quantity being a atomic or molecular metallic material and/or being able to be transformed in a atomic or molecular metallic material, in metallic gas or in metallic vapour during the internal process;
h. said materials from which at least one sub-quantity is hydrogen and/or being able to be transformed in a atomic or molecular hydrogen, in during the internal process, and

where upon the sealing of said chamber said materials, preferable in conjunction with the matters of said wall, the initial controllable interaction process starts;
where said initial process is enhanced by motion means of said reactor;

**3.** Method to create a gravitational producing system and related processes by the use of fusion, semi-fusion, ionization, and/or fission of materials within the confined reactor-embodiment, by the correct combination and association between the materials within the embodiment, where by the release of plasmatic magnetic energy created by the interaction of different materials and dynamic turbulent conditions of these materials and a radioactive source placed in the core can leading to the production of dynamic plasmatic magnetic fields within the embodiment, where upon at least two such fields interaction with each other, in the same core or in different locations or superimposed on top of each other, leading to creation of an interlocking double magnetic field, behaving as a whole as a gravitational field system, where by principle of attraction and repulsion of two similar and dissimilar magnetic polarities, a combined fluid plasmatic magnetic field within and/or in the vicinity of the two fields within the reactor is created or within it's surrounding environment is created, which this creates the condition for availability of applicable gravitational field force for the reactor, where this newly created gravitational field can determine the position of the embodiment in respect to other gravitational fields which are created by other gravitational systems, within the vicinity of the reactor-embodiment,
where this gravitational field force could be varied according to the strength of any of the two plasmatic magnetic energy fields which have created it, where this can be used for directional positioning and directional movement of the core embodiment within it's surrounding,
where the separation of the two magnetic field could be created by the method of creation of different magnetic field densities in respect to each other or by placement of a physical separation wall which could be gas, liquid, solid or any other combination, and where said reactor will comprise

a. sustainable wall means;
b. at least one chamber that can be sealed;
c. port means for introducing materials in said chamber and for retrieving materials from said chamber; (after the introduction of said materials or able to add and/or retrieve materials during or after the processing);
d. sealing means for the closing of said chamber, and which contains
e. said materials from which at least one sub-quantity being radioactive and/or being able to be transformed in a radioactive isotope during the internal process;
f. said materials from which at least one sub-quantity being an inert gas and/or being able to be transformed in an inert gas or in inert gas vapour during the internal process;
g. said materials from which at least one sub-quantity being a atomic or molecular metallic material and/or being able to be transformed in a atomic or molecular metallic material, in metallic gas or in metallic vapour during the internal process;
h. said materials from which at least one sub-quantity is hydrogen and/or being able to be transformed in a atomic or molecular hydrogen, in during the internal process, and
where upon the sealing of said chamber said materials, preferable in conjunction with the matters of said wall, the initial controllable interaction process starts;
where said initial process is enhanced by (external) (internal) motion means of said reactor;

**4.** Reactor, working after the method claimed in claim 2, equipped with a reactor-embodiment (10) with at least one (26) or more (27) spaces (i.e. cavities 11) - possible wise separated by at least one solid (14A), gaseous (14B) or other state layering matter - under vacuum and/or centrifugal conditions - a chain of energetic events is created via a rotative soft or hard magnetic (17A), initiation of a basic ionization of a gas (i.e. hydrogen 18A) or other elements, which then triggers a controllable chain of energy transfers (so called Scintillation) to the next following layer(s) of introduced gasses (i.e. He 18B, Ne 18C, Ar 18D, Kr, Xe 18E), of other introduced elements - which can be all - of the periodic table (i.e. Li, Be, K, Ca, Ti, ... Pt, etc.) and/or their introduced molecule combinations (i.e. a vapor), by that chain of interlayer transfers several other physical phenomena are caused and created, such as:

- Compression and decompression inside the reactor chamber,
- Rotation,
- the creation and interaction of one or more magnetic fields (i.e. 20 and 21) in the center core of the reactor,
- the development of heat (40) due to ionization and the magnetic fields and their reconnection(s) by the matters in the center core (also called caroline core (13, 28A, 28C) and the magnetic field in turn created in the outer core(s) (12, 28B, 28D) in the reactor chamber (11),
- magnetosphere effects (22) of the two magnetic fields of the center core, and the magnetic field of the outer core,
- the emission of rays up to Ultra Violet for heating up the materials in the core(s) or plasma's,
- the creation and convection motion (71, 81) for creation of current in at least one core (80, 82) and the single and double magnetic fields which create the fundamental cyclic transformation /retransformation of the gas and/or matter involved from ground-state to excitation-state(s),

which the interaction between the two magnetic fields, of at least two cores, leads to the creation of gravity and anti-gravity due the creation of the double spherical or other shaped superimposed magnetic fields (20 and 21, 30), and whereby this will cause the rotation (50) of the containment vessel(s) (all 18) of the center (caroline) core;

**5.** Reactor, as claimed in claim 4, where the rotation of the inner core (84) causes the rotation in at least one central column in at least one chamber, and where the central column (16A) may:

i. Either turn completely, powered by a power source (15F) that is positioned outside the chamber,

ii. Either from which only at least one part with magnetic means turns, i.e. the tip-part (51)(in the center of the chamber),

iii. Either from which only a part with topological means turns, i.e. at least one mixing blade (in the center of the chamber), possible wise covered with at least one scintillating material (16E) unit (15C), or i.e. a spinning ejection mouth,

iv. Either is completely immobile (fixed)(Fig. 9) but which has on it's surface at least one set of electromagnets (90) and/or coils which can be activated (92A) or deactivated (92D) - possible wise controlled by electronic means (i.e. a microchip 93) - in a preferred periodical and/or positional way, which - preferable - can change polarity and/or strength (92A, 92B, 92C), that way able to create turbulence in the center core, and/or in other superior cores,

v. Either is completely immobile (fixed) but by which the basic gas and/or matter is pumped in a core by at least one ejection mouth, (called the statistic reactor),

vi. Either has at least one symmetrical or asymmetrical channel in it's tip which can pump gas(ses) from one side to the other,

vii. A combination of previous;

**6.** Reactor, as specified in claim 4 and 5, where the central column (16A) possible wise - but very preferable - has at least one internal channel (16D) (i.e. a borehole 16B) for the distribution and/or collection of relevant gas(ses), matter and/or plasma (23), and possible wise can have at least one electrode (17B) - but very preferable several - to collect electric current for transportation (17C) to the outside of the reactor, can have - depending from the type of reactor (i.e. 14A, 14B) and corresponding type of gas, matter or plasma - one or more injection-mouths on different levels, each for another type of gas, matter and/or plasma, preferable on a height that correspondents with the layering position that this gas or matter will have after it's atomic weight and/or the purpose of the injected plasma or matters;

**7.** Reactor (10), as specified in claim 4, comprises a body (24) that can made of any natural or man-made material or several materials, or in atomic or molecular state - at least made of one part - in which at least one hollow space (11) is positioned, and whereby all relevant parts (i.e. the wall 25) - if needed to be protected (i.e. coated, laminated, painted, etc.) in well known manners against corrosion, aggressive acids, etc., and with at the outside of the reactor (10) a number of relevant supporting systems are positioned, such as: pressure-tanks (15A), reverse tanks (15B), turbo molecular pump (15E), gas seals, scintillation unit(s)(15C), electrical brushes (15D), heat removal chamber, valves, pumps, tubes, closing means, measuring means, control sensors, engine(s)(15F), gears, power-source, electrical components (i.e. fuse), computer(s), IC's, etc.;

**8.** Reactor, as specified in claim 4, whereby after the initial mechanical rotation (i.e. at 3,000 rpm) and/or electromagnetic triggered rotation the internal rotation (50) will be continued due the interaction of the magnetic fields involved (self-sustained process), in correspondence with one of more core-layers and their containment, and possible wise one of the reactor concepts may have one of more of next specifics:

a. The central column may be mechanically withdrawn (52) if the internal interaction goes after wish, and can be repositioned inside the chamber if there is a need to collect current, to add new gas(ses), matter and/or plasma, and/or to adapt or correct the balance of the lower or higher volume-ratio of the matter and density,

b. The central column will have on his tip (53)(central position) at least two magnetic means (54) of different pole, but preferable several sets which can be ring wise or polarity faced wise and sized positioned above or next to each other, and on the top of the column tip one magnet, either in polarity strips (95) or as a single body,

c. The central column may be treated at the inside and outside surface by radioactive material (16E)(i.e. liquid, solid or a spray), or materials which can radioactively decay, or by fixed methods of scintillatizion like microwave lamps;

**9.** Reactor, as specified in claim 4, which has more than one column, one (91) with it's tip positioned in the center area, and at least one (94) with it's tip on a different level, but separated from each other;

**10.** Reactor, as specified in claim 4, with at least two central columns (fig.7) are positioned opposite to each other, either creating a similar rotational effect, either creating a conflicting rotational direction;

**11.** Reactor, as specified in claim 4, where the reactor body contains at least two separate hollow spaces of identical or different dimensions, and where the reactor body contains at least two separate material cores (i.e. by a wall-layer 14A), a larger encircling a smaller, and each may have a proper internal independent process, and magnetic interactions may occur between their magnetic fields, and matters may be exchanged between physically separated chambers (28C and 28D) by connection means (58);

**12.** Reactor, as specified in claim 4, which is connected by connection means with at least one other reactor, either of a different type, dimension, concept, either identical;

**13.** Reactor, as specified in claim 4, where in an external container (15C) - outside the chamber - at least one scintillating unit (i.e. made of or partially of Cs137) is available which will have a normal radioactive behavior or his natural decay inside or outside the chamber;

**14.** Reactor, as specified in claim 4, having either a solid structure (10), either a dynamical structure and being able to adapt it's structure after, (i.e. the internal pressure and temperature), and being secured by magnetic seals (16C) and/or fields, where the reactor core can have several overall shapes, such as: perfect spherical, elliptic, half-circular, etc.;

**15.** Reactor, as specified in claim 4, where a reactor wall (25) and/or material core wall (29B) can have locally or overall several topological shapes, skins and/or furnishings, such as: perfect smooth, dimpled, grooved, triangled, etc.;

**16.** Reactor, as specified in claim 4, where the material core (29B) can be surrounded by conductive wires (i.e. copper) or bands which can create additional Alternating Current, which can be superimposed on the Direct Current (s) which are created within the core;

**17.** Reactor (26), as specified in claim 4, which has one rotating chamber;

**18.** Reactor (26), as specified in claim 17, where at least two gasses of different atomic weight are inserted which position themselves due the centrifugal effect in layers: (1) the lighter gas(ses) at the inside (so called inner core 28A) and (2) the heavier gas(ses) at the outside (so called outer core 28B);

**19.** Reactor (27), as specified in claim 4, which has at least two internal chambers (28C and 28D);

**20.** Reactor, as specified in claim 4, which has at least two internal chambers, from which at least one in stationary (28D);

**21.** Reactor, as specified in claim 4, which has at least two internal chambers, from which at least one (28C) is connected with the central column (29) and both rotate together;

**22.** Reactor (10), as specified in claim 4, where a central column (16A) is in rotation;

**23.** Reactor, as specified in claim 4, where the central column is static;

**24.** Reactor, as specified in claim 4, where there is not central column in at least one chamber;

**25.** Reactor, as specified in claim 4, where there is a different central column in at least two chambers;

**26.** Central column, as specified in claim 5, which can have several shapes and/or concepts, at least in one chamber, such as: fully telescopic, partly telescopic, with a pipit inside, without a pipit inside, partly dynamic (i.e. only tip part rotates);

**27.** Central column, as specified in claim 5, rotary-blade(s) or saddle(s), covered with various materials (i.e. radioactive), equipped with magnetic means (i.e. solid, liquid, coils, electromagnets, ionization emitters (i.e. lamps, microwave, chemicals, etc.);

**28.** Reactor (fig. 1 to 9), as specified in claim 4, that can create at least one spherical or other shaped non-tangible magnetic field (20, 21, 30, 40, 41, 50, 62, 63) at least in one chamber;

**29.** Reactor (fig. 6, 8), as specified in claim 4, that can create at least two spherical or other shaped non-tangible magnetic fields superimposed or encircled one inside the other at least in one chamber;

**30.** Reactor (fig. 2), as specified in claim 4, that can create at least two spherical or other shaped non-tangible magnetic fields (20, 21) superimposed or encircled one inside the other at least in one chamber, for the creation of gravity and antigravity (i.e. lift, levitation), and/or at least a double magnetospheric (22) effect;

**31.** Reactor (fig. 2), as specified in claim 4, that can create at least two spherical or other shaped non-tangible magnetic fields (20, 21) superimposed or encircled one inside the other at least in one chamber, for the creation of plasma for cold or hot fusion process, including the containment of such plasma, in position of gravity for fusion processes (i.e. power generation, production of new materials);

**32.** Reactor, as specified in claim 4, to generate electric current (80, 81, 82, 83) at least in one chamber through ionization, turbulence, convection, rotation and plasma, and magnetic fields and interaction between at least two magnetic field, and at least in one layer of the material in one chamber;

**33.** Reactor, as specified in claim 4, to generate heat in at least in one chamber through ionization, turbulence, convection, rotation and plasma, and magnetic fields and interaction between at least two magnetic field, and at least in one layer of the material in one chamber, which will deliver heat (70) to at least one material in at least one chamber or to the surrounding outer layer of the inside of the reactor, or at the outer boundary of the reactor (i.e. for heat-transfers, heat exchangers or heating or lighting (i.e. steam);

**34.** Reactor, as specified in claim 4, to generate cooling in at least in one chamber through ionization, turbulence, convection, rotation and plasma, and magnetic fields and interaction between at least two magnetic field, and at least in one layer of the material in one chamber, which create cooling effect to at least one material in at least one chamber or to the surrounding outer layer of the inside of the reactor, or at the outer boundary of the reactor;

**35.** Reactor (fig. 10), as specified in claim 4, which possesses - in at least in one chamber - all type of heat, current, magnetic field (gravity and plasma), i.e. space-craft technology, magnetic shielding.

**36.** Reactor, as specified in claim 4, which brings a large number of new products and applications, such as:

a. The creation of gravity and anti-gravity,
b. The creation of internal heat source_leading to creation and the interaction of two or more magnetic fields, leading to creation of gravity, shielding and current production in alternating or direct or electrovolts levels, used in the space, aircraft, and submarine, sea-bottom habitat, liquid habitat like in a container tank or for nano technology in blood vessels, colonisation crafts and colonisation systems (i.e. cocooned atmosphere conditions on a sea bed, beneath surface or on surfaces),

c. The same as u. but now creating at least one extra layer with a magnetic field rotating in opposite direction to at least one other magnetic field, within at least one core or outside the boundary of the system, creating in example a impenetrable field and useful for reentry or exit of atmospheric conditions, or for laser-like effects of coexisting magnetic fields (i.e. surgery, cutting tools and long-distance communication),

d. The production of energy via soft fusion (i.e. cold and warm fusion),

e. The production of plasma due the creation of gravity at molecular level between two magnetic fields (41, 42) (62, 63) of two cavities or more in a system for creation high temperature plasma in fusion industries (40),

f. New concepts of batteries, lighting devices (i.e. transparent reactor-housing, light-bulb, floor light, wall light and floodlight, etc.), security products (i.e. traffic lights, sensors, water purifiers, etc.) and industrial and household devices and apertures, like water-production machines,

g. Heating and drying devices,_the use of energy production capabilities for creating heating like warming the surrounding maters, like in boilers and heaters in the house for central heating systems or individual heating systems, and warm blanketing, using as boiler for warming up or boiling matters like liquids and malting solid materials, for use as drying system like hair dryers for industrial or commercial drying system, or heating oven, or stove or cookers in the house appliances, or grilling of food appliances for private or commercial or industrial use,

h. Cooling devices due the reverse gravity magnetic field generation system(s), where the system will absorb heat from its surrounding, to cool its surrounding for use in the air-conditioning for buildings and cars, and crafts or any object which can carry any other object, refrigeration systems of any kind , production of ice or frozen state of any material or matter,

i. The production of new materials in and outside the reactor chamber under specific magnetic and/or gravitational conditions (i.e. directional nano growth, the welding of atoms and molecules, etc.),

j. Atom creation for human or animal or plant cells, where the micro gravitational field in presence of magnetic fields in one or more magnetic fields created in the center of the one or more cavities will allow magnetic fields above dark magnetic levels to manifest themselves and cluster together to create the nucleolus of the atom and in use of multi layering, then the electrons are allowed to manifest themselves, and these processes can be continued for leading to production of molecules, and base material for the DNA, where specific energies or magnetic fields are inserted leading to creation of the right characteristic of the foundation of the any cell or organs or creatures,

k. In space refuelling and accessing new material for food or oxygen, or parts will easily done, simply by retracting basic matters in the cosmos soup and using this method in conjunctions with atomic welding methods, all maters on continuous bases can be produced or manufactured as demand arises, so there are no need for huge inventory to carry, one produces in the core as what it is needed at that point of space and time,

l. Gravitational devices which can move without contact with a carrying substrate (i.e. earth surface, sea, air, etc.), such as gravitational lifted transport devices, lifters for heavy products, wheel chairs for able and disable bodies, the push chair for children , or elevators in building, the use of hollow center loop fitted with rotor blade of any kind for the manufacture of current, for sky or water board , sliding board for play where the board hover, for movement large objects, this being for automotive or commercial vessels, trucks and trailers or shipping over liquid or solid bodies from one continent to other or planets or solar systems and galaxies, for use of cycles sliding over surface, craft which can fly and have magnetic shielding and gravitational force field inside, for railway like system where the object of any size or length can flout over the track, use in the fork lift and crane and platform lifting of an object of any kind and size in industry for lifting objects or liquids to any height, for the use in the gates and doors which will elevate and levitate or revolve by use of antigravity and vice versa, tables and chairs, beds, furniture's of any kind with or without legs or attachments to the physical surrounding, shoes for walking,

m. Inter-terra development and exploration (i.e. transport tunnels and hollow habitat spaces by rock melting in deeper earth and planet layers),

n. Transforming units for the decomposition and recompositions of waste and old products in new basic matter and materials or specific combinations (i.e. plastics),

o. Products related to the creation of double or more magnetic fields superimposed (30), at least two, and fully in circulating each other in layers, on top of each other for multi-layer shielding of an object, where at least one magnetic fields can rotate in one direction or at least one rotating in the opposite direction to one or more fields, like for the use in submarine or space craft industry, Air- and space transport systems and devices (i.e. with magnetic shielding effect with creation of imposition gravity) and non-air-friction-systems, products for welding industry, this being material or atomic welding or molecular welding,

p. Electronic devices and components (i.e. computers, scanners, etc. with 3D-dynamische layers), nano-wire transistors, three dimensional screen, three dimensional communication holographic systems, etc., and various aspects of nano-technology, where the minuet machines needed to be energised and controlled, where the packages of energy can be made or delivered to the energy cells or the battery of the system for it to continue operation, or the use of minuet battery system which only creates electrovolts current needed for the operation of these micro machines,

q. Communication systems, by the use of the soft body, or port of the reactor at least with one cavity, where the high energy magnetic wave are released in the spherical domain, or at least in one direction, where the magnetic energy will be code in the sequence as in the present system but this will be hard to decipher in the inter galaxy system, the best method of space rapid response communication will be the magnetic plasma of the element in the sequential chambers, what this means is that the Hydrogen plasma magnetic energy will be A, Helium plasma magnetic energy will be B and so forth, according to atomic weight if the element, where simultaneous small chamber magnetic charge will be released in the magnetic energy field level, then there is no need for decoding or losing information in the solar system or galaxy media, as each element of the periodic table carries it own magnetic energy frequencies in the plasma magnetic state, and then the time laps will be insignificant, and inter solar magnetospheric bouncing will be used, like satellite dishes of the present time to forward a massage onto the next system or craft in the other part of the same system or others,

r. New decontamination systems, and growth provoking magnetic conditions for human, animal and plant cells and life (i.e. plasma-multi-color light), and radiation protection, CO2-decomposition system, etc.,

s. Weapon systems (i.e. a fragment of the reactor wall is opened under controlled conditions or at least one layercore is opened by physical means and/or at least one magnetic field), partial or complete magnetic disintegration of matter on any atomic or molecular level (i.e. meteorites), protection fields for various object like air craft, ships, tanks, housing, radar-stealth system (For stealth effect where the incoming energy from a radar can fully be absorbed in the tangles of one or more magnetic fields), EM-absorption systems,

t. magnetic blanketing (internal magnetic ordering in objects, tools and devices),

u. Housing concepts and products, due the use of the magnetic field shielding, as an object to prevent passage or block or obscure the view into or out of an object, like as doors or walls for entering into or out of an object, like the door of a house or walls of the house, or as replacement of or the glass or any other materials used for this purpose where the double glazing or any kind of glazing, or prevention of entry of small or certain object can be predetermined by the field, like to be used as of mosquito nets and window fly nets, or as umbrellas for preventing the sun or the rain from reacting any matter or object, roofing, and flooring,

v. Products and applications related to the energy release mechanism using soft or retractable wall system of the core that can be used for release of plasma or energy or an object, or material in one or more direction from the at least one or more cores of the system, this being used as the rivet machines, nail machines or guns of all sorts, shooting guns for defence and laser or leisure or hunting, using for destruction of matter ahead like dynamite, drilling machine in any scale or with any power, dentist drilling machine, space weapons for destruction of meteorite or object ahead, where the delivered mater will not have a physical container as of the rockets and bolts of present time, but packages of energy being magnetic or plasmas or matter of any kind,

w. Suction machines for vacume system for absorption or attraction of other matters by use of magnetic field attraction or physical suction of the system, this being used for likes of household vacuum cleaners or industrial vacuum cleaners, or for absorption of any gas or liquid, or solid material from its immediate environment like in contamination clean up conditions, and this can be created through magnetic strength helicities between at least two inter-layers (57, 55) of material with different speed of rotation and varying atomic weight, creating it's own localized magnetic field black hole (56) condition where by the use of soft body core or magnetic tunneling material can be sucked into the black hole region from the core region of the reactor or by facilitating a port hole from matters outside into the black hole condition, as described in annex (section " creation of black hole") and in the description,

x. Products related to the creation of internal heat source leading to creation and the interaction of two or more magnetic fields, leading to creation of gravity, shielding and current production in alternating or direct or electrovolts levels, used in the space, aircraft, and submarine, colonisation crafts,

y. Textiles (i.e. with memory), and vacuum suits for human or animal or any object in possession of internal gravity for play or industrial or apace application, like toys (i.e. human lifting belts) and sporting products, all sorts of material used for floating, belts for levitation , where gravity can be reversed, magnetic shield bowls, diving suits for submerging in to any liquid or gas in possession of gravity and heating elements,

z. Products, machinery and applications related to using the magnetic pressurises for the production or shaping of all kinds of material or containers and use in the pressure moulding and pressure casting, or for the pressure pumped systems of all types of materials and matters, like the water pumps, injectors for computer industry printing and etching system,

aa. Zero gravity machines for production of material, where the reactor will, by in circulating the inner cavity, where the material is produced, like in flask or a room , where the magnetic fields of one or more do not pass the inner physical boundary of the containment but creates the zero gravity condition in the inner cavity but not at the same time a vacume condition, this being used for like production of silicone or for the micro chip industries where clean but zero gravity condition is necessary,

bb. Medical devices and applications, due the creation of one or more soft magnetic fields for matching the magnetic field but at the same time in possession of gravitational force system, with temperature level control requirements for medical use, for like reseating of the magnetic or energy levels of human cell for eradication of cancer cell from a tissue, for blood cell for blood cancer, like dialysis's machine, or creation of condition for the growth of body part in the exact position on the body, of remote matter or organs replacement without cutting tissues or organs from outside to reach the organs or part in the matter, this is unintrusive surgery, incubators for premature bore child,

where the gravity can be reduced to allow breading in a softer conditions, where heat and liquid condition of the internal environment of mother reproduction organs can be replicated, Incubators for animal production, Organ transplant without intrusive method by transmutation of the organ in its position and in position reconnection of the organ through remote one or more gravity laser beam for the swing of the organ in its position,

cc. Electrical power generation, using one or more materials in the cavities, by the use of collection of the appropriate charge particles from the right electrodes specially positioned in the He (83) and Ar (82) layers or on the appropriate material layer, where the positive charges can be utilised as well as the negative charges for operation and used within or the outside the parameters of the system, that is to say the protons carry as much energy or most instance more than the its electron counter parts, where ever they are collected in one or more cavities of the reactor, and by which the total utilisation of all energies from all parts of an atom even the magnetic dark matter is possible, and not just the electrons as has been done up to now,

dd. Atomic welding applications and technology, as a simpler way to produce or fuse matter together than fusion methods - where large energies are required to fuse to atoms together - where atomic welding brings to near similar atoms or molecules together and only add one electron or proton, or an neutron for the two atoms to become one, which is in reality the reverse atomic decay or half life system method, which the world of science has never understood, where for example potassium goes through beta decay to become argon, where if one add beta in the magnetic and gravitational condition one can create potassium from argon, thus applying the material creation in the universe, where the atoms do no start always from hydrogen to go to uranium, but they just simple weld into higher element to create heavier elements, like creating 113 element out of Iron 56 and 57 (which is a double magnetic element and therefore can be called magnetically a 'dark' matter),

ee. Platting and etching methods, applications and devices, lithography,

ff. Space travel without use of any fuel using the gravitational pull of a targeted planet, where the double magnetic material created in one or more cores could be fed into three independent, 120 degrees positions, for creation of the planetary gravitational pull, where one reactor will be filled and two other reactors on approach to or near the destination will be reversed back in gravitational force using a different magnetic dark matter for break or slow down system,

gg. Non-tangible magnetic locks in position of gravity where the two magnetic fields are matching but opposite that they can lock into each other;

# Fig. 1

# Fig. 2

**Fig. 3**

10

MF1

or

(MF1 + MF2)

30

H
He
Ne
Ar

**Fig. 4**

10

42

41

14A

40

14B

MF2

MF1

H

He
Ne
Ar

## Fig. 5

## Fig. 6

## Fig. 7

## Fig. 8

Fig. 9

Fig. 10

**European Patent Office**

**EUROPEAN SEARCH REPORT**

Application Number

EP 05 44 7221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 831 627 A (CAMPBELL ET AL) 16 May 1989 (1989-05-16) * the whole document * ----- | 1-22 | G21K1/00 G21B1/00 |
| A | US 2004/247522 A1 (MILLS RANDELL L) 9 December 2004 (2004-12-09) * the whole document * ----- | 1-22 | |

TECHNICAL FIELDS SEARCHED (IPC)

G21B
G21K

The present search report has been drawn up for all claims

| Place of search | Date of completion of the search | Examiner |
|---|---|---|
| The Hague | 27 March 2006 | Capostagno, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 44 7221

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2006

| Patent document cited in search report | Publication date | Patent family member(s) | Publication date |
|---|---|---|---|
| US 4831627 A | 16-05-1989 | NONE | |
| US 2004247522 A1 | 09-12-2004 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R H DICKE.** *nature,* 1964, vol. 202, 432